# EUROPEAN PATENT SPECIFICATION

(11) **EP 2 688 407 B1**
(45) Date of publication and mention of the grant of the patent: **22.04.2015**
(21) Application number: 12709338.3
(22) Date of filing: 21.03.2012
(51) Int. Cl.: A01N 43/82, A01P 13/02

(54) **USE OF N-(1,2,5-OXADIAZOL-3-YL)BENZAMIDES FOR CONTROLLING UNWANTED PLANTS IN AREAS OF TRANSGENIC CROP PLANTS BEING TOLERANT TO HPPD INHIBITOR HERBICIDES**
VERWENDUNG VON N-(1,2,5-OXADIAZOL-3-YL)BENZAMIDEN ZUR KONTROLLE DES WACHSTUMS VON UNERWÜNSCHTEN PFLANZEN IN BEREICHEN MIT TRANSGENEN NUTZPFLANZEN MIT TOLERANZ GEGENÜBER HPPD-INHIBITORHERBIZIDEN
UTILISATION DE N-(1,2,5-OXADIAZOL-3-YL)BENZAMIDES POUR LUTTER CONTRE LES PLANTES INDÉSIRABLES DANS DES ZONES DE PLANTES CULTIVÉES TRANSGÉNIQUES DÉVELOPPANT UNE TOLÉRANCE AUX HERBICIDES INHIBITEURS DE LA HPPD

(30) Priority: 25.03.2011 EP 11159750; 25.03.2011 US 201161467631 P
(43) Date of publication of application: 29.01.2014
(73) Proprietor: Bayer Intellectual Property GmbH, 40789 Monheim (DE)
(72) Inventor: POREE, Fabien, 65936 Frankfurt (DE); VAN ALMSICK, Andreas, 61184 Karben (DE); KÖHN, Arnim, 55270 Klein-Winternheim (DE); LABER, Bernd, 65510 Idstein (DE); HAIN, Rüdiger, 60594 Frankfurt (DE)
(74) Representative: BIP Patents
(86) International application number: PCT/EP2012/054978
(87) International publication number: WO 2012/130684

(56) References cited:
- EP-A2- 0 173 657
- WO-A1-2011/035874
- US-B1- 6 268 549

### SEQUENCE LISTING

<110> Bayer CropScience AG
<120> Use of N-(1,2,5-Oxadiazol-3-yl)benzamides for controlling unwanted plants in areas of transgenic crop plants being tolerant to HPPD inhibitor herbicides
<130> BCS 11-1012
<160> 23
<170> PatentIn version 3.3
<210> 1
   <211> 1323
   <212> DNA
   <213> Artificial Sequence
<220>
   <223> Nucleic acid sequence encoding Avena sativa HPPD optimized for the expression in Escherichia coli cells
<400> 1
   atgcctccga caccggcaac agcaaccggt gcagcagcag cagccgttac accggaacat      60
   gcagcacgta gctttccgcg tgttgttcgt gttaatccgc gtagcgatcg ttttccggtt     120
   ctgagctttc atcatgttga actgtggtgt gcagatgcag caagcgcagc aggtcgtttt     180
   agctttgcac tgggtgcacc tctggcagca cgttctgatc tgagcaccgg taatagcgca     240
   catgcaagcc tgctgctgcg tagcggtgca ctggcatttc tgtttaccgc tccgtatgca     300
   cctcctccgc aggaagcagc aaccgcagcc gcaaccgcaa gcattccgag ctttagcgca     360
   gatgcagccc gtacctttgc agcagcacat ggcctggcag ttcgtagcgt tggtgttcgt     420
   gttgcagatg ccgcagaagc atttcgcgtt agcgttgcgg gaggtgcacg tcctgcattt     480
   gcaccggcag atctgggtca tggttttggt ctggcagaag ttgaactgta cggcgatgtt     540
   gttctgcgtt ttgttagcta tccggatgaa accgatctgc cgtttctgcc tggttttgaa     600
   cgtgttagct ctccgggtgc agttgattat ggtctgaccc gttttgatca tgttgttggc     660
   aatgttccgg aaatggcacc ggttattgat tatatgaaag gctttctggg ctttcatgaa     720
   tttgcagaat ttaccgcaga agatgttggc accaccgaaa gcggtctgaa tagcgttgtt     780
   ctggccaata atagcgaagc agttctgctg ccgctgaatg aaccggtgca tggcaccaaa     840
   cgtcgtagcc agattcagac ctatctggaa tatcatggtg gtccgggtgt tcagcatatt     900
   gcactggcaa gcaatgatgt tctgcgtacc ctgcgtgaaa tgcgtgcacg taccccgatg     960
   ggtggttttg aatttatggc acctccgcag gcaaaatatt atgaaggtgt gcgtcgtatt    1020
   gccggtgatg ttctgagcga agagcagatt aaagaatgcc aggaactggg cgttctggtt    1080
   gatcgtgatg atcagggtgt tctgctgcag atttttacca aaccggttgg tgatcgtccg    1140
   accttttttc tggaaatgat tcagcgtatt ggctgcatgg aaaaagatga agtgggtcag    1200
   gaatatcaga aaggcggttg tggtggtttt ggtaaaggca attttagcga actgtttaaa    1260
   agcattgaag attatgaaaa aagcctggaa gttaaacaga gcgttgttgc ccagaaaagc    1320
   taa                                                                  1323
<210> 2
   <211> 440
   <212> PRT
   <213> Avena sativa
<400> 2
   Met Pro Pro Thr Pro Ala Thr Ala Thr Gly Ala Ala Ala Ala Ala Val
   1               5                   10                  15
   Thr Pro Glu His Ala Ala Arg Ser Phe Pro Arg Val Val Arg Val Asn
               20                  25                  30
   Pro Arg Ser Asp Arg Phe Pro Val Leu Ser Phe His His Val Glu Leu
           35                  40                  45
   Trp Cys Ala Asp Ala Ala Ser Ala Ala Gly Arg Phe Ser Phe Ala Leu
       50                  55                  60
   Gly Ala Pro Leu Ala Ala Arg Ser Asp Leu Ser Thr Gly Asn Ser Ala
   65                  70                  75                  80
   His Ala Ser Leu Leu Leu Arg Ser Gly Ala Leu Ala Phe Leu Phe Thr
                   85                  90                  95
   Ala Pro Tyr Ala Pro Pro Pro Gln Glu Ala Ala Thr Ala Ala Ala Thr
               100                 105                 110
   Ala Ser Ile Pro Ser Phe Ser Ala Asp Ala Ala Arg Thr Phe Ala Ala
           115                 120                 125
   Ala His Gly Leu Ala Val Arg Ser Val Gly Val Arg Val Ala Asp Ala
       130                 135                 140
   Ala Glu Ala Phe Arg Val Ser Val Ala Gly Gly Ala Arg Pro Ala Phe
   145                 150                 155                 160
   Ala Pro Ala Asp Leu Gly His Gly Phe Gly Leu Ala Glu Val Glu Leu
                   165                 170                 175
   Tyr Gly Asp Val Val Leu Arg Phe Val Ser Tyr Pro Asp Glu Thr Asp
   180 185 190
   Leu Pro Phe Leu Pro Gly Phe Glu Arg Val Ser Ser Pro Gly Ala Val
   195 200 205
   Asp Tyr Gly Leu Thr Arg Phe Asp His Val Val Gly Asn Val Pro Glu
   210 215 220
   Met Ala Pro Val Ile Asp Tyr Met Lys Gly Phe Leu Gly Phe His Glu
   225 230 235 240
   Phe Ala Glu Phe Thr Ala Glu Asp Val Gly Thr Thr Glu Ser Gly Leu
   245 250 255
   Asn Ser Val Val Leu Ala Asn Asn Ser Glu Ala Val Leu Leu Pro Leu
   260 265 270
   Asn Glu Pro Val His Gly Thr Lys Arg Arg Ser Gln Ile Gln Thr Tyr
   275 280 285
   Leu Glu Tyr His Gly Gly Pro Gly Val Gln His Ile Ala Leu Ala Ser
   290 295 300
   Asn Asp Val Leu Arg Thr Leu Arg Glu Met Arg Ala Arg Thr Pro Met
   305 310 315 320
   Gly Gly Phe Glu Phe Met Ala Pro Pro Gln Ala Lys Tyr Tyr Glu Gly
   325 330 335
   Val Arg Arg Ile Ala Gly Asp Val Leu Ser Glu Glu Gln Ile Lys Glu
   340 345 350
   Cys Gln Glu Leu Gly Val Leu Val Asp Arg Asp Asp Gln Gly Val Leu
   355 360 365
   Leu Gln Ile Phe Thr Lys Pro Val Gly Asp Arg Pro Thr Phe Phe Leu
   370 375 380
   Glu Met Ile Gln Arg Ile Gly Cys Met Glu Lys Asp Glu Val Gly Gln
   385 390 395 400
   Glu Tyr Gln Lys Gly Gly Cys Gly Gly Phe Gly Lys Gly Asn Phe Ser
   405 410 415
   Glu Leu Phe Lys Ser Ile Glu Asp Tyr Glu Lys Ser Leu Glu Val Lys
   420 425 430
   Gln Ser Val Val Ala Gln Lys Ser
           435                 440
<210> 3
   <211> 1077
   <212> DNA
   <213> Pseudomonas fluorescens
<220>
   <221> misc_feature
   <222> (1006)..(1008)
   <223> GGT codon is replaced by codon TGG
<400> 3
   atggcagatc tatacgaaaa cccaatgggc ctgatgggct ttgaattcat cgaattcgcg      60
   tcgccgacgc cgggtaccct ggagccgatc ttcgagatca tgggcttcac caaagtcgcg     120
   acccaccgtt ccaagaacgt gcacctgtac cgccagggcg agatcaacct gatcctcaac     180
   aacgagccca acagcatcgc ctcctacttt gcggccgaac acggcccgtc ggtgtgcggc     240
   atggcgttcc gcgtgaagga ctcgcaaaag gcctacaacc gcgccctgga actcggcgcc     300
   cagccgatcc atattgacac cgggccgatg gaattgaacc tgccggcgat caagggcatc     360
   ggcggcgcgc cgttgtacct gatcgaccgt ttcggcgaag gcagctcgat ctacgacatc     420
   gacttcgtgt acctcgaagg tgtggagcgc aatccggtcg gtgcaggtct caaagtcatc     480
   gaccacctga cccacaacgt ctatcgcggc cgcatggtct actgggccaa cttctacgag     540
   aaattgttca acttccgtga agcgcgttac ttcgatatca agggcgagta caccggcctg     600
   acttccaagg ccatgagtgc gccggacggc atgatccgca tcccgctgaa cgaagagtcg     660
   tccaagggcg cggggcagat cgaagagttc ctgatgcagt tcaacggcga aggcatccag     720
   cacgtggcgt tcctcaccga cgacctggtc aagacctggg acgcgttgaa gaaaatcggc     780
   atgcgcttca tgaccgcgcc gccagacact tattacgaaa tgctcgaagg ccgcctgcct     840
   gaccacggcg agccggtgga tcaactgcag gcacgcggta tcctgctgga cggatcttcc     900
   gtggaaggcg acaaacgcct gctgctgcag atcttctcgg aaaccctgat gggcccggtg     960
   ttcttcgaat tcatccagcg caagggcgac gatgggtttg gcgagtggaa cttcaaggcg    1020
   ctgttcgagt ccatcgaacg tgaccaggtg cgtcgtggtg tattgaccgc cgattaa       1077
<210> 4
   <211> 358
   <212> PRT
   <213> Pseudomonas fluorescens
<220>
   <221> MISC_FEATURE
   <222> (336)..(336)
   <223> Gly replaced by Trp
<400> 4
   Met Ala Asp Leu Tyr Glu Asn Pro Met Gly Leu Met Gly Phe Glu Phe
   1               5                   10                  15
   Ile Glu Phe Ala Ser Pro Thr Pro Gly Thr Leu Glu Pro Ile Phe Glu
               20                  25                  30
   Ile Met Gly Phe Thr Lys Val Ala Thr His Arg Ser Lys Asn Val His
           35                  40                  45
   Leu Tyr Arg Gln Gly Glu Ile Asn Leu Ile Leu Asn Asn Glu Pro Asn
       50                  55                  60
   Ser Ile Ala Ser Tyr Phe Ala Ala Glu His Gly Pro Ser Val Cys Gly
   65                  70                  75                  80
   Met Ala Phe Arg Val Lys Asp Ser Gln Lys Ala Tyr Asn Arg Ala Leu
                   85                  90                  95
   Glu Leu Gly Ala Gln Pro Ile His Ile Asp Thr Gly Pro Met Glu Leu
               100                 105                 110
   Asn Leu Pro Ala Ile Lys Gly Ile Gly Gly Ala Pro Leu Tyr Leu Ile
           115                 120                 125
   Asp Arg Phe Gly Glu Gly Ser Ser Ile Tyr Asp Ile Asp Phe Val Tyr
       130                 135                 140
   Leu Glu Gly Val Glu Arg Asn Pro Val Gly Ala Gly Leu Lys Val Ile
   145                 150                 155                 160
   Asp His Leu Thr His Asn Val Tyr Arg Gly Arg Met Val Tyr Trp Ala
                   165                 170                 175
   Asn Phe Tyr Glu Lys Leu Phe Asn Phe Arg Glu Ala Arg Tyr Phe Asp
               180                 185                 190
   Ile Lys Gly Glu Tyr Thr Gly Leu Thr Ser Lys Ala Met Ser Ala Pro
           195                 200                 205
   Asp Gly Met Ile Arg Ile Pro Leu Asn Glu Glu Ser Ser Lys Gly Ala
       210                 215                 220
   Gly Gln Ile Glu Glu Phe Leu Met Gln Phe Asn Gly Glu Gly Ile Gln
   225                 230                 235                 240
   His Val Ala Phe Leu Thr Asp Asp Leu Val Lys Thr Trp Asp Ala Leu
                   245                 250                 255
   Lys Lys Ile Gly Met Arg Phe Met Thr Ala Pro Pro Asp Thr Tyr Tyr
               260                 265                 270
   Glu Met Leu Glu Gly Arg Leu Pro Asp His Gly Glu Pro Val Asp Gln
           275                 280                 285
   Leu Gln Ala Arg Gly Ile Leu Leu Asp Gly Ser Ser Val Glu Gly Asp
       290                 295                 300
   Lys Arg Leu Leu Leu Gln Ile Phe Ser Glu Thr Leu Met Gly Pro Val
   305                 310                 315                 320
   Phe Phe Glu Phe Ile Gln Arg Lys Gly Asp Asp Gly Phe Gly Glu Trp
                   325                 330                 335
   Asn Phe Lys Ala Leu Phe Glu Ser Ile Glu Arg Asp Gln Val Arg Arg
               340                 345                 350
   Gly Val Leu Thr Ala Asp
           355
<210> 5
   <211> 1077
   <212> DNA
   <213> Artificial Sequence
<220>
   <223> Nucleic acid sequence encoding Pseudomonas fluorescens HPPD mutated at the position 336 (Gly to Trp ) optimized for the expression in soybean and cotton
<220>
   <221> misc_feature
   <222> (1006)..(1008)
   <223> GGT codon is replaced by codon TGG
<400> 5
   atggctgatc tttatgagaa ccctatgggt cttatgggct tcgagtttat tgagttcgct      60
   tctcctaccc ctggtactct tgaacctatt ttcgagatca tgggcttcac taaggttgca     120
   actcacaggt ctaagaacgt tcacctttac aggcagggtg agatcaacct tatccttaac     180
   aacgagccta actccattgc ttcttatttc gctgctgagc atggtccatc tgtttgcggt     240
   atggctttca gagttaagga ttctcagaag gcttacaaca gggctcttga acttggtgct     300
   cagcctattc atattgatac cggacctatg gaactcaacc ttcctgctat taagggtatt     360
   ggtggtgctc ctctttacct tattgataga ttcggtgagg gctcctccat ctacgatatt     420
   gatttcgttt accttgaggg cgttgagaga aaccctgttg gtgctggtct taaggttatc     480
   gatcacctta cccacaacgt ttacagaggt aggatggttt actgggctaa cttctacgag     540
   aagttgttca acttcagaga ggctcgttac ttcgatatta agggcgagta cactggtctt     600
   acctctaagg ctatgtctgc tcctgatggt atgatcagga ttcctcttaa cgaagagtcc     660
   tctaagggtg ctggtcaaat tgaagagttc ctcatgcaat tcaacggtga gggtattcag     720
   catgttgctt tcttgaccga tgaccttgtt aagacttggg acgctcttaa gaaaatcggc     780
   atgcgtttca tgactgctcc tccagatact tactacgaaa tgcttgaggg taggcttcct     840
   gatcatggtg aacctgttga tcaacttcag gctaggggta ttcttcttga tggttcttct     900
   gttgagggcg ataagaggct tttgcttcag attttctccg agactcttat gggtcctgtg     960
   ttcttcgagt tcattcagag aaagggtgat gatggtttcg gtgaatggaa cttcaaggct    1020
   cttttcgagt ccattgagag ggatcaagtt agaaggggtg ttcttaccgc tgattaa       1077
<210> 6
   <211> 1053
   <212> DNA
   <213> Synechococcus sp.
<400> 6
   atgaacccgt ccattcgaat tgtccaaggg atccaccacc tgcacttcta cctttgggat      60
   ctgccccgtt ggcgggaaca cttttgtcgg gtttggggct tccgggtggc aagcgacgcc     120
   ggcaacaccc tggagctgga gcagggatcc ctgcgcttgc gcctgtctca gccggcacgg     180
   gcgggggacg aggtggaccg ccatttgcag cggcatgggc cgggggtggt ggatgtggcc     240
   ttggcggtgg gagagcagga gctaccggcc ttggcggagc tgttgcgggg ccgaggcgcc     300
   caactggcgt ggatcccggc agcagcggcg ctctgcctcc acacccccta cgggatccgg     360
   cattctctga tccctggccc cttggatgcc gcccctgccg aagcgggcct gttttcccac     420
   tgggatcacg tggtgttgaa cgtggagcag ggatccctgc aggcggcagc cgactggtat     480
   gggcgggtgc tgggctggcg gcggctgtac cgctacagca tcggcaccgc cacctccggc     540
   ctggaaagcg tggtggtggg ggatccggaa gcggggatcc aatgggccat caacgagccc      600
   acctgtgccg cttcccagat tcaggagttt ttgcatgccc atggcggccc gggcattcag     660
   cacgcggcgc tgcacagctc agacattgtt gccagcctgc gccggttgcg gcagggggga      720
   gtggactttt tgcaagtggc gccgcagtac tacaccagcc tggaaaggga gctggggttg     780
   gcgctccgtt ctgcccttgg gcaggccatc tcctggcaag acctggtgga gcagcagatc     840
   cttctggatg ctaccctgcc cgcttctgat ggccaggatc gcccccttct gctgcagacc      900
   tttacccagc ccctctttgg tcggcccacc tttttctttg aagtcattca acggctaggc      960
   ggggccacgg gctttggcga ggccaatttt caggctttgt tcgaggccct ggaacggcaa    1020
   cagcgacagc gacaccaggc gctgacccct tag                                1053
<210> 7
   <211> 350
   <212> PRT
   <213> Synechococcus sp.
<400> 7
   Met Asn Pro Ser Ile Arg Ile Val Gln Gly Ile His His Leu His Phe
   1               5                   10                  15
   Tyr Leu Trp Asp Leu Pro Arg Trp Arg Glu His Phe Cys Arg Val Trp
               20                  25                  30
   Gly Phe Arg Val Ala Ser Asp Ala Gly Asn Thr Leu Glu Leu Glu Gln
           35                  40                  45
   Gly Ser Leu Arg Leu Arg Leu Ser Gln Pro Ala Arg Ala Gly Asp Glu
       50                  55                  60
   Val Asp Arg His Leu Gln Arg His Gly Pro Gly Val Val Asp Val Ala
   65                  70                  75                  80
   Leu Ala Val Gly Glu Gln Glu Leu Pro Ala Leu Ala Glu Leu Leu Arg
                   85                  90                  95
   Gly Arg Gly Ala Gln Leu Ala Trp Ile Pro Ala Ala Ala Ala Leu Cys
               100                 105                 110
   Leu His Thr Pro Tyr Gly Ile Arg His Ser Leu Ile Pro Gly Pro Leu
           115                 120                 125
   Asp Ala Ala Pro Ala Glu Ala Gly Leu Phe Ser His Trp Asp His Val
       130                 135                 140
   Val Leu Asn Val Glu Gln Gly Ser Leu Gln Ala Ala Ala Asp Trp Tyr
   145                 150                 155                 160
   Gly Arg Val Leu Gly Trp Arg Arg Leu Tyr Arg Tyr Ser Ile Gly Thr
                   165                 170                 175
   Ala Thr Ser Gly Leu Glu Ser Val Val Val Gly Asp Pro Glu Ala Gly
               180                 185                 190
   Ile Gln Trp Ala Ile Asn Glu Pro Thr Cys Ala Ala Ser Gln Ile Gln
           195                 200                 205
   Glu Phe Leu His Ala His Gly Gly Pro Gly Ile Gln His Ala Ala Leu
   210 215 220
   His Ser Ser Asp Ile Val Ala Ser Leu Arg Arg Leu Arg Gln Gly Gly
   225 230 235 240
   Val Asp Phe Leu Gln Val Ala Pro Gln Tyr Tyr Thr Ser Leu Glu Arg
   245 250 255
   Glu Leu Gly Leu Ala Leu Arg Ser Ala Leu Gly Gln Ala Ile Ser Trp
   260 265 270
   Gln Asp Leu Val Glu Gln Gln Ile Leu Leu Asp Ala Thr Leu Pro Ala
   275 280 285
   Ser Asp Gly Gln Asp Arg Pro Leu Leu Leu Gln Thr Phe Thr Gln Pro
   290 295 300
   Leu Phe Gly Arg Pro Thr Phe Phe Phe Glu Val Ile Gln Arg Leu Gly
   305 310 315 320
   Gly Ala Thr Gly Phe Gly Glu Ala Asn Phe Gln Ala Leu Phe Glu Ala
   325 330 335
   Leu Glu Arg Gln Gln Arg Gln Arg His Gln Ala Leu Thr Pro
   340 345 350
<210> 8
   <211> 1149
   <212> DNA
   <213> Blepharisma japonicum
<400> 8
   atgacttatt acgacaagca agaaacgcgt ccagatcttg gcgaattcta tggtttccat      60
   cacgttcgtt tttacgtctc caactcagag caagccgctt cgttctacac atctcgcttt     120
   gggttttctc cggttgccta tgaaggattg gaaacaggaa accaaaaatt ctgtaccaat     180
   gtcgtccgaa gcaaccatgt agtcatcgct tttacctcag ctctcactcc tgaagacaat     240
   gaagtgaacc gtcacgttgg caagcatagt gatggagttc aagacattgc ctttagtgta     300
   agtgacgcaa gagggatgta tgagaaagcg atagctaaag gctgtaaaag cttccgtgag     360
   ccacaggttt tacaagatca atttggatct gttataatag cgtctctcca gacttatgga     420
   gacactgttc acacattagt ccaaaatgtc gactatacag gacccttttt gcctggcttc     480
   agagcaatca caaaagatga tccattaaac tctgcctttc ctcaggtaaa ttatgacatt     540
   attgatcatg ttgtaggaaa tcagcctggt ggcgatatga ctcctacagt agaatggtat     600
   gagaaatatc tagaatttca tcgatattgg tctgctgatg agtctgtaat ccataccgat     660
   tattcagcat taaggtctgt tgtggttgct gattgggatg aagtgatcaa aatgcctatt     720
   aatgagcctg ctgatggact tagaaaaagt caaatccaag aatatgtcga atattatggt     780
   ggagcaggcg tacaacatat tgccttaaaa gtcaatgata ttatttcagt aataagcacc     840
   ttaagggcta gaggtgtgga attcttagaa gttcctccta aatattatga tagcttaaga     900
   aaaagacttg cgcattctgc ggtacaaatt gaagaagact taaaaagaat tgaagacctt     960
   catattttgg ttgactttga cgaccgtggg tatttacttc agattttcac aaaaccagta    1020
   gaagacagac ctactctgtt ttatgaaatt attcaaagac ataataacaa tggattcgga    1080
   attggaaatt ttaaagccct atttgaatca ttggaacaag agcaagaaag aagaggtaat    1140
   ttgatctaa                                                            1149
<210> 9
   <211> 382
   <212> PRT
   <213> Blepharisma japonicum
<400> 9
   Met Thr Tyr Tyr Asp Lys Gln Glu Thr Arg Pro Asp Leu Gly Glu Phe
   1               5                   10                  15
   Tyr Gly Phe His His Val Arg Phe Tyr Val Ser Asn Ser Glu Gln Ala
               20                  25                  30
   Ala Ser Phe Tyr Thr Ser Arg Phe Gly Phe Ser Pro Val Ala Tyr Glu
           35                  40                  45
   Gly Leu Glu Thr Gly Asn Gln Lys Phe Cys Thr Asn Val Val Arg Ser
       50                  55                  60
   Asn His Val Val Ile Ala Phe Thr Ser Ala Leu Thr Pro Glu Asp Asn
   65                  70                  75                  80
   Glu Val Asn Arg His Val Gly Lys His Ser Asp Gly Val Gln Asp Ile
                   85                  90                  95
   Ala Phe Ser Val Ser Asp Ala Arg Gly Met Tyr Glu Lys Ala Ile Ala
               100                 105                 110
   Lys Gly Cys Lys Ser Phe Arg Glu Pro Gln Val Leu Gln Asp Gln Phe
           115                 120                 125
   Gly Ser Val Ile Ile Ala Ser Leu Gln Thr Tyr Gly Asp Thr Val His
       130                 135                 140
   Thr Leu Val Gln Asn Val Asp Tyr Thr Gly Pro Phe Leu Pro Gly Phe
   145                 150                 155                 160
   Arg Ala Ile Thr Lys Asp Asp Pro Leu Asn Ser Ala Phe Pro Gln Val
                   165                 170                 175
   Asn Tyr Asp Ile Ile Asp His Val Val Gly Asn Gln Pro Gly Gly Asp
               180                 185                 190
   Met Thr Pro Thr Val Glu Trp Tyr Glu Lys Tyr Leu Glu Phe His Arg
           195                 200                 205
   Tyr Trp Ser Ala Asp Glu Ser Val Ile His Thr Asp Tyr Ser Ala Leu
       210                 215                 220
   Arg Ser Val Val Val Ala Asp Trp Asp Glu Val Ile Lys Met Pro Ile
   225                 230                 235                 240
   Asn Glu Pro Ala Asp Gly Leu Arg Lys Ser Gln Ile Gln Glu Tyr Val
                   245                 250                 255
   Glu Tyr Tyr Gly Gly Ala Gly Val Gln His Ile Ala Leu Lys Val Asn
               260                 265                 270
   Asp Ile Ile Ser Val Ile Ser Thr Leu Arg Ala Arg Gly Val Glu Phe
           275                 280                 285
   Leu Glu Val Pro Pro Lys Tyr Tyr Asp Ser Leu Arg Lys Arg Leu Ala
       290                 295                 300
   His Ser Ala Val Gln Ile Glu Glu Asp Leu Lys Arg Ile Glu Asp Leu
   305                 310                 315                 320
   His Ile Leu Val Asp Phe Asp Asp Arg Gly Tyr Leu Leu Gln Ile Phe
                   325                 330                 335
   Thr Lys Pro Val Glu Asp Arg Pro Thr Leu Phe Tyr Glu Ile Ile Gln
               340                 345                 350
   Arg His Asn Asn Asn Gly Phe Gly Ile Gly Asn Phe Lys Ala Leu Phe
           355                 360                 365
   Glu Ser Leu Glu Gln Glu Gln Glu Arg Arg Gly Asn Leu Ile
       370                 375                 380
<210> 10
   <211> 1206
   <212> DNA
   <213> Rhodococcus sp.
<400> 10
   atgacgatcg agcagactct caccgacaag gaacgcctgg caggtctcga cctcggccag      60
   ctcgagcagt tggtcgggct cgtcgagtac gacggcaccc gcgacccgtt cccggtcagc     120
   ggctgggatg ccgtcgtctg ggtggtcggc aacgccaccc agaccgccca ctacttccag     180
   tccgcgttcg ggatgaccct cgtcgcctac tccggaccca ccaccggcaa ccgcgaccac     240
   cacagcttcg tcctcgaatc cggggccgtc cgcttcgtca tcaaaggcgc cgtgaacccg     300
   gacagccccc tgatcgacca ccaccgcacc cacggcgacg gcgtcgtcga catcgccctc     360
   gccgtccccg acgtcgacaa gtgcatcgcc cacgcccgcg cccagggcgc caccgtcctc     420
   gacgaacccc acgacgtgac cgacgaccac ggcaccgtcc gcctcgccgc gatcgccacc     480
   tacggcgaca cccgccacac cctcgtcgac cgcagccact acaccggccc ctacctgccc     540
   ggctacaccg cccgcacctc cggccacacc aaacgggacg gggcacccaa gcgcctgttc     600
   caggccctcg accacgtcgt cggcaacgtc gaactcggca agatggacca ctgggtcgac     660
   ttctacaacc gggtcatggg ctttacgaac atggccgagt tcgtcggcga ggacatcgcc     720
   accgactact ccgcgctgat gagcaaggtc gtctccaacg gcaaccaccg ggtcaagttc     780
   cccctcaacg aacccgccct cgccaagaaa cgctcgcaga tcgacgaata cctcgacttc     840
   taccgcggcc ccggcgccca gcacctggcc ctggccacca atgacatcct caccgccgtc     900
   gaccagctga ccgccgaggg cgtcgagttc ctggccaccc ccgactccta ctacgaggac     960
   cccgaactgc gggcccggat cggcaacgtc cgcgccccca tcgccgaact gcagaaacgc    1020
   ggcatcctcg tcgaccgcga cgaagacggc tacctgctgc agatcttcac caaacccctc    1080
   gtcgaccggc ccaccgtgtt cttcgaactc atcgaacgcc acggctccct cggcttcggc    1140
   atcggcaact tcaaagccct cttcgaggcc atcgaacgcg aacaagccgc ccgcggaaac    1200
   ttctga                                                               1206
<210> 11
   <211> 401
   <212> PRT
   <213> Rhodococcus sp.
<400> 11
   Met Thr Ile Glu Gln Thr Leu Thr Asp Lys Glu Arg Leu Ala Gly Leu
   1               5                   10                  15
   Asp Leu Gly Gln Leu Glu Gln Leu Val Gly Leu Val Glu Tyr Asp Gly
               20                  25                  30
   Thr Arg Asp Pro Phe Pro Val Ser Gly Trp Asp Ala Val Val Trp Val
           35                  40                  45
   Val Gly Asn Ala Thr Gln Thr Ala His Tyr Phe Gln Ser Ala Phe Gly
       50                  55                  60
   Met Thr Leu Val Ala Tyr Ser Gly Pro Thr Thr Gly Asn Arg Asp His
   65                  70                  75                  80
   His Ser Phe Val Leu Glu Ser Gly Ala Val Arg Phe Val Ile Lys Gly
                   85                  90                  95
   Ala Val Asn Pro Asp Ser Pro Leu Ile Asp His His Arg Thr His Gly
               100                 105                 110
   Asp Gly Val Val Asp Ile Ala Leu Ala Val Pro Asp Val Asp Lys Cys
           115                 120                 125
   Ile Ala His Ala Arg Ala Gln Gly Ala Thr Val Leu Asp Glu Pro His
       130                 135                 140
   Asp Val Thr Asp Asp His Gly Thr Val Arg Leu Ala Ala Ile Ala Thr
   145                 150                 155                 160
   Tyr Gly Asp Thr Arg His Thr Leu Val Asp Arg Ser His Tyr Thr Gly
                   165                 170                 175
   Pro Tyr Leu Pro Gly Tyr Thr Ala Arg Thr Ser Gly His Thr Lys Arg
               180                 185                 190
   Asp Gly Ala Pro Lys Arg Leu Phe Gln Ala Leu Asp His Val Val Gly
           195                 200                 205
   Asn Val Glu Leu Gly Lys Met Asp His Trp Val Asp Phe Tyr Asn Arg
       210                 215                 220
   Val Met Gly Phe Thr Asn Met Ala Glu Phe Val Gly Glu Asp Ile Ala
   225                 230                 235                 240
   Thr Asp Tyr Ser Ala Leu Met Ser Lys Val Val Ser Asn Gly Asn His
                   245                 250                 255
   Arg Val Lys Phe Pro Leu Asn Glu Pro Ala Leu Ala Lys Lys Arg Ser
               260                 265                 270
   Gln Ile Asp Glu Tyr Leu Asp Phe Tyr Arg Gly Pro Gly Ala Gln His
           275                 280                 285
   Leu Ala Leu Ala Thr Asn Asp Ile Leu Thr Ala Val Asp Gln Leu Thr
       290                 295                 300
   Ala Glu Gly Val Glu Phe Leu Ala Thr Pro Asp Ser Tyr Tyr Glu Asp
   305 310 315 320
   Pro Glu Leu Arg Ala Arg Ile Gly Asn Val Arg Ala Pro Ile Ala Glu
   325 330 335
   Leu Gln Lys Arg Gly Ile Leu Val Asp Arg Asp Glu Asp Gly Tyr Leu
   340 345 350
   Leu Gln Ile Phe Thr Lys Pro Leu Val Asp Arg Pro Thr Val Phe Phe
   355 360 365
   Glu Leu Ile Glu Arg His Gly Ser Leu Gly Phe Gly Ile Gly Asn Phe
   370 375 380
   Lys Ala Leu Phe Glu Ala Ile Glu Arg Glu Gln Ala Ala Arg Gly Asn
   385 390 395 400
   Phe
<210> 12
   <211> 1209
   <212> DNA
   <213> Rhodococcus sp.
<400> 12
   atgactaccg ccgacattcg cctgacgccc cgcgaggtgg ccgcacatct ggagaccgac 60
   gagctccggc agttggtcgg gctcgtcgaa cacgacgacg cgtcggatcc gtttcccgtg 120
   gtcgcgatgg atgccgtggt gttcgtgtgc ggcaacgcga cgcagagcac gcagtacttc 180
   gtctccacgt ggggcatgac cctcgtcgcc tacgccgggc cggagaccgg tcagcgctcg 240
   cacaagtcct tcgtcctcga gtcggggtcg gcacggttcg tgctgcacgg cgccgtcgat 300
   ccgaagagcc cgctcgcgga ccatcaccgg gcgcacggcg acggcgtggt ggacctggcg 360
   atggaagttc tcgacgtcga ccgctgcatc gcgcatgcac gctcgcaggg ggccaccatt 420
   ctcgaggagc cgcgcgacgt cacggatcag ttcggcaccg tgcggctcgc ggcgatcgcc 480
   acgtacggca gcacccggca caccatcgtc gaccgaagcc gatacgacgg cccctacctc 540
   cccggattcg tcgcgcgctc cagcggtttc gcggcgcgac cgggtaaacc cccgcgattg 600
   ttccaggcgc tcgaccacgc cgtcggcaac gtcgagatgg gccggatgga tcactgggtc 660
   cggttctaca accgcgtcat gggcttcacg aacatggccg aattcgtcgg cgacgacatc 720
   gccacggagt actcggcgct gatgtcgaag gtcgtggcga acggcaatca ccgggtgaag 780
   ttcccgctca acgaacccgc ggtgggaaag aagaagtcgc agatcgacga atatctcgag 840
   ttctacggtg agccgggctg ccagcatctg gccctcgcga ccggagacat cctcgcgacg     900
   gtggacgcgt tgcgggccga gggtgtcgaa ttcctgaaca cacccgacgc gtactacgag     960
   gacccacagc tgcgcgcccg gatcggcagg gtgcgggtgc cggtggagga actgcagaag    1020
   cgcggaatcc tcgtcgaccg cgacgaggac ggatacctcc tgcagatctt caccaaaccg    1080
   ctcggcgacc ggccgaccgt gttcttcgag gtgatcgaac ggcacggttc gctcgggttc    1140
   ggggcgggta acttccaggc cctgttcgaa tccatcgagc gtgagcaggc ggcgcgcggc    1200
   aatctgtga                                                            1209
<210> 13
   <211> 402
   <212> PRT
   <213> Rhodococcus sp.
<400> 13
   Met Thr Thr Ala Asp Ile Arg Leu Thr Pro Arg Glu Val Ala Ala His
   1               5                   10                  15
   Leu Glu Thr Asp Glu Leu Arg Gln Leu Val Gly Leu Val Glu His Asp
               20                  25                  30
   Asp Ala Ser Asp Pro Phe Pro Val Val Ala Met Asp Ala Val Val Phe
           35                  40                  45
   Val Cys Gly Asn Ala Thr Gln Ser Thr Gln Tyr Phe Val Ser Thr Trp
       50                  55                  60
   Gly Met Thr Leu Val Ala Tyr Ala Gly Pro Glu Thr Gly Gln Arg Ser
   65                  70                  75                  80
   His Lys Ser Phe Val Leu Glu Ser Gly Ser Ala Arg Phe Val Leu His
                   85                  90                  95
   Gly Ala Val Asp Pro Lys Ser Pro Leu Ala Asp His His Arg Ala His
               100                 105                 110
   Gly Asp Gly Val Val Asp Leu Ala Met Glu Val Leu Asp Val Asp Arg
           115                 120                 125
   Cys Ile Ala His Ala Arg Ser Gln Gly Ala Thr Ile Leu Glu Glu Pro
       130                 135                 140
   Arg Asp Val Thr Asp Gln Phe Gly Thr Val Arg Leu Ala Ala Ile Ala
   145                 150                 155                 160
   Thr Tyr Gly Ser Thr Arg His Thr Ile Val Asp Arg Ser Arg Tyr Asp
   165 170 175
   Gly Pro Tyr Leu Pro Gly Phe Val Ala Arg Ser Ser Gly Phe Ala Ala
   180 185 190
   Arg Pro Gly Lys Pro Pro Arg Leu Phe Gln Ala Leu Asp His Ala Val
   195 200 205
   Gly Asn Val Glu Met Gly Arg Met Asp His Trp Val Arg Phe Tyr Asn
   210 215 220
   Arg Val Met Gly Phe Thr Asn Met Ala Glu Phe Val Gly Asp Asp Ile
   225 230 235 240
   Ala Thr Glu Tyr Ser Ala Leu Met Ser Lys Val Val Ala Asn Gly Asn
   245 250 255
   His Arg Val Lys Phe Pro Leu Asn Glu Pro Ala Val Gly Lys Lys Lys
   260 265 270
   Ser Gln Ile Asp Glu Tyr Leu Glu Phe Tyr Gly Glu Pro Gly Cys Gln
   275 280 285
   His Leu Ala Leu Ala Thr Gly Asp Ile Leu Ala Thr Val Asp Ala Leu
   290 295 300
   Arg Ala Glu Gly Val Glu Phe Leu Asn Thr Pro Asp Ala Tyr Tyr Glu
   305 310 315 320
   Asp Pro Gln Leu Arg Ala Arg Ile Gly Arg Val Arg Val Pro Val Glu
   325 330 335
   Glu Leu Gln Lys Arg Gly Ile Leu Val Asp Arg Asp Glu Asp Gly Tyr
   340 345 350
   Leu Leu Gln Ile Phe Thr Lys Pro Leu Gly Asp Arg Pro Thr Val Phe
   355 360 365
   Phe Glu Val Ile Glu Arg His Gly Ser Leu Gly Phe Gly Ala Gly Asn
   370 375 380
   Phe Gln Ala Leu Phe Glu Ser Ile Glu Arg Glu Gln Ala Ala Arg Gly
   385 390 395 400
   Asn Leu
<210> 14
   <211> 1107
   <212> DNA
   <213> Picrophilus torridus
<400> 14
   atgtatggca aaaatttaat ctcagaacta agggaaaagg agatctttaa acgattacat      60
   cacgtggaat tttacgttag cagtgccaaa acatggtcat atttcatgaa caggggtctt     120
   ggatttaaaa cagtggcata tgccggtcca gaaaccggga taagggacaa gatatcctat     180
   gttatgtccc agggcactgc aaggatatct tttacatcat caatgaatga tgatagctat     240
   atatcgaatc atgttaaaaa acacggggat ggcgtaaagg atatagcact tgaggtcgat     300
   gatctggacg aggcaaaaag cctgatagaa aagtatggaa caaaggtttc aaaaataaat     360
   gaaataaagg atggaaatgg aaagataaga actgcagaga taaaaacgta cggtgaaacc     420
   gttcatacat taatagaaac cggggattac aatggcgtat tcatgcccgg ttatgaggaa     480
   tctgaaataa attcaaaaaa cactgggata aaaaagatcg atcatatagt tggaaatgtc     540
   tatgagggcg agatggatag ctgggttaat ttttacatag aaaaacttgg ctttgagcat     600
   ttaataacct ttgatgataa agatataaga actgattaca gcgcattaag atcaaaggtt     660
   gtaaaataca atgacgatat cgtatttcca ataaatgagc ctgcaaaggg cttaagaaaa     720
   tcacagatag aggaatatct tgactattac aggtctgagg gcgttcagca catagcactg     780
   ttaactgatg atataataaa aactgtatcc atgatggagg aaaacggcat agaattttta     840
   aaaacaccag gatcatacta tgaatcccta tcatcaagga taggctcaat agacgaggat     900
   ttaaatgaaa tagagaaaca taacatactt gtggatcgtg atgagaacgg atacctatta     960
   cagatcttca caaagcctgt tactgacagg ccaacgttct tctttgaggt catacagaga    1020
   aagggtgcaa ggtcattcgg caacggtaac tttaaggcac tttttgaggc gatagaaagg    1080
   gagcaggcaa agagaggaaa cctatga                                        1107
<210> 15
   <211> 368
   <212> PRT
   <213> Picrophilus torridus
<400> 15
   Met Tyr Gly Lys Asn Leu Ile Ser Glu Leu Arg Glu Lys Glu Ile Phe
   1               5                   10                  15
   Lys Arg Leu His His Val Glu Phe Tyr Val Ser Ser Ala Lys Thr Trp
               20                  25                  30
   Ser Tyr Phe Met Asn Arg Gly Leu Gly Phe Lys Thr Val Ala Tyr Ala
           35                  40                  45
   Gly Pro Glu Thr Gly Ile Arg Asp Lys Ile Ser Tyr Val Met Ser Gln
       50                  55                  60
   Gly Thr Ala Arg Ile Ser Phe Thr Ser Ser Met Asn Asp Asp Ser Tyr
   65                  70                  75                  80
   Ile Ser Asn His Val Lys Lys His Gly Asp Gly Val Lys Asp Ile Ala
                   85                  90                  95
   Leu Glu Val Asp Asp Leu Asp Glu Ala Lys Ser Leu Ile Glu Lys Tyr
               100                 105                 110
   Gly Thr Lys Val Ser Lys Ile Asn Glu Ile Lys Asp Gly Asn Gly Lys
           115                 120                 125
   Ile Arg Thr Ala Glu Ile Lys Thr Tyr Gly Glu Thr Val His Thr Leu
       130                 135                 140
   Ile Glu Thr Gly Asp Tyr Asn Gly Val Phe Met Pro Gly Tyr Glu Glu
   145                 150                 155                 160
   Ser Glu Ile Asn Ser Lys Asn Thr Gly Ile Lys Lys Ile Asp His Ile
                   165                 170                 175
   Val Gly Asn Val Tyr Glu Gly Glu Met Asp Ser Trp Val Asn Phe Tyr
               180                 185                 190
   Ile Glu Lys Leu Gly Phe Glu His Leu Ile Thr Phe Asp Asp Lys Asp
           195                 200                 205
   Ile Arg Thr Asp Tyr Ser Ala Leu Arg Ser Lys Val Val Lys Tyr Asn
       210                 215                 220
   Asp Asp Ile Val Phe Pro Ile Asn Glu Pro Ala Lys Gly Leu Arg Lys
   225                 230                 235                 240
   Ser Gln Ile Glu Glu Tyr Leu Asp Tyr Tyr Arg Ser Glu Gly Val Gln
                   245                 250                 255
   His Ile Ala Leu Leu Thr Asp Asp Ile Ile Lys Thr Val Ser Met Met
               260                 265                 270
   Glu Glu Asn Gly Ile Glu Phe Leu Lys Thr Pro Gly Ser Tyr Tyr Glu
           275                 280                 285
   Ser Leu Ser Ser Arg Ile Gly Ser Ile Asp Glu Asp Leu Asn Glu Ile
   290 295 300
   Glu Lys His Asn Ile Leu Val Asp Arg Asp Glu Asn Gly Tyr Leu Leu
   305 310 315 320
   Gln Ile Phe Thr Lys Pro Val Thr Asp Arg Pro Thr Phe Phe Phe Glu
   325 330 335
   Val Ile Gln Arg Lys Gly Ala Arg Ser Phe Gly Asn Gly Asn Phe Lys
   340 345 350
   Ala Leu Phe Glu Ala Ile Glu Arg Glu Gln Ala Lys Arg Gly Asn Leu
   355 360 365
<210> 16
   <211> 1164
   <212> DNA
   <213> Kordia algicida
<400> 16
   atggcagcag aaataaaaaa cttaaaagat ttacaaaata cagaatacgg actcaaaaaa      60
   ttatttgacg aagcagaaga ctttcttcca cttttaggaa cagactacgt agaattatac     120
   gtcgggaacg ccaaacaatc ggcacatttc tacaaaacgg cttttggttt tcaatcagaa     180
   gcttacgcag gattggaaac aggattaacc gacagagttt catacgtatt aaaacaagat     240
   aaaattcgct tggtcttaac aacaccatta ggaaaaggtg gcgaaatcaa tgagcatatc     300
   gatttacacg gcgatggcgt aaaagtagta gcactttggg tagaagatgc tacaaaagcc     360
   tttgaagaaa cgaccaaaag aggcgcaaaa ccgtacatgg aaccaacaaa agaagaagat     420
   gaaaacggat atgtaattcg ctcaggaatc tatacgtacg gagaaacggt tcatgttttt     480
   gtagaacgta aaaactataa cggagtcttt ttaccaggat atcaaagatg ggaatctcac     540
   tacaatccgg agccagttgg cttaaaattc atcgatcaca tggtaggaaa tgtaggttgg     600
   ggagaaatga aagaatggtg tgaattctac gcgaaagtaa tgggatttgc gcaaattatc     660
   tcctttacag atgatgatat ttctaccgat tttactgcgt tgatgagtaa agtaatgagt     720
   aatggaaatg gtagaatcaa atttccaatc aatgaacccg cagaaggaaa aaagaaatcg     780
   caaattgaag aatatctaga cttttacaat ggttcaggag tacaacatat tgcggttgct     840
   acagacaata ttattgatac ggtttcgcaa atgcgcgaac gtggagtaga attcttatac     900
   gttccagata catattatga tgacttgtta gaacgtgttg gcgacatcga tgaagatgta     960
   gaagaactca aaaaacacgg aatcttaatt gatcgtgatg aagaaggata cttattgcag    1020
   ttatttacca aaaccattgt agacagacca acaatgttct ttgaagtcat tcagcgtaaa    1080
   ggcgcacaat catttggagt aggaaacttt aaagctttat ttgaagcgat agaaagagaa    1140
   caagctgctc gcggaacatt gtaa                                           1164
<210> 17
   <211> 387
   <212> PRT
   <213> Kordia algicida
<400> 17
   Met Ala Ala Glu Ile Lys Asn Leu Lys Asp Leu Gln Asn Thr Glu Tyr
   1               5                   10                  15
   Gly Leu Lys Lys Leu Phe Asp Glu Ala Glu Asp Phe Leu Pro Leu Leu
               20                  25                  30
   Gly Thr Asp Tyr Val Glu Leu Tyr Val Gly Asn Ala Lys Gln Ser Ala
           35                  40                  45
   His Phe Tyr Lys Thr Ala Phe Gly Phe Gln Ser Glu Ala Tyr Ala Gly
       50                  55                  60
   Leu Glu Thr Gly Leu Thr Asp Arg Val Ser Tyr Val Leu Lys Gln Asp
   65                  70                  75                  80
   Lys Ile Arg Leu Val Leu Thr Thr Pro Leu Gly Lys Gly Gly Glu Ile
                   85                  90                  95
   Asn Glu His Ile Asp Leu His Gly Asp Gly Val Lys Val Val Ala Leu
               100                 105                 110
   Trp Val Glu Asp Ala Thr Lys Ala Phe Glu Glu Thr Thr Lys Arg Gly
           115                 120                 125
   Ala Lys Pro Tyr Met Glu Pro Thr Lys Glu Glu Asp Glu Asn Gly Tyr
       130                 135                 140
   Val Ile Arg Ser Gly Ile Tyr Thr Tyr Gly Glu Thr Val His Val Phe
   145                 150                 155                 160
   Val Glu Arg Lys Asn Tyr Asn Gly Val Phe Leu Pro Gly Tyr Gln Arg
                   165                 170                 175
   Trp Glu Ser His Tyr Asn Pro Glu Pro Val Gly Leu Lys Phe Ile Asp
               180                 185                 190
   His Met Val Gly Asn Val Gly Trp Gly Glu Met Lys Glu Trp Cys Glu
           195                 200                 205
   Phe Tyr Ala Lys Val Met Gly Phe Ala Gln Ile Ile Ser Phe Thr Asp
           210                 215                 220
   Asp Asp Ile Ser Thr Asp Phe Thr Ala Leu Met Ser Lys Val Met Ser
   225                 230                 235                 240
   Asn Gly Asn Gly Arg Ile Lys Phe Pro Ile Asn Glu Pro Ala Glu Gly
                   245                 250                 255
   Lys Lys Lys Ser Gln Ile Glu Glu Tyr Leu Asp Phe Tyr Asn Gly Ser
               260                 265                 270
   Gly Val Gln His Ile Ala Val Ala Thr Asp Asn Ile Ile Asp Thr Val
           275                 280                 285
   Ser Gln Met Arg Glu Arg Gly Val Glu Phe Leu Tyr Val Pro Asp Thr
       290                 295                 300
   Tyr Tyr Asp Asp Leu Leu Glu Arg Val Gly Asp Ile Asp Glu Asp Val
   305                 310                 315                 320
   Glu Glu Leu Lys Lys His Gly Ile Leu Ile Asp Arg Asp Glu Glu Gly
                   325                 330                 335
   Tyr Leu Leu Gln Leu Phe Thr Lys Thr Ile Val Asp Arg Pro Thr Met
               340                 345                 350
   Phe Phe Glu Val Ile Gln Arg Lys Gly Ala Gln Ser Phe Gly Val Gly
           355                 360                 365
   Asn Phe Lys Ala Leu Phe Glu Ala Ile Glu Arg Glu Gln Ala Ala Arg
       370                 375                 380
   Gly Thr Leu
   385
<210> 18
   <211> 1056
   <212> DNA
   <213> Artificial sequence
<220>
   <223> Nucleic acid sequence encoding Synechococcus sp. HPPD optimized for the expression in soybean and cotton
<400> 18
   atggctaacc catccattag gatcgttcag ggaatccatc accttcactt ctacctttgg      60
   gatcttccaa ggtggagaga gcatttctgt agagtttggg gattcagagt tgcttctgat     120
   gctggaaaca ctcttgaact tgagcaagga tctcttaggc ttaggctttc tcaaccagct     180
   agagctggtg atgaagttga taggcatctt caaagacatg gaccaggtgt tgttgatgtt     240
   gctcttgctg ttggagaaca agaacttcca gctcttgctg aacttcttag aggaaggggt     300
   gctcaacttg cttggattcc agctgctgct gctctttgcc ttcatactcc atacggaatt     360
   aggcactccc ttattccagg accacttgat gctgctccag ctgaggctgg acttttttct      420
   cattgggatc acgttgttct taatgtggag cagggatctc ttcaagctgc tgctgattgg     480
   tatggaagag ttcttggatg gcgtagactt taccgttact ccatcggaac tgctacttca     540
   ggacttgagt ctgttgttgt tggagatcca gaggctggca ttcaatgggc tatcaacgaa     600
   cctacttgcg ctgcttctca gattcaagag ttccttcatg ctcatggtgg accaggtatt     660
   caacatgctg ctctccactc ttcagatatt gtggcttctc ttagaaggct taggcaaggt     720
   ggagttgatt tccttcaagt ggctccacag tactatactt ctcttgagag agagcttgga     780
   cttgctctta gatctgctct tggacaggct atttcttggc aggatcttgt tgagcagcag     840
   attcttcttg atgctactct tccagcttct gatggacaag ataggccact tttgctccaa     900
   actttcactc aaccactttt cggaaggcca acattcttct tcgaagtgat tcaaagactt     960
   ggaggtgcta ctggatttgg agaggctaat ttccaagctc ttttcgaggc tcttgaaagg    1020
   caacaaaggc aaaggcatca agctcttact ccatga                             1056
<210> 19
   <211> 1152
   <212> DNA
   <213> Artificial sequence
<220>
   <223> Nucleic acid sequence encoding Blepharisma japonicum HPPD optimized for the expression in soybean and cotton
<400> 19
   atggctactt actacgataa gcaagagact agaccagatc ttggagagtt ctacggattc      60
   caccatgtta ggttctacgt gtctaattct gagcaagctg cttctttcta cacttcccgt     120
   ttcggatttt ctccagttgc ttacgaagga cttgagactg gaaatcagaa gttctgcact     180
   aacgttgtta ggtctaacca cgtggtgatt gcttttactt ctgctctcac tccagaggat     240
   aatgaggtta acaggcatgt tggaaagcac tctgatggtg ttcaggatat tgctttctct     300
   gtgtctgatg ctagaggaat gtacgagaag gctattgcta agggatgcaa gtctttcaga     360
   gagccacaag ttcttcaaga tcagttcgga tcagtgatta ttgcttccct tcagacttac     420
   ggtgatactg ttcacactct cgttcagaac gttgattaca ctggaccatt ccttccaggt     480
   ttcagggcta tcactaagga tgatccactt aactctgctt tcccacaggt gaactacgat     540
   atcattgatc acgttgtggg aaatcagcca ggtggagata tgactccaac tgttgagtgg     600
   tacgagaagt accttgagtt tcacaggtat tggagtgctg atgagtctgt gatccacact     660
   gattactctg ctcttagatc tgttgttgtg gctgattggg atgaggttat caagatgcct     720
   attaacgaac cagctgatgg acttaggaag tcccagattc aagagtacgt tgagtattat     780
   ggtggagctg gtgttcaaca cattgctctc aaggtgaacg atatcatttc cgtgatttcc     840
   actcttagag ctagaggagt tgagtttctt gaagtcccac caaagtacta cgattctctc     900
   agaaagaggc ttgctcattc tgctgttcag atcgaagagg atcttaaacg tattgaggac     960
   cttcacatcc tcgtggattt tgatgatagg ggataccttc tccagatttt cactaagcca    1020
   gttgaggata ggccaacttt gttctacgag atcatccaaa ggcataacaa caacggattc    1080
   ggaatcggaa atttcaaggc tcttttcgag tctcttgagc aagaacaaga gagaagggga    1140
   aacctcatct ga                                                        1152
<210> 20
   <211> 1209
   <212> DNA
   <213> Artificial sequence
<220>
   <223> Nucleic acid sequence encoding Rhodococcus sp. (strain RHA1), isolate ro03041 HPPD optimized for the expression in soybean and cotton
<400> 20
   atggctacta ttgagcagac tctcactgat aaggaaaggc ttgctggact tgatcttgga      60
   caacttgagc agcttgttgg acttgttgag tacgatggaa ctagggaccc atttccagtt     120
   tctggatggg atgctgttgt ttgggttgtg ggaaatgcta ctcaaactgc tcactacttc     180
   caatctgctt tcggaatgac tcttgtggct tactctggac caactactgg aaatagggat     240
   caccactctt tcgttcttga atctggtgct gtgagattcg ttattaaggg tgctgtgaac     300
   ccagattctc cacttattga tcaccatagg actcatggtg atggtgttgt ggatattgct     360
   cttgctgttc cagatgtgga taagtgcatt gctcatgcta gggctcaagg tgctactgtt     420
   cttgatgagc cacacgatgt tactgatgat cacggaactg ttaggcttgc tgctattgct     480
   acttacggtg atacaaggca cactcttgtt gataggtcac actacactgg accatatctt     540
   ccaggataca ctgctagaac ttccggacac actaagaggg atggtgctcc aaagagactt     600
   ttccaggctc ttgatcacgt tgttggaaac gttgagcttg gaaagatgga tcactgggtg     660
   gacttctaca atagggtgat gggattcact aatatggctg agtttgtggg agaagatatc     720
   gctactgatt actctgctct catgtctaag gttgtgtcta atggaaacca cagggtgaag     780
   ttcccactta atgaaccagc tctcgctaaa aaaaggtcac agatcgatga gtacctcgat     840
   ttttatcgtg gaccaggtgc tcaacatctt gctctcgcta ctaacgatat tctcactgct     900
   gtggatcaac ttactgctga gggtgttgag tttcttgcta ctccagattc ctattacgag     960
   gacccagaac ttagagctag gatcggaaat gttagggctc caatcgctga acttcagaag    1020
   aggggaatac tcgttgatag agatgaggat ggataccttc tccagatctt cactaagcca    1080
   ttggttgata ggccaactgt tttcttcgag cttattgaga ggcatggatc tcttggattc    1140
   ggaatcggaa acttcaaggc tcttttcgag gctattgaga gagaacaagc tgctagggga    1200
   aatttctga                                                             1209
<210> 21
   <211> 1212
   <212> DNA
   <213> Artificial sequence
<220>
   <223> Nucleotide sequence encoding Rhodococcus sp. (strain RHA1), isolate ro02040 HPPD optimized optimized for the expression in soybean and cotton
<400> 21
   atggctacta ctgctgatat taggcttact ccaagggaag ttgctgctca tcttgagact 60
   gatgagctta ggcaacttgt tggacttgtt gagcacgatg atgcttcaga tccattccca 120
   gttgttgcta tggatgctgt tgtttttgtt tgcggaaacg ctactcaatc tactcagtac 180
   ttcgtgtcta cttggggaat gactcttgtt gcttatgctg gaccagaaac tggacagaga 240
   tctcacaagt ctttcgtgct tgaatctgga tctgctagat tcgttcttca cggtgctgtt 300
   gatccaaagt ctccacttgc tgatcatcat agggctcatg gtgatggtgt tgtggatctt 360
   gctatggaag tgcttgatgt ggatagatgc attgctcatg ctagatctca gggtgctact 420
   attcttgaag aacctcgtga tgtgactgat cagtttggaa ctgttaggct tgctgctatt 480
   gctacttacg gctccactag gcacactatt gtggataggt ccagatatga tggaccatac 540
   cttccaggat ttgttgctag gtcatctgga tttgctgcta gaccaggaaa gccaccaaga 600
   cttttccaag ctcttgatca cgctgttgga aatgttgaaa tgggaaggat ggatcattgg 660
   gtgaggttct acaatagggt gatgggattc actaatatgg ctgagttcgt gggtgatgat 720
   attgctactg agtactctgc tcttatgtct aaggttgtgg ctaatggaaa tcacagggtg 780
   aagttcccac ttaatgaacc agctgtggga aagaagaagt cccagatcga cgagtacctt 840
   gagttttacg gtgaaccagg atgtcaacat cttgctctcg ctactggtga tattcttgct 900
   actgtggatg ctcttagagc tgaaggtgtt gagttcctca atactccaga tgcttactac 960
   gaggacccac aacttagagc taggattgga agagttaggg ttccagttga ggaacttcag 1020
   aagaggggaa tactcgttga tagagatgag gatggatacc ttctccagat cttcactaag 1080
   ccacttggag ataggccaac tgttttcttc gaagtgattg agaggcatgg atctcttgga 1140
   tttggagcag gaaacttcca ggcacttttc gagtctattg agagagaaca agctgctagg 1200
   ggaaatcttt ga 1212
<210> 22
   <211> 1110
   <212> DNA
   <213> Artificial sequence
<220>
   <223> Nucleic acid sequence encoding Picrophilus torridus HPPD optimized for the expression in soybean and cotton
<400> 22
   atggcttacg gaaagaacct tatttctgag cttagagaga aagagatctt caagaggctt 60
   catcacgttg agttctacgt ttcttccgct aagacttggt cctacttcat gaatagggga 120
   ctcggattca agactgttgc ttatgctgga ccagaaactg gaatcaggga taagatctcc 180
   tacgttatgt ctcaaggtac tgctaggatt tctttcactt cctccatgaa cgatgattcc 240
   tacatttcca accacgttaa gaaacacggt gatggtgtta aggatatcgc tctcgaagtg 300
   gatgatcttg atgaggctaa gtctctcatt gagaagtacg gaactaaggt gtccaagatc 360
   aacgagatca aggatggaaa cggaaagatt aggactgctg agatcaagac ttacggtgaa 420
   actgtgcaca ctcttatcga gactggtgat tacaacggtg ttttcatgcc aggatacgaa 480
   gagtctgaga tcaactccaa gaacactggt atcaaaaaaa tcgatcacat tgtgggaaat 540
   gtttacgagg gtgaaatgga ttcttgggtg aacttctaca ttgagaagtt gggattcgag 600
   caccttatca ctttcgatga taaggatatc aggactgatt actctgctct taggtctaag 660
   gtggtgaagt acaacgatga tatcgtgttc cctattaacg aaccagctaa gggacttagg 720
   aagtcccaaa tcgaagagta cctcgattat taccgttctg agggtgttca acacattgct 780
   ttgctcacag acgatatcat caagactgtg tccatgatgg aagagaacgg aattgagttc 840
   cttaagactc caggatctta ctacgagtct ttgtcctcta ggattggatc tatcgatgag 900
   gatctcaacg aaatcgagaa gcacaacatt cttgtggata gggatgagaa cggatacctt 960
   ctccagattt tcactaagcc agtgactgat aggccaacat tcttcttcga agtgatccaa 1020
   agaaagggtg ctagatcttt cggaaacgga aacttcaagg ctcttttcga ggctattgag 1080
   agagaacaag ctaagagggg aaacctttga 1110
<210> 23
   <211> 1167
   <212> DNA
   <213> Artificial sequence
<220>
   <223> Nucleic acid sequence encoding Kordia algicida HPPD optimized for the expression in soybean and cotton
<400> 23
   atggctgctg ctgagattaa gaacctcaag gatctccaga atactgagta cggactcaag 60
   aaactttttg atgaggctga ggatttcctt ccacttctcg gaactgatta cgttgagctt 120
   tatgtgggaa acgcaaagca atctgctcac ttctacaaga ctgctttcgg atttcaatct    180
   gaggcttacg ctggacttga aactggactt actgataggg tttcctacgt gcttaagcag    240
   gataagatta ggcttgtgct cactactcca cttggaaagg gtggagagat taacgagcac    300
   attgatcttc atggtgatgg tgttaaggtt gtggctcttt gggttgaaga tgctactaag    360
   gctttcgaag agactactaa gagaggtgca aagccttata tggaacctac aaaagaagag    420
   gacgagaacg gatacgtgat tagatccgga atctacactt acggtgagac tgttcacgtt    480
   ttcgtggaga ggaagaacta caacggagtc tttcttcctg gataccaacg atgggagtct    540
   cattacaatc cagagccagt gggacttaag ttcatcgatc acatggtggg taatgttgga    600
   tggggagaga tgaaggaatg gtgcgagttt tacgctaagg ttatgggatt cgctcagatc    660
   atttccttca ctgatgatga tatctccact gatttcactg ctcttatgtc caaggtgatg    720
   tctaatggaa acggaaggat caagttccct attaacgaac cagctgaggg aaagaagaag    780
   tcccagatcg aagagtacct cgatttctac aacggatctg gtgttcagca tattgctgtg    840
   gcaactgata acatcatcga tactgtgtct caaatgagag aaaggggagt ggagtttctt    900
   tacgtcccag atacttacta cgatgatctc cttgagagag tgggagatat tgacgaggat    960
   gtggaggaac ttaagaagca cggaatcctc attgatagag atgaagaggg ataccttctc   1020
   cagcttttca ctaagactat cgtggatagg ccaactatgt tcttcgaagt gatccaaaga   1080
   aagggtgctc aatctttcgg agtgggaaac ttcaaggctc ttttcgaggc tattgagaga   1140
   gaacaagctg ctagaggaac tctttga                                       1167

## Description

The invention relates to the use of N-(1,2,5-oxadiazol-3-yl)benzamides for controlling unwanted plants in areas of transgenic crop plants being tolerant to HPPD inhibitor herbicides.

WO2011/035874 (being filed under PCT/EP2010/005739 in the name of Bayer CropScience AG on September 18, 2010) discloses several new N-(1,2,5-oxadiazol-3-yl)benzamides whose phenyl ring is substituted in the 2-, 3- and 4-position by selected radicals and their use as HPPD inhibitor herbicides for weed control.

However, the herbicidal activity of N-(1,2,5-oxadiazol-3-yl)benzamides whose phenyl ring is substituted in the 2-, 3- and 4-position by selected radicals might cause damages on several crop plants which limit their use in such crop growing areas as herbicides for weed control.

HPPD inhibitor herbicides can be used against grass and/or broad leaf weeds in crop plants that display metabolic tolerance, such as maize (Zea mays) in which they are rapidly degraded (Schulz et al., (1993). FEBS letters, 318, 162-166; Mitchell et al., (2001) Pest Management Science, Vol 57, 120-128; Garcia et al., (2000) Biochem., 39, 7501-7507; Pallett et al., (2001) Pest Management Science, Vol 57, 133-142). In order to extend the scope of these HPPD inhibitor herbicides, several efforts have been developed in order to confer to plants, particularly plants without or with an underperforming metabolic tolerance, a tolerance level acceptable under agronomic field conditions.

Meanwhile transgeninc plants have been engineered by by-passing HPPD-mediated production of homogentisate (US 6,812,010), overexpressing the sensitive enzyme so as to produce quantities of the target enzyme in the plant which are sufficient in relation to the herbicide has been performed (WO96/38567).

Alternatively, transgenic plants have been generated expressing HPPD proteins that have been mutated at various positions in order to obtain a target enzyme which, while retaining its properties of catalysing the transformation of HPP into homogentisate, is less sensitive to HPPD inhibitor herbicides than is the native HPPD before mutation (for example see at EP496630, WO 99/24585).

More recently, the introduction of a *Pseudomonas* HPPD gene into the plastid genome of tobacco and soybean has shown to be more effective than nuclear transformation, conferring even tolerance to post-emergence application of at least one HPPD inhibitor (Dufourmantel et al., 2007, Plant Biotechnol J.5(1):118-33 ).

In WO 2009/144079, a nucleic acid sequence encoding a mutated hydroxyphenylpyruvate dioxygenase (HPPD) at position 336 of the *Pseudomonas fluorescens* HPPD protein and its use for obtaining plants which are tolerant to HPPD inhibitor herbicides is disclosed.

In WO 04/024928, the inventors have sought to increase the prenylquinone biosynthesis (e.g., synthesis of plastoquinones, tocopherols) in the cells of plants by increasing the flux of the HPP precursor into the cells of these plants. This has been done by connecting the synthesis of said precursor to the "shikimate" pathway by overexpression of the prephenate-dehydrogenase (PDH). They have also noted that the transformation of plants with a gene encoding a PDH enzyme makes it possible to increase the tolerance of said plants to HPPD inhibitors.

In WO 2002/046387, an gene obtained from Avena sativa encoding an HPPD was described to generate plants overexpressing such gene and thereby causing tolerance to various HPPD-inhobitor herbicides.

In WO 2008/150473, the combination of two distinct tolerance mechanisms - a modified *Avena sativa* gene coding for a mutant HPPD enzyme and a CYP450 Maize monooxygenase (nsf1 gene) -was exemplified in order to obtain an improved tolerance to HPPD inhibitor herbicides, but no data have been disclosed demonstrating the synergistic effects based on the combination of both proteins.

In WO 2010/085705, several mutants of the Avena sativa HPPD were described as well as plants comprising genes encoding such mutated HPPD and thereby causing an increased tolerance to various HPPD-inhibitor herbicides compared to non-mutated HPPD.

Recently, several new genes encoding HPPD enzymes from various organisms have been identified and employed for obtaining crop plants that show an agronomically useful level of tolerance concerning the application of various HPPD inhibitor herbicides.

The work concerning the implementation of such tolerance against HPPD inhibitor herbicides have extensively been described in the PCT-applications being filed in the name of Bayer CropScience AG on December 22, 2010, having the filing numbers PCT/EP2010/070561 (published as WO 2011/076877; relates to nucleic acid sequences encoding a hydroxyphenylpyruvate dioxygenase (HPPD) obtained from bacteria belonging to the subfamily Synechococcoideae and certain mutants thereof); PCT/EP2010/070567 (published as WO 2011/076882; encoding a hydroxyphenylpyruvate dioxygenase obtained from protists belonging to the family Blepharismidae); PCT/EP2010/070578 (published as WO 2011/076892; encoding a hydroxyphenylpyruvate dioxygenase obtained from bacteria belonging to the genus Rhodococcus and certain mutants thereof); PCT/EP2010/070570 (published as WO 2011/076885; encoding a hydroxyphenylpyruvate dioxygenase obtained from Euryarchaeota belonging to the family Picrophilaceae and certain mutants thereof); PCT/EP2010/070575 (published as WO 2011/076889; encoding a hydroxyphenylpyruvate dioxygenase obtained from bacteria belonging to the genus Kordia and certain mutants thereof) and which are hereby incorporated by reference concerning the production of the respective transgenic plants conferring tolerance to HPPD inhibitor heribicides.

It has now been found that N-(1,2,5-oxadiazol-3-yl)benzamides whose phenyl ring is substituted in the 2-, 3- and 4-position by selected radicals can be employed on transgenic crop plants being tolerant to HPPD inhibitor herbicides by containing one or more genes conferring tolerance to HPPD inhibitor herbicides.

Subject matter of the present invention is the use of N-(1,2,5-oxadiazol-3-yl)benzamides of the formula (I) or their salts 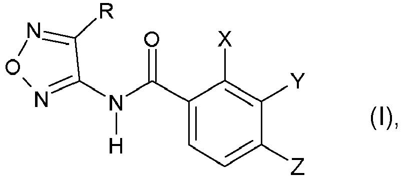 in which
- R: is hydrogen, (C₁-C₆)-alkyl, (C₃-C₇)-cycloalkyl, halo-(C₁-C₆)-alkyl, (C₁-C₆)-alkoxy, halo-(C₁-C₆)-alkoxy, (C₂-C₆)-alkenyl, (C₂-C₆)-alkenyloxy, (C₂-C₆)-haloalkenyl, (C₂-C₆)-alkynyl, (C₂-C₆)-alkynyloxy, (C₂-C₆)-haloalkynyl, cyano, nitro, methylsulfenyl, methylsulfinyl, methylsulfonyl, acetylamino, benzoylamino, methoxycarbonyl, ethoxy-carbonyl, methoxycarbonylmethyl, ethoxycarbonylmethyl, benzoyl, methylcarbonyl, piperidinylcarbonyl, trifluoromethylcarbonyl, halogen, amino, aminocarbonyl, methyl-aminocarbonyl, dimethylaminocarbonyl, methoxymethyl or heteroaryl, heterocyclyl or phenyl, each of which is substituted by s radicals selected from the group consisting of methyl, ethyl, methoxy, trifluoromethyl and halogen,
- X and Z: independently of one another are in each case nitro, halogen, cyano, formyl, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², NR₁R₂, P(O)(OR⁵)₂, or heteroaryl, heterocyclyl or phenyl, each of which is substituted by s radicals selected from the group consisting of methyl, ethyl, methoxy, nitro, trifluoromethyl and halogen,
- Y: is nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹,CO₂R¹, OR¹, OCOR¹, OSO₂R², S(O)ₙR², SO₂OR¹, SO₂N(R¹)₂, NR¹SO₂R², NR¹COR¹,
(C₁-C₆)-alkyl-heteroaryl, O-(C₁-C₆)-alkyl-heterocyclyl, O-(C₁-C₆)-alkyl-heteroaryl, (C₁-C₆)-alkyl-heterocyclyl, (C₁-C₆)-alkyl-S(O)ₙR², (C₁-C₆)-alkyl-OR¹, (C₁-C₆)-alkyl-OCOR¹, (C₁-C₆)-alkyl-OSO₂R ², (C₁-C₆)-alkyl-COOR¹, (C₁-C₆)-alkyl-CN, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², NR¹R², P(O)(OR⁵)₂, tetrahydrofuranyloxymethyl, tetrahydrofuranylmethoxymethyl, O(CH₂)-3,5-dimethyl-1,2-oxazol-4-yl, O(CH₂)₂-O(3,5-dimethoxypyrimidin-2-yl, O(CH₂)-5-pyrrolidin-2-one, O(CH₂)-5-2,4-dimethyl-2,4-dihydro-3H-1,2,4-triazol-3-one, or heteroaryl or heterocyclyl, each of which is substituted by s radicals selected from the group consisting of methyl, ethyl, methoxy, halogen and cyanomethyl,
- R¹: is hydrogen, (C₁-C₆)-alkyl, (C₁-C₆)-haloalkyl, (C₂-C₆)-alkenyl, (C₂-C₆)-haloalkenyl, (C₂-C₆)-alkynyl, (C₂-C₆)-haloalkynyl, (C₃-C₆)-cycloalkyl, (C₃-C₆)-halo-cycloalkyl, (C₁-C₆)-alkyl-O-(C₁-C₆)-alkyl, (C₃-C₆)-cycloalkyl-(C₁-C₆)-alkyl, phenyl or phenyl-(C₁-C₆)-alkyl, where the 12 last-mentioned radicals are substituted by s radicals selected from the group consisting of cyano, halogen, nitro, rhodano, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
- R²: is (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
- R³: is hydrogen, (C₁-C₆)-alkyl, (C₂-C₆)-alkenyl or (C₂-C₆)-alkynyl,
- R⁴: is (C₁-C₆)-alkyl, (C₂-C₆)-alkenyl or (C₂-C₆)-alkynyl,
- R⁵: is methyl or ethyl,
- n: is 0, 1 or 2,
- s: is 0, 1, 2 or 3,

for controlling unwanted plants in areas of transgenic crop plants being tolerant to HPPD inhibitor herbicides by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

In formula (I) and all the formulae below, alkyl radicals having more than two carbon atoms can be straight-chain or branched. Alkyl radicals are, for example, methyl, ethyl, n- or isopropyl, n-, iso-, t- or 2-butyl, pentyls, hexyls, such as n-hexyl, isohexyl and 1,3-dimethylbutyl. Halogen is fluorine, chlorine, bromine or iodine.

Heterocyclyl is a saturated, partially saturated or fully unsaturated cyclic radical which contains from 3 to 6 ring atoms, of which 1 to 4 are from the group consisting of oxygen, nitrogen and sulfur, and which radical can additionally be fused by a benzo ring. For example, heterocyclyl is piperidinyl, pyrrolidinyl, tetrahydrofuranyl, dihydrofuranyl, 4,5-dihydro-1,2-oxazol-3-yl and oxetanyl.

Heteroaryl is an aromatic cyclic radical which contains 3 to 6 ring atoms, of which 1 to 4 are from the group consisting of oxygen, nitrogen and sulfur, and which radical can additionally be fused by a benzo ring. For example, heteroaryl is benzimidazol-2-yl, furanyl, imidazolyl, isoxazolyl, isothiazolyl, oxazolyl, pyrazinyl, pyrimidinyl, pyridazinyl, pyridinyl, benzisoxazolyl, thiazolyl, pyrrolyl, pyrazolyl, thiophenyl, 1,2,3-oxadiazolyl, 1,2,4-oxadiazolyl, 1,2,5-oxadiazolyl, 1,3,4-oxadiazolyl, 1,2,4-triazolyl, 1,2,3-triazolyl, 1,2,5-triazolyl, 1,3,4-triazolyl, 1,2,4-triazolyl, 1,2,4-thiadiazolyl, 1,3,4-thiadiazolyl, 1,2,3-thiadiazolyl, 1,2,5-thiadiazolyl, 2H-1,2,3,4-tetrazolyl, 1H-1,2,3,4-tetrazolyl, 1,2,3,4-oxatriazolyl, 1,2,3,5-oxatriazolyl, 1,2,3,4-thiatriazolyl and 1,2,3,5-thiatriazolyl.

Where a group is substituted by a plurality of radicals, this means that this group is substituted by one or more identical or different representatives of the radicals mentioned.

Depending on the nature and the attachment of the substituents, the compounds of the formula (I) may be present as stereoisomers. If, for example, one or more asymmetric carbon atoms are present, there may be enantiomers and diastereomers. There may also be stereoisomers if n is 1 (sulfoxides). Stereoisomers may be obtained from the mixtures resulting from the preparation using customary separation methods, for example by chromatographic separation techniques. It is also possible to prepare stereoisomers selectively by using stereoselective reactions employing optically active starting materials and/or auxiliaries. The invention also relates to all stereoisomers and mixtures thereof embraced by the general formula (I) but not specifically defined.

Preference is given to the inventive use of compounds of the general formula (I) in which
- R: is hydrogen, (C₁-C₆)-alkyl, (C₃-C₇)-cycloalkyl, halo-(C₁-C₆)-alkyl, (C₁-C₆)-alkoxy, halo-(C₁-C₆)-alkoxy, cyano, nitro, methylsulfenyl, methylsulfinyl, methylsulfonyl, acetylamino, benzoylamino, methoxycarbonyl, ethoxycarbonyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl,
a heterocycle selected from the group consisting of pyridin-2-yl, pyridin-3-yl, pyridin-4-yl, piperidin-2-yl, piperidin-3-yl, piperidin-4-yl, benzisoxazol-2-yl, 1,2,4-oxadiazol-3-yl, 1,2,4-triazol-3-yl, 1-ethylbenzimidazol-2-yl, 4-methylthiazol-2-yl, thiophen-2-yl, furan-2-yl, furan-3-yl, tetrahydrofuran-2-yl, tetrahydrofuran-3-yl, isoxazol-2-yl, isoxazol-3-yl, oxazol-2-yl, oxazol-3-yl, pyrrol-2-yl, pyrrol-3-yl, imidazol-2-yl, imidazol-5-yl, imidazol-4-yl, pyrazol-3-yl, pyrazol-5-yl, pyrazol-4-yl, isoxazol-3-yl, isoxazol-4-yl, isoxazol-5-yl, oxazol-2-yl, oxazol-4-yl, oxazol-5-yl, isothiazol-3-yl, isothiazol-4-yl, isothiazol-5-yl, thiazol-2-yl, thiazol-4-yl, thiazol-5-yl, 1,2,3-triazol-4-yl, 1,2,3-triazol-5-yl, 1,2,5-triazol-3-yl, 1,3,4-triazol-2-yl, 1,2,4-triazol-3-yl, 1,2,4-triazol-5-yl, 1,2,4-oxadiazol-3-yl, 1,2,4-oxadiazol-5-yl, 1,3,4-oxadiazol-2-yl, 1,2,3-oxadiazol-4-yl, 1,2,3-oxadiazol-5-yl, 1,2,5-oxadiazol-3-yl, 1,2,4-thiadiazol-3-yl, 1,2,4-thiadiazol-5-yl, 1,3,4-thiadiazol-2-yl, 1,2,3-thiadiazol-4-yl, 1,2,3-thiadiazol-5-yl, 1,2,5-thiadiazol-3-yl, 2H-1,2,3,4-tetrazol-5-yl, 1H-1,2,3,4-tetrazol-1-yl, 1,2,3,4-oxatriazol-5-yl, 1,2,3,5-oxatriazol-4-yl, 1,2,3,4-thiatriazol-5-yl, 1,2,3,5-thiatriazol-4-yl, pyrazin-2-yl, pyrazin-3-yl, pyrimidin-2-yl, pyrimidin-4-yl, pyrimidin-5-yl, pyridazin-3-yl and pyridazin-4-yl, which heterocycle is substituted by s radicals selected from the group consisting of methyl, methoxy, trifluoromethyl and halogen, or phenyl which is substituted by s radicals selected from the group consisting of methyl, methoxy, trifluoromethyl and halogen,
- X and Z: independently of each other are in each case nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², benzoxazol-2-yl, 1-ethylbenzimidazol-2-yl, piperidin-1-yl or 1,2,4-triazol-1-yl,
- Y: is nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², tetrahydrofuranyloxymethyl, tetrahydrofuranylmethoxymethyl, O(CH₂)-3,5-dimethyl-1,2-oxazol-4-yl, O(CH₂)₂-O(3,5-dimethoxypyrimidin-2-yl, O(CH₂)-5-pyrrolidin-2-one or O(CH₂)-5-2,4-dimethyl-2,4-dihydro-3H-1,2,4-triazol-3-one,
- R¹: is hydrogen, (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
- R²: is (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
- R³: is hydrogen, (C₁-C₆)-alkyl, (C₂-C₆)-alkenyl or (C₂-C₆)-alkynyl,
- R⁴: is (C₁-C₆)-alkyl, (C₂-C₆)-alkenyl or (C₂-C₆)-alkynyl,
- n: is 0, 1 or 2,
- s: is 0, 1, 2 or 3,
for controlling unwanted plants in areas of transgenic crop plants being tolerant to HPPD inhibitor herbicides by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

Particular preference is given to the inventive use of compounds of the general formula (I) in which
- R: is hydrogen, (C₁-C₆)-alkyl, (C₃-C₇)-cycloalkyl, halo-(C₁-C₆)-alkyl, (C₁-C₆)-alkoxy, halo-(C₁-C₆)-alkoxy, cyano, nitro, methylsulfenyl, methylsulfinyl, methylsulfonyl, acetylamino, benzoylamino, methoxycarbonyl, ethoxycarbonyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl,
a heterocycle selected from the group consisting of pyridin-2-yl, pyridin-3-yl, pyridin-4-yl, piperidin-2-yl, piperidin-3-yl, piperidin-4-yl, benzisoxazol-2-yl, 1,2,4-oxadiazol-3-yl, 1,2,4-triazol-3-yl, 1-ethylbenzimidazol-2-yl, 4-methylthiazol-2-yl, thiophen-2-yl, furan-2-yl, furan-3-yl, tetrahydrofuran-2-yl, tetrahydrofuran-3-yl, isoxazol-2-yl, isoxazol-3-yl, oxazol-2-yl, oxazol-3-yl, pyrrol-2-yl, pyrrol-3-yl, imidazol-2-yl, imidazol-5-yl, imidazol-4-yl, pyrazol-3-yl, pyrazol-5-yl, pyrazol-4-yl, isoxazol-3-yl, isoxazol-4-yl, isoxazol-5-yl, oxazol-2-yl, oxazol-4-yl, oxazol-5-yl, isothiazol-3-yl, isothiazol-4-yl, isothiazol-5-yl, thiazol-2-yl, thiazol-4-yl, thiazol-5-yl, 1,2,3-triazol-4-yl, 1,2,3-triazol-5-yl, 1,2,5-triazol-3-yl, 1,3,4-triazol-2-yl, 1,2,4-triazol-3-yl, 1,2,4-triazol-5-yl, 1,2,4-oxadiazol-3-yl, 1,2,4-oxadiazol-5-yl, 1,3,4-oxadiazol-2-yl, 1,2,3-oxadiazol-4-yl, 1,2,3-oxadiazol-5-yl, 1,2,5-oxadiazol-3-yl, 1,2,4-thiadiazol-3-yl, 1,2,4-thiadiazol-5-yl, 1,3,4-thiadiazol-2-yl, 1,2,3-thiadiazol-4-yl, 1,2,3-thiadiazol-5-yl, 1,2,5-thiadiazol-3-yl, 2H-1,2,3,4-tetrazol-5-yl, 1H-1,2,3,4-tetrazol-1-yl, 1,2,3,4-oxatriazol-5-yl, 1,2,3,5-oxatriazol-4-yl, 1,2,3,4-thiatriazol-5-yl, 1,2,3,5-thiatriazol-4-yl, pyrazin-2-yl, pyrazin-3-yl, pyrimidin-2-yl, pyrimidin-4-yl, pyrimidin-5-yl, pyridazin-3-yl and pyridazin-4-yl, which heterocycle is substituted by s radicals selected from the group consisting of methyl, methoxy, trifluoromethyl and halogen, or phenyl which is substituted by s radicals selected from the group consisting of methyl, methoxy, trifluoromethyl and halogen,
- X and Z: independently of each other are in each case nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², benzoxazol-2-yl, 1-ethylbenzimidazol-2-yl, piperidin-1-yl or 1,2,4-triazol-1-yl,
- Y: is nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², tetrahydrofuranyloxymethyl, tetrahydrofuranylmethoxymethyl, O(CH₂)-3,5-dimethyl-1,2-oxazol-4-yl, O(CH₂)₂-O(3,5-dimethoxypyrimidin-2-yl, O(CH₂)-5-pyrrolidin-2-one or O(CH₂)-5-2,4-dimethyl-2,4-dihydro-3H-1,2,4-triazol-3-one,
- R¹: is hydrogen, (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
- R²: is (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
- R³: is hydrogen, (C₁-C₆)-alkyl, (C₂-C₆)-alkenyl or (C₂-C₆)-alkynyl,
- R⁴: is (C₁-C₆)-alkyl, (C₂-C₆)-alkenyl or (C₂-C₆)-alkynyl,
- n: is 0, 1 or 2,
- s: is 0, 1, 2 or 3
for controlling unwanted plants in areas of transgenic crop plants being tolerant to HPPD inhibitor herbicides by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

Very particular preference is given to the inventive use of compounds of the general formula (I) in which
- R: is hydrogen, (C₁-C₆)-alkyl, (C₃-C₇)-cycloalkyl, halo-(C₁-C₆)-alkyl, (C₁-C₆)-alkoxy, halogen-(C₁-C₆)-alkoxy, cyano, nitro, methylsulfenyl, methylsulfinyl, methylsulfonyl, acetylamino, benzoylamino, methoxycarbonyl, ethoxycarbonyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl,
- X and Z: independently of one another are in each case nitro, halogen, cyano, (C₁-C₆)-alkyl, (C₁-C₆)-haloalkyl, (C₃-C₆)-cycloalkyl, OR¹, S(O)ₙR², (C₁-C₆)-alkylS(O)ₙR², (C₁-C₆)-alkyl-OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R² or 1,2,4-triazol-1-yl,
- Y: is S(O)ₙR², 4, 5-dihydro-1,2-oxazol-3-yl, 5-cyanomethyl-4,5-dihydro-1,2-oxazol-3-yl or 5-methoxymethyl-4,5-dihydro-1,2-oxazol-3-yl,
- R¹: is hydrogen, (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of halogen and OR³,
- R²: is (C₁-C₆)-alkyl, (C₃-C₆)-cycloalkyl or (C₃-C₆)-cycloalkyl-(C₁-C₆)-alkyl, where the three last-mentioned radicals are substituted by s radicals selected from the group consisting of halogen and OR³,
- R³: is hydrogen or (C₁-C₆)-alkyl,
- n: ist 0, 1 or 2,
- s: is 0, 1, 2 or 3,
for controlling unwanted plants in areas of transgenic crop plants being tolerant to HPPD inhibitor herbicides by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

In all of the formulae below, the substituents and symbols have the same definition as described under formula (I), unless otherwise defined.

Compounds to be used according to the invention can be prepared for example by the method specified in scheme 1 by reacting, with base catalysis, a benzoyl chloride (II) with a 4-amino-1,2,5-oxadiazole (III):

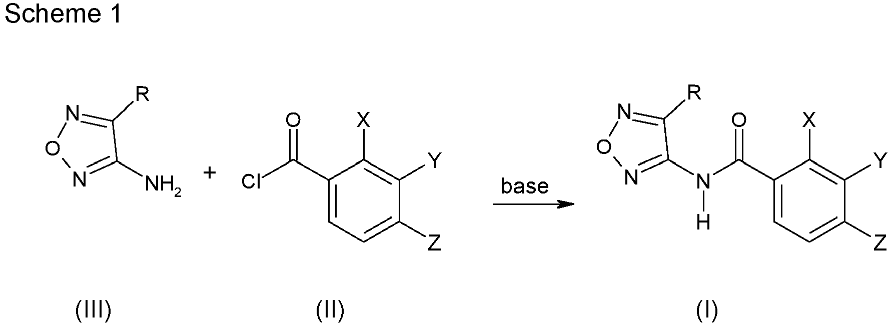

The benzoyl chlorides of the formula (II), or the benzoic acids on which they are based, are known in principle and can be prepared for example according to the methods described in US 6,376,429 B1, EP 1 585 742 A1, and EP 1 202 978 A1.

Compounds according to the invention can also be prepared by the method specified in scheme 2 by reacting a benzoic acid of the formula (IV) with a 4-amino-1,2,5-oxadiazole (III):

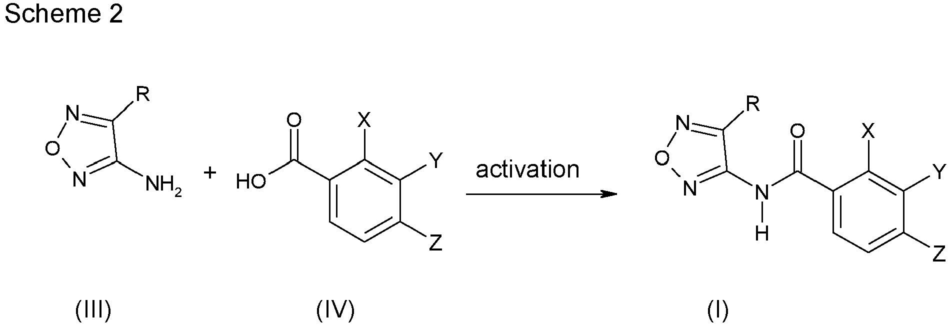

Dehydrating reagents which are conventionally used for amidation reactions, such as, for example, 1,1'-carbonyldiimidazole (CDI), dicyclohexylcarbodiimide (DCC), 2,4,6-tripropyl-1,3,5,2,4,6-trioxatriphosphinane 2,4,6-trioxide (T3P) and the like may be employed for the activation.

In detail, the synthesis of specific compounds belonging to the class of N-(1,2,5-oxadiazol-3-yl)benzamides whose phenyl ring is substituted in the 2-, 3- and 4-position is exemplified in PCT/EP2010/005739, which is hereby incorporated by reference.

The compounds listed in the tables hereinbelow are very specially preferred to be used for controlling unwanted plants in areas of transgenic plants containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7 (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17,,or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

The abbreviations used are:

| | | | |
|---|---|---|---|
| Et = ethyl | Me = methyl | n-Pr = n-propyl | i-Pr = isopropyl |
| Pen = pentyl | Ph = phenyl | Ac = acetyl | Bz = benzoyl |
| c-Pr = cyclopropyl | | | |

**Table 1: Compounds of the general formula (I) according to the invention in which R is methyl**

| | | | |
|---|---|---|---|
| 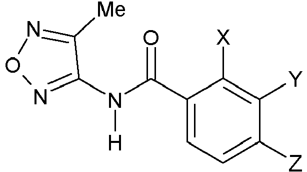 | | | |

| No. | X | Y | Z |
|---|---|---|---|
| 1-1 | CF₃ | OCH₂CON(Me)Et | SO₂Me |
| 1-2 | CF₃ | OCH₂CON(Me)Et | SO₂Et |
| 1-4 | CF₃ | 2-(1 H-pyrazol-1-yl)ethoxyl | SO₂Me |
| 1-5 | CF₃ | 2-(1 H-pyrazol-1-yl)ethoxyl | SO₂Et |
| 1-6 | CF₃ | tetrahydrofuran-2-yl-methoxy | SO₂Me |
| 1-7 | CF₃ | tetrahydrofuran-2-yl-methoxy | SO₂Et |
| 1-8 | CF₃ | OH | SO₂Me |
| 1-9 | CF₃ | OH | SO₂Et |
| 1-10 | CF₃ | SH | SO₂Me |
| 1-11 | CF₃ | SH | SO₂Et |
| 1-15 | CF₃ | SMe | SO₂Me |
| 1-16 | CF₃ | SMe | SO₂Et |
| 1-17 | CF₃ | S(O)Me | SO₂Me |
| 1-24 | CF₃ | S(O)Me | SO₂Et |
| 1-25 | CF₃ | S(O)₂Me | SO₂Me |
| 1-26 | CF₃ | S(O)₂Me | SO₂Et |
| 1-27 | CF₃ | 2-[(methylsulfonyl)amino]ethoxy | SO₂Me |
| 1-28 | CF₃ | 2-[(methylsulfonyl)-amino]ethyl}sulfanyl | SO₂Me |
| 1-29 | CF₃ | 2-[(methylsulfonyl)-amino]ethyl}sulfanyl | SO₂Et |
| 1-30 | NO₂ | O(CH₂)₂OMe | OMe |
| 1-31 | NO₂ | OMe | Me |
| 1-32 | NO₂ | NH₂ | OMe |
| 1-33 | NO₂ | NH₂ | SO₂Et |
| 1-34 | NO₂ | NH₂ | Cl |
| 1-35 | NO₂ | NHMe | Cl |
| 1-36 | NO₂ | NMe₂ | Cl |
| 1-37 | NO₂ | NH₂ | Br |
| 1-38 | NO₂ | NHMe | Br |
| 1-39 | NO₂ | NMe₂ | Br |
| 1-40 | NO₂ | NH₂ | F |
| 1-41 | NO₂ | NHMe | F |
| 1-42 | NO₂ | NMe₂ | F |
| 1-43 | NO₂ | NH₂ | SO₂Me |
| 1-44 | NO₂ | NHMe | SO₂Me |
| 1-45 | NO₂ | NMe2 | SO₂Me |
| 1-46 | NO₂ | NH₂ | 1H-1,2,4-triazol-1-yl |
| 1-47 | NO₂ | NHMe | 1H-1,2,4-triazol-1-yl |
| 1-48 | NO₂ | NMe2 | 1H-1,2,4-triazol-1-yl |
| 1-49 | Me | F | F |
| 1-50 | Me | F | Cl |
| 1-51 | Me | SMe | CF₃ |
| 1-52 | Me | Cl | SO₂Me |
| 1-53 | Me | SO₂Me | SO₂Me |
| 1-54 | Me | SO₂Me | CF₃ |
| 1-55 | Me | Cl | CF₃ |
| 1-56 | Me | S(O)Me | CF₃ |
| 1-57 | Me | SEt | OMe |
| 1-58 | Me | NMe₂ | SO₂Me |
| 1-59 | Me | NH(CH₂)₂OMe | SO₂Me |
| 1-60 | Me | O(CH₂)₄OMe | SO₂Me |
| 1-61 | Me | NH₂ | SO₂Me |
| 1-62 | Me | O(CH₂)₂-O(3,5-dimethoxypyrimidin-2-yl | SO₂Me |
| 1-63 | Me | O(CH₂)₂-O-NMe₂ | Cl |
| 1-64 | Me | O(CH₂)₂-NH(CO)NMe₂ | Cl |
| 1-65 | Me | O(CH₂)-5-pyrrolidin-2-one | Br |
| 1-66 | Me | O(CH₂)₂-NH(CO)NHCO₂Et | Cl |
| 1-67 | Me | O(CH₂)-(CO)NEt₂ | Br |
| 1-68 | Me | O(CH₂)-5-2,4-dimethyl-2,4-dihydro-3H-1,2,4-triazol-3-one | Cl |
| 1-69 | Me | O(CH₂)-3,5-dimethyl-1,2-oxazol-4-yl | Cl |
| 1-70 | Me | O(CH₂)₂-NHCO₂Me | Cl |
| 1-71 | Me | 4,5-dihydro-1,2-oxazol-3-yl | SO₂Me |
| 1-72 | Me | Me | SO₂Me |
| 1-73 | Me | OH | SO₂Me |
| 1-74 | Me | O-CH₂-NHSO₂cPr | Cl |
| 1-75 | Me | O(CH₂)₂NHSO2Me | SO₂Me |
| 1-76 | Me | S(O)Me | SO₂Me |
| 1-77 | Me | SMe | SO₂Me |
| 1-78 | Me | SMe | OMe |
| 1-79 | Me | S(O)Me | OMe |
| 1-80 | Me | SO₂Me | OMe |
| 1-81 | Me | SMe | Cl |
| 1-82 | Me | S(O)Me | Cl |
| 1-83 | Me | SO₂Me | Cl |
| 1-84 | Me | [1,4]dioxan-2-yl-methoxy | SO₂Me |
| 1-85 | Me | [1,4]dioxan-2-yl-methoxy | SO₂Et |
| 1-86 | Me | O(CH₂)₄OMe | SO₂Et |
| 1-87 | Me | O(CH₂)₃OMe | SO₂Me |
| 1-88 | Me | O(CH₂)₃OMe | SO₂Et |
| 1-89 | Me | O(CH₂)₂OMe | SO₂Me |
| 1-90 | Me | O(CH₂)₂OMe | SO₂Et |
| 1-91 | Me | S(O)Me | SO₂Me |
| 1-92 | Me | SMe | SO₂Me |
| 1-93 | Me | SMe | OMe |
| 1-94 | Me | S(O)Me | OMe |
| 1-95 | Me | SO₂Me | OMe |
| 1-96 | Me | SMe | Cl |
| 1-97 | Me | S(O)Me | Cl |
| 1-98 | Me | SO₂Me | Cl |
| 1-99 | Me | SMe | Br |
| 1-100 | Me | SOMe | Br |
| 1-101 | Me | SO₂Me | Br |
| 1-102 | Me | SMe | I |
| 1-103 | Me | SOMe | I |
| 1-104 | Me | SO₂Me | I |
| 1-105 | Me | SEt | Cl |
| 1-106 | Me | SOEt | Cl |
| 1-107 | Me | SO₂Et | Cl |
| 1-108 | Me | SEt | Br |
| 1-109 | Me | SOEt | Br |
| 1-110 | Me | SO₂Et | Br |
| 1-111 | Me | SEt | I |
| 1-112 | Me | SOEt | I |
| 1-113 | Me | SO₂Et | I |
| 1-114 | Me | SEt | F |
| 1-115 | Me | SOEt | F |
| 1-116 | Me | SO₂Et | F |
| 1-117 | Cl | OCH₂(CO)NMe₂ | Cl |
| 1-119 | Cl | CH₂OCH₂CF₃ | SO₂Me |
| 1-120 | Cl | 5-cyanomethyl-4,5-dihydro-1,2-oxazol-3-yl | SO₂Et |
| 1-121 | Cl | CH₂O-tetrahydro-furan-3-yl | SO₂Me |
| 1-122 | Cl | CH₂O-tetrahydrofuran-2-yl | SO₂Me |
| 1-123 | Cl | SMe | SO₂Me |
| 1-124 | Cl | F | SMe |
| 1-125 | Cl | CH₂OCH₂-tetrahydrofuran-2-yl | SO₂Me |
| 1-126 | Cl | CH₂OCH₂-tetrahydrofuran-3-yl | SO₂Et |
| 1-127 | Cl | O(CH₂)-5-pyrrolidin-2-one | Cl |
| 1-128 | Cl | SMe | Cl |
| 1-129 | Cl | S(O)Me | SO₂Me |
| 1-130 | Cl | CH₂O-tetrahydrofuran-3-yl | SO₂Et |
| 1-131 | Cl | O(CH₂)₂OMe | Cl |
| 1-132 | Cl | O(CH₂)₂OMe | SO₂Me |
| 1-133 | Cl | O(CH₂)₄OMe | SO₂Me |
| 1-134 | Cl | O(CH₂)₄OMe | SO₂Et |
| 1-135 | Cl | O(CH₂)₃OMe | SO₂Me |
| 1-136 | Cl | O(CH₂)₃OMe | SO₂Et |
| 1-137 | Cl | O(CH₂)₂OMe | SO₂Me |
| 1-138 | Cl | O(CH₂)₂OMe | SO₂Et |
| 1-139 | Cl | [1,4]dioxan-2-yl-methoxy | SO₂Me |
| 1-140 | Cl | [1,4]dioxan-2-yl-methoxy | SO₂Et |
| 1-141 | Cl | SO₂Me | Me |
| 1-142 | Cl | SEt | Me |
| 1-143 | Cl | SOEt | Me |
| 1-144 | Cl | SO₂Et | Me |
| 1-145 | Cl | 4,5-dihydro-1,2-oxazol-3-yl | SO₂Me |
| 1-146 | Cl | Cl | SO₂Me |
| 1-147 | F | SMe | CF₃ |
| 1-148 | F | S(O)Me | CF₃ |
| 1-149 | OMe | SMe | CF₃ |
| 1-150 | OMe | S(O)Me | CF₃ |
| 1-151 | OMe | SO₂Me | CF₃ |
| 1-152 | Et | NH(CH₂)₂OMe | SO₂Me |
| 1-153 | Et | F | SO₂Me |
| 1-154 | Et | SMe | CF₃ |
| 1-155 | CF₃ | F | SO₂Me |
| 1-156 | CF₃ | F | SO₂Et |
| 1-157 | CF₃ | O(CH₂)₂OMe | SO₂Et |
| 1-158 | CF₃ | O(CH₂)₃OMe | SO₂Et |
| 1-159 | CF₃ | O(CH₂)₂OMe | SO₂Me |
| 1-160 | CF₃ | O(CH₂)₃OMe | SO₂Me |
| 1-161 | CF₃ | OCH₂CONMe₂ | SO₂Me |
| 1-162 | CF₃ | OCH₂CONMe₂ | SO₂Et |
| 1-163 | CF₃ | OCH₂CONMe₂ | Cl |
| 1-164 | CF₃ | OCH₂CONMe₂ | Br |
| 1-165 | CF₃ | OCH₂CONMe₂ | I |
| 1-166 | CF₃ | OCH₂CONMe₂ | F |
| 1-167 | CF₃ | O(CH₂)₂OMe | Cl |
| 1-168 | CF₃ | O(CH₂)₃OMe | Cl |
| 1-169 | CF₃ | O(CH₂)₂OMe | Br |
| 1-170 | CF₃ | O(CH₂)₃OMe | Br |
| 1-171 | CF₃ | O(CH₂)₂OMe | I |
| 1-172 | CF₃ | O(CH₂)₃OMe | I |
| 1-173 | CF₃ | O(CH₂)₂OMe | F |
| 1-174 | CF₃ | O(CH₂)₃OMe | F |
| 1-175 | CF₃ | [1,4]dioxan-2-yl-methoxy | SO₂Me |
| 1-176 | CF₃ | [1,4]dioxan-2-yl-methoxy | SO₂Et |
| 1-177 | CF₃ | [1,4]dioxan-2-yl-methoxy | Cl |
| 1-178 | CF₃ | [1,4]dioxan-2-yl-methoxy | Br |
| 1-179 | CF₃ | [1,4]dioxan-2-yl-methoxy | I |
| 1-180 | CF₃ | [1,4]dioxan-2-yl-methoxy | F |
| 1-181 | Br | OMe | Br |
| 1-182 | Br | O(CH₂)₂OMe | Br |
| 1-183 | Br | O(CH₂)₄OMe | SO₂Me |
| 1-184 | Br | O(CH₂)₄OMe | SO₂Et |
| 1-185 | Br | O(CH₂)₃OMe | SO₂Me |
| 1-186 | Br | O(CH₂)₃OMe | SO₂Et |
| 1-187 | Br | O(CH₂)₂OMe | SO₂Me |
| 1-188 | Br | O(CH₂)₂OMe | SO₂Et |
| 1-189 | Br | [1,4]dioxan-2-yl-methoxy | SO₂Me |
| 1-190 | Br | [1,4]dioxan-2-yl-methoxy | SO₂Et |
| 1-191 | Br | SMe | Me |
| 1-192 | Br | SOMe | Me |
| 1-193 | Br | SO₂Me | Me |
| 1-194 | Br | SEt | Me |
| 1-195 | Br | SOEt | Me |
| 1-196 | Br | SO₂Et | Me |
| 1-197 | I | O(CH₂)₄OMe | SO₂Me |
| 1-198 | I | O(CH₂)₄OMe | SO₂Et |
| 1-199 | I | O(CH₂)₃OMe | SO₂Me |
| 1-200 | I | O(CH₂)₃OMe | SO₂Et |
| 1-201 | I | O(CH₂)₂OMe | SO₂Me |
| 1-202 | I | O(CH₂)₂OMe | SO₂Et |
| 1-203 | I | [1,4]dioxan-2-yl-methoxy | SO₂Me |
| 1-204 | I | [1,4]dioxan-2-yl-methoxy | SO₂Et |
| 1-205 | I | SMe | Me |
| 1-206 | I | SOMe | Me |
| 1-207 | I | SO₂Me | Me |
| 1-208 | I | SEt | Me |
| 1-209 | I | SOEt | Me |
| 1-210 | I | SO₂Et | Me |
| 1-211 | CH₂SMe | OMe | SO₂Me |
| 1-212 | CH₂OMe | OMe | SO₂Me |
| 1-213 | CH₂O(CH₂)₂OMe | NH(CH₂)₂OEt | SO₂Me |
| 1-214 | CH₂O(CH₂)₂OMe | NH(CH₂)₃OEt | SO₂Me |
| 1-215 | CH₂O(CH₂)₃OMe | OMe | SO₂Me |
| 1-216 | CH₂O(CH₂)₂OMe | NH(CH₂)₂OMe | SO₂Me |
| 1-217 | CH₂O(CH₂)₂OMe | NH(CH₂)₃OMe | SO₂Me |
| 1-218 | SO₂Me | NH₂ | CF₃ |
| 1-219 | SO₂Me | F | CF₃ |
| 1-220 | SO₂Me | NHEt | Cl |
| 1-221 | SMe | SEt | F |
| 1-222 | SMe | SMe | F |
| 1-223 | Me | NH₂ | Cl |
| 1-224 | Me | NH₂ | Br |
| 1-225 | Me | NHMe | Cl |
| 1-226 | Me | NHMe | Br |
| 1-227 | Me | NMe₂ | Cl |
| 1-228 | Me | NMe₂ | Br |
| 1-227 | Me | NMe₂ | Cl |
| 1-228 | Me | NMe₂ | Br |
| 1-229 | NO₂ | O(CH₂)₂OMe | Me |
| 1-230 | CF₃ | S(O)₂Et | SO₂Me |
| 1-231 | CF₃ | S(O)₂Et | SO₂Et |
| 1-232 | CF₃ | SCH₂CONMe₂ | SO₂Me |
| 1-233 | CF₃ | SCH₂CONMe₂ | SO₂Et |
| 1-234 | CF₃ | SCH₂COOH | SO₂Me |
| 1-235 | CF₃ | SCH₂COOH | SO₂Et |
| 1-236 | Me | SO₂-CH₂-CH₂-CH=CH₂ | CF₃ |
| 1-237 | Cl | Me | SO₂Et |
| 1-238 | CF₃ | SEt | SO₂Me |
| 1-239 | OMe | NO2 | Cl |
| 1-240 | OMe | NH(CO)i-Pr | Cl |
| 1-241 | OMe | NH(CO)CH₂Ph | Cl |
| 1-242 | CF₃ | SEt | SO₂Et |
| 1-243 | CF₃ | S(O)Et | SO₂Me |
| 1-244 | Cl | Me | Cl |
| 1-245 | Me | 3,5-dimethyl-pyrazol-1-yl | SO₂Me |
| 1-247 | Me | 1,2,3-triazol-1-yl | SO₂Me |
| 1-248 | Me | Me | SMe |
| 1-249 | Me | pyrrolidin-2-on-1-yl | SO₂Me |
| 1-250 | CF₃ | S(O)Et | SO₂Et |
| 1-251 | Cl | pyrazol-1-yl | SO₂Me |
| 1-252 | Me | 3-methylpyrazol-1-yl | SO₂Me |
| 1-253 | Cl | CH₂-N(Et)OMe | SO₂Me |
| 1-254 | Me | Me | Cl |
| 1-255 | OH | Cl | Cl |
| 1-256 | Me | 1,2,4-triazol-1-yl | SO₂Me |
| 1-257 | Me | 4-methoxypyrazol-1-yl | SO₂Me |
| 1-258 | Me | 1,2,4-triazol-1-yl | CF₃ |
| 1-259 | Me | tetrahydro-pyrimidin-2-(1H)-on-1-yl | SO₂Me |
| 1-260 | Me | NH-(CH₂)₂-O(CO)Et | SO₂Me |
| 1-261 | Me | NH-iPr | SO₂Me |
| 1-262 | Cl | NH-CH₂-(CO)NHEt | Cl |
| 1-263 | Me | NH-CH₂-(CO)NMe₂ | SO₂Me |
| 1-264 | Me | NH-CH₂-furan-2-yl | SO₂Me |
| 1-265 | Me | NH-CH₂-(CO)NHEt | SO₂Me |
| 1-266 | Me | F | SO₂Me |
| 1-267 | F | SO₂Me | SO₂Me |
| 1-268 | Cl | (4-cyclopropyl-3-methyl-5-oxo-4,5-dihydro-1H-1,2,4-triazol-1-yl)methyl | Cl |
| 1-269 | Cl | [4-methyl-5-oxo-3-(2,2,2-trifluoro-ethoxy)-4,5-dihydro-1H-1,2,4-triazol-1-yl]methyl | Cl |
| 1-270 | Cl | (3-isopropoxy-4-methyl-5-oxo-4,5-dihydro-1H-1,2,4-triazol-1-yl]methyl | Cl |
| 1-271 | Cl | (4-methyl-5-oxo-4,5-dihydro-1H-1,2,4-triazol-1-yl)methyl | Cl |
| 1-272 | Me | Cl | SO₂Et |
| 1-273 | SO₂Me | F | Cl |
| 1-274 | Me | 1,2,3-triazol-1-yl | SO₂Me |
| 1-275 | Me | isobutyl(methyl)carbamoylamino | SO₂Me |
| 1-276 | Me | 3-oxomorpholin-4-yl | SO₂Me |
| 1-277 | OMe | [ethyl(methylsulfonyl)amino]-methyl | Cl |
| 1-278 | F | SO₂Me | CF₃ |
| 1-279 | OMe | benzoylamino | Cl |
| 1-280 | OMe | cyclopropylcarbonylamino | Cl |
| 1-281 | OMe | propionylamino | Cl |
| 1-282 | NO₂ | SO₂Me | SO₂Me |
| 1-283 | NO₂ | SO₂Me | Cl |
| 1-284 | NO₂ | SOMe | SO₂Me |
| 1-285 | NO₂ | SOMe | Br |
| 1-286 | NO₂ | SOMe | Cl |
| 1-287 | NO₂ | SMe | SO₂Me |
| 1-288 | NO₂ | SMe | Br |
| 1-289 | NO₂ | SMe | Cl |
| 1-290 | Cl | CH₂OCH(CH₃)₂ | SO₂Et |
| 1-291 | Cl | CH₂OEt | SO₂Et |
| 1-292 | Cl | CH₂OMe | SO₂Et |
| 1-293 | Cl | CH₂OCH₂C₂F₅ | SO₂Me |
| 1-294 | Cl | CH₂OCH₂CHF₂ | SO₂Me |
| 1-295 | Cl | CH₂OCH₂CCH | SO₂Et |
| 1-296 | Cl | CH₂OC₂H₄OMe | SO₂Me |
| 1-297 | Cl | CH₂(OC₂H₄)₂OMe | SO₂Me |
| 1-298 | Cl | 5-ethoxymethyl-4,5-dihydro-1,2-oxazol-3-yl | SO₂Et |
| 1-299 | Cl | 5-methoxymethyl-4,5-dihydro-1,2-oxazol-3-yl | SO₂Et |
| 1-300 | Et | SOMe | CF₃ |
| 1-301 | iPr | SMe | CF₃ |
| 1-302 | Et | SMe | CF₃ |
| 1-303 | Et | SO₂Me | CF₃ |
| 1-304 | cPr | SOMe | CF₃ |
| 1-305 | CH=CH₂ | SMe | CF₃ |
| 1-306 | Et | SMe | Cl |
| 1-307 | Et | SO₂Me | Cl |
| 1-308 | Cl | NMe₂ | Cl |
| 1-309 | CH₂O(CH₂)₂OMe | NH(CH₂)₃OMe | SO₂Me |
| 1-313 | Me | SO₂(CH₂)₂OMe | CF₃ |
| 1-314 | Me | SOEt | SO₂Me |
| 1-315 | Me | SO₂Et | SO₂Me |
| 1-316 | Me | SMe | 1,2,4-triazol-1-yl |
| 1-317 | OEt | SMe | CF₃ |
| 1-318 | Me | S(CH₂)₂OMe | CF₃ |
| 1-319 | Me | SOMe | 1,2,4-triazol-1-yl |
| 1-320 | OEt | SOMe | CF₃ |
| 1-321 | Me | SO(CH₂)₂OMe | CF₃ |
| 1-322 | Me | SCH₂CCMe | SO₂Me |
| 1-323 | Me | S-c-Pen | SO₂Me |
| 1-324 | OMe | SMe | OMe |
| 1-325 | Me | SCH₂CH=CHCH₃ | SO₂Me |
| 1-326 | Me | SOCH₂CCMe | SO₂Me |
| 1-327 | Me | SO₂-c-Pen | SO₂Me |
| 1-328 | Me | SO-c-Pen | SO₂Me |
| 1-329 | Me | S(CH₂)₃Cl | SO₂Me |
| 1-330 | Me | SCH₂(4-F-Ph) | SO₂Me |
| 1-331 | Me | SO₂CH₂CCMe | SO₂Me |
| 1-332 | Me | SO₂CH₂CH=CHCH₃ | SO₂Me |
| 1-333 | Me | SOCH₂CH=CHCH₃ | SO₂Me |
| 1-334 | Me | SOCH₂-epoxy-Me | SO₂Me |
| 1-335 | Me | SO₂(CH₂)₃Cl | SO₂Me |
| 1-336 | Me | SO(CH₂)₃Cl | SO₂Me |
| 1-337 | Me | SOCH₂(4-F-Ph) | SO₂Me |
| 1-338 | Me | SO₂CH₂(4-F-Ph) | SO₂Me |
| 1-339 | Me | SO₂Me | C₂F₅ |
| 1-340 | O(CH₂)₂OMe | SMe | CF₃ |
| 1-341 | O(CH₂)₂OMe | SO₂Me | CF₃ |
| 1-342 | O(CH₂)₂OMe | SOMe | CF₃ |
| 1-343 | Me | S(CH₂)₂OCH₂CF₃ | SO₂Me |
| 1-344 | Me | SO(CH₂)₂OCH₂CF₃ | SO₂Me |
| 1-345 | Me | SO₂(CH₂)₂OCH₂CF₃ | SO₂Me |
| 1-346 | OEt | SEt | CF₃ |
| 1-347 | O-CH₂-c-Pr | SMe | CF₃ |
| 1-348 | OMe | SEt | CF₃ |
| 1-349 | OMe | SO₂Et | CF₃ |
| 1-350 | OMe | SOEt | CF₃ |
| 1-351 | OEt | SO₂Et | CF₃ |
| 1-352 | OEt | SOEt | CF₃ |
| 1-353 | O-CH2-c-Pr | SOMe | CF₃ |
| 1-354 | O-CH2-c-Pr | SO₂Me | CF₃ |
| 1-355 | Me | SEt | SO₂Me |

**Table 2: Compounds of the general formula (I) according to the invention in which R is ethyl**

| | | | |
|---|---|---|---|
| 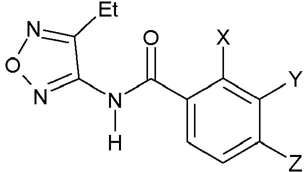 | | | |

| No. | X | Y | Z |
|---|---|---|---|
| 2-1 | CF₃ | OCH₂CON(Me)Et | SO₂Me |
| 2-2 | CF₃ | OCH₂CON(Me)Et | SO₂Et |
| 2-4 | CF₃ | 2-(1 H-pyrazol-1-yl)ethoxyl | SO₂Me |
| 2-5 | CF₃ | 2-(1 H-pyrazol-1-yl)ethoxyl | SO₂Et |
| 2-6 | CF₃ | tetrahydrofuran-2-ylmethoxy | SO₂Me |
| 2-7 | CF₃ | tetrahydrofuran-2-ylmethoxy | SO₂Et |
| 2-8 | CF₃ | OH | SO₂Me |
| 2-9 | CF₃ | OH | SO₂Et |
| 2-10 | CF₃ | SH | SO₂Me |
| 2-11 | CF₃ | SH | SO₂Et |
| 2-15 | CF₃ | SMe | SO₂Me |
| 2-16 | CF₃ | SMe | SO₂Et |
| 2-17 | CF₃ | S(O)Me | SO₂Me |
| 2-24 | CF₃ | S(O)Me | SO₂Et |
| 2-25 | CF₃ | S(O)₂Me | SO₂Me |
| 2-26 | CF₃ | S(O)₂Me | SO₂Et |
| 2-27 | CF₃ | 2-[(methylsulfonyl)amino]ethoxy | SO₂Me |
| 2-28 | CF₃ | 2-[(methylsulfonyl)-amino]ethyl}sulfanyl | SO₂Me |
| 2-29 | CF₃ | 2-[(methylsulfonyl)-amino]ethyl}sulfanyl | SO₂Et |
| 2-30 | NO₂ | O(CH₂)₂OMe | OMe |
| 2-31 | NO₂ | OMe | Me |
| 2-32 | NO₂ | NH₂ | OMe |
| 2-33 | NO₂ | NH₂ | SO₂Et |
| 2-34 | NO₂ | NH₂ | Cl |
| 2-35 | NO₂ | NHMe | Cl |
| 2-36 | NO₂ | NMe2 | Cl |
| 2-37 | NO₂ | NH₂ | Br |
| 2-38 | NO₂ | NHMe | Br |
| 2-39 | NO₂ | NMe2 | Br |
| 2-40 | NO₂ | NH₂ | F |
| 2-41 | NO₂ | NHMe | F |
| 2-42 | NO₂ | NMe₂ | F |
| 2-43 | NO₂ | NH₂ | SO₂Me |
| 2-44 | NO₂ | NHMe | SO₂Me |
| 2-45 | NO₂ | NMe₂ | SO₂Me |
| 2-46 | NO₂ | NH₂ | 1H-1,2,4-triazol-1-yl |
| 2-47 | NO₂ | NHMe | 1H-1,2,4-triazol-1-yl |
| 2-48 | NO₂ | NMe₂ | 1H-1,2,4-triazol-1-yl |
| 2-49 | Me | F | F |
| 2-50 | Me | F | Cl |
| 2-51 | Me | SMe | CF₃ |
| 2-52 | Me | Cl | SO₂Me |
| 2-53 | Me | SO₂Me | SO₂Me |
| 2-54 | Me | SO₂Me | CF₃ |
| 2-55 | Me | Cl | CF₃ |
| 2-56 | Me | S(O)Me | CF₃ |
| 2-57 | Me | SEt | OMe |
| 2-58 | Me | NMe₂ | SO₂Me |
| 2-59 | Me | NH(CH₂)₂OMe | SO₂Me |
| 2-60 | Me | O(CH₂)₄OMe | SO₂Me |
| 2-61 | Me | NH₂ | SO₂Me |
| 2-62 | Me | O(CH₂)₂-O(3,5-dimethoxypyrimidin-2-yl | SO₂Me |
| 2-63 | Me | O(CH₂)₂-O-NMe₂ | Cl |
| 2-64 | Me | O(CH₂)₂-NH(CO)NMe₂ | Cl |
| 2-65 | Me | O(CH₂)-5-pyrrolidin-2-one | Br |
| 2-66 | Me | O(CH₂)₂-NH(CO)NHCO₂Et | Cl |
| 2-67 | Me | O(CH₂)-(CO)NEt₂ | Br |
| 2-68 | Me | O(CH₂)-5-2,4-dimethyl-2,4-dihydro-3H-1,2,4-triazol-3-one | Cl |
| 2-69 | Me | O(CH₂)-3,5-dimethyl-1,2-oxazol-4-yl | Cl |
| 2-70 | Me | O(CH₂)₂-NHCO₂Me | Cl |
| 2-71 | Me | 4,5-dihydro-1,2-oxazol-3-yl | SO₂Me |
| 2-72 | Me | Me | SO₂Me |
| 2-73 | Me | OH | SO₂Me |
| 2-74 | Me | O-CH₂-NHSO₂cPr | Cl |
| 2-75 | Me | O(CH₂)₂NHSO2Me | SO₂Me |
| 2-76 | Me | S(O)Me | SO₂Me |
| 2-77 | Me | SMe | SO₂Me |
| 2-78 | Me | SMe | OMe |
| 2-79 | Me | S(O)Me | OMe |
| 2-80 | Me | SO₂Me | OMe |
| 2-81 | Me | SMe | Cl |
| 2-82 | Me | S(O)Me | Cl |
| 2-83 | Me | SO₂Me | Cl |
| 2-84 | Me | [1,4]dioxan-2-yl-methoxy | SO₂Me |
| 2-85 | Me | [1,4]dioxan-2-yl-methoxy | SO₂Et |
| 2-86 | Me | O(CH₂)₄OMe | SO₂Et |
| 2-87 | Me | O(CH₂)₃OMe | SO₂Me |
| 2-88 | Me | O(CH₂)₃OMe | SO₂Et |
| 2-89 | Me | O(CH₂)₂OMe | SO₂Me |
| 2-90 | Me | O(CH₂)₂OMe | SO₂Et |
| 2-91 | Me | S(O)Me | SO₂Me |
| 2-92 | Me | SMe | SO₂Me |
| 2-93 | Me | SMe | OMe |
| 2-94 | Me | S(O)Me | OMe |
| 2-95 | Me | SO₂Me | OMe |
| 2-96 | Me | SMe | Cl |
| 2-97 | Me | S(O)Me | Cl |
| 2-98 | Me | SO₂Me | Cl |
| 2-99 | Me | SMe | Br |
| 2-100 | Me | SOMe | Br |
| 2-101 | Me | SO₂Me | Br |
| 2-102 | Me | SMe | I |
| 2-103 | Me | SOMe | I |
| 2-104 | Me | SO₂Me | I |
| 2-105 | Me | SEt | Cl |
| 2-106 | Me | SOEt | Cl |
| 2-107 | Me | SO₂Et | Cl |
| 2-108 | Me | SEt | Br |
| 2-109 | Me | SOEt | Br |
| 2-110 | Me | SO₂Et | Br |
| 2-111 | Me | SEt | I |
| 2-112 | Me | SOEt | I |
| 2-113 | Me | SO₂Et | I |
| 2-114 | Me | SEt | F |
| 2-115 | Me | SOEt | F |
| 2-116 | Me | SO₂Et | F |
| 2-117 | Cl | OCH₂(CO)NMe₂ | Cl |
| 2-118 | Cl | CH₂OCH₂CF₃ | SO₂Me |
| 2-119 | Cl | 5-cyanomethyl-4,5-dihydro-1,2-oxazol-3-yl | SO₂Et |
| 2-120 | Cl | CH₂O-tetrahydro-furan-3-yl | SO₂Me |
| 2-121 | Cl | CH₂O-tetrahydrofuran-2-yl | SO₂Me |
| 2-122 | Cl | SMe | SO₂Me |
| 2-123 | Cl | F | SMe |
| 2-124 | Cl | CH₂OCH₂-tetrahydrofuran-2-yl | SO₂Me |
| 2-125 | Cl | CH₂OCH₂-tetrahydrofuran-3-yl | SO₂Et |
| 2-126 | Cl | O(CH₂)-5-pyrrolidin-2-one | Cl |
| 2-127 | Cl | SMe | Cl |
| 2-128 | Cl | S(O)Me | SO₂Me |
| 2-129 | Cl | CH₂O-tetrahydrofuran-3-yl | SO₂Et |
| 2-130 | Cl | O(CH₂)₂OMe | Cl |
| 2-131 | Cl | O(CH₂)₂OMe | SO₂Me |
| 2-132 | Cl | O(CH₂)₄OMe | SO₂Me |
| 2-133 | Cl | O(CH₂)₄OMe | SO₂Et |
| 2-134 | Cl | O(CH₂)₃OMe | SO₂Me |
| 2-135 | Cl | O(CH₂)₃OMe | SO₂Et |
| 2-136 | Cl | O(CH₂)₂OMe | SO₂Me |
| 2-137 | Cl | O(CH₂)₂OMe | SO₂Et |
| 2-138 | Cl | [1,4]dioxan-2-yl-methoxy | SO₂Me |
| 2-139 | Cl | [1,4]dioxan-2-yl-methoxy | SO₂Et |
| 2-140 | Cl | SO₂Me | Me |
| 2-141 | Cl | SEt | Me |
| 2-142 | Cl | SOEt | Me |
| 2-143 | Cl | SO₂Et | Me |
| 2-144 | Cl | 4,5-dihydro-1,2-oxazol-3-yl | SO₂Me |
| 2-145 | Cl | Cl | SO₂Me |
| 2-146 | F | SMe | CF₃ |
| 2-147 | F | S(O)Me | CF₃ |
| 2-148 | OMe | OMe | OMe |
| 2-149 | OMe | SMe | CF₃ |
| 2-150 | OMe | S(O)Me | CF₃ |
| 2-151 | OMe | SO₂Me | CF₃ |
| 2-152 | Et | NH(CH₂)₂OMe | SO₂Me |
| 2-153 | Et | F | SO₂Me |
| 2-154 | Et | SMe | CF₃ |
| 2-155 | CF₃ | F | SO₂Me |
| 2-156 | CF₃ | F | SO₂Et |
| 2-157 | CF₃ | O(CH₂)₂OMe | SO₂Et |
| 2-158 | CF₃ | O(CH₂)₃OMe | SO₂Et |
| 2-159 | CF₃ | O(CH₂)₂OMe | SO₂Me |
| 2-160 | CF₃ | O(CH₂)₃OMe | SO₂Me |
| 2-161 | CF₃ | OCH₂CONMe₂ | SO₂Me |
| 2-162 | CF₃ | OCH₂CONMe₂ | SO₂Et |
| 2-163 | CF₃ | OCH₂CONMe₂ | Cl |
| 2-164 | CF₃ | OCH₂CONMe₂ | Br |
| 2-165 | CF₃ | OCH₂CONMe₂ | I |
| 2-166 | CF₃ | OCH₂CONMe₂ | F |
| 2-167 | CF₃ | O(CH₂)₂OMe | Cl |
| 2-168 | CF₃ | O(CH₂)₃OMe | Cl |
| 2-169 | CF₃ | O(CH₂)₂OMe | Br |
| 2-170 | CF₃ | O(CH₂)₃OMe | Br |
| 2-171 | CF₃ | O(CH₂)₂OMe | I |
| 2-172 | CF₃ | O(CH₂)₃OMe | I |
| 2-173 | CF₃ | O(CH₂)₂OMe | F |
| 2-174 | CF₃ | O(CH₂)₃OMe | F |
| 2-175 | CF₃ | [1,4]dioxan-2-yl-methoxy | SO₂Me |
| 2-176 | CF₃ | [1,4]dioxan-2-yl-methoxy | SO₂Et |
| 2-177 | CF₃ | [1,4]dioxan-2-yl-methoxy | Cl |
| 2-178 | CF₃ | [1,4]dioxan-2-yl-methoxy | Br |
| 2-179 | CF₃ | [1,4]dioxan-2-yl-methoxy | I |
| 2-180 | CF₃ | [1,4]dioxan-2-yl-methoxy | F |
| 2-181 | Br | OMe | Br |
| 2-182 | Br | O(CH₂)₂OMe | Br |
| 2-183 | Br | O(CH₂)₄OMe | SO₂Me |
| 2-184 | Br | O(CH₂)₄OMe | SO₂Et |
| 2-185 | Br | O(CH₂)₃OMe | SO₂Me |
| 2-186 | Br | O(CH₂)₃OMe | SO₂Et |
| 2-187 | Br | O(CH₂)₂OMe | SO₂Me |
| 2-188 | Br | O(CH₂)₂OMe | SO₂Et |
| 2-189 | Br | [1,4]dioxan-2-yl-methoxy | SO₂Me |
| 2-190 | Br | [1,4]dioxan-2-yl-methoxy | SO₂Et |
| 2-191 | Br | SMe | Me |
| 2-192 | Br | SOMe | Me |
| 2-193 | Br | SO₂Me | Me |
| 2-194 | Br | SEt | Me |
| 2-195 | Br | SOEt | Me |
| 2-196 | Br | SO₂Et | Me |
| 2-197 | I | O(CH₂)₄OMe | SO₂Me |
| 2-198 | I | O(CH₂)₄OMe | SO₂Et |
| 2-199 | I | O(CH₂)₃OMe | SO₂Me |
| 2-200 | I | O(CH₂)₃OMe | SO₂Et |
| 2-201 | I | O(CH₂)₂OMe | SO₂Me |
| 2-202 | I | O(CH₂)₂OMe | SO₂Et |
| 2-203 | I | [1,4]dioxan-2-yl-methoxy | SO₂Me |
| 2-204 | I | [1,4]dioxan-2-yl-methoxy | SO₂Et |
| 2-205 | I | SMe | Me |
| 2-206 | I | SOMe | Me |
| 2-207 | I | SO₂Me | Me |
| 2-208 | I | SEt | Me |
| 2-209 | I | SOEt | Me |
| 2-210 | I | SO₂Et | Me |
| 2-211 | CH₂SMe | OMe | SO₂Me |
| 2-212 | CH₂OMe | OMe | SO₂Me |
| 2-213 | CH₂O(CH₂)₂OMe | NH(CH₂)₂OEt | SO₂Me |
| 2-214 | CH₂O(CH₂)₂OMe | NH(CH₂)₃OEt | SO₂Me |
| 2-215 | CH₂O(CH₂)₃OMe | OMe | SO₂Me |
| 2-216 | CH₂O(CH₂)₂OMe | NH(CH₂)₂OMe | SO₂Me |
| 2-217 | CH₂O(CH₂)₂OMe | NH(CH₂)₃OMe | SO₂Me |
| 2-218 | SO₂Me | NH₂ | CF₃ |
| 2-219 | SO₂Me | F | CF₃ |
| 2-220 | SO₂Me | NHEt | Cl |
| 2-221 | SMe | SEt | F |
| 2-222 | SMe | SMe | F |
| 2-223 | Me | NH₂ | Cl |
| 2-224 | Me | NH₂ | Br |
| 2-225 | Me | NHMe | Cl |
| 2-226 | Me | NHMe | Br |
| 2-227 | Me | NMe₂ | Cl |
| 2-228 | Me | NMe₂ | Br |
| 2-227 | Me | NMe₂ | Cl |
| 2-228 | Me | NMe₂ | Br |
| 2-229 | NO₂ | O(CH₂)₂OMe | Me |
| 2-230 | CF₃ | S(O)₂Et | SO₂Me |
| 2-231 | CF₃ | S(O)₂Et | SO₂Et |
| 2-232 | CF₃ | SCH₂CONMe₂ | SO₂Me |
| 2-233 | CF₃ | SCH₂CONMe₂ | SO₂Et |
| 2-234 | CF₃ | SCH₂COOH | SO₂Me |
| 2-235 | CF₃ | SCH₂COOH | SO₂Et |
| 2-236 | Me | SO₂-CH₂-CH₂-CH=CH₂ | CF₃ |
| 2-237 | Cl | Me | SO₂Et |
| 2-238 | CF₃ | SEt | SO₂Me |
| 2-239 | OMe | NO₂ | Cl |
| 2-240 | OMe | NH(CO)i-Pr | Cl |
| 2-241 | OMe | NH(CO)CH₂Ph | Cl |
| 2-242 | CF₃ | SEt | SO₂Et |
| 2-243 | CF₃ | S(O)Et | SO₂Me |
| 2-244 | Cl | Me | Cl |
| 2-245 | Me | 3,5-dimethylpyrazol-1-yl | SO₂Me |
| 2-247 | Me | 1,2,3-triazol-1-yl | SO₂Me |
| 2-248 | Me | Me | SMe |
| 2-249 | Me | pyrrolidin-2-on-1-yl | SO₂Me |
| 2-250 | CF₃ | S(O)Et | SO₂Et |
| 2-251 | Cl | pyrazol-1-yl | SO₂Me |
| 2-252 | Me | 3-methylpyrazol-1-yl | SO₂Me |
| 2-253 | Cl | CH₂-N(Et)OMe | SO₂Me |
| 2-254 | Me | Me | Cl |
| 2-255 | OH | Cl | Cl |
| 2-256 | Me | 1,2,4-triazol-1-yl | SO₂Me |
| 2-257 | Me | 4-methoxypyrazol-1-yl | SO₂Me |
| 2-258 | Me | 1,2,4-triazol-1-yl | CF₃ |
| 2-259 | Me | tetrahydro-pyrimidin-2(1H)-on-1-yl | SO₂Me |
| 2-260 | Me | NH-(CH₂)₂-O(CO)Et | SO₂Me |
| 2-261 | Me | NH-iPr | SO₂Me |
| 2-262 | Cl | NH-CH₂-(CO)NHEt | Cl |
| 2-263 | Me | NH-CH₂-(CO)NMe₂ | SO₂Me |
| 2-264 | Me | NH-CH₂-furan-2-yl | SO₂Me |
| 2-265 | Me | NH-CH₂-(CO)NHEt | SO₂Me |
| 2-266 | Me | F | SO₂Me |
| 2-267 | F | SO₂Me | SO₂Me |
| 2-268 | Cl | (4-cyclopropyl-3-methyl-5-oxo-4,5-dihydro-1H-1,2,4-triazol-1-yl)methyl | Cl |
| 2-269 | Cl | [4-methyl-5-oxo-3-(2,2,2-trifluoroethoxy)-4,5-dihydro-1H-1,2,4-triazol-1-yl]methyl | Cl |
| 2-270 | Cl | (3-isopropoxy-4-methyl-5-oxo-4,5-dihydro-1H-1,2,4-triazol-1-yl]methyl | Cl |
| 2-271 | Cl | (4-methyl-5-oxo-4,5-dihydro-1H-1,2,4-triazol-1-yl)methyl | Cl |
| 2-272 | Me | Cl | SO₂Et |
| 2-273 | SO₂Me | F | Cl |
| 2-274 | Me | 1,2,3-triazol-1-yl | SO₂Me |
| 2-275 | Me | isobutyl(methyl)carbamoylamino | SO₂Me |
| 2-276 | Me | 3-oxomorpholin-4-yl | SO₂Me |
| 2-277 | OMe | [ethyl(methylsulfonyl)amino]-methyl | Cl |
| 2-278 | F | SO₂Me | CF₃ |
| 2-279 | OMe | benzoylamino | Cl |
| 2-280 | OMe | cyclopropylcarbonylamino | Cl |
| 2-281 | OMe | propionylamino | Cl |
| 2-282 | NO₂ | SO₂Me | SO₂Me |
| 2-283 | NO₂ | SO₂Me | Cl |
| 2-284 | NO₂ | SOMe | SO₂Me |
| 2-285 | NO₂ | SOMe | Br |
| 2-286 | NO₂ | SOMe | Cl |
| 2-287 | NO₂ | SMe | SO₂Me |
| 2-288 | NO₂ | SMe | Br |
| 2-289 | NO₂ | SMe | Cl |
| 2-290 | Cl | CH₂OCH(CH₃)₂ | SO₂Et |
| 2-291 | Cl | CH₂OEt | SO₂Et |
| 2-292 | Cl | CH₂OMe | SO₂Et |
| 2-293 | Cl | CH₂OCH₂C₂F₅ | SO₂Me |
| 2-294 | Cl | CH₂OCH₂CHF₂ | SO₂Me |
| 2-295 | Cl | CH₂OCH₂CCH | SO₂Et |
| 2-296 | Cl | CH₂OC₂H₄OMe | SO₂Me |
| 2-297 | Cl | CH₂(OC₂H₄)₂OMe | SO₂Me |
| 2-298 | Cl | 5-ethoxymethyl-4,5-dihydro-1,2-oxazol-3-yl | SO₂Et |
| 2-299 | Cl | 5-methoxymethyl-4,5-dihydro-1,2-oxazol-3-yl | SO₂Et |
| 2-300 | Et | SOMe | CF₃ |
| 2-301 | iPr | SMe | CF₃ |
| 2-302 | Et | SMe | CF₃ |
| 2-303 | Et | SO₂Me | CF₃ |
| 2-304 | cPr | SOMe | CF₃ |
| 2-305 | CH=CH₂ | SMe | CF₃ |
| 2-306 | Et | SMe | Cl |
| 2-307 | Et | SO₂Me | Cl |
| 2-308 | Cl | NMe₂ | Cl |
| 2-309 | CH₂O(CH₂)₂OMe | NH(CH₂)₃OMe | SO₂Me |
| 2-313 | Me | SO₂(CH₂)₂OMe | CF₃ |
| 2-314 | Me | SOEt | SO₂Me |
| 2-315 | Me | SO₂Et | SO₂Me |
| 2-316 | Me | SMe | 1,2,4-triazol-1-yl |
| 2-317 | OEt | SMe | CF₃ |
| 2-318 | Me | S(CH₂)₂OMe | CF₃ |
| 2-319 | Me | SOMe | 1,2,4-triazol-1-yl |
| 2-320 | OEt | SOMe | CF₃ |
| 2-321 | Me | SO(CH₂)₂OMe | CF₃ |
| 2-322 | Me | SCH₂CCMe | SO₂Me |
| 2-323 | Me | S-c-Pen | SO₂Me |
| 2-324 | OMe | SMe | OMe |
| 2-325 | Me | SCH₂CH=CHCH₃ | SO₂Me |
| 2-326 | Me | SOCH₂CCMe | SO₂Me |
| 2-327 | Me | SO₂-c-Pen | SO₂Me |
| 2-328 | Me | SO-c-Pen | SO₂Me |
| 2-329 | Me | S(CH₂)₃Cl | SO₂Me |
| 2-330 | Me | SCH₂(4-F-Ph) | SO₂Me |
| 2-331 | Me | SO₂CH₂CCMe | SO₂Me |
| 2-332 | Me | SO₂CH₂CH=CHCH₃ | SO₂Me |
| 2-333 | Me | SOCH₂CH=CHCH₃ | SO₂Me |
| 2-334 | Me | SOCH₂-Epoxy-Me | SO₂Me |
| 2-335 | Me | SO₂(CH₂)₃Cl | SO₂Me |
| 2-336 | Me | SO(CH₂)₃Cl | SO₂Me |
| 2-337 | Me | SOCH₂(4-F-Ph) | SO₂Me |
| 2-338 | Me | SO₂CH₂(4-F-Ph) | SO₂Me |
| 2-339 | Me | SO₂Me | C₂F₅ |
| 2-340 | O(CH₂)₂OMe | SMe | CF₃ |
| 2-341 | O(CH₂)₂OMe | SO₂Me | CF₃ |
| 2-342 | O(CH₂)₂OMe | SOMe | CF₃ |
| 2-343 | Me | S(CH₂)₂OCH₂CF₃ | SO₂Me |
| 2-344 | Me | SO(CH₂)₂OCH₂CF₃ | SO₂Me |
| 2-345 | Me | SO₂(CH₂)₂OCH₂CF₃ | SO₂Me |
| 2-346 | OEt | SEt | CF₃ |
| 2-347 | O-CH₂-c-Pr | SMe | CF₃ |
| 2-348 | OMe | SEt | CF₃ |
| 2-349 | OMe | SO₂Et | CF₃ |
| 2-350 | OMe | SOEt | CF₃ |
| 2-351 | OEt | SO₂Et | CF₃ |
| 2-352 | OEt | SOEt | CF₃ |
| 2-353 | O-CH₂-c-Pr | SOMe | CF₃ |
| 2-354 | O-CH₂-c-Pr | SO₂Me | CF₃ |
| 2-355 | Me | SEt | SO₂Me |

**Table 3: Compounds of the general formula (I) according to the invention in which R is iso-propyl**

| | | | |
|---|---|---|---|
| 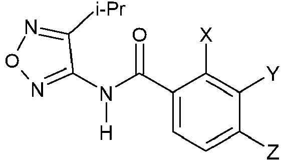 | | | |

| No. | X | Y | Z |
|---|---|---|---|
| 3-1 | CF₃ | OCH₂CON(Me)Et | SO₂Me |
| 3-2 | CF₃ | OCH₂CON(Me)Et | SO₂Et |
| 3-4 | CF₃ | 2-(1 H-pyrazol-1-yl)ethoxyl | SO₂Me |
| 3-5 | CF₃ | 2-(1 H-pyrazol-1-yl)ethoxyl | SO₂Et |
| 3-6 | CF₃ | tetrahydrofuran-2-ylmethoxy | SO₂Me |
| 3-7 | CF₃ | tetrahydrofuran-2-ylmethoxy | SO₂Et |
| 3-8 | CF₃ | OH | SO₂Me |
| 3-9 | CF₃ | OH | SO₂Et |
| 3-10 | CF₃ | SH | SO₂Me |
| 3-11 | CF₃ | SH | SO₂Et |
| 3-15 | CF₃ | SMe | SO₂Me |
| 3-16 | CF₃ | SMe | SO₂Et |
| 3-17 | CF₃ | S(O)Me | SO₂Me |
| 3-24 | CF₃ | S(O)Me | SO₂Et |
| 3-25 | CF₃ | S(O)₂Me | SO₂Me |
| 3-26 | CF₃ | S(O)₂Me | SO₂Et |
| 3-27 | CF₃ | 2-[(methylsulfonyl)amino]ethoxy | SO₂Me |
| 3-28 | CF₃ | 2-[(methylsulfonyl)-amino]ethyl}sulfanyl | SO₂Me |
| 3-29 | CF₃ | 2-[(methylsulfonyl)-amino]ethyl}sulfanyl | SO₂Et |
| 3-30 | NO₂ | O(CH₂)₂OMe | OMe |
| 3-31 | NO₂ | OMe | Me |
| 3-32 | NO₂ | NH₂ | OMe |
| 3-33 | NO₂ | NH₂ | SO₂Et |
| 3-34 | NO₂ | NH₂ | Cl |
| 3-35 | NO₂ | NHMe | Cl |
| 3-36 | NO₂ | NMe₂ | Cl |
| 3-37 | NO₂ | NH₂ | Br |
| 3-38 | NO₂ | NHMe | Br |
| 3-39 | NO₂ | NMe₂ | Br |
| 3-40 | NO₂ | NH₂ | F |
| 3-41 | NO₂ | NHMe | F |
| 3-42 | NO₂ | NMe₂ | F |
| 3-43 | NO₂ | NH₂ | SO₂Me |
| 3-44 | NO₂ | NHMe | SO₂Me |
| 3-45 | NO₂ | NMe₂ | SO₂Me |
| 3-46 | NO₂ | NH₂ | 1H-1,2,4-triazol-1-yl |
| 3-47 | NO₂ | NHMe | 1H-1,2,4-triazol-1-yl |
| 3-48 | NO₂ | NMe₂ | 1H-1,2,4-triazol-1-yl |
| 3-49 | Me | F | F |
| 3-50 | Me | F | Cl |
| 3-51 | Me | SMe | CF₃ |
| 3-52 | Me | Cl | SO₂Me |
| 3-53 | Me | SO₂Me | SO₂Me |
| 3-54 | Me | SO₂Me | CF₃ |
| 3-55 | Me | Cl | CF₃ |
| 3-56 | Me | S(O)Me | CF₃ |
| 3-57 | Me | SEt | OMe |
| 3-58 | Me | NMe₂ | SO₂Me |
| 3-59 | Me | NH(CH₂)₂OMe | SO₂Me |
| 3-60 | Me | O(CH₂)₄OMe | SO₂Me |
| 3-61 | Me | NH₂ | SO₂Me |
| 3-62 | Me | O(CH₂)₂-O(3,5-di-methoxypyrimidin-2-yl | SO₂Me |
| 3-63 | Me | O(CH₂)₂-O-NMe₂ | Cl |
| 3-64 | Me | O(CH₂)₂-NH(CO)NMe₂ | Cl |
| 3-65 | Me | O(CH₂)-5-pyrrolidin-2-one | Br |
| 3-66 | Me | O(CH₂)₂-NH(CO)NHCO₂Et | Cl |
| 3-67 | Me | O(CH₂)- (CO)NEt₂ | Br |
| 3-68 | Me | O(CH₂)-5-2,4-dimethyl-2,4-dihydro-3H-1,2,4-triazol-3-one | Cl |
| 3-69 | Me | O(CH₂)-3,5-dimethyl-1,2-oxazol-4-yl | Cl |
| 3-70 | Me | O(CH₂)₂-NHCO₂Me | Cl |
| 3-71 | Me | 4,5-dihydro-1,2-oxazol-3-yl | SO₂Me |
| 3-72 | Me | Me | SO₂Me |
| 3-73 | Me | OH | SO₂Me |
| 3-74 | Me | O-CH₂-NHSO₂cPr | Cl |
| 3-75 | Me | O(CH₂)₂NHSO2Me | SO₂Me |
| 3-76 | Me | S(O)Me | SO₂Me |
| 3-77 | Me | SMe | SO₂Me |
| 3-78 | Me | SMe | OMe |
| 3-79 | Me | S(O)Me | OMe |
| 3-80 | Me | SO₂Me | OMe |
| 3-81 | Me | SMe | Cl |
| 3-82 | Me | S(O)Me | Cl |
| 3-83 | Me | SO₂Me | Cl |
| 3-84 | Me | [1,4]dioxan-2-yl-methoxy | SO₂Me |
| 3-85 | Me | [1,4]dioxan-2-yl-methoxy | SO₂Et |
| 3-86 | Me | O(CH₂)₄OMe | SO₂Et |
| 3-87 | Me | O(CH₂)₃OMe | SO₂Me |
| 3-88 | Me | O(CH₂)₃OMe | SO₂Et |
| 3-89 | Me | O(CH₂)₂OMe | SO₂Me |
| 3-90 | Me | O(CH₂)₂OMe | SO₂Et |
| 3-91 | Me | S(O)Me | SO₂Me |
| 3-92 | Me | SMe | SO₂Me |
| 3-93 | Me | SMe | OMe |
| 3-94 | Me | S(O)Me | OMe |
| 3-95 | Me | SO₂Me | OMe |
| 3-96 | Me | SMe | Cl |
| 3-97 | Me | S(O)Me | Cl |
| 3-98 | Me | SO₂Me | Cl |
| 3-99 | Me | SMe | Br |
| 3-100 | Me | SOMe | Br |
| 3-101 | Me | SO₂Me | Br |
| 3-102 | Me | SMe | I |
| 3-103 | Me | SOMe | I |
| 3-104 | Me | SO₂Me | Cl |
| 3-105 | Me | SEt | Cl |
| 3-106 | Me | SOEt | Cl |
| 3-107 | Me | SO₂Et | Cl |
| 3-108 | Me | SEt | Br |
| 3-109 | Me | SOEt | Br |
| 3-110 | Me | SO₂Et | Br |
| 3-111 | Me | SEt | I |
| 3-112 | Me | SOEt | I |
| 3-113 | Me | SO₂Et | I |
| 3-114 | Me | SEt | F |
| 3-115 | Me | SOEt | F |
| 3-116 | Me | SO₂Et | F |
| 3-117 | Cl | OCH₂(CO)NMe₂ | Cl |
| 3-118 | Cl | Cl | SO₂Me |
| 3-119 | Cl | CH₂OCH₂CF₃ | SO₂Me |
| 3-120 | Cl | 5-cyanomethyl-4,5-dihydro-1,2-oxazol-3-yl | SO₂Et |
| 3-121 | Cl | CH₂O-tetrahydrofuran-3-yl | SO₂Me |
| 3-122 | Cl | CH₂O-tetrahydrofuran-2-yl | SO₂Me |
| 3-123 | Cl | SMe | SO₂Me |
| 3-124 | Cl | F | SMe |
| 3-125 | Cl | CH₂OCH₂-tetrahydrofuran-2-yl | SO₂Me |
| 3-126 | Cl | CH₂OCH₂-tetrahydrofuran-3-yl | SO₂Et |
| 3-127 | Cl | O(CH₂)-5-pyrrolidin-2-one | Cl |
| 3-128 | Cl | SMe | Cl |
| 3-129 | Cl | S(O)Me | SO₂Me |
| 3-130 | Cl | CH₂O-tetrahydrofuran-3-yl | SO₂Et |
| 3-131 | Cl | O(CH₂)₂OMe | Cl |
| 3-132 | Cl | O(CH₂)₂OMe | SO₂Me |
| 3-133 | Cl | O(CH₂)₄OMe | SO₂Me |
| 3-134 | Cl | O(CH₂)₄OMe | SO₂Et |
| 3-135 | Cl | O(CH₂)₃OMe | SO₂Me |
| 3-136 | Cl | O(CH₂)₃OMe | SO₂Et |
| 3-137 | Cl | O(CH₂)₂OMe | SO₂Me |
| 3-138 | Cl | O(CH₂)₂OMe | SO₂Et |
| 3-139 | Cl | [1,4]dioxan-2-yl-methoxy | SO₂Me |
| 3-140 | Cl | [1,4]dioxan-2-yl-methoxy | SO₂Et |
| 3-141 | Cl | SO₂Me | Me |
| 3-142 | Cl | SEt | Me |
| 3-143 | Cl | SOEt | Me |
| 3-144 | Cl | SO₂Et | Me |
| 2-145 | Cl | 4,5-dihydro-1,3-oxazol-3-yl | SO₂Me |
| 3-146 | Cl | Cl | SO₂Me |
| 3-147 | F | SMe | CF₃ |
| 3-148 | F | S(O)Me | CF₃ |
| 3-149 | OMe | SMe | CF₃ |
| 3-150 | OMe | S(O)Me | CF₃ |
| 3-151 | OMe | SO₂Me | CF₃ |
| 3-152 | Et | NH(CH₂)₂OMe | SO₂Me |
| 3-153 | Et | F | SO₂Me |
| 3-154 | Et | SMe | CF₃ |
| 3-155 | CF₃ | F | SO₂Me |
| 3-156 | CF₃ | F | SO₂Et |
| 3-157 | CF₃ | O(CH₂)₂OMe | SO₂Et |
| 3-158 | CF₃ | O(CH₂)₃OMe | SO₂Et |
| 3-159 | CF₃ | O(CH₂)₂OMe | SO₂Me |
| 3-160 | CF₃ | O(CH₂)₃OMe | SO₂Me |
| 3-161 | CF₃ | OCH₂CONMe₂ | SO₂Me |
| 3-162 | CF₃ | OCH₂CONMe₂ | SO₂Et |
| 3-163 | CF₃ | OCH₂CONMe₂ | Cl |
| 3-164 | CF₃ | OCH₂CONMe₂ | Br |
| 3-165 | CF₃ | OCH₂CONMe₂ | I |
| 3-166 | CF₃ | OCH₂CONMe₂ | F |
| 3-167 | CF₃ | O(CH₂)₂OMe | Cl |
| 3-168 | CF₃ | O(CH₂)₃OMe | Cl |
| 3-169 | CF₃ | O(CH₂)₂OMe | Br |
| 3-170 | CF₃ | O(CH₂)₃OMe | Br |
| 3-171 | CF₃ | O(CH₂)₂OMe | I |
| 3-172 | CF₃ | O(CH₂)₃OMe | I |
| 3-173 | CF₃ | O(CH₂)₂OMe | F |
| 3-174 | CF₃ | O(CH₂)₃OMe | F |
| 3-175 | CF₃ | [1,4]dioxan-2-yl-methoxy | SO₂Me |
| 3-176 | CF₃ | [1,4]dioxan-2-yl-methoxy | SO₂Et |
| 3-177 | CF₃ | [1,4]dioxan-2-yl-methoxy | Cl |
| 2-178 | CF₃ | [1,4]dioxan-2-yl-methoxy | Br |
| 3-179 | CF₃ | [1,4]dioxan-2-yl-methoxy | I |
| 3-180 | CF₃ | [1,4]dioxan-2-yl-methoxy | F |
| 3-181 | Br | OMe | Br |
| 3-182 | Br | O(CH₂)₂OMe | Br |
| 3-183 | Br | O(CH₂)₄OMe | SO₂Me |
| 3-184 | Br | O(CH₂)₄OMe | SO₂Et |
| 3-185 | Br | O(CH₂)₃OMe | SO₂Me |
| 3-186 | Br | O(CH₂)₃OMe | SO₂Et |
| 3-187 | Br | O(CH₂)₂OMe | SO₂Me |
| 3-188 | Br | O(CH₂)₂OMe | SO₂Et |
| 3-189 | Br | [1,4]dioxan-2-yl-methoxy | SO₂Me |
| 3-190 | Br | [1,4]dioxan-2-yl-methoxy | SO₂Et |
| 3-191 | Br | SMe | Me |
| 3-192 | Br | SOMe | Me |
| 3-193 | Br | SO₂Me | Me |
| 3-194 | Br | SEt | Me |
| 3-195 | Br | SOEt | Me |
| 3-196 | Br | SO₂Et | Me |
| 3-197 | I | O(CH₂)₄OMe | SO₂Me |
| 3-198 | I | O(CH₂)₄OMe | SO₂Et |
| 3-199 | I | O(CH₂)₃OMe | SO₂Me |
| 3-200 | I | O(CH₂)₃OMe | SO₂Et |
| 3-201 | I | O(CH₂)₂OMe | SO₂Me |
| 3-202 | I | O(CH₂)₂OMe | SO₂Et |
| 3-203 | I | [1,4]dioxan-2-yl-methoxy | SO₂Me |
| 3-204 | I | [1,4]dioxan-2-yl-methoxy | SO₂Et |
| 3-205 | I | SMe | Me |
| 3-206 | I | SOMe | Me |
| 3-207 | I | SO₂Me | Me |
| 3-208 | I | SEt | Me |
| 3-209 | I | SOEt | Me |
| 3-210 | I | SO₂Et | Me |
| 3-211 | CH₂SMe | OMe | SO₂Me |
| 3-212 | CH₂OMe | OMe | SO₂Me |
| 3-213 | CH₂O(CH₂)₂OMe | NH(CH₂)₂OEt | SOMe |
| 3-214 | CH₂O(CH₂)₂OMe | NH(CH₂)₃OEt | SO₂Me |
| 3-215 | CH₂O(CH₂)₃OMe | OMe | SO₂Me |
| 3-216 | CH₂O(CH₂)₂OMe | NH(CH₂)₂OMe | SO₂Me |
| 3-217 | CH₂O(CH₂)₂OMe | NH(CH₂)₃OMe | SO₂Me |
| 3-218 | SO₂Me | NH₂ | CF₃ |
| 3-219 | SO₂Me | F | CF₃ |
| 3-220 | SO₂Me | NHEt | Cl |
| 3-221 | SMe | SEt | F |
| 3-222 | SMe | SMe | F |
| 3-223 | Me | NH₂ | Cl |
| 3-224 | Me | NH₂ | Br |
| 3-225 | Me | NHMe | Cl |
| 3-226 | Me | NHMe | Br |
| 3-227 | Me | NMe₂ | Cl |
| 3-228 | Me | NMe₂ | Br |
| 3-227 | Me | NMe₂ | Cl |
| 3-228 | Me | NMe₂ | Br |
| 3-229 | NO₂ | O(CH₂)₂OMe | Me |
| 3-230 | CF₃ | S(O)₂Et | SO₂Me |
| 3-231 | CF₃ | S(O)₂Et | SO₂Et |
| 3-232 | CF₃ | SCH₂CONMe₂ | SO₂Me |
| 3-233 | CF₃ | SCH₂CONMe₂ | SO₂Et |
| 3-234 | CF₃ | SCH₂COOH | SO₂Me |
| 3-235 | CF₃ | SCH₂COOH | SO₂Et |
| 3-236 | Me | SO₂-CH₂-CH₂-CH=CH₂ | CF₃ |
| 3-237 | Cl | Me | SO₂Et |
| 3-238 | CF₃ | SEt | SO₂Me |
| 3-239 | OMe | NO₂ | Cl |
| 3-240 | OMe | NH(CO)i-Pr | Cl |
| 3-241 | OMe | NH(CO)CH₂Ph | Cl |
| 3-242 | CF₃ | SEt | SO₂Et |
| 3-243 | CF₃ | S(O)Et | SO₂Me |
| 3-244 | Cl | Me | Cl |
| 3-245 | Me | 3,5-dimethylpyrazol-1-yl | SO₂Me |
| 3-247 | Me | 1,2,3-triazol-1-yl | SO₂Me |
| 3-248 | Me | Me | SMe |
| 3-249 | Me | pyrrolidin-2-on-1-yl | SO₂Me |
| 3-250 | CF₃ | S(O)Et | SO₂Et |
| 3-251 | Cl | pyrazol-1-yl | SO₂Me |
| 3-252 | Me | 3-methylpyrazol-1-yl | SO₂Me |
| 3-253 | Cl | CH₂-N(Et)OMe | SO₂Me |
| 3-254 | Me | Me | Cl |
| 3-255 | OH | Cl | Cl |
| 3-256 | Me | 1,2,4-triazol-1-yl | SO₂Me |
| 3-257 | Me | 4-methoxypyrazol-1-yl | SO₂Me |
| 3-258 | Me | 1,2,4-triazol-1-yl | CF₃ |
| 3-259 | Me | tetrahydropyrimidin-2(1H)-on-1-yl | SO₂Me |
| 3-260 | Me | NH-(CH₂)₂-O(CO)Et | SO₂Me |
| 3-261 | Me | NH-iPr | SO₂Me |
| 3-262 | Cl | NH-CH₂-(CO)NHEt | Cl |
| 3-263 | Me | NH-CH₂-(CO)NMe₂ | SO₂Me |
| 3-264 | Me | NH-CH₂-furan-2-yl | SO₂Me |
| 3-265 | Me | NH-CH₂-(CO)NHEt | SO₂Me |
| 3-266 | Me | F | SO₂Me |
| 3-267 | F | SO₂Me | SO₂Me |
| 3-268 | Cl | (4-cyclopropyl-3-methyl-5-oxo-4,5-dihydro-1H-1,2,4-triazol-1-yl)methyl | Cl |
| 3-269 | Cl | [4-methyl-5-oxo-3-(2,2,2-trifluoroethoxy)-4,5-dihydro-1H-1,2,4-triazol-1-yl]methyl | Cl |
| 3-270 | Cl | (3-isopropoxy-4-methyl-5-oxo-4,5-dihydro-1H-1,2,4-triazol-1-yl]methyl | Cl |
| 3-271 | Cl | (4-methyl-5-oxo-4,5-dihydro-1 H-1,2,4-triazol-1-yl)methyl | Cl |
| 3-272 | Me | Cl | SO₂Et |
| 3-273 | SO₂Me | F | Cl |
| 3-274 | Me | 1,2,3-triazol-1-yl | SO₂Me |
| 3-275 | Me | isobutyl(methyl)carbamoylamino | SO₂Me |
| 3-276 | Me | 3-oxomorpholin-4-yl | SO₂Me |
| 3-277 | OMe | [ethyl(methylsulfonyl)-amino]methyl | Cl |
| 3-278 | F | SO₂Me | CF₃ |
| 3-279 | OMe | benzoylamino | Cl |
| 3-280 | OMe | cyclopropylcarbonylamino | Cl |
| 3-281 | OMe | propionylamino | Cl |
| 3-282 | NO₂ | SO₂Me | SO₂Me |
| 3-283 | NO₂ | SO₂Me | Cl |
| 3-284 | NO₂ | SOMe | SO₂Me |
| 3-285 | NO₂ | SOMe | Br |
| 3-286 | NO₂ | SOMe | Cl |
| 3-287 | NO₂ | SMe | SO₂Me |
| 3-288 | NO₂ | SMe | Br |
| 3-289 | NO₂ | SMe | Cl |
| 3-290 | Cl | CH₂OCH(CH₃)₂ | SO₂Et |
| 3-291 | Cl | CH₂OEt | SO₂Et |
| 3-292 | Cl | CH₂OMe | SO₂Et |
| 3-293 | Cl | CH₂OCH₂C₂F₅ | SO₂Me |
| 3-294 | Cl | CH₂OCH₂CHF₂ | SO₂Me |
| 3-295 | Cl | CH₂OCH₂CCH | SO₂Et |
| 3-296 | Cl | CH₂OC₂H₄OMe | SO₂Me |
| 3-297 | Cl | CH₂(OC₂H₄)₂OMe | SO₂Me |
| 3-298 | Cl | 5-ethoxymethyl-4,5-dihydro-1,2-oxazol-3-yl | SO₂Et |
| 3-299 | Cl | 5-methoxymethyl-4,5-dihydro-1,2-oxazol-3-yl | SO₂Et |
| 3-300 | Et | SOMe | CF₃ |
| 3-301 | iPr | SMe | CF₃ |
| 3-302 | Et | SMe | CF₃ |
| 3-303 | Et | SO₂Me | CF₃ |
| 3-304 | cPr | SOMe | CF₃ |
| 3-305 | CH=CH₂ | SMe | CF₃ |
| 3-306 | Et | SMe | Cl |
| 3-307 | Et | SO₂Me | Cl |
| 3-308 | Cl | NMe₂ | Cl |
| 3-309 | CH₂O(CH₂)₂OMe | NH(CH₂)₃OMe | SO₂Me |
| 3-313 | Me | SO₂(CH₂)₂OMe | CF₃ |
| 3-314 | Me | SOEt | SO₂Me |
| 3-315 | Me | SO₂Et | SO₂Me |
| 3-316 | Me | SMe | 1,2,4-triazol-1-yl |
| 3-317 | OEt | SMe | CF₃ |
| 3-318 | Me | S(CH₂)₂OMe | CF₃ |
| 3-319 | Me | SOMe | 1,2,4-triazol-1-yl |
| 3-320 | OEt | SOMe | CF₃ |
| 3-321 | Me | SO(CH₂)₂OMe | CF₃ |
| 3-322 | Me | SCH₂CCMe | SO₂Me |
| 3-323 | Me | S-c-Pen | SO₂Me |
| 3-324 | OMe | SMe | OMe |
| 3-325 | Me | SCH₂CH=CHCH₃ | SO₂Me |
| 3-326 | Me | SOCH₂CCMe | SO₂Me |
| 3-327 | Me | SO₃-c-Pen | SO₂Me |
| 3-328 | Me | SO-c-Pen | SO₂Me |
| 3-329 | Me | S(CH₂)₃Cl | SO₂Me |
| 3-330 | Me | SCH₂(4-F-Ph) | SO₂Me |
| 3-331 | Me | SO₂CH₂CCMe | SO₂Me |
| 3-332 | Me | SO₂CH₂CH=CHCH₃ | SO₂Me |
| 3-333 | Me | SOCH₂CH=CHCH₃ | SO₂Me |
| 3-334 | Me | SOCH₂-epoxy-Me | SO₂Me |
| 3-335 | Me | SO₂(CH₂)₃Cl | SO₂Me |
| 3-336 | Me | SO(CH₂)₃Cl | SO₂Me |
| 3-337 | Me | SOCH₂(4-F-Ph) | SO₂Me |
| 3-338 | Me | SO₂CH₂(4-F-Ph) | SO₂Me |
| 3-339 | Me | SO₂Me | C₂F₅ |
| 3-340 | O(CH₂)₂OMe | SMe | CF₃ |
| 3-341 | O(CH₂)₂OMe | SO₂Me | CF₃ |
| 3-342 | O(CH₂)₂OMe | SOMe | CF₃ |
| 3-343 | Me | S(CH₂)₂OCH₂CF₃ | SO₂Me |
| 3-344 | Me | SO(CH₂)₂OCH₂CF₃ | SO₂Me |
| 3-345 | Me | SO₂(CH₂)₂OCH₂CF₃ | SO₂Me |
| 3-346 | OEt | SEt | CF₃ |
| 3-347 | O-CH₂-c-Pr | SMe | CF₃ |
| 3-348 | OMe | SEt | CF₃ |
| 3-349 | OMe | SO₂Et | CF₃ |
| 3-350 | OMe | SOEt | CF₃ |
| 3-351 | OEt | SO₂Et | CF₃ |
| 3-352 | OEt | SOEt | CF₃ |
| 3-353 | O-CH₂-c-Pr | SOMe | CF₃ |
| 3-354 | O-CH₂-c-Pr | SO₂Me | CF₃ |
| 3-355 | Me | SEt | SO₂Me |

**Table 4: Compounds of the general formula (I) according to the invention in which R is propyl**

| | | | |
|---|---|---|---|
| 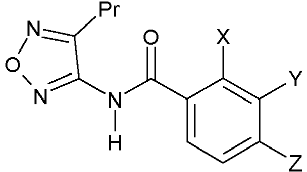 | | | |

| No. | X | Y | Z |
|---|---|---|---|
| 4-1 | CF₃ | OCH₂CON(Me)Et | SO₂Me |
| 4-2 | CF₃ | OCH₂CON(Me)Et | SO₂Et |
| 4-4 | CF₃ | 2-(1 H-pyrazol-1-yl)ethoxyl | SO₂Me |
| 4-5 | CF₃ | 2-(1 H-pyrazol-1-yl)ethoxyl | SO₂Et |
| 4-6 | CF₃ | tetrahydrofuran-2-yl-methoxy | SO₂Me |
| 4-7 | CF₃ | tetrahydrofuran-2-yl-methoxy | SO₂Et |
| 4-8 | CF₃ | OH | SO₂Me |
| 4-9 | CF₃ | OH | SO₂Et |
| 4-10 | CF₃ | SH | SO₂Me |
| 4-11 | CF₃ | SH | SO₂Et |
| 4-15 | CF₃ | SMe | SO₂Me |
| 4-16 | CF₃ | SMe | SO₂Et |
| 4-17 | CF₃ | S(O)Me | SO₂Me |
| 4-24 | CF₃ | S(O)Me | SO₂Et |
| 4-25 | CF₃ | S(O)₂Me | SO₂Me |
| 4-26 | CF₃ | S(O)₂Me | SO₂Et |
| 4-27 | CF₃ | 2-[(methylsulfonyl)amino]ethoxy | SO₂Me |
| 4-28 | CF₃ | 2-[(methylsulfonyl)-amino]ethyl}sulfanyl | SO₂Me |
| 4-29 | CF₃ | 2-[(methylsulfonyl)-amino]ethyl}sulfanyl | SO₂Et |
| 4-30 | NO₂ | O(CH₂)₂OMe | OMe |
| 4-31 | NO₂ | OMe | Me |
| 4-32 | NO₂ | NH₂ | OMe |
| 4-33 | NO₂ | NH₂ | SO₂Et |
| 4-34 | NO₂ | NH₂ | Cl |
| 4-35 | NO₂ | NHMe | Cl |
| 4-36 | NO₂ | NMe2 | Cl |
| 4-37 | NO₂ | NH₂ | Br |
| 4-38 | NO₂ | NHMe | Br |
| 4-39 | NO₂ | NMe2 | Br |
| 4-40 | NO₂ | NH₂ | F |
| 4-41 | NO₂ | NHMe | F |
| 4-42 | NO₂ | NMe2 | F |
| 4-43 | NO₂ | NH₂ | SO₂Me |
| 4-44 | NO₂ | NHMe | SO₂Me |
| 4-45 | NO₂ | NMe₂ | SO₂Me |
| 4-46 | NO₂ | NH₂ | 1H-1,2,4-triazol-1-yl |
| 4-47 | NO₂ | NHMe | 1H-1,2,4-triazol-1-yl |
| 4-48 | NO₂ | NMe₂ | 1H-1,2,4-triazol-1-yl |
| 4-49 | Me | F | F |
| 4-50 | Me | F | Cl |
| 4-51 | Me | SMe | CF₃ |
| 4-52 | Me | Cl | SO₂Me |
| 4-53 | Me | SO₂Me | SO₂Me |
| 4-54 | Me | SO₂Me | CF₃ |
| 4-55 | Me | Cl | CF₃ |
| 4-56 | Me | S(O)Me | CF₃ |
| 4-57 | Me | SEt | OMe |
| 4-58 | Me | NMe₂ | SO₂Me |
| 4-59 | Me | NH(CH₂)₂OMe | SO₂Me |
| 4-60 | Me | O(CH₂)₄OMe | SO₂Me |
| 4-61 | Me | NH₂ | SO₂Me |
| 4-62 | Me | O(CH₂)₂-O(3,5-dimethoxypyrimidin-2-yl | SO₂Me |
| 4-63 | Me | O(CH₂)₂-O-NMe₂ | Cl |
| 4-64 | Me | O(CH₂)₂-NH(CO)NMe₂ | Cl |
| 4-65 | Me | O(CH₂)-5-pyrrolidin-2-one | Br |
| 4-66 | Me | O(CH₂)₂-NH(CO)NHCO₂Et | Cl |
| 4-67 | Me | O(CH₂)-(CO)NEt₂ | Br |
| 4-68 | Me | O(CH₂)-5-2,4-dimethyl-2,4-dihydro-3H-1,2,4-triazol-3-one | Cl |
| 4-69 | Me | O(CH₂)-3,5-dimethyl-1,2-oxazol-4-yl | Cl |
| 4-70 | Me | O(CH₂)₂-NHCO₂Me | Cl |
| 4-71 | Me | 4,5-dihydro-1,2-oxazol-3-yl | SO₂Me |
| 4-72 | Me | Me | SO₂Me |
| 4-73 | Me | OH | SO₂Me |
| 4-74 | Me | O-CH₂-NHSO₂cPr | Cl |
| 4-75 | Me | O(CH₂)₂NHSO2Me | SO₂Me |
| 4-76 | Me | S(O)Me | SO₂Me |
| 4-77 | Me | SMe | SO₂Me |
| 4-78 | Me | SMe | OMe |
| 4-79 | Me | S(O)Me | OMe |
| 4-80 | Me | SO₂Me | OMe |
| 4-81 | Me | SMe | Cl |
| 4-82 | Me | S(O)Me | Cl |
| 4-83 | Me | SO₂Me | Cl |
| 4-84 | Me | [1,4]dioxan-2-yl-methoxy | SO₂Me |
| 4-85 | Me | [1,4]dioxan-2-yl-methoxy | SO₂Et |
| 4-86 | Me | O(CH₂)₄OMe | SO₂Et |
| 4-87 | Me | O(CH₂)₃OMe | SO₂Me |
| 4-88 | Me | O(CH₂)₃OMe | SO₂Et |
| 4-89 | Me | O(CH₂)₂OMe | SO₂Me |
| 4-90 | Me | O(CH₂)₂OMe | SO₂Et |
| 4-91 | Me | S(O)Me | SO₂Me |
| 4-92 | Me | SMe | SO₂Me |
| 4-93 | Me | SMe | OMe |
| 4-94 | Me | S(O)Me | OMe |
| 4-95 | Me | SO₂Me | OMe |
| 4-96 | Me | SMe | Cl |
| 4-97 | Me | S(O)Me | Cl |
| 4-98 | Me | SO₂Me | Cl |
| 4-99 | Me | SMe | Br |
| 4-100 | Me | SOMe | Br |
| 4-101 | Me | SO₂Me | Br |
| 4-102 | Me | SMe | I |
| 4-103 | Me | SOMe | I |
| 4-104 | Me | SO₂Me | I |
| 4-105 | Me | SEt | Cl |
| 4-106 | Me | SOEt | Cl |
| 4-107 | Me | SO₂Et | Cl |
| 4-108 | Me | SEt | Br |
| 4-109 | Me | SOEt | Br |
| 4-110 | Me | SO₂Et | Br |
| 4-111 | Me | SEt | I |
| 4-112 | Me | SOEt | I |
| 4-113 | Me | SO₂Et | I |
| 4-114 | Me | SEt | F |
| 4-115 | Me | SOEt | F |
| 4-116 | Me | SO₂Et | F |
| 4-117 | Cl | OCH₂(CO)NMe₂ | Cl |
| 4-118 | Cl | Cl | SO₂Me |
| 4-119 | Cl | CH₂OCH₂CF₃ | SO₂Me |
| 4-120 | Cl | 5-cyanomethyl-4,5-dihydro-1,2-oxazol-3-yl | SO₂Et |
| 4-121 | Cl | CH₂O-tetrahydrofuran-3-yl | SO₂Me |
| 4-122 | Cl | CH₂O-tetrahydrofuran-2-yl | SO₂Me |
| 4-123 | Cl | SMe | SO₂Me |
| 4-124 | Cl | F | SMe |
| 4-125 | Cl | CH₂OCH₂-tetrahydrofuran-2-yl | SO₂Me |
| 4-126 | Cl | CH₂OCH₂-tetrahydrofuran-3-yl | SO₂Et |
| 4-127 | Cl | O(CH₂)-5-pyrrolidin-2-one | Cl |
| 4-128 | Cl | SMe | Cl |
| 4-129 | Cl | S(O)Me | SO₂Me |
| 4-130 | Cl | CH₂O-tetrahydrofuran-3-yl | SO₂Et |
| 4-131 | Cl | O(CH₂)₂OMe | Cl |
| 4-132 | Cl | O(CH₂)₂OMe | SO₂Me |
| 4-133 | Cl | O(CH₂)₄OMe | SO₂Me |
| 4-134 | Cl | O(CH₂)₄OMe | SO₂Et |
| 4-135 | Cl | O(CH₂)₃OMe | SO₂Me |
| 4-136 | Cl | O(CH₂)₃OMe | SO₂Et |
| 4-137 | Cl | O(CH₂)₂OMe | SO₂Me |
| 4-138 | Cl | O(CH₂)₂OMe | SO₂Et |
| 4-139 | Cl | [1,4]dioxan-2-yl-methoxy | SO₂Me |
| 4-140 | Cl | [1,4]dioxan-2-yl-methoxy | SO₂Et |
| 4-141 | Cl | SO₂Me | Me |
| 4-142 | Cl | SEt | Me |
| 4-143 | Cl | SOEt | Me |
| 4-144 | Cl | SO₂Et | Me |
| 2-145 | Cl | 4,5-dihydro-1,4-oxazol-3-yl | SO₂Me |
| 4-146 | Cl | Cl | SO₂Me |
| 4-147 | F | SMe | CF₃ |
| 4-148 | F | S(O)Me | CF₃ |
| 4-149 | OMe | SMe | CF₃ |
| 4-150 | OMe | S(O)Me | CF₃ |
| 4-151 | OMe | SO₂Me | CF₃ |
| 4-152 | Et | NH(CH₂)₂OMe | SO₂Me |
| 4-153 | Et | F | SO₂Me |
| 4-154 | Et | SMe | CF₃ |
| 4-155 | CF₃ | F | SO₂Me |
| 4-156 | CF₃ | F | SO₂Et |
| 4-157 | CF₃ | O(CH₂)₂OMe | SO₂Et |
| 4-158 | CF₃ | O(CH₂)₃OMe | SO₂Et |
| 4-159 | CF₃ | O(CH₂)₂OMe | SO₂Me |
| 4-160 | CF₃ | O(CH₂)₃OMe | SO₂Me |
| 4-161 | CF₃ | OCH₂CONMe₂ | SO₂Me |
| 4-162 | CF₃ | OCH₂CONMe₂ | SO₂Et |
| 4-163 | CF₃ | OCH₂CONMe₂ | Cl |
| 4-164 | CF₃ | OCH₂CONMe₂ | Br |
| 4-165 | CF₃ | OCH₂CONMe₂ | I |
| 4-166 | CF₃ | OCH₂CONMe₂ | F |
| 4-167 | CF₃ | O(CH₂)₂OMe | Cl |
| 4-168 | CF₃ | O(CH₂)₃OMe | Cl |
| 4-169 | CF₃ | O(CH₂)₂OMe | Br |
| 4-170 | CF₃ | O(CH₂)₃OMe | Br |
| 4-171 | CF₃ | O(CH₂)₂OMe | I |
| 4-172 | CF₃ | O(CH₂)₃OMe | I |
| 4-173 | CF₃ | O(CH₂)₂OMe | F |
| 4-174 | CF₃ | O(CH₂)₃OMe | F |
| 4-175 | CF₃ | [1,4]dioxan-2-yl-methoxy | SO₂Me |
| 4-176 | CF₃ | [1,4]dioxan-2-yl-methoxy | SO₂Et |
| 4-177 | CF₃ | [1,4]dioxan-2-yl-methoxy | Cl |
| 2-178 | CF₃ | [1,4]dioxan-2-yl-methoxy | Br |
| 4-179 | CF₃ | [1,4]dioxan-2-yl-methoxy | I |
| 4-180 | CF₃ | [1,4]dioxan-2-yl-methoxy | F |
| 4-181 | Br | OMe | Br |
| 4-182 | Br | O(CH₂)₂OMe | Br |
| 4-183 | Br | O(CH₂)₄OMe | SO₂Me |
| 4-184 | Br | O(CH₂)₄OMe | SO₂Et |
| 4-185 | Br | O(CH₂)₃OMe | SO₂Me |
| 4-186 | Br | O(CH₂)₃OMe | SO₂Et |
| 4-187 | Br | O(CH₂)₂OMe | SO₂Me |
| 4-188 | Br | O(CH₂)₂OMe | SO₂Et |
| 4-189 | Br | [1,4]dioxan-2-yl-methoxy | SO₂Me |
| 4-190 | Br | [1,4]dioxan-2-yl-methoxy | SO₂Et |
| 4-191 | Br | SMe | Me |
| 4-192 | Br | SOMe | Me |
| 4-193 | Br | SO₂Me | Me |
| 4-194 | Br | SEt | Me |
| 4-195 | Br | SOEt | Me |
| 4-196 | Br | SO₂Et | Me |
| 4-197 | I | O(CH₂)₄OMe | SO₂Me |
| 4-198 | I | O(CH₂)₄OMe | SO₂Et |
| 4-199 | I | O(CH₂)₃OMe | SO₂Me |
| 4-200 | I | O(CH₂)₃OMe | SO₂Et |
| 4-201 | I | O(CH₂)₂OMe | SO₂Me |
| 4-202 | I | O(CH₂)₂OMe | SO₂Et |
| 4-203 | I | [1,4]dioxan-2-yl-methoxy | SO₂Me |
| 4-204 | I | [1,4]dioxan-2-yl-methoxy | SO₂Et |
| 4-205 | I | SMe | Me |
| 4-206 | I | SOMe | Me |
| 4-207 | I | SO₂Me | Me |
| 4-208 | I | SEt | Me |
| 4-209 | I | SOEt | Me |
| 4-210 | I | SO₂Et | Me |
| 4-211 | CH₂SMe | OMe | SO₂Me |
| 4-212 | CH₂OMe | OMe | SO₂Me |
| 4-213 | CH₂O(CH₂)₂OMe | NH(CH₂)₂OEt | SO₂Me |
| 4-214 | CH₂O(CH₂)₂OMe | NH(CH₂)₃OEt | SO₂Me |
| 4-215 | CH₂O(CH₂)₃OMe | OMe | SO₂Me |
| 4-216 | CH₂O(CH₂)₂OMe | NH(CH₂)₂OMe | SO₂Me |
| 4-217 | CH₂O(CH₂)₂OMe | NH(CH₂)₃OMe | SO₂Me |
| 4-218 | SO₂Me | NH₂ | CF₃ |
| 4-219 | SO₂Me | F | CF₃ |
| 4-220 | SO₂Me | NHEt | Cl |
| 4-221 | SMe | SEt | F |
| 4-222 | SMe | SMe | F |
| 4-223 | Me | NH₂ | Cl |
| 4-224 | Me | NH₂ | Br |
| 4-225 | Me | NHMe | Cl |
| 4-226 | Me | NHMe | Br |
| 4-227 | Me | NMe₂ | Cl |
| 4-228 | Me | NMe₂ | Br |
| 4-227 | Me | NMe2 | Cl |
| 4-228 | Me | NMe₂ | Br |
| 4-229 | NO₂ | O(CH₂)₂OMe | Me |
| 4-230 | CF₃ | S(O)₂Et | SO₂Me |
| 4-231 | CF₃ | S(O)₂Et | SO₂Et |
| 4-232 | CF₃ | SCH₂CONMe₂ | SO₂Me |
| 4-233 | CF₃ | SCH₂CONMe₂ | SO₂Et |
| 4-234 | CF₃ | SCH₂COOH | SO₂Me |
| 4-235 | CF₃ | SCH₂COOH | SO₂Et |
| 4-236 | Me | SO₂-CH₂-CH₂-CH=CH₂ | CF₃ |
| 4-237 | Cl | Me | SO₂Et |
| 4-238 | CF₃ | SEt | SO₂Me |
| 4-239 | OMe | NO₂ | Cl |
| 4-240 | OMe | NH(CO)i-Pr | Cl |
| 4-241 | OMe | NH(CO)CH₂Ph | Cl |
| 4-242 | CF₃ | SEt | SO₂Et |
| 4-243 | CF₃ | S(O)Et | SO₂Me |
| 4-244 | Cl | Me | Cl |
| 4-245 | Me | 3,5-dimethylpyrazol-1-yl | SO₂Me |
| 4-247 | Me | 1,2,3-triazol-1-yl | SO₂Me |
| 4-248 | Me | Me | SMe |
| 4-249 | Me | pyrrolidin-2-on-1-yl | SO₂Me |
| 4-250 | CF₃ | S(O)Et | SO₂Et |
| 4-251 | Cl | pyrazol-1-yl | SO₂Me |
| 4-252 | Me | 3-methylpyrazol-1-yl | SO₂Me |
| 4-253 | Cl | CH₂-N(Et)OMe | SO₂Me |
| 4-254 | Me | Me | Cl |
| 4-255 | OH | Cl | Cl |
| 4-256 | Me | 1,2,4-triazol-1-yl | SO₂Me |
| 4-257 | Me | 4-methoxypyrazol-1-yl | SO₂Me |
| 4-258 | Me | 1,2,4-triazol-1-yl | CF₃ |
| 4-259 | Me | tetrahydropyrimidin-2(1H)-on-1-yl | SO₂Me |
| 4-260 | Me | NH-(CH₂)₂-O(CO)Et | SO₂Me |
| 4-261 | Me | NH-iPr | SO₂Me |
| 4-262 | Cl | NH-CH₂-(CO)NHEt | Cl |
| 4-263 | Me | NH-CH₂-(CO)NMe₂ | SO₂Me |
| 4-264 | Me | NH-CH₂-furan-2-yl | SO₂Me |
| 4-265 | Me | NH-CH₂-(CO)NHEt | SO₂Me |
| 4-266 | Me | F | SO₂Me |
| 4-267 | F | SO₂Me | SO₂Me |
| 4-268 | Cl | (4-cyclopropyl-3-methyl-5-oxo-4,5-dihydro-1H-1,2,4-triazol-1-yl)methyl | Cl |
| 4-269 | Cl | [4-methyl-5-oxo-3-(2,2,2-trifluoroethoxy)-4,5-dihydro-1H-1,2,4- triazol-1-yl]methyl | Cl |
| 4-270 | Cl | (3-isopropoxy-4-methyl-5-oxo-4,5-dihydro-1H-1,2,4-triazol-1-yl]-methyl | Cl |
| 4-271 | Cl | (4-methyl-5-oxo-4,5-dihydro-1H-1,2,4-triazol-1-yl)methyl | Cl |
| 4-272 | Me | Cl | SO₂Et |
| 4-273 | SO₂Me | F | Cl |
| 4-274 | Me | 1,2,3-triazol-1-yl | SO₂Me |
| 4-275 | Me | isobutyl(methyl)carbamoylamino | SO₂Me |
| 4-276 | Me | 3-oxomorpholin-4-yl | SO₂Me |
| 4-277 | OMe | [ethyl(methylsulfonyl)-amino]methyl | Cl |
| 4-278 | F | SO₂Me | CF₃ |
| 4-279 | OMe | benzoylamino | Cl |
| 4-280 | OMe | cyclopropylcarbonyl-amino | Cl |
| 4-281 | OMe | propionylamino | Cl |
| 4-282 | NO₂ | SO₂Me | SO₂Me |
| 4-283 | NO₂ | SO₂Me | Cl |
| 4-284 | NO₂ | SOMe | SO₂Me |
| 4-285 | NO₂ | SOMe | Br |
| 4-286 | NO₂ | SOMe | Cl |
| 4-287 | NO₂ | SMe | SO₂Me |
| 4-288 | NO₂ | SMe | Br |
| 4-289 | NO₂ | SMe | Cl |
| 4-290 | Cl | CH₂OCH(CH₃)₂ | SO₂Et |
| 4-291 | Cl | CH₂OEt | SO₂Et |
| 4-292 | Cl | CH₂OMe | SO₂Et |
| 4-293 | Cl | CH₂OCH₂C₂F₅ | SO₂Me |
| 4-294 | Cl | CH₂OCH₂CHF₂ | SO₂Me |
| 4-295 | Cl | CH₂OCH₂CCH | SO₂Et |
| 4-296 | Cl | CH₂OC₂H₄OMe | SO₂Me |
| 4-297 | Cl | CH₂(OC₂H₄)₂OMe | SO₂Me |
| 4-298 | Cl | 5-ethoxymethyl-4,5-dihydro-1,2-oxazol-3-yl | SO₂Et |
| 4-299 | Cl | 5-methoxymethyl-4,5-dihydro-1,2-oxazol-3-yl | SO₂Et |
| 4-300 | Et | SOMe | CF₃ |
| 4-301 | iPr | SMe | CF₃ |
| 4-302 | Et | SMe | CF₃ |
| 4-303 | Et | SO₂Me | CF₃ |
| 4-304 | cPr | SOMe | CF₃ |
| 4-305 | CH=CH₂ | SMe | CF₃ |
| 4-306 | Et | SMe | Cl |
| 4-307 | Et | SO₂Me | Cl |
| 4-308 | Cl | NMe₂ | Cl |
| 4-309 | CH₂O(CH₂)₂OMe | NH(CH₂)₃OMe | SO₂Me |
| 4-313 | Me | SO₂(CH₂)₂OMe | CF₃ |
| 4-314 | Me | SOEt | SO₂Me |
| 4-315 | Me | SO₂Et | SO₂Me |
| 4-316 | Me | SMe | 1,2,4-triazol-1-yl |
| 4-317 | OEt | SMe | CF₃ |
| 4-318 | Me | S(CH₂)₂OMe | CF₃ |
| 4-319 | Me | SOMe | 1,2,4-triazol-1-yl |
| 4-320 | OEt | SOMe | CF₃ |
| 4-321 | Me | SO(CH₂)₂OMe | CF₃ |
| 4-322 | Me | SCH₂CCMe | SO₂Me |
| 4-323 | Me | S-c-Pen | SO₂Me |
| 4-324 | OMe | SMe | OMe |
| 4-325 | Me | SCH₂CH=CHCH₃ | SO₂Me |
| 4-326 | Me | SOCH₂CCMe | SO₂Me |
| 4-327 | Me | SO₄-c-Pen | SO₂Me |
| 4-328 | Me | SO-c-Pen | SO₂Me |
| 4-329 | Me | S(CH₂)₃Cl | SO₂Me |
| 4-330 | Me | SCH₂(4-F-Ph) | SO₂Me |
| 4-331 | Me | SO₂CH₂CCMe | SO₂Me |
| 4-332 | Me | SO₂CH₂CH=CHCH₃ | SO₂Me |
| 4-333 | Me | SOCH₂CH=CHCH₃ | SO₂Me |
| 4-334 | Me | SOCH₂-epoxy-Me | SO₂Me |
| 4-335 | Me | SO₂(CH₂)₃Cl | SO₂Me |
| 4-336 | Me | SO(CH₂)₃Cl | SO₂Me |
| 4-337 | Me | SOCH₂(4-F-Ph) | SO₂Me |
| 4-338 | Me | SO₂CH₂(4-F-Ph) | SO₂Me |
| 4-339 | Me | SO₂Me | C₂F₅ |
| 4-340 | O(CH₂)₂OMe | SMe | CF₃ |
| 4-341 | O(CH₂)₂OMe | SO₂Me | CF₃ |
| 4-342 | O(CH₂)₂OMe | SOMe | CF₃ |
| 4-343 | Me | S(CH₂)₂OCH₂CF₃ | SO₂Me |
| 4-344 | Me | SO(CH₂)₂OCH₂CF₃ | SO₂Me |
| 4-345 | Me | SO₂(CH₂)₂OCH₂CF₃ | SO₂Me |
| 4-346 | OEt | SEt | CF₃ |
| 4-347 | O-CH₂-c-Pr | SMe | CF₃ |
| 4-348 | OMe | SEt | CF₃ |
| 4-349 | OMe | SO₂Et | CF₃ |
| 4-350 | OMe | SOEt | CF₃ |
| 4-351 | OEt | SO₂Et | CF₃ |
| 4-352 | OEt | SOEt | CF₃ |
| 4-353 | O-CH₂-c-Pr | SOMe | CF₃ |
| 4-354 | O-CH₂-c-Pr | SO₂Me | CF₃ |
| 4-355 | Me | SEt | SO₂Me |

**Table 5: Compounds of the general formula (I) according to the invention in which R is chloromethyl**

| | | | |
|---|---|---|---|
| 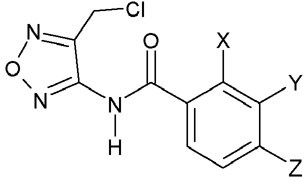 | | | |

| No. | X | Y | Z |
|---|---|---|---|
| 5-1 | CF₃ | OCH₂CON(Me)Et | SO₂Me |
| 5-2 | CF₃ | OCH₂CON(Me)Et | SO₂Et |
| 5-4 | CF₃ | 2-(1 H-pyrazol-1-yl)ethoxyl | SO₂Me |
| 5-5 | CF₃ | 2-(1 H-pyrazol-1-yl)ethoxyl | SO₂Et |
| 5-6 | CF₃ | tetrahydrofuran-2-yl-methoxy | SO₂Me |
| 5-7 | CF₃ | tetrahydrofuran-2-yl-methoxy | SO₂Et |
| 5-8 | CF₃ | OH | SO₂Me |
| 5-9 | CF₃ | OH | SO₂Et |
| 5-10 | CF₃ | SH | SO₂Me |
| 5-11 | CF₃ | SH | SO₂Et |
| 5-15 | CF₃ | SMe | SO₂Me |
| 5-16 | CF₃ | SMe | SO₂Et |
| 5-17 | CF₃ | S(O)Me | SO₂Me |
| 5-24 | CF₃ | S(O)Me | SO₂Et |
| 5-25 | CF₃ | S(O)₂Me | SO₂Me |
| 5-26 | CF₃ | S(O)₂Me | SO₂Et |
| 5-27 | CF₃ | 2-[(methylsulfonyl)amino]ethoxy | SO₂Me |
| 5-28 | CF₃ | 2-[(methylsulfonyl)-amino]ethyl}sulfanyl | SO₂Me |
| 5-29 | CF₃ | 2-[(methylsulfonyl)-amino]ethyl}sulfanyl | SO₂Et |
| 5-30 | NO₂ | O(CH₂)₂OMe | OMe |
| 5-31 | NO₂ | OMe | Me |
| 5-32 | NO₂ | NH₂ | OMe |
| 5-33 | NO₂ | NH₂ | SO₂Et |
| 5-34 | NO₂ | NH₂ | Cl |
| 5-35 | NO₂ | NHMe | Cl |
| 5-36 | NO₂ | NMe₂ | Cl |
| 5-37 | NO₂ | NH₂ | Br |
| 5-38 | NO₂ | NHMe | Br |
| 5-39 | NO₂ | NMe2 | Br |
| 5-40 | NO₂ | NH₂ | F |
| 5-41 | NO₂ | NHMe | F |
| 5-42 | NO₂ | NMe2 | F |
| 5-43 | NO₂ | NH₂ | SO₂Me |
| 5-44 | NO₂ | NHMe | SO₂Me |
| 5-45 | NO₂ | NMe₂ | SO₂Me |
| 5-46 | NO₂ | NH₂ | 1H-1,2,4-triazol-1-yl |
| 5-47 | NO₂ | NHMe | 1H-1,2,4-triazol-1-yl |
| 5-48 | NO₂ | NMe₂ | 1H-1,2,4-triazol-1-yl |
| 5-49 | Me | F | F |
| 5-50 | Me | F | Cl |
| 5-51 | Me | SMe | CF₃ |
| 5-52 | Me | Cl | SO₂Me |
| 5-53 | Me | SO₂Me | SO₂Me |
| 5-54 | Me | SO₂Me | CF₃ |
| 5-55 | Me | Cl | CF₃ |
| 5-56 | Me | S(O)Me | CF₃ |
| 5-57 | Me | SEt | OMe |
| 5-58 | Me | NMe₂ | SO₂Me |
| 5-59 | Me | NH(CH₂)₂OMe | SO₂Me |
| 5-60 | Me | O(CH₂)₄OMe | SO₂Me |
| 5-61 | Me | NH₂ | SO₂Me |
| 5-62 | Me | O(CH₂)₂-O(3,5-dimethoxypyrimidin-2-yl | SO₂Me |
| 5-63 | Me | O(CH₂)₂-O-NMe₂ | Cl |
| 5-64 | Me | O(CH₂)₂-NH(CO)NMe₂ | Cl |
| 5-65 | Me | O(CH₂)-5-pyrrolidin-2-one | Br |
| 5-66 | Me | O(CH₂)₂-NH(CO)NHCO₂Et | Cl |
| 5-67 | Me | O(CH₂)-(CO)NEt₂ | Br |
| 5-68 | Me | O(CH₂)-5-2,4-dimethyl-2,4-dihydro-3H-1,2,4-triazol-3-one | Cl |
| 5-69 | Me | O(CH₂)-3,5-dimethyl-1,2-oxazol-4-yl | Cl |
| 5-70 | Me | O(CH₂)₂-NHCO₂Me | Cl |
| 5-71 | Me | 4,5-dihydro-1,2-oxazol-3-yl | SO₂Me |
| 5-72 | Me | Me | SO₂Me |
| 5-73 | Me | OH | SO₂Me |
| 5-74 | Me | O-CH₂-NHSO₂cPr | Cl |
| 5-75 | Me | O(CH₂)₂NHSO2Me | SO₂Me |
| 5-76 | Me | S(O)Me | SO₂Me |
| 5-77 | Me | SMe | SO₂Me |
| 5-78 | Me | SMe | OMe |
| 5-79 | Me | S(O)Me | OMe |
| 5-80 | Me | SO₂Me | OMe |
| 5-81 | Me | SMe | Cl |
| 5-82 | Me | S(O)Me | Cl |
| 5-83 | Me | SO₂Me | Cl |
| 5-84 | Me | [1,4]dioxan-2-yl-methoxy | SO₂Me |
| 5-85 | Me | [1,4]dioxan-2-yl-methoxy | SO₂Et |
| 5-86 | Me | O(CH₂)₄OMe | SO₂Et |
| 5-87 | Me | O(CH₂)₃OMe | SO₂Me |
| 5-88 | Me | O(CH₂)₃Me | SO₂Et |
| 5-89 | Me | O(CH₂)₂OMe | SO₂Me |
| 5-90 | Me | O(CH₂)₂OMe | SO₂Et |
| 5-91 | Me | S(O)Me | SO₂Me |
| 5-92 | Me | SMe | SO₂Me |
| 5-93 | Me | SMe | OMe |
| 5-94 | Me | S(O)Me | OMe |
| 5-95 | Me | SO₂Me | OMe |
| 5-96 | Me | SMe | Cl |
| 5-97 | Me | S(O)Me | Cl |
| 5-98 | Me | SO₂Me | Cl |
| 5-99 | Me | SMe | Br |
| 5-100 | Me | SOMe | Br |
| 5-101 | Me | SO₂Me | Br |
| 5-102 | Me | SMe | I |
| 5-103 | Me | SOMe | I |
| 5-104 | Me | SO₂Me | I |
| 5-105 | Me | SEt | Cl |
| 5-106 | Me | SOEt | Cl |
| 5-107 | Me | SO₂Et | Cl |
| 5-108 | Me | SEt | Br |
| 5-109 | Me | SOEt | Br |
| 5-110 | Me | SO₂Et | Br |
| 5-111 | Me | SEt | I |
| 5-112 | Me | SOEt | I |
| 5-113 | Me | SO₂Et | I |
| 5-114 | Me | SEt | F |
| 5-115 | Me | SOEt | F |
| 5-116 | Me | SO₂Et | F |
| 5-117 | Cl | OCH₂(CO)NMe₂ | Cl |
| 5-118 | Cl | Cl | SO₂Me |
| 5-119 | Cl | CH₂OCH₂CF₃ | SO₂Me |
| 5-120 | Cl | 5-cyanomethyl-4,5-dihydro-1,2-oxazol-3-yl | SO₂Et |
| 5-121 | Cl | CH₂O-tetrahydrofuran-3-yl | SO₂Me |
| 5-122 | Cl | CH₂O-tetrahydrofuran-2-yl | SO₂Me |
| 5-123 | Cl | SMe | SO₂Me |
| 5-124 | Cl | F | SMe |
| 5-125 | Cl | CH₂OCH₂-tetrahydrofuran-2-yl | SO₂Me |
| 5-126 | Cl | CH₂OCH₂-tetrahydrofuran-3-yl | SO₂Et |
| 5-127 | Cl | O(CH₂)-5-pyrrolidin-2-one | Cl |
| 5-128 | Cl | SMe | Cl |
| 5-129 | Cl | S(O)Me | SO₂Me |
| 5-130 | Cl | CH₂O-tetrahydrofuran-3-yl | SO₂Et |
| 5-131 | Cl | O(CH₂)₂OMe | Cl |
| 5-132 | Cl | O(CH₂)₂OMe | SO₂Me |
| 5-133 | Cl | O(CH₂)₄OMe | SO₂Me |
| 5-134 | Cl | O(CH₂)₄OMe | SO₂Et |
| 5-135 | Cl | O(CH₂)₃OMe | SO₂Me |
| 5-136 | Cl | O(CH₂)₃OMe | SO₂Et |
| 5-137 | Cl | O(CH₂)₂OMe | SO₂Me |
| 5-138 | Cl | O(CH₂)₂OMe | SO₂Et |
| 5-139 | Cl | [1,4]dioxan-2-yl-methoxy | SO₂Me |
| 5-140 | Cl | [1,4]dioxan-2-yl-methoxy | SO₂Et |
| 5-141 | Cl | SO₂Me | Me |
| 5-142 | Cl | SEt | Me |
| 5-143 | Cl | SOEt | Me |
| 5-144 | Cl | SO₂Et | Me |
| 2-145 | Cl | 4,5-dihydro-1,5-oxazol-3-yl | SO₂Me |
| 5-146 | Cl | Cl | SO₂Me |
| 5-147 | F | SMe | CF₃ |
| 5-148 | F | S(O)Me | CF₃ |
| 5-149 | OMe | SMe | CF₃ |
| 5-150 | OMe | S(O)Me | CF₃ |
| 5-151 | OMe | SO₂Me | CF₃ |
| 5-152 | Et | NH(CH₂)₂OMe | SO₂Me |
| 5-153 | Et | F | SO₂Me |
| 5-154 | Et | SMe | CF₃ |
| 5-155 | CF₃ | F | SO₂Me |
| 5-156 | CF₃ | F | SO₂Et |
| 5-157 | CF₃ | O(CH₂)₂OMe | SO₂Et |
| 5-158 | CF₃ | O(CH₂)₃OMe | SO₂Et |
| 5-159 | CF₃ | O(CH₂)₂OMe | SO₂Me |
| 5-160 | CF₃ | O(CH₂)₃OMe | SO₂Me |
| 5-161 | CF₃ | OCH₂CONMe₂ | SO₂Me |
| 5-162 | CF₃ | OCH₂CONMe₂ | SO₂Et |
| 5-163 | CF₃ | OCH₂CONMe₂ | Cl |
| 5-164 | CF₃ | OCH₂CONMe₂ | Br |
| 5-165 | CF₃ | OCH₂CONMe₂ | I |
| 5-166 | CF₃ | OCH₂CONMe₂ | F |
| 5-167 | CF₃ | O(CH₂)₂OMe | Cl |
| 5-168 | CF₃ | O(CH₂)₃OMe | Cl |
| 5-169 | CF₃ | O(CH₂)₂OMe | Br |
| 5-170 | CF₃ | O(CH₂)₃OMe | Br |
| 5-171 | CF₃ | O(CH₂)₂OMe | I |
| 5-172 | CF₃ | O(CH₂)₃OMe | I |
| 5-173 | CF₃ | O(CH₂)₂OMe | F |
| 5-174 | CF₃ | O(CH₂)₃OMe | F |
| 5-175 | CF₃ | [1,4]dioxan-2-yl-methoxy | SO₂Me |
| 5-176 | CF₃ | [1,4]dioxan-2-yl-methoxy | SO₂Et |
| 5-177 | CF₃ | [1,4]dioxan-2-yl-methoxy | Cl |
| 2-178 | CF₃ | [1,4]dioxan-2-yl-methoxy | Br |
| 5-179 | CF₃ | [1,4]dioxan-2-yl-methoxy | I |
| 5-180 | CF₃ | [1,4]dioxan-2-yl-methoxy | F |
| 5-181 | Br | OMe | Br |
| 5-182 | Br | O(CH₂)₂OMe | Br |
| 5-183 | Br | O(CH₂)₄OMe | SO₂Me |
| 5-184 | Br | O(CH₂)₄OMe | SO₂Et |
| 5-185 | Br | O(CH₂)₃OMe | SO₂Me |
| 5-186 | Br | O(CH₂)₃OMe | SO₂Et |
| 5-187 | Br | O(CH₂)₂OMe | SO₂Me |
| 5-188 | Br | O(CH₂)₂OMe | SO₂Et |
| 5-189 | Br | [1,4]dioxan-2-yl-methoxy | SO₂Me |
| 5-190 | Br | [1,4]dioxan-2-yl-methoxy | SO₂Et |
| 5-191 | Br | SMe | Me |
| 5-192 | Br | SOMe | Me |
| 5-193 | Br | SO₂Me | Me |
| 5-194 | Br | SEt | Me |
| 5-195 | Br | SOEt | Me |
| 5-196 | Br | SO₂E | Me |
| 5-197 | I | O(CH₂)₄OMe | SO₂Me |
| 5-198 | I | O(CH₂)₄OMe | SO₂Et |
| 5-199 | I | O(CH₂)₃OMe | SO₂Me |
| 5-200 | I | O(CH₂)₃OMe | SO₂Et |
| 5-201 | I | O(CH₂)₂OMe | SO₂Me |
| 5-202 | I | O(CH₂)₂OMe | SO₂Et |
| 5-203 | I | [1,4]dioxan-2-yl-methoxy | SO₂Me |
| 5-204 | I | [1,4]dioxan-2-yl-methoxy | SO₂Et |
| 5-205 | I | SMe | Me |
| 5-206 | I | SOMe | Me |
| 5-207 | I | SO₂Me | Me |
| 5-208 | I | SEt | Me |
| 5-209 | I | SOEt | Me |
| 5-210 | I | SO₂Et | Me |
| 5-211 | CH₂SMe | OMe | SO₂Me |
| 5-212 | CH₂OMe | OMe | SO₂Me |
| 5-213 | CH₂O(CH₂)₂OMe | NH(CH₂)₂OEt | SO₂Me |
| 5-214 | CH₂O(CH₂)₂OMe | NH(CH₂)₃OEt | SO₂Me |
| 5-215 | CH₂O(CH₂)₃OMe | OMe | SO₂Me |
| 5-216 | CH₂O(CH₂)₂OMe | NH(CH₂)₂OMe | SO₂Me |
| 5-217 | CH₂O(CH₂)₂OMe | NH(CH₂)₃OMe | SO₂Me |
| 5-218 | SO₂Me | NH₂ | CF₃ |
| 5-219 | SO₂Me | F | CF₃ |
| 5-220 | SO₂Me | NHEt | Cl |
| 5-221 | SMe | SEt | F |
| 5-222 | SMe | SMe | F |
| 5-223 | Me | NH₂ | Cl |
| 5-224 | Me | NH₂ | Br |
| 5-225 | Me | NHMe | Cl |
| 5-226 | Me | NHMe | Br |
| 5-227 | Me | NMe₂ | Cl |
| 5-228 | Me | NMe₂ | Br |
| 5-227 | Me | NMe₂ | Cl |
| 5-228 | Me | NMe₂ | Br |
| 5-229 | NO₂ | O(CH₂)₂OMe | Me |
| 5-230 | CF₃ | S(O)₂Et | SO₂Me |
| 5-231 | CF₃ | S(O)₂Et | SO₂Et |
| 5-232 | CF₃ | SCH₂CONMe₂ | SO₂Me |
| 5-233 | CF₃ | SCH₂CONMe₂ | SO₂Et |
| 5-234 | CF₃ | SCH₂COOH | SO₂Me |
| 5-235 | CF₃ | SCH₂COOH | SO₂Et |
| 5-236 | Me | SO₂-CH₂-CH₂-CH=CH₂ | CF₃ |
| 5-237 | Cl | Me | SO₂Et |
| 5-238 | CF₃ | SEt | SO₂Me |
| 5-239 | OMe | NO₂ | Cl |
| 5-240 | OMe | NH(CO)i-Pr | Cl |
| 5-241 | OMe | NH(CO)CH₂Ph | Cl |
| 5-242 | CF₃ | SEt | SO₂Et |
| 5-243 | CF₃ | S(O)Et | SO₂Me |
| 5-244 | Cl | Me | Cl |
| 5-245 | Me | 3,5-dimethylpyrazol-1-yl | SO₂Me |
| 5-247 | Me | 1,2,3-triazol-1-yl | SO₂Me |
| 5-248 | Me | Me | SMe |
| 5-249 | Me | pyrrolidin-2-on-1-yl | SO₂Me |
| 5-250 | CF₃ | S(O)Et | SO₂Et |
| 5-251 | Cl | pyrazol-1-yl | SO₂Me |
| 5-252 | Me | 3-methylpyrazol-1-yl | SO₂Me |
| 5-253 | Cl | CH₂-N(Et)OMe | SO₂Me |
| 5-254 | Me | Me | Cl |
| 5-255 | OH | Cl | Cl |
| 5-256 | Me | 1,2,4-triazol-1-yl | SO₂Me |
| 5-257 | Me | 4-methoxypyrazol-1-yl | SO₂Me |
| 5-258 | Me | 1,2,4-triazol-1-yl | CF₃ |
| 5-259 | Me | tetrahydropyrimidin-2(1H)-on-1-yl | SO₂Me |
| 5-260 | Me | NH-(CH₂)₂-O(CO)Et | SO₂Me |
| 5-261 | Me | NH-iPr | SO₂Me |
| 5-262 | Cl | NH-CH₂-(CO)NHEt | Cl |
| 5-263 | Me | NH-CH₂-(CO)NMe₂ | SO₂Me |
| 5-264 | Me | NH-CH₂-furan-2-yl | SO₂Me |
| 5-265 | Me | NH-CH₂-(CO)NHEt | SO₂Me |
| 5-266 | Me | F | SO₂Me |
| 5-267 | F | SO₂Me | SO₂Me |
| 5-268 | Cl | (4-cyclopropyl-3-methyl-5-oxo-4,5-dihydro-1H-1,2,4-triazol-1-yl)methyl | Cl |
| 5-269 | Cl | [4-methyl-5-oxo-3-(2,2,2-trifluoroethoxy)-4,5-dihydro-1H-1,2,4-triazol-1-yl]methyl | Cl |
| 5-270 | Cl | (3-isopropoxy-4-methyl-5-oxo-4,5-dihydro-1H-1,2,4-triazol-1-yl]-methyl | Cl |
| 5-271 | Cl | (4-methyl-5-oxo-4,5-dihydro-1 H-1,2,4-triazol-1-yl)methyl | Cl |
| 5-272 | Me | Cl | SO₂Et |
| 5-273 | SO₂Me | F | Cl |
| 5-274 | Me | 1,2,3-triazol-1-yl | SO₂Me |
| 5-275 | Me | isobutyl(methyl)carbamoylamino | SO₂Me |
| 5-276 | Me | 3-oxomorpholin-4-yl | SO₂Me |
| 5-277 | OMe | [ethyl(methylsulfonyl)-amino]methyl | Cl |
| 5-278 | F | SOMe | CF₃ |
| 5-279 | OMe | benzoylamino | Cl |
| 5-280 | OMe | cyclopropylcarbonyl-amino | Cl |
| 5-281 | OMe | propionylamino | Cl |
| 5-282 | NO₂ | SO₂Me | SO₂Me |
| 5-283 | NO₂ | SO₂Me | Cl |
| 5-284 | NO₂ | SOMe | SO₂Me |
| 5-285 | NO₂ | SOMe | Br |
| 5-286 | NO₂ | SOMe | Cl |
| 5-287 | NO₂ | SMe | SO₂Me |
| 5-288 | NO₂ | SMe | Br |
| 5-289 | NO₂ | SMe | Cl |
| 5-290 | Cl | CH₂OCH(CH₃)₂ | SO₂Et |
| 5-291 | Cl | CH₂OEt | SO₂Et |
| 5-292 | Cl | CH₂OMe | SO₂Et |
| 5-293 | Cl | CH₂OCH₂C₂F₅ | SO₂Me |
| 5-294 | Cl | CH₂OCH₂CHF₂ | SO₂Me |
| 5-295 | Cl | CH₂OCH₂CCH | SO₂Et |
| 5-296 | Cl | CH₂OC₂H₄OMe | SO₂Me |
| 5-297 | Cl | CH₂(OC₂H₄)₂OMe | SO₂Me |
| 5-298 | Cl | 5-ethoxymethyl-4,5-dihydro-1,2-oxazol-3-yl | SO₂Et |
| 5-299 | Cl | 5-Methoxymethyl-4,5-dihydro-1,2-oxazol-3-yl | SO₂Et |
| 5-300 | Et | SOMe | CF₃ |
| 5-301 | iPr | SMe | CF₃ |
| 5-302 | Et | SMe | CF₃ |
| 5-303 | Et | SO₂Me | CF₃ |
| 5-304 | cPr | SOMe | CF₃ |
| 5-305 | CH=CH₂ | SMe | CF₃ |
| 5-306 | Et | SMe | Cl |
| 5-307 | Et | SO₂Me | Cl |
| 5-308 | Cl | NMe₂ | Cl |
| 5-309 | CH₂O(CH₂)₂OMe | NH(CH₂)₃OMe | SO₂Me |
| 5-313 | Me | SO₂(CH₂)₂OMe | CF₃ |
| 5-314 | Me | SOEt | SO₂Me |
| 5-315 | Me | SO₂Et | SO₂Me |
| 5-316 | Me | SMe | 1,2,4-triazol-1-yl |
| 5-317 | OEt | SMe | CF₃ |
| 5-318 | Me | S(CH₂)₂OMe | CF₃ |
| 5-319 | Me | SOMe | 1,2,4-triazol-1-yl |
| 5-320 | OEt | SOMe | CF₃ |
| 5-321 | Me | SO(CH₂)₂OMe | CF₃ |
| 5-322 | Me | SCH₂CCMe | SO₂Me |
| 5-323 | Me | S-c-Pen | SO₂Me |
| 5-324 | OMe | SMe | OMe |
| 5-325 | Me | SCH₂CH=CHCH₃ | SO₂Me |
| 5-326 | Me | SOCH₂CCMe | SO₂Me |
| 5-327 | Me | SO₅-c-Pen | SO₂Me |
| 5-328 | Me | SO-c-Pen | SO₂Me |
| 5-329 | Me | S(CH₂)₃Cl | SO₂Me |
| 5-330 | Me | SCH₂(4-F-Ph) | SO₂Me |
| 5-331 | Me | SO₂CH₂CCMe | SO₂Me |
| 5-332 | Me | SO₂CH₂CH=CHCH₃ | SO₂Me |
| 5-333 | Me | SOCH₂CH=CHCH₃ | SO₂Me |
| 5-334 | Me | SOCH₂-epoxy-Me | SO₂Me |
| 5-335 | Me | SO₂(CH₂)₃Cl | SO₂Me |
| 5-336 | Me | SO(CH₂)₃Cl | SO₂Me |
| 5-337 | Me | SOCH₂(4-F-Ph) | SO₂Me |
| 5-338 | Me | SO₂CH₂(4-F-Ph) | SO₂Me |
| 5-339 | Me | SO₂Me | C₂F₅ |
| 5-340 | O(CH₂)₂OMe | SMe | CF₃ |
| 5-341 | O(CH₂)₂OMe | SO₂Me | CF₃ |
| 5-342 | O(CH₂)₂OMe | SOMe | CF₃ |
| 5-343 | Me | S(CH₂)₂OCH₂CF₃ | SO₂Me |
| 5-344 | Me | SO(CH₂)₂OCH₂CF₃ | SO₂Me |
| 5-345 | Me | SO₂(CH₂)₂OCH₂CF₃ | SO₂Me |
| 5-346 | OEt | SEt | CF₃ |
| 5-347 | O-CH₂-c-Pr | SMe | CF₃ |
| 5-348 | OMe | SEt | CF₃ |
| 5-349 | OMe | SO₂Et | CF₃ |
| 5-350 | OMe | SOEt | CF₃ |
| 5-351 | OEt | SO₂Et | CF₃ |
| 5-352 | OEt | SOEt | CF₃ |
| 5-353 | O-CH₂-c-Pr | SOMe | CF₃ |
| 5-354 | O-CH₂-c-Pr | SO₂Me | CF₃ |
| 5-355 | Me | SEt | SO₂Me |

**Table 6: Compounds of the general formula (I) according to the invention in which R is tert-butyl**

| | | | |
|---|---|---|---|
| 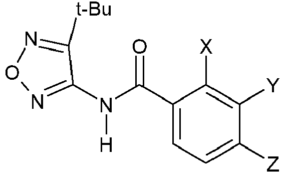 | | | |

| No. | X | Y | Z |
|---|---|---|---|
| 6-1 | CF₃ | OCH₂CON(Me)Et | SO₂Me |
| 6-2 | CF₃ | OCH₂CON(Me)Et | SO₂Et |
| 6-4 | CF₃ | 2-(1H-pyrazol-1-yl)ethoxyl | SO₂Me |
| 6-5 | CF₃ | 2-(1H-pyrazol-1-yl)ethoxyl | SO₂Et |
| 6-6 | CF₃ | tetrahydrofuran-2-yl-methoxy | SO₂Me |
| 6-7 | CF₃ | tetrahydrofuran-2-yl-methoxy | SO₂Et |
| 6-8 | CF₃ | OH | SO₂Me |
| 6-9 | CF₃ | OH | SO₂Et |
| 6-10 | CF₃ | SH | SO₂Me |
| 6-11 | CF₃ | SH | SO₂Et |
| 6-15 | CF₃ | SMe | SO₂Me |
| 6-16 | CF₃ | SMe | SO₂Et |
| 6-17 | CF₃ | S(O)Me | SO₂Me |
| 6-24 | CF₃ | S(O)Me | SO₂Et |
| 6-25 | CF₃ | S(O)₂Me | SO₂Me |
| 6-26 | CF₃ | S(O)₂Me | SO₂Et |
| 6-27 | CF₃ | 2-[(methylsulfonyl)amino]ethoxy | SO₂Me |
| 628 | CF₃ | 2-[(methylsulfonyl)-amino]ethyl}sulfanyl | SO₂Me |
| 6-29 | CF₃ | 2-[(methylsulfonyl)-amino]ethyl}sulfanyl | SO₂Et |
| 6-30 | Me | H | NO₂ |
| 6-31 | NO₂ | OMe | Me |
| 6-32 | NO₂ | NH₂ | OMe |
| 6-33 | NO₂ | NH₂ | SO₂Et |
| 6-34 | NO₂ | NH₂ | Cl |
| 6-35 | NO₂ | NHMe | Cl |
| 6-36 | NO₂ | NMe₂ | Cl |
| 6-37 | NO₂ | NH₂ | Br |
| 6-38 | NO₂ | NHMe | Br |
| 6-39 | NO₂ | NMe₂ | Br |
| 6-40 | NO₂ | NH₂ | F |
| 6-41 | NO₂ | NHMe | F |
| 6-42 | NO₂ | NMe₂ | F |
| 6-43 | NO₂ | NH₂ | SO₂Me |
| 6-44 | NO₂ | NHMe | SO₂Me |
| 6-45 | NO₂ | NMe₂ | SO₂Me |
| 6-46 | NO₂ | NH₂ | 1H-1,2,4-triazol-5-yl |
| 6-47 | NO₂ | NHMe | 1H-1,2,4-triazol-5-yl |
| 6-48 | NO₂ | NMe₂ | 1H-1,2,4-triazol-5-yl |
| 6-49 | Me | F | F |
| 6-50 | Me | F | Cl |
| 6-51 | Me | SMe | CF₃ |
| 6-52 | Me | Cl | SO₂Me |
| 6-53 | Me | SO₂Me | SO₂Me |
| 6-54 | Me | SO₂Me | CF₃ |
| 6-55 | Me | Cl | CF₃ |
| 6-56 | Me | S(O)Me | CF₃ |
| 6-57 | Me | SEt | OMe |
| 6-58 | Me | NMe₂ | SO₂Me |
| 6-59 | Me | NH(CH₂)₂OMe | SO₂Me |
| 6-60 | Me | O(CH₂)₄OMe | SO₂Me |
| 6-61 | Me | NH₂ | SO₂Me |
| 6-62 | Me | O(CH₂)₂-O-(3,5-dimethoxypyrimidin-2-yl | SO₂Me |
| 6-63 | Me | O(CH₂)₂-O-NMe₂ | Cl |
| 6-64 | Me | O(CH₂)₂-NH(CO)NMe₂ | Cl |
| 6-65 | Me | O(CH₂)-5-pyrrolidin-2-one | Br |
| 6-66 | Me | O(CH₂)₂-NH(CO)NHCO₂Et | Cl |
| 6-67 | Me | O(CH₂)-(CO)NEt₂ | Br |
| 6-68 | Me | O(CH₂)-5-2,4-dimethyl-2,4-dihydro-3H-1,2,4-triazol-3-one | Cl |
| 6-69 | Me | O(CH₂)-3,5-dimethyl-1,2-oxazol-4-yl | Cl |
| 6-70 | Me | O(CH₂)₂-NHCO₂Me | Cl |
| 6-71 | Me | 4,5-dihydro-1,2-oxazol-3-yl | SO₂Me |
| 6-72 | Me | Me | SO₂Me |
| 6-73 | Me | OH | SO₂Me |
| 6-74 | Me | O-CH₂-NHSO₂cPr | Cl |
| 6-75 | Me | O(CH₂)₂NHSO₂Me | SO₂Me |
| 6-76 | Me | S(O)Me | SO₂Me |
| 6-77 | Me | SMe | SO₂Me |
| 6-78 | Me | SMe | OMe |
| 6-79 | Me | S(O)Me | OMe |
| 6-80 | Me | SO₂Me | OMe |
| 6-81 | Me | SMe | Cl |
| 6-82 | Me | S(O)Me | Cl |
| 6-83 | Me | SO₂Me | Cl |
| 6-84 | Me | [1,4]dioxan-2-yl-methoxy | SO₂Me |
| 6-85 | Me | [1,4]dioxan-2-yl-methoxy | SO₂Et |
| 6-86 | Me | O(CH₂)₄OMe | SO₂Et |
| 6-87 | Me | O(CH₂)₃OMe | SO₂Me |
| 6-88 | Me | O(CH₂)₃OMe | SO₂Et |
| 6-89 | Me | O(CH₂)₂OMe | SO₂Me |
| 6-90 | Me | O(CH₂)₂OMe | SO₂Et |
| 6-91 | Me | S(O)Me | SO₂Me |
| 6-92 | Me | SMe | SO₂Me |
| 6-93 | Me | SMe | OMe |
| 6-94 | Me | S(O)Me | OMe |
| 6-95 | Me | SO₂Me | OMe |
| 6-96 | Me | SMe | Cl |
| 6-97 | Me | S(O)Me | Cl |
| 6-98 | Me | SO₂Me | Cl |
| 6-99 | Me | SMe | Br |
| 6-100 | Me | SOMe | Br |
| 6-101 | Me | SO₂Me | Br |
| 6-102 | Me | SMe | I |
| 6-103 | Me | SOMe | I |
| 6-104 | Me | SO₂Me | I |
| 6-105 | Me | SEt | Cl |
| 6-106 | Me | SOEt | Cl |
| 6-107 | Me | SO₂Et | Cl |
| 6-108 | Me | SEt | Br |
| 6-109 | Me | SOEt | Br |
| 6-110 | Me | SO₂Et | Br |
| 6-111 | Me | SEt | I |
| 6-112 | Me | SOEt | I |
| 6-113 | Me | SO₂Et | I |
| 6-114 | Me | SEt | F |
| 6-115 | Me | SOEt | F |
| 6-116 | Me | SO₂Et | F |
| 6-117 | Cl | OCH₂(CO)NMe₂ | Cl |
| 6-118 | Cl | Cl | SO₂Me |
| 6-119 | Cl | CH₂OCH₂CF₃ | SO₂Me |
| 6-120 | Cl | 5-cyanomethyl-4,5-dihydro-1,2-oxazol-3-yl | SO₂Et |
| 6-121 | Cl | CH₂O-tetra-hydrofuran-3-yl | SO₂Me |
| 6-122 | Cl | CH₂O-tetra-hydrofuran-2-yl | SO₂Me |
| 6-123 | Cl | SMe | SO₂Me |
| 6-124 | Cl | F | SMe |
| 6-125 | Cl | CH₂OCH₂-tetrahydrofuran-2-yl | SO₂Me |
| 6-126 | Cl | CH₂OCH₂-tetrahydrofuran-3-yl | SO₂Et |
| 6-127 | Cl | O(CH₂)-5-pyrrolidin-2-one | Cl |
| 6-128 | Cl | SMe | Cl |
| 6-129 | Cl | S(O)Me | SO₂Me |
| 6-130 | Cl | CH₂O-tetrahydrofuran-3-yl | SO₂Et |
| 6-131 | Cl | O(CH₂)₂OMe | Cl |
| 6-132 | Cl | O(CH₂)₂OMe | SO₂Me |
| 6-133 | Cl | O(CH₂)₄OMe | SO₂Me |
| 6-134 | Cl | O(CH₂)₄OMe | SO₂Et |
| 6-135 | Cl | O(CH₂)₃OMe | SO₂Me |
| 6-136 | Cl | O(CH₂)₃OMe | SO₂Et |
| 6-137 | Cl | O(CH₂)₂OMe | SO₂Me |
| 6-138 | Cl | O(CH₂)₂OMe | SO₂Et |
| 6-139 | Cl | [1,4]dioxan-2-yl-methoxy | SO₂Me |
| 6-140 | Cl | [1,4]dioxan-2-yl-methoxy | SO₂Et |
| 6-141 | Cl | SO₂Me | Me |
| 6-142 | Cl | SEt | Me |
| 6-143 | Cl | SOEt | Me |
| 6-144 | Cl | SO₂Et | Me |
| 6-145 | Cl | 4,5-dihydro-1,2-oxazol-3-yl | SO₂Me |
| 6-146 | Cl | Cl | SO₂Me |
| 6-147 | F | SMe | CF₃ |
| 6-148 | F | S(O)Me | CF₃ |
| 6-149 | OMe | SMe | CF₃ |
| 6-150 | OMe | S(O)Me | CF₃ |
| 6-151 | OMe | SO₂Me | CF₃ |
| 6-152 | Et | NH(CH₂)₂OMe | SO₂Me |
| 6-153 | Et | F | SO₂Me |
| 6-154 | Et | SMe | CF₃ |
| 6-155 | CF₃ | F | SO₂Me |
| 6-156 | CF₃ | F | SO₂Et |
| 6-157 | CF₃ | O(CH₂)₂OMe | SO₂Et |
| 6-158 | CF₃ | O(CH₂)₃OMe | SO₂Et |
| 6-159 | CF₃ | O(CH₂)₂OMe | SO₂Me |
| 6-160 | CF₃ | O(CH₂)₃OMe | SO₂Me |
| 6-161 | CF₃ | OCH₂CONMe₂ | SO₂Me |
| 6-162 | CF₃ | OCH₂CONMe₂ | SO₂Et |
| 6-163 | CF₃ | OCH₂CONMe₂ | Cl |
| 6-164 | CF₃ | OCH₂CONMe₂ | Br |
| 6-165 | CF₃ | OCH₂CONMe₂ | I |
| 6-166 | CF₃ | OCH₂CONMe₂ | F |
| 6-167 | CF₃ | O(CH₂)₂OMe | Cl |
| 6-168 | CF₃ | O(CH₂)₃OMe | Cl |
| 6-169 | CF₃ | O(CH₂)₂OMe | Br |
| 6-170 | CF₃ | O(CH₂)₃OMe | Br |
| 6-171 | CF₃ | O(CH₂)₂OMe | I |
| 6-172 | CF₃ | O(CH₂)₃OMe | I |
| 6-173 | CF₃ | O(CH₂)₂OMe | F |
| 6-174 | CF₃ | O(CH₂)₃OMe | F |
| 6-175 | CF₃ | [1,4]dioxan-2-yl-methoxy | SO₂Me |
| 6-176 | CF₃ | [1,4]dioxan-2-yl-methoxy | SO₂Et |
| 6-177 | CF₃ | [1,4]dioxan-2-yl-methoxy | Cl |
| 6-178 | CF₃ | [1,4]dioxan-2-yl-methoxy | Br |
| 6-179 | CF₃ | [1,4]dioxan-2-yl-methoxy | I |
| 6-180 | CF₃ | [1,4]dioxan-2-yl-methoxy | F |
| 6-181 | Br | OMe | Br |
| 6-182 | Br | O(CH₂)₂OMe | Br |
| 6-183 | Br | O(CH₂)₄OMe | SO₂Me |
| 6-184 | Br | O(CH₂)₄OMe | SO₂Et |
| 6-185 | Br | O(CH₂)₃OMe | SO₂Me |
| 6-186 | Br | O(CH₂)₃OMe | SO₂Et |
| 6-187 | Br | O(CH₂)₂OMe | SO₂Me |
| 6-188 | Br | O(CH₂)₂OMe | SO₂Et |
| 6-189 | Br | [1,4]dioxan-2-yl-methoxy | SO₂Me |
| 6-190 | Br | [1,4]dioxan-2-yl-methoxy | SO₂Et |
| 6-191 | Br | SMe | Me |
| 6-192 | Br | SOMe | Me |
| 6-193 | Br | SO₂Me | Me |
| 6-194 | Br | SEt | Me |
| 6-195 | Br | SOEt | Me |
| 6-196 | Br | SO₂Et | Me |
| 6-197 | I | O(CH₂)₄OMe | SO₂Me |
| 6-198 | I | O(CH₂)₄OMe | SO₂Et |
| 6-199 | I | O(CH₂)₃OMe | SO₂Me |
| 6-200 | I | O(CH₂)₃OMe | SO₂Et |
| 6-201 | I | O(CH₂)₂OMe | SO₂Me |
| 6-202 | I | O(CH₂)₂OMe | SO₂Et |
| 6-203 | I | [1,4]dioxan-2-yl-methoxy | SO₂Me |
| 6-204 | I | [1,4]dioxan-2-yl-methoxy | SO₂Et |
| 6-205 | I | SMe | Me |
| 6-206 | I | SOMe | Me |
| 6-207 | I | SO₂Me | Me |
| 6-208 | I | SEt | Me |
| 6-209 | I | SOEt | Me |
| 6-210 | I | SO₂Et | Me |
| 6-211 | CH₂SMe | OMe | SO₂Me |
| 6-212 | CH₂OMe | OMe | SO₂Me |
| 6-213 | CH₂O(CH₂)₂OMe | NH(CH₂)₂OEt | SO₂Me |
| 6-214 | CH₂O(CH₂)₂OMe | NH(CH₂)₃OEt | SO₂Me |
| 6-215 | CH₂O(CH₂)₃OMe | OMe | SO₂Me |
| 6-216 | CH₂O(CH₂)₂OMe | NH(CH₂)₂OMe | SO₂Me |
| 6-217 | CH₂O(CH₂)₂OMe | NH(CH₂)₃OMe | SO₂Me |
| 6-218 | SO₂Me | NH₂ | CF₃ |
| 6-219 | SO₂Me | F | CF₃ |
| 6-220 | SO₂Me | NHEt | Cl |
| 6-221 | SMe | SEt | F |
| 6-222 | SMe | SMe | F |
| 6-223 | Me | NH₂ | Cl |
| 6-224 | Me | NH₂ | Br |
| 6-225 | Me | NHMe | Cl |
| 6-226 | Me | NHMe | Br |
| 6-227 | Me | NMe₂ | Cl |
| 6-228 | Me | NMe₂ | Br |
| 6-229 | NO₂ | O(CH₂)₂OMe | Me |
| 6-230 | CF₃ | S(O)₂Et | SO₂Me |
| 6-231 | CF₃ | S(O)₂Et | SO₂Et |
| 6-232 | CF₃ | SCH₂CONMe₂ | SO₂Me |
| 6-233 | CF₃ | SCH₂CONMe₂ | SO₂Et |
| 6-234 | CF₃ | SCH₂COOH | SO₂Me |
| 6-235 | CF₃ | SCH₂COOH | SO₂Et |
| 6-236 | Me | SO₂-CH₂-CH₂-CH=CH₂ | CF₃ |
| 6-237 | Cl | Me | SO₂Et |
| 6-238 | CF₃ | Set | SO₂Me |
| 6-239 | OMe | NO₂ | Cl |
| 6-240 | OMe | NH(CO)i-Pr | Cl |
| 6-241 | OMe | NH(CO)CH₂Ph | Cl |
| 6-242 | CF₃ | SEt | SO₂Et |
| 6-243 | CF₃ | S(O)Et | SO₂Me |
| 6-244 | Cl | Me | Cl |
| 6-245 | Me | 3,5-dimethylpyrazol-6-yl | SO₂Me |
| 6-246 | SMe | H | CF₃ |
| 6-247 | Me | 1,2,3-triazol-6-yl | SO₂Me |
| 6-248 | Me | Me | SMe |
| 6-249 | Me | pyrrolidin-2-on-6-yl | SO₂Me |
| 6-250 | CF₃ | S(O)Et | SO₂Et |
| 6-251 | Cl | pyrazol-6-yl | SO₂Me |
| 6-252 | Me | 3-methylpyrazol-6-yl | SO₂Me |
| 6-253 | Cl | CH₂-N(Et)OMe | SO₂Me |
| 6-254 | Me | Me | Cl |
| 6-255 | OH | Cl | Cl |
| 6-256 | Me | 1,2,4-triazol-1-yl | SO₂Me |
| 6-257 | Me | 4-methoxypyrazol-6-yl | SO₂Me |
| 6-258 | Me | 1,2,4-triazol-1-yl | CF₃ |
| 6-259 | Me | tetrahydropyrimidin-2(1H)-on-6-yl | SO₂Me |
| 6-260 | Me | NH-(CH₂)₂-O(CO)Et | SO₂Me |
| 6-261 | Me | NH-iPr | SO₂Me |
| 6-262 | Cl | NH-CH₂-(CO)NHEt | Cl |
| 6-263 | Me | NH-CH₂-(CO)NMe₂ | SO₂Me |
| 6-264 | Me | NH-CH₂-furan-₂-yl | SO₂Me |
| 6-265 | Me | NH-CH₂-(CO)NHEt | SO₂Me |
| 6-266 | Me | F | SO₂Me |
| 6-267 | F | SO₂Me | SO₂Me |
| 6-268 | Cl | (4-cyclopropyl-3-methyl-5-oxo-4,5-dihydro-1H-1,2,4-triazol-6-yl)methyl | Cl |
| 6-269 | Cl | [4-methyl-5-oxo-3-(2,2,2-trifluoro-ethoxy)-4,5-dihydro-1H-1,2,4-triazol-6-yl]-methyl | Cl |
| 6-270 | Cl | (3-isopropoxy-4-methyl-5-oxo-4,5-dihydro-1H-1,2,4-triazol-6-yl]methyl | Cl |
| 6-271 | Cl | (4-methyl-5-oxo-4,5-dihydro-1H-1,2,4-triazol-6-yl)methyl | Cl |
| 6-272 | Me | Cl | SO₂Et |
| 6-273 | SO₂Me | F | Cl |
| 6-274 | Cl | | morpholin-4-yl |
| 6-275 | Me | isobutyl(methyl)carbamoylamino | SO₂Me |
| 6-276 | Me | 3-oxomorpholin-4-yl | SO₂Me |
| 6-277 | OMe | [ethyl(methylsulfonyl)-amino]methyl | Cl |
| 6-279 | OMe | benzoylamino | Cl |
| 6-280 | OMe | cyclopropylcarbonylamino | Cl |
| 6-281 | OMe | propionylamino | Cl |
| 6-282 | NO₂ | SO₂Me | SO₂Me |
| 6-283 | NO₂ | SOMe | SO₂Me |
| 6-284 | NO₂ | SO₂Me | Cl |
| 6-285 | NO₂ | SOMe | Br |
| 6-286 | NO₂ | SOMe | Cl |
| 6-287 | NO₂ | SMe | SO₂Me |
| 6-288 | NO₂ | SMe | Br |
| 6-289 | NO₂ | SMe | Cl |
| 6-290 | Cl | CH₂OEt | SO₂Et |
| 6-291 | Cl | CH₂OC₂H₄OC₂H₄OMe | SO₂Me |
| 6-292 | Cl | CH₂OMe | SO₂Et |
| 6-293 | Cl | 5-methoxymethyl-5-methyl-4,5-dihydro-1,2-oxazol-3-yl | SO₂Et |
| 6-294 | Cl | 5-methoxymethyl-4,5-dihydro-1,2-oxazol-3-yl | SO₂Et |
| 6-295 | Et | SOMe | CF₃ |
| 6-296 | Cl | 5-ethoxymethyl-4,5-dihydro-1,2-oxazol-3-yl | SO₂Et |
| 6-308 | Cl | NMe2 | Cl |
| 6-309 | CH₂O(CH₂)₂OMe | NH(CH₂)₃OMe | SO₂Me |
| 6-313 | Me | SO₂(CH₂)₂OMe | CF₃ |
| 6-314 | Me | SOEt | SO₂Me |
| 6-315 | Me | SO₂Et | SO₂Me |
| 6-316 | Me | SMe | 1,2,4-triazol-1-yl |
| 6-317 | OEt | SMe | CF₃ |
| 6-318 | Me | S(CH₂)₂OMe | CF₃ |
| 6-319 | Me | SOMe | 1,2,4-triazol-1-yl |
| 6-320 | OEt | SOMe | CF₃ |
| 6-321 | Me | SO(CH₂)₂OMe | CF₃ |
| 6-322 | Me | SCH₂CCMe | SO₂Me |
| 6-323 | Me | S-c-Pen | SO₂Me |
| 6-324 | OMe | SMe | OMe |
| 6-325 | Me | SCH₂CH=CHCH₃ | SO₂Me |
| 6-326 | Me | SOCH₂CCMe | SO₂Me |
| 6-327 | Me | SO₂-c-Pen | SO₂Me |
| 6-328 | Me | SO-c-Pen | SO₂Me |
| 6-329 | Me | S(CH₂)₃Cl | SO₂Me |
| 6-330 | Me | SCH₂(4-F-Ph) | SO₂Me |
| 6-331 | Me | SO₂CH₂CCMe | SO₂Me |
| 6-332 | Me | SO₂CH₂CH=CHCH₃ | SO₂Me |
| 6-333 | Me | SOCH₂CH=CHCH₃ | SO₂Me |
| 6-334 | Me | SOCH₂-epoxy-CH₃ | SO₂Me |
| 6-335 | Me | SO₂(CH₂)₃Cl | SO₂Me |
| 6-336 | Me | SO(CH₂)₃Cl | SO₂Me |
| 6-337 | Me | SOCH₂(4-F-Ph) | SO₂Me |
| 6-338 | Me | SO₂CH₂(4-F-Ph) | SO₂Me |
| 6-339 | Me | SO₂Me | C₂F₅ |
| 6-340 | O(CH₂)₂OMe | SMe | CF₃ |
| 6-341 | O(CH₂)₂OMe | SO₂Me | CF₃ |
| 6-342 | O(CH₂)₂OMe | SOMe | CF₃ |
| 6-343 | Me | S(CH₂)₂OCH₂CF₃ | SO₂Me |
| 6-344 | Me | SO(CH₂)₂OCH₂CF₃ | SO₂Me |
| 6-345 | Me | SO₂(CH₂)₂OCH₂CF₃ | SO₂Me |
| 6-346 | OEt | SEt | CF₃ |
| 6-347 | O-CH₂-c-Pr | SMe | CF₃ |
| 6-348 | OMe | SEt | CF₃ |
| 6-349 | OMe | SO₂Et | CF₃ |
| 6-350 | OMe | SOEt | CF₃ |
| 6-351 | OEt | SO₂Et | CF₃ |
| 6-352 | OEt | SOEt | CF₃ |
| 6-353 | O-CH₂-c-Pr | SOMe | CF₃ |
| 6-354 | O-CH₂-c-Pr | SO₂Me | CF₃ |
| 6-355 | Me | SEt | SO₂Me |

**Table 7: Compounds of the general formula (I) according to the invention in which R is trifluoromethyl**

| | | | |
|---|---|---|---|
| 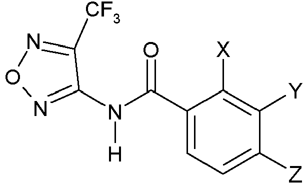 | | | |

| No. | X | Y | Z |
|---|---|---|---|
| 7-1 | CF₃ | OCH₂CON(Me)Et | SO₂Me |
| 7-2 | CF₃ | OCH₂CON(Me)Et | SO₂Et |
| 7-4 | CF₃ | 2-(1H-pyrazol-1-yl)ethoxyl | SO₂Me |
| 7-5 | CF₃ | 2-(1H-pyrazol-1-yl)ethoxyl | SO₂Et |
| 7-6 | CF₃ | tetrahydrofuran-2-yl-methoxy | SO₂Me |
| 7-7 | CF₃ | tetrahydrofuran-2-yl-methoxy | SO₂Et |
| 7-8 | CF₃ | OH | SO₂Me |
| 7-9 | CF₃ | OH | SO₂Et |
| 7-10 | CF₃ | SH | SO₂Me |
| 7-11 | CF₃ | SH | SO₂Et |
| 7-15 | CF₃ | SMe | SO₂Me |
| 7-16 | CF₃ | SMe | SO₂Et |
| 7-17 | CF₃ | S(O)Me | SO₂Me |
| 7-24 | CF₃ | S(O)Me | SO₂Et |
| 7-25 | CF₃ | S(O)₂Me | SO₂Me |
| 7-26 | CF₃ | S(O)₂Me | SO₂Et |
| 7-27 | CF₃ | 2-[(methylsulfonyl)amino]ethoxy | SO₂Me |
| 7-28 | CF₃ | 2-[(methylsulfonyl)-amino]ethyl}sulfanyl | SO₂Me |
| 7-29 | CF₃ | 2-[(methylsulfonyl)-amino]ethyl}sulfanyl | SO₂Et |
| 7-30 | NO₂ | O(CH₂)₂OMe | OMe |
| 7-31 | NO₂ | OMe | Me |
| 7-32 | NO₂ | NH₂ | OMe |
| 7-33 | NO₂ | NH₂ | SO₂Et |
| 7-34 | NO₂ | NH₂ | Cl |
| 7-35 | NO₂ | NHMe | Cl |
| 7-36 | NO₂ | NMe2 | Cl |
| 7-37 | NO₂ | NH₂ | Br |
| 7-38 | NO₂ | NHMe | Br |
| 7-39 | NO₂ | NMe2 | Br |
| 7-40 | NO₂ | NH₂ | F |
| 7-41 | NO₂ | NHMe | F |
| 7-42 | NO₂ | NMe2 | F |
| 7-43 | NO₂ | NH₂ | SO₂Me |
| 7-44 | NO₂ | NHMe | SO₂Me |
| 7-45 | NO₂ | NMe2 | SO₂Me |
| 7-46 | NO₂ | NH₂ | 1H-1,2,4-triazol-1-yl |
| 7-47 | NO₂ | NHMe | 1H-1,2,4-triazol-1-yl |
| 7-48 | NO₂ | NMe2 | 1H-1,2,4-triazol-1-yl |
| 7-49 | Me | F | F |
| 7-50 | Me | F | Cl |
| 7-51 | Me | SMe | CF₃ |
| 7-52 | Me | Cl | SO₂Me |
| 7-53 | Me | SO₂Me | SO₂Me |
| 7-54 | Me | SO₂Me | CF₃ |
| 7-55 | Me | Cl | CF₃ |
| 7-56 | Me | S(O)Me | CF₃ |
| 7-57 | Me | SEt | OMe |
| 7-58 | Me | NMe₂ | SO₂Me |
| 7-59 | Me | NH(CH₂)₂OMe | SO₂Me |
| 7-60 | Me | O(CH₂)₄OMe | SO₂Me |
| 7-61 | Me | NH₂ | SO₂Me |
| 7-62 | Me | O(CH₂)₂-O(3,5-di-methoxypyrimidin-2-yl | SO₂Me |
| 7-63 | Me | O(CH₂)₂-O-NMe₂ | Cl |
| 7-64 | Me | O(CH₂)₂-NH(CO)NMe₂ | Cl |
| 7-65 | Me | O(CH₂)-5-pyrrolidin-2-one | Br |
| 7-66 | Me | O(CH₂)₂-NH(CO)NHCO₂Et | Cl |
| 7-67 | Me | O(CH₂)-(CO)NEt₂ | Br |
| 7-68 | Me | O(CH₂)-5-2,4-dimethyl-2,4-dihydro-3H-1,2,4-triazol-3-one | Cl |
| 7-69 | Me | O(CH₂)-3,5-dimethyl-1,2-oxazol-4-yl | Cl |
| 7-70 | Me | O(CH₂)₂-NHCO₂Me | Cl |
| 7-71 | Me | 4,5-dihydro-1,2-oxazol-3-yl | SO₂Me |
| 7-72 | Me | Me | SO₂Me |
| 7-73 | Me | OH | SO₂Me |
| 7-74 | Me | O-CH₂-NHSO₂cPr | Cl |
| 7-75 | Me | O(CH₂)₂NHSO₂Me | SO₂Me |
| 7-76 | Me | S(O)Me | SO₂Me |
| 7-77 | Me | SMe | SO₂Me |
| 7-78 | Me | SMe | OMe |
| 7-79 | Me | S(O)Me | OMe |
| 7-80 | Me | SO₂Me | OMe |
| 7-81 | Me | SMe | Cl |
| 7-82 | Me | S(O)Me | Cl |
| 7-83 | Me | SO₂Me | Cl |
| 7-84 | Me | [1,4]dioxan-2-yl-methoxy | SO₂Me |
| 7-85 | Me | [1,4]dioxan-2-yl-methoxy | SO₂Et |
| 7-86 | Me | O(CH₂)₄OMe | SO₂Et |
| 7-87 | Me | O(CH₂)₃OMe | SO₂Me |
| 7-88 | Me | O(CH₂)₃OMe | SO₂Et |
| 7-89 | Me | O(CH₂)₂OMe | SO₂Me |
| 7-90 | Me | O(CH₂)₂OMe | SO₂Et |
| 7-91 | Me | S(O)Me | SO₂Me |
| 7-92 | Me | SMe | SO₂Me |
| 7-93 | Me | SMe | OMe |
| 7-94 | Me | S(O)Me | OMe |
| 7-95 | Me | SO₂Me | OMe |
| 7-96 | Me | SMe | Cl |
| 7-97 | Me | S(O)Me | Cl |
| 7-98 | Me | SO₂Me | Cl |
| 7-99 | Me | SMe | Br |
| 7-100 | Me | SOMe | Br |
| 7-101 | Me | SO₂Me | Br |
| 7-102 | Me | SMe | I |
| 7-103 | Me | SOMe | I |
| 7-104 | Me | SO₂Me | I |
| 7-105 | Me | SEt | Cl |
| 7-106 | Me | SOEt | Cl |
| 7-107 | Me | SO₂Et | Cl |
| 7-108 | Me | SEt | Br |
| 7-109 | Me | SOEt | Br |
| 7-110 | Me | SO₂Et | Br |
| 7-111 | Me | SEt | I |
| 7-112 | Me | SOEt | I |
| 7-113 | Me | SO₂Et | I |
| 7-114 | Me | SEt | F |
| 7-115 | Me | SOEt | F |
| 7-116 | Me | SO₂Et | F |
| 7-117 | Cl | OCH₂(CO)NMe₂ | Cl |
| 7-118 | Cl | Cl | SO₂Me |
| 7-119 | Cl | CH₂OCH₂CF₃ | SO₂Me |
| 7-120 | Cl | 5-cyanomethyl-4,5-dihydro-1,2-oxazol-3-yl | SO₂Et |
| 7-121 | Cl | CH₂O-tetrahydrofuran-3-yl | SO₂Me |
| 7-122 | Cl | CH₂O-tetrahydrofuran-2-yl | SO₂Me |
| 7-123 | Cl | SMe | SO₂Me |
| 7-124 | Cl | F | SMe |
| 7-125 | Cl | CH₂OCH₂-tetrahydrofuran-2-yl | SO₂Me |
| 7-126 | Cl | CH₂OCH₂-tetrahydrofuran-3-yl | SO₂Et |
| 7-127 | Cl | O(CH₂)-5-pyrrolidin-2-one | Cl |
| 7-128 | Cl | SMe | Cl |
| 7-129 | Cl | S(O)Me | SO₂Me |
| 7-130 | Cl | CH₂O-tetrahydrofuran-3-yl | SO₂Et |
| 7-131 | Cl | O(CH₂)₂OMe | Cl |
| 7-132 | Cl | O(CH₂)₂OMe | SO₂Me |
| 7-133 | Cl | O(CH₂)₄OMe | SO₂Me |
| 7-134 | Cl | O(CH₂)₄OMe | SO₂Et |
| 7-135 | Cl | O(CH₂)₃OMe | SO₂Me |
| 7-136 | Cl | O(CH₂)₃OMe | SO₂Et |
| 7-137 | Cl | O(CH₂)₂OMe | SO₂Me |
| 7-138 | Cl | O(CH₂)₂OMe | SO₂Et |
| 7-139 | Cl | [1,4]dioxan-2-yl-methoxy | SO₂Me |
| 7-140 | Cl | [1,4]dioxan-2-yl-methoxy | SO₂Et |
| 7-141 | Cl | SO₂Me | Me |
| 7-142 | Cl | SEt | Me |
| 7-143 | Cl | SOEt | Me |
| 7-144 | Cl | SO₂Et | Me |
| 2-145 | Cl | 4,5-dihydro-1,7-oxazol-3-yl | SO₂Me |
| 7-146 | Cl | Cl | SO₂Me |
| 7-147 | F | SMe | CF₃ |
| 7-148 | F | S(O)Me | CF₃ |
| 7-149 | OMe | SMe | CF₃ |
| 7-150 | OMe | S(O)Me | CF₃ |
| 7-151 | OMe | SO₂Me | CF₃ |
| 7-152 | Et | NH(CH₂)₂OMe | SO₂Me |
| 7-153 | Et | F | SO₂Me |
| 7-154 | Et | SMe | CF₃ |
| 7-155 | CF₃ | F | SO₂Me |
| 7-156 | CF₃ | F | SO₂Et |
| 7-157 | CF₃ | O(CH₂)₂OMe | SO₂Et |
| 7-158 | CF₃ | O(CH₂)₃OMe | SO₂Et |
| 7-159 | CF₃ | O(CH₂)₂OMe | SO₂Me |
| 7-160 | CF₃ | O(CH₂)₃OMe | SO₂Me |
| 7-161 | CF₃ | OCH₂CONMe₂ | SO₂Me |
| 7-162 | CF₃ | OCH₂CONMe₂ | SO₂Et |
| 7-163 | CF₃ | OCH₂CONMe₂ | Cl |
| 7-164 | CF₃ | OCH₂CONMe₂ | Br |
| 7-165 | CF₃ | OCH₂CONMe₂ | I |
| 7-166 | CF₃ | OCH₂CONMe₂ | F |
| 7-167 | CF₃ | O(CH₂)₂OMe | Cl |
| 7-168 | CF₃ | O(CH₂)₃OMe | Cl |
| 7-169 | CF₃ | O(CH₂)₂OMe | Br |
| 7-170 | CF₃ | O(CH₂)₃OMe | Br |
| 7-171 | CF₃ | O(CH₂)₂OMe | I |
| 7-172 | CF₃ | O(CH₂)₃OMe | I |
| 7-173 | CF₃ | O(CH₂)₂OMe | F |
| 7-174 | CF₃ | O(CH₂)₃OMe | F |
| 7-175 | CF₃ | [1,4]dioxan-2-yl-methoxy | SO₂Me |
| 7-176 | CF₃ | [1,4]dioxan-2-yl-methoxy | SO₂Et |
| 7-177 | CF₃ | [1,4]dioxan-2-yl-methoxy | Cl |
| 2-178 | CF₃ | [1,4]dioxan-2-yl-methoxy | Br |
| 7-179 | CF₃ | [1,4]dioxan-2-yl-methoxy | I |
| 7-180 | CF₃ | [1,4]dDioxan-2-yl-methoxy | F |
| 7-181 | Br | OMe | Br |
| 7-182 | Br | O(CH₂)₂OMe | Br |
| 7-183 | Br | O(CH₂)₄OMe | SO₂Me |
| 7-184 | Br | O(CH₂)₄OMe | SO₂Et |
| 7-185 | Br | O(CH₂)₃OMe | SO₂Me |
| 7-186 | Br | O(CH₂)₃OMe | SO₂Et |
| 7-187 | Br | O(CH₂)₂OMe | SO₂Me |
| 7-188 | Br | O(CH₂)₂OMe | SO₂Et |
| 7-189 | Br | [1,4]dioxan-2-yl-methoxy | SO₂Me |
| 7-190 | Br | [1,4]dioxan-2-yl-methoxy | SO₂Et |
| 7-191 | Br | SMe | Me |
| 7-192 | Br | SOMe | Me |
| 7-193 | Br | SO₂Me | Me |
| 7-194 | Br | SEt | Me |
| 7-195 | Br | SOEt | Me |
| 7-196 | Br | SO₂Et | Me |
| 7-197 | I | O(CH₂)₄OMe | SO₂Me |
| 7-198 | I | O(CH₂)₄OMe | SO₂Et |
| 7-199 | I | O(CH₂)₃OMe | SO₂Me |
| 7-200 | I | O(CH₂)₃OMe | SO₂Et |
| 7-201 | I | O(CH₂)₂OMe | SO₂Me |
| 7-202 | I | O(CH₂)₂OMe | SO₂Et |
| 7-203 | I | [1,4]dioxan-2-yl-methoxy | SO₂Me |
| 7-204 | I | [1,4]dioxan-2-yl-methoxy | SO₂Et |
| 7-205 | I | SMe | Me |
| 7-206 | I | SOMe | Me |
| 7-207 | I | SO₂Me | Me |
| 7-208 | I | SEt | Me |
| 7-209 | I | SOEt | Me |
| 7-210 | I | SO₂Et | Me |
| 7-211 | CH₂SMe | OMe | SO₂Me |
| 7-212 | CH₂OMe | OMe | SO₂Me |
| 7-213 | CH₂O(CH₂)₂OMe | NH(CH₂)₂OEt | SO₂Me |
| 7-214 | CH₂O(CH₂)₂OMe | NH(CH₂)₃OEt | SO₂Me |
| 7-215 | CH₂O(CH₂)₃OMe | OMe | SO₂Me |
| 7-216 | CH₂O(CH₂)₂OMe | NH(CH₂)₂OMe | SO₂Me |
| 7-217 | CH₂O(CH₂)₂OMe | NH(CH₂)₃OMe | SO₂Me |
| 7-218 | SO₂Me | NH₂ | CF₃ |
| 7-219 | SO₂Me | F | CF₃ |
| 7-220 | SO₂Me | NHEt | Cl |
| 7-221 | SMe | SEt | F |
| 7-222 | SMe | SMe | F |
| 7-223 | Me | NH₂ | Cl |
| 7-224 | Me | NH₂ | Br |
| 7-225 | Me | NHM₂ | Cl |
| 7-226 | Me | NHM₂ | Br |
| 7-227 | Me | NMe₂ | Cl |
| 7-228 | Me | NMe₂ | Br |
| 7-227 | Me | NMe₂ | Cl |
| 7-228 | Me | NMe₂ | Br |
| 7-229 | NO₂ | O(CH₂)₂OMe | Me |
| 7-230 | CF₃ | S(O)₂Et | SO₂Me |
| 7-231 | CF₃ | S(O)₂Et | SO₂Et |
| 7-232 | CF₃ | SCH₂CONMe₂ | SO₂Me |
| 7-233 | CF₃ | SCH₂CONMe₂ | SO₂Et |
| 7-234 | CF₃ | SCH₂COOH | SO₂Me |
| 7-235 | CF₃ | SCH₂COOH | SO₂Et |
| 7-236 | Me | SO₂-CH₂-CH₂-CH=CH₂ | CF₃ |
| 7-237 | Cl | Me | SO₂Et |
| 7-238 | CF₃ | SEt | SO₂Me |
| 7-239 | OMe | NO₂ | Cl |
| 7-240 | OMe | NH(CO)i-Pr | Cl |
| 7-241 | OMe | NH(CO)CH₂Ph | Cl |
| 7-242 | CF₃ | SEt | SO₂Et |
| 7-243 | CF₃ | S(O)Et | SO₂Me |
| 7-244 | Cl | Me | Cl |
| 7-245 | Me | 3,5-dimethylpyrazol-1-yl | SO₂Me |
| 7-247 | Me | 1,2,3-triazol-1-yl | SO₂Me |
| 7-248 | Me | Me | SMe |
| 7-249 | Me | pyrrolidin-2-on-1-yl | SO₂Me |
| 7-250 | CF₃ | S(O)Et | SO₂Et |
| 7-251 | Cl | pyrazol-1-yl | SO₂Me |
| 7-252 | Me | 3-methylpyrazol-1-yl | SO₂Me |
| 7-253 | Cl | CH₂-N(Et)OMe | SO₂Me |
| 7-254 | Me | Me | Cl |
| 7-255 | OH | Cl | Cl |
| 7-256 | Me | 1,2,4-triazol-1-yl | SO₂Me |
| 7-257 | Me | 4-methoxypyrazol-1-yl | SO₂Me |
| 7-258 | Me | 1,2,4-triazol-1-yl | CF₃ |
| 7-259 | Me | tetrahydropyrimidin-2(1H)-on-1-yl | SO₂Me |
| 7-260 | Me | NH-(CH₂)₂-O(CO)Et | SO₂Me |
| 7-261 | Me | NH-iPr | SO₂Me |
| 7-262 | Cl | NH-CH₂-(CO)NHEt | Cl |
| 7-263 | Me | NH-CH₂-(CO)NMe₂ | SO₂Me |
| 7-264 | Me | NH-CH₂-furan-2-yl | SO₂Me |
| 7-265 | Me | NH-CH₂-(CO)NHEt | SO₂Me |
| 7-266 | Me | F | SO₂Me |
| 7-267 | F | SO₂Me | SO₂Me |
| 7-268 | Cl | (4-cyclopropyl-3-methyl-5-oxo-4,5-dihydro-1H-1,2,4-triazol-1-yl)methyl | Cl |
| 7-269 | Cl | [4-methyl-5-oxo-3-(2,2,2-trifluoroethoxy)-4,5-dihydro-1H-1,2,4-triazol-1-yl]methyl | Cl |
| 7-270 | Cl | (3-isopropoxy-4-methyl-5-oxo-4,5-dihydro-1H-1,2,4-triazol-1-yl]-methyl | Cl |
| 7-271 | Cl | (4-methyl-5-oxo-4,5-dihydro-1H-1,2,4-triazol-1-yl)methyl | Cl |
| 7-272 | Me | Cl | SO₂Et |
| 7-273 | SO₂Me | F | Cl |
| 7-274 | Me | 1,2,3-triazol-1-yl | SO₂Me |
| 7-275 | Me | isobutyl(methyl)carbamoylamino | SO₂Me |
| 7-276 | Me | 3-oxomorpholin-4-yl | SO₂Me |
| 7-277 | OMe | [ethyl(methylsulfonyl)-amino]methyl | Cl |
| 7-278 | F | SO₂Me | CF₃ |
| 7-279 | OMe | benzoylamino | Cl |
| 7-280 | OMe | cyclopropylcarbonyl-amino | Cl |
| 7-281 | OMe | propionylamino | Cl |
| 7-282 | NO₂ | SO₂Me | SO₂Me |
| 7-283 | NO₂ | SO₂Me | Cl |
| 7-284 | NO₂ | SOMe | SO₂Me |
| 7-285 | NO₂ | SOMe | Br |
| 7-286 | NO₂ | SOMe | Cl |
| 7-287 | NO₂ | SMe | SO₂Me |
| 7-288 | NO₂ | SMe | Br |
| 7-289 | NO₂ | SMe | Cl |
| 7-290 | Cl | CH₂OCH(CH₃)₂ | SO₂Et |
| 7-291 | Cl | CH₂OEt | SO₂Et |
| 7-292 | Cl | CH₂OMe | SO₂Et |
| 7-293 | Cl | CH₂OCH₂C₂F₅ | SO₂Me |
| 7-294 | Cl | CH₂OCH₂CHF₂ | SO₂Me |
| 7-295 | Cl | CH₂OCH₂CCH | SO₂Et |
| 7-296 | Cl | CH₂OC₂H₄OMe | SO₂Me |
| 7-297 | Cl | CH₂(OC₂H₄)₂OMe | SO₂Me |
| 7-298 | Cl | 5-ethoxymethyl-4,5-dihydro-1,2-oxazol-3-yl | SO₂Et |
| 7-299 | Cl | 5-methoxymethyl-4,5-dihydro-1,2-oxazol-3-yl | SO₂Et |
| 7-300 | Et | SOMe | CF₃ |
| 7-301 | iPr | SMe | CF₃ |
| 7-302 | Et | SMe | CF₃ |
| 7-303 | Et | SO₂Me | CF₃ |
| 7-304 | cPr | SOMe | CF₃ |
| 7-305 | CH=CH₂ | SMe | CF₃ |
| 7-306 | Et | SMe | Cl |
| 7-307 | Et | SO₂Me | Cl |
| 7-308 | Cl | NMe₂ | Cl |
| 7-309 | CH₂O(CH₂)₂OMe | NH(CH₂)₃OMe | SO₂Me |
| 7-313 | Me | SO₂(CH₂)₂OMe | CF₃ |
| 7-314 | Me | SOEt | SO₂Me |
| 7-315 | Me | SO₂Et | SO₂Me |
| 7-316 | Me | SMe | 1,2,4-triazol-1-yl |
| 7-317 | OEt | SMe | CF₃ |
| 7-318 | Me | S(CH₂)₂OMe | CF₃ |
| 7-319 | Me | SOMe | 1,2,4-triazol-1-yl |
| 7-320 | OEt | SOMe | CF₃ |
| 7-321 | Me | SO(CH₂)₂OMe | CF₃ |
| 7-322 | Me | SCH₂CCMe | SO₂Me |
| 7-323 | Me | S-c-Pen | SO₂Me |
| 7-324 | OMe | SMe | OMe |
| 7-325 | Me | SCH₂CH=CHCH₃ | SO₂Me |
| 7-326 | Me | SOCH₂CCMe | SO₂Me |
| 7-327 | Me | SO₇-c-Pen | SO₂Me |
| 7-328 | Me | SO-c-Pen | SO₂Me |
| 7-329 | Me | S(CH₂)₃Cl | SO₂Me |
| 7-330 | Me | SCH₂(4-F-Ph) | SO₂Me |
| 7-331 | Me | SO₂CH₂CCMe | SO₂Me |
| 7-332 | Me | SO₂CH₂CH=CHCH₃ | SO₂Me |
| 7-333 | Me | SOCH₂CH=CHCH₃ | SO₂Me |
| 7-334 | Me | SOCH₂-epoxy-Me | SO₂Me |
| 7-335 | Me | SO₂(CH₂)₃Cl | SO₂Me |
| 7-336 | Me | SO(CH₂)₃Cl | SO₂Me |
| 7-337 | Me | SOCH₂(4-F-Ph) | SO₂Me |
| 7-338 | Me | SO₂CH₂(4-F-Ph) | SO₂Me |
| 7-339 | Me | SO₂Me | C₂F₅ |
| 7-340 | O(CH₂)₂OMe | SMe | CF₃ |
| 7-341 | O(CH₂)₂OMe | SO₂Me | CF₃ |
| 7-342 | O(CH₂)₂OMe | SOMe | CF₃ |
| 7-343 | Me | S(CH₂)₂OCH₂CF₃ | SO₂Me |
| 7-344 | Me | SO(CH₂)₂OCH₂CF₃ | SO₂Me |
| 7-345 | Me | SO₂(CH₂)₂OCH₂CF₃ | SO₂Me |
| 7-346 | OEt | SEt | CF₃ |
| 7-347 | O-CH₂-c-Pr | SMe | CF₃ |
| 7-348 | OMe | SEt | CF₃ |
| 7-349 | OMe | SO₂Et | CF₃ |
| 7-350 | OMe | SOEt | CF₃ |
| 7-351 | OEt | SO₂Et | CF₃ |
| 7-352 | OEt | SOEt | CF₃ |
| 7-353 | O-CH₂-c-Pr | SOMe | CF₃ |
| 7-354 | O-CH₂-c-Pr | SO₂Me | CF₃ |
| 7-355 | Me | SEt | SO₂Me |

**Table 8: Compounds of the general formula (I) according to the invention in which R is cyano**

| | | | |
|---|---|---|---|
| 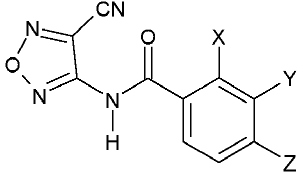 | | | |

| No. | X | Y | Z |
|---|---|---|---|
| 8-1 | CF₃ | OCH₂CON(Me)Et | SO₂Me |
| 8-2 | CF₃ | OCH₂CON(Me)Et | SO₂Et |
| 8-4 | CF₃ | 2-(1H-pyrazol-1-yl)ethoxyl | SO₂Me |
| 8-5 | CF₃ | 2-(1H-pyrazol-1-yl)ethoxyl | SO₂Et |
| 8-6 | CF₃ | tetrahydrofuran-2-yl-methoxy | SO₂Me |
| 8-7 | CF₃ | tetrahydrofuran-2-yl-methoxy | SO₂Et |
| 8-8 | CF₃ | OH | SO₂Me |
| 8-9 | CF₃ | OH | SO₂Et |
| 8-10 | CF₃ | SH | SO₂Me |
| 8-11 | CF₃ | SH | SO₂Et |
| 8-15 | CF₃ | SMe | SO₂Me |
| 8-16 | CF₃ | SMe | SO₂Et |
| 8-17 | CF₃ | S(O)Me | SO₂Me |
| 8-24 | CF₃ | S(O)Me | SO₂Et |
| 8-25 | CF₃ | S(O)₂Me | SO₂Me |
| 8-26 | CF₃ | S(O)₂Me | SO₂Et |
| 8-27 | CF₃ | 2-[(methylsulfonyl)amino]ethoxy | SO₂Me |
| 8-28 | CF₃ | 2-[(methylsulfonyl)-amino]ethyl}sulfanyl | SO₂Me |
| 8-29 | CF₃ | 2-[(methylsulfonyl)-amino]ethyl}sulfanyl | SO₂Et |
| 8-30 | NO₂ | O(CH₂)₂OMe | OMe |
| 8-31 | NO₂ | OMe | Me |
| 8-32 | NO₂ | NH₂ | OMe |
| 8-33 | NO₂ | NH₂ | SO₂Et |
| 8-34 | NO₂ | NH₂ | Cl |
| 8-35 | NO₂ | NHMe | Cl |
| 8-36 | NO₂ | NMe₂ | Cl |
| 8-37 | NO₂ | NH₂ | Br |
| 8-38 | NO₂ | NHMe | Br |
| 8-39 | NO₂ | NMe₂ | Br |
| 8-40 | NO₂ | NH₂ | F |
| 8-41 | NO₂ | NHMe | F |
| 8-42 | NO₂ | NMe₂ | F |
| 8-43 | NO₂ | NH₂ | SO₂Me |
| 8-44 | NO₂ | NHMe | SO₂Me |
| 8-45 | NO₂ | NMe₂ | SO₂Me |
| 8-46 | NO₂ | NH₂ | 1H-1,2,4-triazol-1-yl |
| 8-47 | NO₂ | NHMe | 1H-1,2,4-triazol-1-yl |
| 8-48 | NO₂ | NMe₂ | 1H-1,2,4-triazol-1-yl |
| 8-49 | Me | F | F |
| 8-50 | Me | F | Cl |
| 8-51 | Me | SMe | CF₃ |
| 8-52 | Me | Cl | SO₂Me |
| 8-53 | Me | SO₂Me | SO₂Me |
| 8-54 | Me | SO₂Me | CF₃ |
| 8-55 | Me | Cl | CF₃ |
| 8-56 | Me | S(O)Me | CF₃ |
| 8-57 | Me | SEt | OMe |
| 8-58 | Me | NMe₂ | SO₂Me |
| 8-59 | Me | NH(CH₂)₂OMe | SO₂Me |
| 8-60 | Me | O(CH₂)₄OMe | SO₂Me |
| 8-61 | Me | NH₂ | SO₂Me |
| 8-62 | Me | O(CH₂)₂-O(3,5-di-methoxypyrimidin-2-yl | SO₂Me |
| 8-63 | Me | O(CH₂)₂-O-NMe₂ | Cl |
| 8-64 | Me | O(CH₂)₂-NH(CO)NMe₂ | Cl |
| 8-65 | Me | O(CH₂)-5-pyrrolidin-2-one | Br |
| 8-66 | Me | O(CH₂)₂-NH(CO)NHCO₂Et | Cl |
| 8-67 | Me | O(CH₂)-(CO)NEt₂ | Br |
| 8-68 | Me | O(CH₂)-5-2,4-dimethyl-2,4-dihydro-3H-1,2,4-triazol-3-one | Cl |
| 8-69 | Me | O(CH₂)-3,5-dimethyl-1,2-oxazol-4-yl | Cl |
| 8-70 | Me | O(CH₂)₂-NHCO₂Me | Cl |
| 8-71 | Me | 4,5-dihydro-1,2-oxazol-3-yl | SO₂Me |
| 8-72 | Me | Me | SO₂Me |
| 8-73 | Me | OH | SO₂Me |
| 8-74 | Me | O-CH₂-NHSO₂cPr | Cl |
| 8-75 | Me | O(CH₂)₂NHSO₂Me | SO₂Me |
| 8-76 | Me | S(O)Me | SO₂Me |
| 8-77 | Me | SMe | SO₂Me |
| 8-78 | Me | SMe | OMe |
| 8-79 | Me | S(O)Me | OMe |
| 8-80 | Me | SO₂Me | OMe |
| 8-81 | Me | SMe | Cl |
| 8-82 | Me | S(O)Me | Cl |
| 8-83 | Me | SO₂Me | Cl |
| 8-84 | Me | [1,4]dioxan-2-yl-methoxy | SO₂Me |
| 8-85 | Me | [1,4]dioxan-2-yl-methoxy | SO₂Et |
| 8-86 | Me | O(CH₂)₄OMe | SO₂Et |
| 8-87 | Me | O(CH₂)₃OMe | SO₂Me |
| 8-88 | Me | O(CH₂)₃OMe | SO₂Et |
| 8-89 | Me | O(CH₂)₂OMe | SO₂Me |
| 8-90 | Me | O(CH₂)₂OMe | SO₂Et |
| 8-91 | Me | S(O)Me | SO₂Me |
| 8-92 | Me | SMe | SO₂Me |
| 8-93 | Me | SMe | OMe |
| 8-94 | Me | S(O)Me | OMe |
| 8-95 | Me | SO₂Me | OMe |
| 8-96 | Me | SMe | Cl |
| 8-97 | Me | S(O)Me | Cl |
| 8-98 | Me | SO₂Me | Cl |
| 8-99 | Me | SMe | Br |
| 8-100 | Me | SOMe | Br |
| 8-101 | Me | SO₂Me | Br |
| 8-102 | Me | SMe | I |
| 8-103 | Me | SOMe | I |
| 8-104 | Me | SO₂Me | I |
| 8-105 | Me | SEt | Cl |
| 8-106 | Me | SOEt | Cl |
| 8-107 | Me | SO₂Et | Cl |
| 8-108 | Me | SEt | Br |
| 8-109 | Me | SOEt | Br |
| 8-110 | Me | SO₂Et | Br |
| 8-111 | Me | SEt | I |
| 8-112 | Me | SOEt | I |
| 8-113 | Me | SO₂Et | I |
| 8-114 | Me | SEt | F |
| 8-115 | Me | SOEt | F |
| 8-116 | Me | SO₂Et | F |
| 8-117 | Cl | OCH₂(CO)NMe2 | Cl |
| 8-118 | Cl | Cl | SO₂Me |
| 8-119 | Cl | CH₂OCH₂CF₃ | SO₂Me |
| 8-120 | Cl | 5-cyanomethyl-4,5-dihydro-1,2-oxazol-3-yl | SO₂Et |
| 8-121 | Cl | CH₂O-tetrahydrofuran-3-yl | SO₂Me |
| 8-122 | Cl | CH₂O-tetrahydrofuran-2-yl | SO₂Me |
| 8-123 | Cl | SMe | SO₂Me |
| 8-124 | Cl | F | SMe |
| 8-125 | Cl | CH₂OCH₂-tetrahydrofuran-2-yl | SO₂Me |
| 8-126 | Cl | CH₂OCH₂-tetrahydrofuran-3-yl | SO₂Et |
| 8-127 | Cl | O(CH₂)-5-pyrrolidin-2-one | Cl |
| 8-128 | Cl | SMe | Cl |
| 8-129 | Cl | S(O)Me | SO₂Me |
| 8-130 | Cl | CH₂O-tetrahydrofuran-3-yl | SO₂Et |
| 8-131 | Cl | O(CH₂)₂OMe | Cl |
| 8-132 | Cl | O(CH₂)₂OMe | SO₂Me |
| 8-133 | Cl | O(CH₂)₄OMe | SO₂Me |
| 8-134 | Cl | O(CH₂)₄OMe | SO₂Et |
| 8-135 | Cl | O(CH₂)₃OMe | SO₂Me |
| 8-136 | Cl | O(CH₂)₃OMe | SO₂Et |
| 8-137 | Cl | O(CH₂)₂OMe | SO₂Me |
| 8-138 | Cl | O(CH₂)₂OMe | SO₂Et |
| 8-139 | Cl | [1,4]dioxan-2-yl-methoxy | SO₂Me |
| 8-140 | Cl | [1,4]dioxan-2-yl-methoxy | SO₂Et |
| 8-141 | Cl | SO₂Me | Me |
| 8-142 | Cl | SEt | Me |
| 8-143 | Cl | SOEt | Me |
| 8-144 | Cl | SO₂Et | Me |
| 2-145 | Cl | 4,5-dihydro-1,8-oxazol-3-yl | SO₂Me |
| 8-146 | Cl | Cl | SO₂Me |
| 8-147 | F | SMe | CF₃ |
| 8-148 | F | S(O)Me | CF₃ |
| 8-149 | OMe | SMe | CF₃ |
| 8-150 | OMe | S(O)Me | CF₃ |
| 8-151 | OMe | SO₂Me | CF₃ |
| 8-152 | Et | NH(CH₂)₂OMe | SO₂Me |
| 8-153 | Et | F | SO₂Me |
| 8-154 | Et | SMe | CF₃ |
| 8-155 | CF₃ | F | SO₂Me |
| 8-156 | CF₃ | F | SO₂Et |
| 8-157 | CF₃ | O(CH₂)₂OMe | SO₂Et |
| 8-158 | CF₃ | O(CH₂)₃OMe | SO₂Et |
| 8-159 | CF₃ | O(CH₂)₂OMe | SO₂Me |
| 8-160 | CF₃ | O(CH₂)₃OMe | SO₂Me |
| 8-161 | CF₃ | OCH₂CONMe₂ | SO₂Me |
| 8-162 | CF₃ | OCH₂CONMe₂ | SO₂Et |
| 8-163 | CF₃ | OCH₂CONMe₂ | Cl |
| 8-164 | CF₃ | OCH₂CONMe₂ | Br |
| 8-165 | CF₃ | OCH₂CONMe₂ | I |
| 8-166 | CF₃ | OCH₂CONMe₂ | F |
| 8-167 | CF₃ | O(CH₂)₂OMe | Cl |
| 8-168 | CF₃ | O(CH₂)₃OMe | Cl |
| 8-169 | CF₃ | O(CH₂)₂OMe | Br |
| 8-170 | CF₃ | O(CH₂)₃OMe | Br |
| 8-171 | CF₃ | O(CH₂)₂OMe | I |
| 8-172 | CF₃ | O(CH₂)₃OMe | I |
| 8-173 | CF₃ | O(CH₂)₂OMe | F |
| 8-174 | CF₃ | O(CH₂)₃OMe | F |
| 8-175 | CF₃ | [1,4]dioxan-2-yl-methoxy | SO₂Me |
| 8-176 | CF₃ | [1,4]dioxan-2-yl-methoxy | SO₂Et |
| 8-177 | CF₃ | [1,4]dioxan-2-yl-methoxy | Cl |
| 2-178 | CF₃ | [1,4]dioxan-2-yl-methoxy | Br |
| 8-179 | CF₃ | [1,4]dioxan-2-yl-methoxy | I |
| 8-180 | CF₃ | [1,4]dioxan-2-yl-methoxy | F |
| 8-181 | Br | OMe | Br |
| 8-182 | Br | O(CH₂)₂OMe | Br |
| 8-183 | Br | O(CH₂)₄OMe | SO₂Me |
| 8-184 | Br | O(CH₂)₄OMe | SO₂Et |
| 8-185 | Br | O(CH₂)₃OMe | SO₂Me |
| 8-186 | Br | O(CH₂)₃OMe | SO₂Et |
| 8-187 | Br | O(CH₂)₂OMe | SO₂Me |
| 8-188 | Br | O(CH₂)₂OMe | SO₂Et |
| 8-189 | Br | [1,4]dioxan-2-yl-methoxy | SO₂Me |
| 8-190 | Br | [1,4]dioxan-2-yl-methoxy | SO₂Et |
| 8-191 | Br | SMe | Me |
| 8-192 | Br | SOMe | Me |
| 8-193 | Br | SO₂Me | Me |
| 8-194 | Br | SEt | Me |
| 8-195 | Br | SOEt | Me |
| 8-196 | Br | SO₂Et | Me |
| 8-197 | I | O(CH₂)₄OMe | SO₂Me |
| 8-198 | I | O(CH₂)₄OMe | SO₂Et |
| 8-199 | I | O(CH₂)₃OMe | SO₂Me |
| 8-200 | I | O(CH₂)₃OMe | SO₂Et |
| 8-201 | I | O(CH₂)₂OMe | SO₂Me |
| 8-202 | I | O(CH₂)₂OMe | SO₂Et |
| 8-203 | I | [1,4]dioxan-2-yl-methoxy | SO₂Me |
| 8-204 | I | [1,4]dioxan-2-yl-methoxy | SO₂Et |
| 8-205 | I | SMe | Me |
| 8-206 | I | SOMe | Me |
| 8-207 | I | SO₂Me | Me |
| 8-208 | I | SEt | Me |
| 8-209 | I | SOEt | Me |
| 8-210 | I | SO₂Et | Me |
| 8-211 | CH₂SMe | OMe | SO₂Me |
| 8-212 | CH₂OMe | OMe | SO₂Me |
| 8-213 | CH₂O(CH₂)₂OMe | NH(CH₂)₂OEt | SO₂Me |
| 8-214 | CH₂O(CH₂)₂OMe | NH(CH₂)₃OEt | SO₂Me |
| 8-215 | CH₂O(CH₂)₂OMe | OMe | SO₂Me |
| 8-216 | CH₂O(CH₂)₂OMe | NH(CH₂)₂OMe | SO₂Me |
| 8-217 | CH₂O(CH₂)₂OMe | NH(CH₂)₃OMe | SO₂Me |
| 8-218 | SO₂Me | NH₂ | CF₃ |
| 8-219 | SO₂Me | F | CF₃ |
| 8-220 | SO₂Me | NHEt | Cl |
| 8-221 | SMe | SEt | F |
| 8-222 | SMe | SMe | F |
| 8-223 | Me | NH₂ | Cl |
| 8-224 | Me | NH₂ | Br |
| 8-225 | Me | NHMe | Cl |
| 8-226 | Me | NHMe | Br |
| 8-227 | Me | NMe₂ | Cl |
| 8-228 | Me | NMe₂ | Br |
| 8-227 | Me | NMe₂ | Cl |
| 8-228 | Me | NMe₂ | Br |
| 8-229 | NO₂ | O(CH₂)₂OMe | Me |
| 8-230 | CF₃ | S(O)₂Et | SO₂Me |
| 8-231 | CF₃ | S(O)₂Et | SO₂Et |
| 8-232 | CF₃ | SCH₂CONMe₂ | SO₂Me |
| 8-233 | CF₃ | SCH₂CONMe₂ | SO₂Et |
| 8-234 | CF₃ | SCH₂COOH | SO₂Me |
| 8-235 | CF₃ | SCH₂COOH | SO₂Et |
| 8-236 | Me | SO₂-CH₂-CH₂-CH=CH₂ | CF₃ |
| 8-237 | Cl | Me | SO₂Et |
| 8-238 | CF₃ | SEt | SO₂Me |
| 8-239 | OMe | NO₂ | Cl |
| 8-240 | OMe | NH(CO)i-Pr | Cl |
| 8-241 | OMe | NH(CO)CH₂Ph | Cl |
| 8-242 | CF₃ | SEt | SO₂Et |
| 8-243 | CF₃ | S(O)Et | SO₂Me |
| 8-244 | Cl | Me | Cl |
| 8-245 | Me | 3,5-dimethylpyrazol-1-yl | SO₂Me |
| 8-246 | SMe | H | CF₃ |
| 8-247 | Me | 1,2,3-triazol-1-yl | SO₂Me |
| 8-248 | Me | Me | SMe |
| 8-249 | Me | pyrrolidin-2-on-1-yl | SO₂Me |
| 8-250 | CF₃ | S(O)Et | SO₂Et |
| 8-251 | Cl | pyrazol-1-yl | SO₂Me |
| 8-252 | Me | 3-methylpyrazol-1-yl | SO₂Me |
| 8-253 | Cl | CH₂-N(Et)OMe | SO₂Me |
| 8-254 | Me | Me | Cl |
| 8-255 | OH | Cl | Cl |
| 8-256 | Me | 1,2,4-triazol-1-yl | SO₂Me |
| 8-257 | Me | 4-methoxypyrazol-1-yl | SO₂Me |
| 8-258 | Me | 1,2,4-triazol-1-yl | CF₃ |
| 8-259 | Me | tetrahydropyrimidin-2(1H)-one-1-yl | SO₂Me |
| 8-260 | Me | NH-(CH₂)₂-O(CO)Et | SO₂Me |
| 8-261 | Me | NH-iPr | SO₂Me |
| 8-262 | Cl | NH-CH₂-(CO)NHEt | Cl |
| 8-263 | Me | NH-CH₂-(CO)NMe2 | SO₂Me |
| 8-264 | Me | NH-CH₂-furan-2-yl | SO₂Me |
| 8-265 | Me | NH-CH₂-(CO)NHEt | SO₂Me |
| 8-266 | Me | F | SO₂Me |
| 8-267 | F | SO₂Me | SO₂Me |
| 8-268 | Cl | (4-cyclopropyl-3-methyl-5-oxo-4,5-dihydro-1H-1,2,4-triazol-1-yl)methyl | Cl |
| 8-269 | Cl | [4-methyl-5-oxo-3-(2,2,2-trifluorethoxy)-4,5-dihydro-1H-1,2,4-triazol-1-yl]methyl | Cl |
| 8-270 | Cl | (3-isopropoxy-4-methyl-5-oxo-4,5-dihydro-1H-1,2,4-triazol-1-yl]-methyl | Cl |
| 8-271 | Cl | (4-methyl-5-oxo-4,5-dihydro-1H-1,2,4-triazol-1-yl)methyl | Cl |
| 8-272 | Me | Cl | SO₂Et |
| 8-273 | SO₂Me | F | Cl |
| 8-274 | Me | 1,2,3-triazol-1-yl | SO₂Me |
| 8-275 | Me | isobutyl(methyl)carbamoylamino | SO₂Me |
| 8-276 | Me | 3-oxomorpholin-4-yl | SO₂Me |
| 8-277 | OMe | [ethyl(methylsulfonyl)-amino]methyl | Cl |
| 8-278 | F | SO₂Me | CF₃ |
| 8-279 | OMe | benzoylamino | Cl |
| 8-280 | OMe | cyclopropylcarbonylamino | Cl |
| 8-281 | OMe | propionylamino | Cl |
| 8-282 | NO₂ | SO₂Me | SO₂Me |
| 8-283 | NO₂ | SO₂Me | Cl |
| 8-284 | NO₂ | SOMe | SO₂Me |
| 8-285 | NO₂ | SOMe | Br |
| 8-286 | NO₂ | SOMe | Cl |
| 8-287 | NO₂ | SMe | SO₂Me |
| 8-288 | NO₂ | SMe | Br |
| 8-289 | NO₂ | SMe | Cl |
| 8-290 | Cl | CH₂OCH(CH₃)₂ | SO₂Et |
| 8-291 | Cl | CH₂OEt | SO₂Et |
| 8-292 | Cl | CH₂OMe | SO₂Et |
| 8-293 | Cl | CH₂OCH₂C₂F₅ | SO₂Me |
| 8-294 | Cl | CH₂OCH₂CHF₂ | SO₂Me |
| 8-295 | Cl | CH₂OCH₂CCH | SO₂Et |
| 8-296 | Cl | CH₂OC₂H₄OMe | SO₂Me |
| 8-297 | Cl | CH₂(OC₂H₄)₂OMe | SO₂Me |
| 8-298 | Cl | 5-ethoxymethyl-4,5-dihydro-1,2-oxazol-3-yl | SO₂Et |
| 8-299 | Cl | 5-methoxymethyl-4,5-dihydro-1,2-oxazol-3-yl | SO₂Et |
| 8-300 | Et | SOMe | CF₃ |
| 8-301 | iPr | SMe | CF₃ |
| 8-302 | Et | SMe | CF₃ |
| 8-303 | Et | SO₂Me | CF₃ |
| 8-304 | cPr | SOMe | CF₃ |
| 8-305 | CH=CH₂ | SMe | CF₃ |
| 8-306 | Et | SMe | Cl |
| 8-307 | Et | SO₂Me | Cl |
| 8-308 | Cl | NMe2 | Cl |
| 8-309 | CH₂O(CH₂)₂OMe | NH(CH₂)₃OMe | SO₂Me |
| 8-313 | Me | SO₂(CH₂)₂OMe | CF₃ |
| 8-314 | Me | SOEt | SO₂Me |
| 8-315 | Me | SO₂Et | SO₂Me |
| 8-316 | Me | SMe | 1,2,4-triazol-1-yl |
| 8-317 | OEt | SMe | CF₃ |
| 8-318 | Me | S(CH₂)₂OMe | CF₃ |
| 8-319 | Me | SOMe | 1,2,4-triazol-1-yl |
| 8-320 | OEt | SOMe | CF₃ |
| 8-321 | Me | SO(CH₂)₂OMe | CF₃ |
| 8-322 | Me | SCH₂CCMe | SO₂Me |
| 8-323 | Me | S-c-Pen | SO₂Me |
| 8-324 | OMe | SMe | OMe |
| 8-325 | Me | SCH₂CH=CHCH₃ | SO₂Me |
| 8-326 | Me | SOCH₂CCMe | SO₂Me |
| 8-327 | Me | SO₈-c-Pen | SO₂Me |
| 8-328 | Me | SO-c-Pen | SO₂Me |
| 8-329 | Me | S(CH₂)₃Cl | SO₂Me |
| 8-330 | Me | SCH₂(4-F-Ph) | SO₂Me |
| 8-331 | Me | SO₂CH₂CCMe | SO₂Me |
| 8-332 | Me | SO₂CH₂CH=CHCH₃ | SO₂Me |
| 8-333 | Me | SOCH₂CH=CHCH₃ | SO₂Me |
| 8-334 | Me | SOCH₂-epoxy-Me | SO₂Me |
| 8-335 | Me | SO₂(CH₂)₃Cl | SO₂Me |
| 8-336 | Me | SO(CH₂)₃Cl | SO₂Me |
| 8-337 | Me | SOCH₂(4-F-Ph) | SO₂Me |
| 8-338 | Me | SO₂CH₂(4-F-Ph) | SO₂Me |
| 8-339 | Me | SO₂Me | C₂F₅ |
| 8-340 | O(CH₂)₂OMe | SMe | CF₃ |
| 8-341 | O(CH₂)₂OMe | SO₂Me | CF₃ |
| 8-342 | O(CH₂)₂OMe | SOMe | CF₃ |
| 8-343 | Me | S(CH₂)₂OCH₂CF₃ | SO₂Me |
| 8-344 | Me | SO(CH₂)₂OCH₂CF₃ | SO₂Me |
| 8-345 | Me | SO₂(CH₂)₂OCH₂CF₃ | SO₂Me |
| 8-346 | OEt | SEt | CF₃ |
| 8-347 | O-CH₂-c-Pr | SMe | CF₃ |
| 8-348 | OMe | SEt | CF₃ |
| 8-349 | OMe | SO₂Et | CF₃ |
| 8-350 | OMe | SOEt | CF₃ |
| 8-351 | OEt | SO₂Et | CF₃ |
| 8-352 | OEt | SOEt | CF₃ |
| 8-353 | O-CH₂-c-Pr | SOMe | CF₃ |
| 8-354 | O-CH₂-c-Pr | SO₂Me | CF₃ |
| 8-355 | Me | SEt | SO₂Me |

**Table 9: Compounds of the general formula (I) according to the invention in which R is a radical OR***

| | | | | |
|---|---|---|---|---|
| 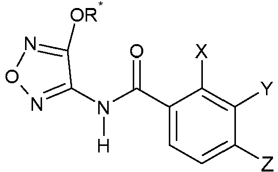 | | | | |

| No. | R* | X | Y | Z |
|---|---|---|---|---|
| 9-50 | Me | NO₂ | O(CH₂)₂OMe | OMe |
| 9-51 | Me | NO₂ | OMe | Me |
| 9-52 | Me | NO₂ | NH₂ | OMe |
| 9-53 | Me | NO₂ | NH₂ | SO₂Me |
| 9-54 | Me | NO₂ | NH₂ | Cl |
| 9-55 | Me | NO₂ | NHMe | Cl |
| 9-56 | Me | NO₂ | NMe₂ | Cl |
| 9-57 | Me | NO₂ | NH₂ | Br |
| 9-58 | Me | NO₂ | NHMe | Br |
| 9-59 | Me | NO₂ | NMe₂ | Br |
| 9-60 | Me | NO₂ | NH₂ | F |
| 9-61 | Me | NO₂ | NHMe | F |
| 9-62 | Me | NO₂ | NMe₂ | F |
| 9-63 | Me | NO₂ | NH₂ | SO₂Me |
| 9-64 | Me | NO₂ | NHMe | SO₂Me |
| 9-65 | Me | NO₂ | NMe₂ | SO₂Me |
| 9-66 | Me | NO₂ | NH₂ | 1H-1,2,4-triazol-1-yl |
| 9-67 | Me | NO₂ | NHMe | 1H-1,2,4-triazol-1-yl |
| 9-68 | Me | NO₂ | NMe₂ | 1H-1,2,4-triazol-1-yl |
| 9-69 | Me | Me | F | F |
| 9-70 | Me | Me | F | Cl |
| 9-71 | Me | Me | SMe | CF₃ |
| 9-72 | Me | Me | Cl | SO₂Me |
| 9-73 | Me | Me | SO₂Me | SO₂Me |
| 9-74 | Et | Me | SO₂Me | SO₂Me |
| 9-75 | n-Pr | Me | SO₂Me | SO₂Me |
| 9-76 | i-Pr | Me | SO₂Me | SO₂Me |
| 9-77 | t-Bu | Me | SO₂Me | SO₂Me |
| 9-78 | Ph | Me | SO₂Me | SO₂Me |
| 9-79 | Me | Me | SO₂Me | CF₃ |
| 9-80 | Et | Me | SO₂Me | CF₃ |
| 9-81 | n-Pr | Me | SO₂Me | CF₃ |
| 9-82 | i-Pr | Me | SO₂Me | CF₃ |
| 9-83 | t-Bu | Me | SO₂Me | CF₃ |
| 9-84 | Ph | Me | SO₂Me | CF₃ |
| 9-85 | Me | Me | Cl | CF₃ |
| 9-86 | Me | Me | S(O)Me | CF₃ |
| 9-87 | Me | Me | SEt | OMe |
| 9-88 | Me | Me | NMe₂ | SO₂Me |
| 9-89 | Et | Me | NMe₂ | SO₂Me |
| 9-90 | n-Pr | Me | NMe₂ | SO₂Me |
| 9-91 | i-Pr | Me | NMe₂ | SO₂Me |
| 9-92 | t-Bu | Me | NMe₂ | SO₂Me |
| 9-93 | Ph | Me | NMe₂ | SO₂Me |
| 9-94 | Me | Me | NH(CH₂)₂OMe | SO₂Me |
| 9-95 | Et | Me | NH(CH₂)₂OMe | SO₂Me |
| 9-96 | n-Pr | Me | NH(CH₂)₂OMe | SO₂Me |
| 9-97 | i-Pr | Me | NH(CH₂)₂OMe | SO₂Me |
| 9-98 | t-Bu | Me | NH(CH₂)₂OMe | SO₂Me |
| 9-99 | Ph | Me | NH(CH₂)₂OMe | SO₂Me |
| 9-100 | Me | Me | O(CH₂)₄OMe | SO₂Me |
| 9-101 | Me | Me | NH₂ | SO₂Me |
| 9-102 | Me | Me | O(CH₂)₂-O(3,5-dimethoxypyrimidin-2-yl | SO₂Me |
| 9-103 | Me | Me | O(CH₂)₂-O-NMe₂ | Cl |
| 9-104 | Me | Me | O(CH₂)₂-NH(CO)NMe₂ | Cl |
| 9-105 | Me | Me | O(CH₂)-5-pyrrolidin-2-one | Br |
| 9-106 | Me | Me | O(CH₂)₂-NH (CO)NHCO₂Et | Cl |
| 9-107 | Me | Me | O(CH₂)-(CO)NEt₂ | Br |
| 9-108 | Me | Me | O(CH₂)-5-2,4-dimethyl-2,4-dihydro-3H-1,2,4-triazol-3-one | Cl |
| 9-109 | Me | Me | O(CH₂)-3,5-dimethyl-1,2-oxazol-4-yl | Cl |
| 9-110 | Me | Me | O(CH₂)₂-NHCO₂Me | Cl |
| 9-111 | Me | Me | 4,5-dihydro-1,2-oxazol-3-yl | SO₂Me |
| 9-112 | Et | Me | 4,5-dihydro-1,2-oxazol-3-yl | SO₂Me |
| 9-113 | n-Pr | Me | 4,5-dihydro-1,2-oxazol-3-yl | SO₂Me |
| 9-114 | i-Pr | Me | 4,5-dihydro-1,2-oxazol-3-yl | SO₂Me |
| 9-115 | t-Bu | Me | 4,5-dihydro-1,2-oxazol-3-yl | SO₂Me |
| 9-116 | Ph | Me | 4,5-dihydro-1,2-oxazol-3-yl | SO₂Me |
| 9-117 | Me | Me | Me | SO₂Me |
| 9-118 | Me | Me | OH | SO₂Me |
| 9-119 | Me | Me | O-CH₂-NHSO₂cPr | Cl |
| 9-120 | Me | Me | O-CH₂-NHSO₂Me | SO₂Me |
| 9-121 | Et | Me | O-CH₂-NHSO₂Me | SO₂Me |
| 9-122 | n-Pr | Me | O-CH₂-NHSO₂Me | SO₂Me |
| 9-123 | i-Pr | Me | O-CH₂-NHSO₂Me | SO₂Me |
| 9-124 | t-Bu | Me | O-CH₂-NHSO₂Me | SO₂Me |
| 9-125 | Ph | Me | O-CH₂-NHSO₂Me | SO₂Me |
| 9-126 | Me | Me | SMe | Cl |
| 9-127 | Me | Me | SOMe | Cl |
| 9-128 | Et | Me | SO₂Me | Cl |
| 9-129 | n-Pr | Me | SO₂Me | Cl |
| 9-130 | i-Pr | Me | SO₂Me | Cl |
| 9-131 | t-Bu | Me | SO₂Me | Cl |
| 9-132 | Ph | Me | SO₂Me | Cl |
| 9-133 | Me | Me | SO₂Me | Cl |
| 9-134 | Me | Me | SMe | Br |
| 9-135 | Me | Me | SOMe | Br |
| 9-136 | Me | Me | SO₂Me | Br |
| 9-137 | Me | Me | SMe | I |
| 9-138 | Me | Me | SOMe | I |
| 9-139 | Me | Me | SO₂Me | I |
| 9-140 | Me | Me | SEt | Cl |
| 9-141 | Me | Me | SOEt | Cl |
| 9-142 | Me | Me | SO₂Et | Cl |
| 9-143 | Me | Me | SEt | Br |
| 9-144 | Me | Me | SOEt | Br |
| 9-145 | Me | Me | SO₂Et | Br |
| 9-146 | Me | Me | SEt | I |
| 9-147 | Me | Me | SOEt | I |
| 9-148 | Me | Me | SO₂Et | I |
| 9-149 | Me | Me | SEt | F |
| 9-150 | Me | Me | SOEt | F |
| 9-151 | Me | Me | SO₂Et | F |
| 9-152 | Me | Me | S(O)Me | SO₂Me |
| 9-153 | Me | Me | SMe | SO₂Me |
| 9-154 | Me | Me | SMe | OMe |
| 9-155 | Me | Me | S(O)Me | OMe |
| 9-156 | Me | Me | SO₂Me | OMe |
| 9-157 | Me | Me | SMe | Cl |
| 9-158 | Me | Me | S(O)Me | Cl |
| 9-159 | Me | Me | SO₂Me | Cl |
| 9-160 | Me | Me | [1,4]dioxan-2-ylmethoxy | SO₂Me |
| 9-161 | Me | Me | [1,4]dioxan-2-ylmethoxy | SO₂Et |
| 9-162 | Me | Me | O(CH₂)₄OMe | SO₂Et |
| 9-163 | Me | Me | O(CH₂)₃OMe | SO₂Me |
| 9-164 | Me | Me | O(CH₂)₃OMe | SO₂Et |
| 9-165 | Me | Me | O(CH₂)₂OMe | SO₂Me |
| 9-166 | Me | Me | O(CH₂)₂OMe | SO₂Et |
| 9-167 | Me | Me | S(O)Me | SO₂Me |
| 9-168 | Me | Me | SMe | SO₂Me |
| 9-169 | Me | Me | SMe | OMe |
| 9-170 | Me | Me | S(O)Me | OMe |
| 9-171 | Me | Me | SO₂Me | OMe |
| 9-172 | Me | Cl | OCH₂(CO)NMe₂ | Cl |
| 9-173 | Me | Cl | Cl | SO₂Me |
| 9-174 | Me | Cl | CH₂OCH₂CF₃ | SO₂Me |
| 9-175 | Et | Cl | CH₂OCH₂CF₃ | SO₂Me |
| 9-176 | n-Pr | Cl | CH₂OCH₂CF₃ | SO₂Me |
| 9-177 | i-Pr | Cl | CH₂OCH₂CF₃ | SO₂Me |
| 9-178 | t-Bu | Cl | CH₂OCH₂CF₃ | SO₂Me |
| 9-179 | Ph | Cl | CH₂OCH₂CF₃ | SO₂Me |
| 9-180 | Me | Cl | 5-cyanomethyl-4,5-dihydro-1,2-oxazol-3-yl | SO₂Et |
| 9-181 | Et | Cl | 5-cyanomethyl-4,5-dihydro-1,2-oxazol-3-yl | SO₂Et |
| 9-182 | n-Pr | Cl | 5-cyanomethyl-4,5-dihydro-1,2-oxazol-3-yl | SO₂Et |
| 9-183 | i-Pr | Cl | 5-cyanomethyl-4,5-dihydro-1,2-oxazol-3-yl | SO₂Et |
| 9-184 | t-Bu | Cl | 5-cyanomethyl-4,5-dihydro-1,2-oxazol-3-yl | SO₂Et |
| 9-185 | Ph | Cl | 5-cyanomethyl-4,5-dihydro-1,2-oxazol-3-yl | SO₂Et |
| 9-186 | Me | Cl | CH₂O-tetrahydrofuran-3-yl | SO₂Me |
| 9-187 | Et | Cl | CH₂O-tetrahydrofuran-3-yl | SO₂Me |
| 9-188 | n-Pr | Cl | CH₂O-tetrahydrofuran-3-yl | SO₂Me |
| 9-189 | i-Pr | Cl | CH₂O-tetrahydrofuran-3-yl | SO₂Me |
| 9-190 | t-Bu | Cl | CH₂O-tetrahydrofuran-3-yl | SO₂Me |
| 9-191 | Ph | Cl | CH₂O-tetrahydrofuran-2-yl | SO₂Me |
| 9-192 | Me | Cl | SMe | SO₂Me |
| 9-193 | Me | Cl | F | SMe |
| 9-194 | n-Pr | Cl | CH₂OCH₂-tetrahydrofuran-2-yl | SO₂Me |
| 9-195 | Me | Cl | CH₂OCH₂-tetrahydrofuran-3-yl | SO₂Et |
| 9-196 | n-Pr | Cl | O(CH₂)-5-pyrrolidin-2-one | Cl |
| 9-197 | Me | Cl | O(CH₂)-5-pyrrolidin-2-one | Cl |
| 9-198 | Me | Cl | O(CH₂)-5-pyrrolidin-2-one | Cl |
| 9-199 | Me | Cl | S(O)Me | SO₂Me |
| 9-200 | Me | Cl | CH₂O-tetrahydrofuran-3-yl | SO₂Et |
| 9-201 | Me | Cl | SMe | Cl |
| 9-202 | Me | Cl | O(CH₂)₂OMe | Cl |
| 9-203 | Et | Cl | O(CH₂)₂OMe | Cl |
| 9-204 | n-Pr | Cl | O(CH₂)₂OMe | Cl |
| 9-205 | i-Pr | Cl | O(CH₂)₂OMe | Cl |
| 9-206 | t-Bu | Cl | O(CH₂)₂OMe | Cl |
| 9-207 | Ph | Cl | O(CH₂)₂OMe | Cl |
| 9-208 | Me | Cl | O(CH₂)₂OMe | SO₂Me |
| 9-209 | Me | Cl | O(CH₂)₂OMe | SO₂Et |
| 9-210 | Me | Cl | O(CH₂)₂OMe | SO₂Me |
| 9-211 | Me | Cl | O(CH₂)₂OMe | SO₂Et |
| 9-212 | Me | Cl | O(CH₂)₂OMe | SO₂Me |
| 9-213 | Me | Cl | O(CH₂)₂OMe | SO₂Et |
| 9-214 | Me | Cl | [1,4]dioxan-2-yl-methoxy | SO₂Me |
| 9-215 | Me | Cl | [1,4]dioxan-2-ylmethoxy | SO₂Et |
| 9-216 | Me | Cl | SO₂Me | Me |
| 9-217 | Me | Cl | SEt | Me |
| 9-218 | Me | Cl | SOEt | Me |
| 9-219 | Me | Cl | SO₂Et | Me |
| 9-220 | Me | Cl | 4,5-dihydro-1,2-oxazol-3-yl | SO₂Me |
| 9-221 | Me | Cl | Cl | SO₂Me |
| 9-222 | Me | F | SMe | CF₃ |
| 9-223 | n.Pr | F | SMe | CF₃ |
| 9-224 | n-Pr | F | S(O)Me | CF₃ |
| 9-225 | Me | F | S(O)Me | CF₃ |
| 9-226 | | F | S(O)Me | CF₃ |
| 9-227 | Me | F | SO₂Me | CF₃ |
| 9-228 | n.Pr | F | SO₂Me | CF₃ |
| 9-229 | Me | SMe | SEt | F |
| 9-230 | n-Pr | SMe | SEt | F |
| 9-231 | Me | OMe | SMe | CF₃ |
| 9-232 | Me | OMe | S(O)Me | CF₃ |
| 9-233 | Me | OMe | SO₂Me | CF₃ |
| 9-234 | Me | Et | NH(CH₂)₂OMe | SO₂Me |
| 9-235 | Me | Et | F | SO₂Me |
| 9-236 | Me | Et | SMe | CF₃ |
| 9-237 | Me | CF₃ | F | SO₂Me |
| 9-238 | Me | CF₃ | F | SO₂Et |
| 9-239 | Me | CF₃ | O(CH₂)₂OMe | SO₂Et |
| 9-240 | Me | CF₃ | O(CH₂)₃OMe | SO₂Et |
| 9-241 | Me | CF₃ | O(CH₂)₂OMe | SO₂Me |
| 9-242 | Me | CF₃ | O(CH₂)₃OMe | SO₂Me |
| 9-243 | Me | CF₃ | OCH₂CONMe₂ | SO₂Me |
| 9-244 | Me | CF₃ | OCH₂CONMe₂ | SO₂Et |
| 9-245 | Me | CF₃ | OCH₂CONMe₂ | Cl |
| 9-246 | Me | CF₃ | OCH₂CONMe₂ | Br |
| 9-247 | Me | CF₃ | OCH₂CONMe₂ | I |
| 9-248 | Me | CF₃ | OCH₂CONMe₂ | F |
| 9-249 | Me | CF₃ | O(CH₂)₂OMe | Cl |
| 9-250 | Me | CF₃ | O(CH₂)₃OMe | Cl |
| 9-251 | Me | CF₃ | O(CH₂)₂OMe | Br |
| 9-252 | Me | CF₃ | O(CH₂)₃OMe | Br |
| 9-253 | Me | CF₃ | O(CH₂)₂OMe | I |
| 9-254 | Me | CF₃ | O(CH₂)₃OMe | I |
| 9-255 | Me | CF₃ | O(CH₂)₂OMe | F |
| 9-256 | Me | CF₃ | O(CH₂)₃OMe | F |
| 9-257 | Me | CF₃ | [1,4]dioxan-2-yl-methoxy | SO₂Me |
| 9-258 | Me | CF₃ | [1,4]dioxan-2-yl-methoxy | SO₂Et |
| 9-259 | Me | CF₃ | [1,4]dioxan-2-yl-methoxy | Cl |
| 9-260 | Me | CF₃ | [1,4]dioxan-2-yl-methoxy | Br |
| 9-261 | Me | CF₃ | [1,4]dioxan-2-yl-methoxy | I |
| 9-262 | Me | CF₃ | [1,4]dioxan-2-yl-methoxy | F |
| 9-263 | Me | Br | OMe | Br |
| 9-264 | Me | Br | O(CH₂)₂OMe | Br |
| 9-265 | Me | Br | O(CH₂)₄OMe | SO₂Me |
| 9-266 | Me | Br | O(CH₂)₄OMe | SO₂Et |
| 9-267 | Me | Br | O(CH₂)₃OMe | SO₂Me |
| 9-268 | Me | Br | O(CH₂)₃OMe | SO₂Et |
| 9-269 | Me | Br | O(CH₂)₂OMe | SO₂Me |
| 9-270 | Me | Br | O(CH₂)₂OMe | SO₂Et |
| 9-271 | Me | Br | [1,4]dioxan-2-yl-methoxy | SO₂Me |
| 9-272 | Me | Br | [1,4]dioxan-2-yl-methoxy | SO₂Et |
| 9-273 | Me | Br | SMe | Me |
| 9-274 | Me | Br | SOMe | Me |
| 9-275 | Me | Br | SO₂Me | Me |
| 9-276 | Me | Br | SEt | Me |
| 9-277 | Me | Br | SOEt | Me |
| 9-278 | Me | Br | SO₂Et | Me |
| 9-279 | Me | I | O(CH₂)₄OMe | SO₂Me |
| 9-280 | Me | I | O(CH₂)₄OMe | SO₂Et |
| 9-281 | Me | I | O(CH₂)₃OMe | SO₂Me |
| 9-282 | Me | I | O(CH₂)₃OMe | SO₂Et |
| 9-283 | Me | I | O(CH₂)₂OMe | SO₂Me |
| 9-284 | Me | I | O(CH₂)₂OMe | SO₂Et |
| 9-285 | Me | I | [1,4]dioxan-2-yl-methoxy | SO₂Me |
| 9-286 | Me | I | [1,4]dioxan-2-yl-methoxy | SO₂Et |
| 9-287 | Me | I | SMe | Me |
| 9-288 | Me | I | SOMe | Me |
| 9-289 | Me | I | SO₂Me | Me |
| 9-290 | Me | I | SEt | Me |
| 9-291 | Me | I | SOEt | Me |
| 9-292 | Me | I | SO₂Et | Me |
| 9-293 | Me | CH₂SMe | OMe | SO₂Me |
| 9-294 | Me | CH₂OMe | OMe | SO₂Me |
| 9-295 | Me | CH₂O(CH₂)₂O Me | NH(CH₂)₂OEt | SO₂Me |
| 9-296 | Me | CH₂O(CH₂)₂O Me | NH(CH₂)₃OEt | SO₂Me |
| 9-297 | Me | CH₂O(CH₂)₃O Me | OMe | SO₂Me |
| 9-298 | Me | CH₂O(CH₂)₂O Me | NH(CH₂)₂OMe | SO₂Me |
| 9-299 | Me | CH₂O(CH₂)₂O Me | NH(CH₂)₃OMe | SO₂Me |
| 9-300 | Me | SO₂Me | NH₂ | CF₃ |
| 9-301 | Me | SO₂Me | F | CF₃ |
| 9-302 | Me | SO₂Me | NHEt | Cl |
| 9-303 | Me | SMe | SEt | F |
| 9-304 | Me | SMe | SMe | F |
| 9-305 | n-Pr | SMe | SMe | F |
| 9-306 | Benzyl | Me | SO₂Me | CF₃ |
| 9-307 | Me | Cl | Me | SO₂Et |
| 9-308 | Benzyl | Me | SO₂Me | CF3 |
| 9-309 | Benzyl | Me | SO₂Me | SO₂Me |
| 9-310 | Benzyl | Me | S(O)Me | CF₃ |
| 9-311 | Me | Cl | 1H-pyrazol-1-yl | SO₂Me |
| 9-312 | Me | Me | F | SO₂Me |
| 9-313 | Me | Me | 1H-1,2,3-triazol-1-yl | SO₂Me |
| 9-314 | Me | Cl | Me | Cl |
| 9-315 | Me | Cl | CH₂OCH₂-2-tetrahydrofuran-2-yl | SO₂Me |
| 9-316 | Me | Me | Me | SMe |
| 9-317 | Ph | Me | S(O)Me | CF₃ |
| 9-318 | Me | Cl | S(O)Me | Cl |
| 9-319 | Me | Cl | CH₂N(OMe)Et | SO₂Me |
| 9-320 | n-Pr | Cl | Me | SO₂Et |
| 9-321 | Me | Me | 4-methoxy-1H-pyrazol-1-yl | SO₂Me |
| 9-322 | Ph | Me | Cl | SO₂Me |
| 9-323 | n-Pr | Me | S(O)Me | CF₃ |

**Table 10: Compounds of the general formula (I) according to the invention**

| | | | | |
|---|---|---|---|---|
| 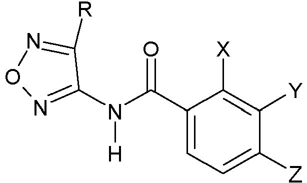 | | | | |

| No. | R | X | Y | Z |
|---|---|---|---|---|
| 10-46 | Ph | NO₂ | O(CH₂)₂OMe | OMe |
| 10-47 | Ph | NO₂ | OMe | Me |
| 10-48 | Ph | NO₂ | NH₂ | OMe |
| 10-49 | Ph | NO₂ | NH₂ | SO₂Et |
| 10-50 | Ph | NO₂ | NH₂ | Cl |
| 10-51 | Ph | NO₂ | NHMe | Cl |
| 10-52 | Ph | NO₂ | NMe₂ | Cl |
| 10-53 | Ph | NO₂ | NH₂ | Br |
| 10-54 | Ph | NO₂ | NHMe | Br |
| 10-55 | Ph | NO₂ | NMe₂ | Br |
| 10-56 | Ph | NO₂ | NH₂ | F |
| 10-57 | Ph | NO₂ | NHMe | F |
| 10-58 | Ph | NO₂ | NMe₂ | F |
| 10-59 | Ph | NO₂ | NH₂ | SO₂Me |
| 10-60 | Ph | NO₂ | NHMe | SO₂Me |
| 10-61 | Ph | NO₂ | NMe₂ | SO₂Me |
| 10-62 | Ph | NO₂ | NH₂ | 1H-1,2,4-triazol-1-yl |
| 10-63 | Ph | NO₂ | NHMe | 1H-1,2,4-triazol-1-yl |
| 10-64 | Ph | NO₂ | NMe₂ | 1H-1,2,4-triazol-1-yl |
| 10-65 | Ph | Me | F | F |
| 10-66 | Ph | Me | F | Cl |
| 10-67 | Ph | Me | SMe | CF₃ |
| 10-68 | Ph | Me | Cl | SO₂Me |
| 10-69 | Ph | Me | SO₂Me | SO₂Me |
| 10-70 | 4-Cl-Ph | Me | SO₂Me | SO₂Me |
| 10-71 | 1-ethylbenzimidazol-2-yl | Me | SO₂Me | SO₂Me |
| 10-72 | 1,2,4-triazol-1-yl | Me | SO₂Me | SO₂Me |
| 10-73 | benzoxazol-2-yl | Me | SO₂Me | SO₂Me |
| 10-74 | Ph | Me | SO₂Me | CF₃ |
| 10-75 | 4-Cl-Ph | Me | SO₂Me | CF₃ |
| 10-76 | 1-ethylbenzimidazol-2-yl | Me | SO₂Me | CF₃ |
| 10-77 | 1,2,4-triazol-1-yl | Me | SO₂Me | CF₃ |
| 10-78 | benzoxazol-2-yl | Me | SO₂Me | CF₃ |
| 10-79 | Ph | Me | Cl | CF₃ |
| 10-80 | Ph | Me | S(O)Me | CF₃ |
| 10-81 | Ph | Me | SEt | OMe |
| 10-82 | Ph | Me | NMe₂ | SO₂Me |
| 10-83 | 4-Cl-Ph | Me | NMe₂ | SO₂Me |
| 10-84 | 1-ethylbenzimidazol-2-yl | Me | NMe₂ | SO₂Me |
| 10-85 | 1,2,4-triazol-1-yl | Me | NMe₂ | SO₂Me |
| 10-86 | benzoxazol-2-yl | Me | NMe₂ | SO₂Me |
| 10-87 | Ph | Me | NH(CH₂)₂OMe | SO₂Me |
| 10-88 | 4-Cl-Ph | Me | NH(CH₂)₂OMe | SO₂Me |
| 10-89 | 1-ethylbenzimidazol-2-yl | Me | NH(CH₂)₂OMe | SO₂Me |
| 10-90 | 1,2,4-triazol-1-yl | Me | NH(CH₂)₂OMe | SO₂Me |
| 10-91 | benzoxazol-2-yl | Me | NH(CH₂)₂OMe | SO₂Me |
| 10-92 | Ph | Me | O(CH₂)₄OMe | SO₂Me |
| 10-93 | Ph | Me | NH₂ | SO₂Me |
| 10-94 | Ph | Me | O(CH₂)₂-O(3,5-dimethoxypyrimidin-2-yl | SO₂Me |
| 10-95 | Ph | Me | O(CH₂)₂-O-NMe₂ | Cl |
| 10-96 | Ph | Me | O(CH₂)₂-NH(CO)NMe₂ | Cl |
| 10-97 | Ph | Me | O(CH₂)-5-pyrrolidin-2-one | Br |
| 10-98 | Ph | Me | O(CH₂)₂-NH(CO)NHCO₂Et | Cl |
| 10-99 | Ph | Me | O(CH₂)-(CO)NEt₂ | Br |
| 10-100 | Ph | Me | O(CH₂)-5-2,4-dimethyl-2,4-dihydro-3H-1,2,4-triazol-3-one | Cl |
| 10-101 | Ph | Me | O(CH₂)-3,5-dimethyl-1,2-oxazol-4-yl | Cl |
| 10-102 | Ph | Me | O(CH₂)₂-NHCO₂Me | Cl |
| 10-103 | Ph | Me | 4,5-dihydro-1,2-oxazol-3-yl | SO₂Me |
| 10-104 | 4-Cl-Ph | Me | 4,5-dihydro-1,2-oxazol-3-yl | SO₂Me |
| 10-105 | 1-ethylbenzimidazol-2-yl | Me | 4,5-dihydro-1,2-oxazol-3-yl | SO₂Me |
| 10-106 | 1,2,4-triazol-1-yl | Me | 4,5-dihydro-1,2-oxazol-3-yl | SO₂Me |
| 10-107 | benzoxazol-2-yl | Me | 4,5-dihydro-1,2-oxazol-3-yl | SO₂Me |
| 10-108 | Ph | Me | Me | SO₂Me |
| 10-109 | Ph | Me | OH | SO₂Me |
| 10-110 | Ph | Me | O-CH₂-NHSO₂cPr | Cl |
| 10-111 | Ph | Me | O-CH₂-NHSO₂Me | SO₂Me |
| 10-112 | 4-Cl-Ph | Me | O-CH₂-NHSO₂Me | SO₂Me |
| 10-113 | 1-ethylbenzimidazol-2-yl | Me | O-CH₂-NHSO₂Me | SO₂Me |
| 10-114 | 1,2,4-triazol-1-yl | Me | O-CH₂-NHSO₂Me | SO₂Me |
| 10-115 | benzoxazol-2-yl | Me | O-CH₂-NHSO₂Me | SO₂Me |
| 10-116 | Ph | Me | SMe | Cl |
| 10-117 | Ph | Me | SOMe | Cl |
| 10-118 | 4-Cl-Ph | Me | SO₂Me | Cl |
| 10-119 | 1-ethylbenzimidazol-2-yl | Me | SO₂Me | Cl |
| 10-120 | 1,2,4-triazol-1-yl | Me | SO₂Me | Cl |
| 10-121 | benzoxazol-2-yl | Me | SO₂Me | Cl |
| 10-122 | Ph | Me | S(O)Me | SO₂Me |
| 10-123 | Ph | Me | SMe | SO₂Me |
| 10-124 | Ph | Me | SMe | OMe |
| 10-125 | Ph | Me | S(O)Me | OMe |
| 10-126 | Ph | Me | SO₂Me | OMe |
| 10-127 | Ph | Me | SMe | Cl |
| 10-128 | Ph | Me | S(O)Me | Cl |
| 10-129 | Ph | Me | SO₂Me | Cl |
| 10-130 | Ph | Me | [1,4]dioxan-2-ylmethoxy | SO₂Me |
| 10-131 | Ph | Me | [1,4]dioxan-2-ylmethoxy | SO₂Et |
| 10-132 | Ph | Me | O(CH₂)₄OMe | SO₂Et |
| 10-133 | Ph | Me | O(CH₂)₃OMe | SO₂Me |
| 10-134 | Ph | Me | O(CH₂)₃OMe | SO₂Et |
| 10-135 | Ph | Me | O(CH₂)₂OMe | SO₂Me |
| 10-136 | Ph | Me | O(CH₂)₂OMe | SO₂Et |
| 10-137 | Ph | Me | S(O)Me | SO₂Me |
| 10-138 | Ph | Me | SMe | SO₂Me |
| 10-139 | Ph | Me | SMe | OMe |
| 10-140 | Ph | Me | S(O)Me | OMe |
| 10-141 | Ph | Me | SO₂Me | OMe |
| 10-142 | Ph | Me | SMe | Cl |
| 10-143 | Ph | Me | S(O)Me | Cl |
| 10-144 | Ph | Me | SO₂Me | Cl |
| 10-145 | Ph | Me | SMe | Br |
| 10-146 | Ph | Me | SOMe | Br |
| 10-147 | Ph | Me | SO₂Me | Br |
| 10-148 | Ph | Me | SMe | I |
| 10-149 | Ph | Me | SOMe | I |
| 10-150 | Ph | Me | SO₂Me | I |
| 10-151 | Ph | Me | SEt | Cl |
| 10-152 | Ph | Me | SOEt | Cl |
| 10-153 | Ph | Me | SO₂Et | Cl |
| 10-154 | Ph | Me | SEt | Br |
| 10-155 | Ph | Me | SOEt | Br |
| 10-156 | Ph | Me | SO₂Et | Br |
| 10-157 | Ph | Me | SEt | I |
| 10-158 | Ph | Me | SOEt | I |
| 10-159 | Ph | Me | SO₂Et | I |
| 10-160 | Ph | Me | SEt | F |
| 10-161 | Ph | Me | SOEt | F |
| 10-162 | Ph | Me | SO₂Et | F |
| 10-163 | Ph | Cl | OCH₂(CO)NMe₂ | Cl |
| 10-164 | Ph | Cl | Cl | SO₂Me |
| 10-165 | Ph | Cl | CH₂OCH₂CF₃ | SO₂Me |
| 10-166 | 4-Cl-Ph | Cl | CH₂OCH₂CF₃ | SO₂Me |
| 10-167 | 1-ethylbenzimidazol-2-yl | Cl | CH₂OCH₂CF₃ | SO₂Me |
| 10-168 | 1,2,4-triazol-1-yl | Cl | CH₂OCH₂CF₃ | SO₂Me |
| 10-169 | benzoxazol-2-yl | Cl | CH₂OCH₂CF₃ | SO₂Me |
| 10-170 | Ph | Cl | 5-cyanomethyl-4,5-dihydro-1,2-oxazol-3-yl | SO₂Et |
| 10-171 | 4-Cl-Ph | Cl | 5-cyano-methyl-4,5-dihydro-1,2-oxazol-3-yl | SO₂Et |
| 10-172 | 1-ethyl-benzimidazol-2-yl | Cl | 5-cyano-methyl-4,5-dihydro-1,2-oxazol-3-yl | SO₂Et |
| 10-173 | 1,2,4-triazol-1-yl | Cl | 5-cyano-methyl-4,5-dihydro-1,2-oxazol-3-yl | SO₂Et |
| 10-174 | benzoxazol-2-yl | Cl | 5-cyano-methyl-4,5-dihydro-1,2-oxazol-3-yl | SO₂Et |
| 10-175 | Ph | Cl | CH₂O-tetrahydrofuran-3-yl | SO₂Me |
| 10-176 | 4-Cl-Ph | Cl | CH₂O-tetrahydrofuran-3-yl | SO₂Me |
| 10-177 | 1-ethyl-benzimidazol-2-yl | Cl | CH₂O-tetrahydrofuran-3-yl | SO₂Me |
| 10-178 | 1,2,4-triazol-1-yl | Cl | CH₂O-tetrahydrofuran-3-yl | SO₂Me |
| 10-179 | benzoxazol-2-yl | Cl | CH₂O-tetrahydrofuran-3-yl | SO₂Me |
| 10-180 | Ph | Cl | CH₂O-tetrahydrofuran-2-yl | SO₂Me |
| 10-181 | Ph | Cl | SMe | SO₂Me |
| 10-182 | Ph | Cl | F | SMe |
| 10-183 | 1,2,4-triazol-1-yl | Cl | CH₂OCH₂-tetrahydro-furan-2-yl | SO₂Me |
| 10-184 | 1-ethyl-benzimidazol-2-yl | Cl | CH₂OCH₂-tetrahydro-furan-2-yl | SO₂Me |
| 10-185 | Ph | Cl | CH₂OCH₂-tetrahydrofuran-3-yl | SO₂Me |
| 10-186 | Ph | Cl | O(CH₂)-5-pyrrolidin-2-one | Cl |
| 10-187 | Ph | Cl | SMe | Cl |
| 10-188 | Ph | Cl | S(O)Me | Cl |
| 10-189 | Ph | Cl | SO₂Me | Cl |
| 10-190 | Ph | Cl | CH₂O-tetrahydrofuran-3-yl | SO₂Et |
| 10-191 | Ph | Cl | O(CH₂)₂OMe | Cl |
| 10-192 | 4-Cl-Ph | Cl | O(CH₂)₂OMe | Cl |
| 10-193 | 1-ethyl-benzimidazol-2-yl | Cl | O(CH₂)₂OMe | Cl |
| 10-194 | 1,2,4-triazol-1-yl | Cl | O(CH₂)₂OMe | Cl |
| 10-195 | benzoxazol-2-yl | Cl | O(CH₂)₂OMe | Cl |
| 10-196 | Ph | Cl | O(CH₂)₄OMe | SO₂Me |
| 10-197 | Ph | Cl | O(CH₂)₄OMe | SO₂Et |
| 10-198 | Ph | Cl | O(CH₂)₃OMe | SO₂Me |
| 10-199 | Ph | Cl | O(CH₂)₃OMe | SO₂Et |
| 10-200 | Ph | Cl | O(CH₂)₂OMe | SO₂Me |
| 10-201 | Ph | Cl | O(CH₂)₂OMe | SO₂Et |
| 10-202 | Ph | Cl | [1,4]dioxan-2-ylmethoxy | SO₂Me |
| 10-203 | Ph | Cl | [1,4]dioxan-2-ylmethoxy | SO₂Et |
| 10-204 | Ph | Cl | SO₂Me | Me |
| 10-205 | Ph | Cl | SEt | Me |
| 10-206 | Ph | Cl | SOEt | Me |
| 10-207 | Ph | Cl | SO₂Et | Me |
| 10-208 | Ph | Cl | 4,5-dihydro-1,2-oxazol-3-yl | SO₂Me |
| 10-209 | Ph | Cl | Cl | SO₂Me |
| 10-210 | Ph | F | SMe | CF₃ |
| 10-211 | 4-Cl-Ph | F | S(O)Me | CF₃ |
| 10-212 | Ph | F | S(O)Me | CF₃ |
| 10-213 | Ph | OMe | SMe | CF₃ |
| 10-214 | Ph | OMe | S(O)Me | CF₃ |
| 10-215 | Ph | OMe | SO₂Me | CF₃ |
| 10-216 | Ph | Et | NH(CH₂)₂OMe | SO₂Me |
| 10-217 | Ph | Et | F | SO₂Me |
| 10-218 | Ph | Et | SMe | CF₃ |
| 10-219 | Ph | CF₃ | F | SO₂Me |
| 10-220 | Ph | CF₃ | F | SO₂Et |
| 10-221 | Ph | CF₃ | O(CH₂)₂OMe | SO₂Et |
| 10-222 | Ph | CF₃ | O(CH₂)₃OMe | SO₂Et |
| 10-223 | Ph | CF₃ | O(CH₂)₂OMe | SO₂Me |
| 10-224 | Ph | CF₃ | O(CH₂)₃OMe | SO₂Me |
| 10-225 | Ph | CF₃ | OCH₂CONMe₂ | SO₂Me |
| 10-226 | Ph | CF₃ | OCH₂CONMe₂ | SO₂Et |
| 10-227 | Ph | CF₃ | OCH₂CONMe₂ | Cl |
| 10-228 | Ph | CF₃ | OCH₂CONMe₂ | Br |
| 10-229 | Ph | CF₃ | OCH₂CONMe₂ | I |
| 10-230 | Ph | CF₃ | OCH₂CONMe₂ | F |
| 10-231 | Ph | CF₃ | O(CH₂)₂OMe | Cl |
| 10-232 | Ph | CF₃ | O(CH₂)₃OMe | Cl |
| 10-233 | Ph | CF₃ | O(CH₂)₂OMe | Br |
| 10-234 | Ph | CF₃ | O(CH₂)₃OMe | Br |
| 10-235 | Ph | CF₃ | O(CH₂)₂OMe | I |
| 10-236 | Ph | CF₃ | O(CH₂)₃OMe | I |
| 10-237 | Ph | CF₃ | O(CH₂)₂OMe | F |
| 10-238 | Ph | CF₃ | O(CH₂)₃OMe | F |
| 10-239 | Ph | CF₃ | [1,4]dioxan-2-ylmethoxy | SO₂Me |
| 10-240 | Ph | CF₃ | [1,4]dioxan-2-ylmethoxy | SO₂Et |
| 10-241 | Ph | CF₃ | [1,4]dioxan-2-ylmethoxy | Cl |
| 10-242 | Ph | CF₃ | [1,4]dioxan-2-ylmethoxy | Br |
| 10-243 | Ph | CF₃ | [1,4]dioxan-2-ylmethoxy | I |
| 10-244 | Ph | CF₃ | [1,4]dioxan-2-ylmethoxy | F |
| 10-245 | Ph | Br | OMe | Br |
| 10-246 | Ph | Br | O(CH₂)₂OMe | Br |
| 10-247 | Ph | Br | O(CH₂)₄OMe | SO₂Me |
| 10-248 | Ph | Br | O(CH₂)₄OMe | SO₂Et |
| 10-249 | Ph | Br | O(CH₂)₃OMe | SO₂Me |
| 10-250 | Ph | Br | O(CH₂)₃OMe | SO₂Et |
| 10-251 | Ph | Br | O(CH₂)₂OMe | SO₂Me |
| 10-252 | Ph | Br | O(CH₂)₂OMe | SO₂Et |
| 10-253 | Ph | Br | [1,4]dioxan-2-ylmethoxy | SO₂Me |
| 10-254 | Ph | Br | [1,4]dioxan-2-ylmethoxy | SO₂Et |
| 10-255 | Ph | Br | SMe | Me |
| 10-256 | Ph | Br | SOMe | Me |
| 10-257 | Ph | Br | SO₂Me | Me |
| 10-258 | Ph | Br | SEt | Me |
| 10-259 | Ph | Br | SOEt | Me |
| 10-260 | Ph | Br | SO₂Et | Me |
| 10-261 | Ph | I | O(CH₂)₄OMe | SO₂Me |
| 10-262 | Ph | I | O(CH₂)₄OMe | SO₂Et |
| 10-263 | Ph | I | O(CH₂)₃OMe | SO₂Me |
| 10-264 | Ph | I | O(CH₂)₃OMe | SO₂Et |
| 10-265 | Ph | I | O(CH₂)₂OMe | SO₂Me |
| 10-266 | Ph | I | O(CH₂)₂OMe | SO₂Et |
| 10-267 | Ph | I | [1,4]dioxan-2-ylmethoxy | SO₂Me |
| 10-268 | Ph | I | [1,4]dioxan-2-ylmethoxy | SO₂Et |
| 10-269 | Ph | I | SMe | Me |
| 10-270 | Ph | I | SOMe | Me |
| 10-271 | Ph | I | SO₂Me | Me |
| 10-272 | Ph | I | SEt | Me |
| 10-273 | Ph | I | SOEt | Me |
| 10-274 | Ph | I | SO₂Et | Me |
| 10-275 | Ph | CH₂SMe | OMe | SO₂Me |
| 10-276 | Ph | CH₂OMe | OMe | SO₂Me |
| 10-277 | Ph | CH₂O(CH₂)₂O Me | NH(CH₂)₂OEt | SO₂Me |
| 10-278 | Ph | CH₂O(CH₂)₂O Me | NH(CH₂)₃OEt | SO₂Me |
| 10-279 | Ph | CH₂O(CH₂)₃O Me | OMe | SO₂Me |
| 10-280 | Ph | CH₂O(CH₂)₂O Me | NH(CH₂)₂OMe | SO₂Me |
| 10-281 | Ph | CH₂O(CH₂)₂O Me | NH(CH₂)₃OMe | SO₂Me |
| 10-282 | Ph | SO₂Me | NH₂ | CF₃ |
| 10-283 | Ph | SO₂Me | F | CF₃ |
| 10-284 | Ph | SO₂Me | NHEt | Cl |
| 10-285 | Ph | SMe | SEt | F |
| 10-286 | Ph | SMe | SMe | F |
| 10-287 | 5-phenyl-1H-1,2,3-triazol-1-yl | Me | SO₂Me | CF₃ |
| 10-288 | 5-phenyl-1H-1,2,3-triazol-1-yl | Me | SO₂Me | SO₂Me |
| 10-289 | 4-OMe-phenyl | Me | SO₂Me | CF₃ |
| 10-290 | 4-OMe-phenyl | Me | SO₂Me | SO₂Me |
| 10-291 | 4-OMe-phenyl | Me | S(O)Me | SO₂Me |
| 10-292 | 4-OMe-phenyl | Cl | 5-cyano-methyl-4,5-dihydro-1,2-oxazol-3-yl | SO₂Et |
| 10-293 | 4-OMe-phenyl | Cl | CH₂OCH₂CF₃ | SO₂Me |
| 10-293 | 4-OMe-phenyl | Cl | Me | SO₂Me |
| 10-294 | 4-Cl-Ph | Cl | CH₂OCH₂-tetrahydrofuran-2-yl | SO₂Me |
| 10-295 | 4-Cl-Ph | Me | Cl | SO₂Me |
| 10-296 | 4-Cl-Ph | Me | S(O)Me | CF₃ |
| 10-297 | 4-F-Ph | Me | SO₂Me | CF₃ |
| 10-298 | 4-F-Ph | Me | SO₂Me | SO₂Me |
| 10-299 | 4-F-Ph | Cl | CH₂OCH₂-tetrahydrofuran-2-yl | SO₂Me |
| 10-300 | 4-F-Ph | Cl | CH₂OCH₂CF₃ | SO₂Me |
| 10-301 | 4-F-Ph | Me | Me | SO₂Me |
| 10-302 | 4-F-Ph | Cl | 5-cyano-methyl-4,5-dihydro-1,2-oxazol-3-yl | SO₂Et |
| 10-304 | 4-F-Ph | Me | S(O)Me | CF₃ |
| 10-305 | Ph | Cl | Me | SO₂Et |
| 10-306 | Ph | Me | 1,2,3-1H-triazol-1-yl | SO₂Me |
| 10-307 | 1,2,4-triazol-1-yl | Me | S(O)Me | CF₃ |
| 10-308 | 4-methyl-1,3-thiazol-2-yl | Me | SO₂Me | CF₃ |
| 10-309 | thiophen-2-yl | Me | SO₂Me | CF₃ |
| 10-310 | 1,2,4-oxadiazol-3-yl | Me | SO₂Me | CF₃ |
| 10-311 | 5-methoxymethyl-1,2,4-oxadiazol-3-yl | Me | SO₂Me | CF₃ |
| 10-312 | 1-methyl-5-ethylsulfonyl-1,3,4-triazol-2-yl | Me | SO₂Me | CF₃ |
| 10-313 | 4-methyl-1,3-thiazol-2-yl | Me | SO₂Me | SO₂Me |
| 10-314 | thiophen-2-yl | Me | SO₂Me | SO₂Me |
| 10-315 | 1,2,4-oxadiazol-3-yl | Me | SO₂Me | SO₂Me |
| 10-316 | 5-methoxymethyl-1,2,4-oxadiazol-3-yl | Me | SO₂Me | SO₂Me |
| 10-317 | 1-methyl-5-methylsulfonyl-1,3,4-triazol-2-yl | Me | SO₂Me | SO₂Me |
| 10-318 | pyridin-2-yl | Me | SO₂Me | CF₃ |
| 10-319 | pyridin-2-yl | Me | S(O)Me | CF₃ |
| 10-320 | pyridin-2-yl | Me | SO₂Me | SO₂Me |
| 10-321 | pyridin-3-yl | Me | SO₂Me | CF₃ |
| 10-322 | pyridin-3-yl | Me | S(O)Me | CF₃ |
| 10-323 | pyridin-3-yl | Me | SO₂Me | SO₂Me |
| 10-324 | pyridin-4-yl | Me | SO₂Me | CF₃ |
| 10-325 | pyridin-4-yl | Me | S(O)Me | CF3 |
| 10-326 | pyridin-4-yl | Me | SO₂Me | SO₂Me |
| 10-327 | 4-(5-allylsulfanyl)-4-methyl-4H-1,2,4-triazol-3-yl | Me | SO₂Me | CF₃ |
| 10-328 | 4-(5-allylsulfanyl)-4-methyl-4H-1,2,4-triazol-3-yl | Me | S(O)Me | CF₃ |
| 10-329 | 4-(5-allylsulfanyl)-4-methyl-4H-1,2,4-triazol-3-yl | Me | SO₂Me | SO₂Me |

**Table 11: Compounds of the general formula (I) according to the invention**

| | | | | |
|---|---|---|---|---|
| 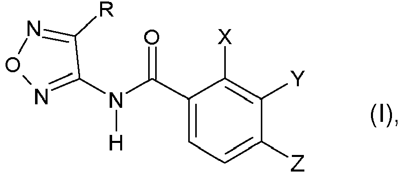 | | | | |

| No. | R | X | Y | Z |
|---|---|---|---|---|
| 11-2 | Bz | CF₃ | SMe | SO₂Me |
| 11-3 | Bz | CF₃ | OCH₂(CO)NMe₂ | SO₂Me |
| 11-4 | Bz | Cl | pyrazol-1-yl | SO₂Me |
| 11-5 | Bz | Cl | CH₂OCH₂CF₃ | SO₂Me |
| 11-6 | Bz | Cl | CH₂O-tetrahydrofuran-3-yl | SO₂Me |
| 11-7 | Bz | Cl | 5-cyanomethyl-4,5-dihydro-1,2-oxazol-3-yl | SO₂Et |
| 11-8 | Bz | Me | 4,5-dihydro-1,2-oxazol-3-yl | SO₂Me |
| 11-9 | Bz | Me | SO₂Me | Cl |
| 11-10 | Bz | Me | SO₂Me | SO₂Me |
| 11-11 | Bz | Me | SO₂Me | CF₃ |
| 11-12 | Bz | Me | NMe₂ | SO₂Me |
| 11-13 | Bz | Cl | O(CH₂)₂OMe | Cl |
| 11-14 | Bz | Me | NH(CH₂)₂OMe | SO₂Me |
| 11-15 | Bz | Me | O(CH₂)₂NHSO₂Me | SO₂Me |
| 11-16 | CO₂Me | CF₃ | SMe | SO₂CH₃ |
| 11-17 | CO₂Me | CF₃ | OCH₂(CO)NMe₂ | SO2Me |
| 11-18 | CO₂Me | Cl | pyrazol-1-yl | SO2Me |
| 11-19 | CO₂Me | F | SO₂Me | CF₃ |
| 11-20 | CO₂Me | Cl | CH₂OCH₂CF₃ | SO₂Me |
| 11-21 | CO₂Me | Cl | CH₂O-tetrahydrofuran-3-yl | SO₂Me |
| 11-22 | CO₂Me | Cl | 5-cyanomethyl-4,5-dihydro-1,2-oxazol-3-yl | SO₂Et |
| 11-23 | CO₂Me | Me | 4,5-dihydro-1,2-oxazol-3-yl | SO₂Me |
| 11-24 | CO₂Me | Me | SO₂Me | Cl |
| 11-25 | CO₂Me | Me | SO₂Me | SO₂Me |
| 11-26 | CO₂Me | Me | SO₂Me | CF₃ |
| 11-27 | CO₂Me | Me | NMe₂ | SO₂Me |
| 11-28 | CO₂Me | Cl | O(CH₂)₂OMe | Cl |
| 11-29 | CO₂Me | Me | NH(CH₂)₂OMe | SO₂Me |
| 11-30 | CO₂Me | Me | O(CH₂)₂NHSO2Me | SO₂Me |
| 11-31 | NHAc | CF3 | SMe | SO₂CH₃ |
| 11-32 | NHAc | CF3 | OCH₂(CO)NMe₂ | SO₂Me |
| 11-33 | NHAc | Cl | pyrazol-1-yl | SO₂Me |
| 11-34 | NHAc | F | SO₂Me | CF₃ |
| 11-35 | NHAc | Cl | CH₂OCH₂CF₃ | SO₂Me |
| 11-36 | NHAc | Cl | CH₂O-tetrahydrofuran-3-yl | SO₂Me |
| 11-37 | NHAc | Cl | 5-cyanomethyl-4,5-dihydro-1,2-oxazol-3-yl | SO₂Et |
| 11-38 | NHAc | Me | 4,5-dihydro-1,2-oxazol-3-yl | SO₂Me |
| 11-39 | NHAc | Me | SO₂Me | Cl |
| 11-40 | NHAc | Me | SO₂Me | SO₂Me |
| 11-41 | NHAc | Me | SO₂Me | CF₃ |
| 11-42 | NHAc | Me | NMe₂ | SO₂Me |
| 11-43 | NHAc | Cl | O(CH₂)₂OMe | Cl |
| 11-44 | NHAc | Me | NH(CH₂)₂OMe | SO₂Me |
| 11-45 | NHAc | Me | O(CH₂)₂NHSO₂Me | SO₂Me |
| 11-46 | Ac | CF₃ | SMe | SO₂CH₃ |
| 11-47 | Ac | CF₃ | OCH₂(CO)NMe₂ | SO₂Me |
| 11-48 | Ac | Cl | pyrazol-1-yl | SO₂Me |
| 11-49 | Ac | F | SO₂Me | CF₃ |
| 11-50 | Ac | Cl | CH₂OCH₂CF₃ | SO₂Me |
| 11-51 | Ac | Cl | CH₂O-tetrahydrofuran-3-yl | SO₂Me |
| 11-52 | Ac | Cl | 5-cyanomethyl-4,5-dihydro-1,2-oxazol-3-yl | SO₂Et |
| 11-53 | Ac | Me | 4,5-dihydro-1,2-oxazol-3-yl | SO₂Me |
| 11-54 | Ac | Me | SO₂Me | Cl |
| 11-55 | Ac | Me | SO₂Me | SO₂Me |
| 11-56 | Ac | Me | SO₂Me | CF₃ |
| 11-57 | Ac | Me | NMe₂ | SO₂Me |
| 11-58 | Ac | Cl | O(CH₂)₂OMe | Cl |
| 11-59 | Ac | Me | NH(CH₂)₂OMe | SO₂Me |
| 11-60 | Ac | Me | O(CH₂)₂NHSO2Me | SO₂Me |
| 11-61 | piperidin-1-yl | CF₃ | SMe | SO₂CH₃ |
| 11-62 | piperidin-1-yl | CF₃ | OCH₂(CO)NMe₂ | SO₂Me |
| 11-63 | piperidin-1-yl | Cl | Pyrazol-1-yl | SO₂Me |
| 11-64 | piperidin-1-yl | F | SO₂Me | CF₃ |
| 11-65 | piperidin-1-yl | Cl | CH₂OCH₂CF₃ | SO₂Me |
| 11-66 | piperidin-1-yl | Cl | CH₂O-tetrahydrofuran-3-yl | SO₂Me |
| 11-67 | piperidin-1-yl | Cl | 5-cyanomethyl-4,5-dihydro-1,2-oxazol-3-yl | SO₂Et |
| 11-68 | piperidin-1-yl | Me | 4,5-dihydro-1,2-oxazol-3-yl | SO₂Me |
| 11-69 | piperidin-1-yl | Me | SO₂Me | Cl |
| 11-70 | piperidin-1-yl | Me | SO₂Me | SO₂Me |
| 11-71 | piperidin-1-yl | Me | SO₂Me | CF₃ |
| 11-72 | piperidin-1-yl | Me | NMe2 | SO₂Me |
| 11-73 | piperidin-1-yl | Cl | O(CH₂)₂OMe | Cl |
| 11-74 | SMe | CF₃ | SMe | SO₂CH₃ |
| 11-75 | SMe | CF₃ | OCH₂(CO)NMe₂ | SO₂Me |
| 11-76 | SMe | Cl | pyrazol-1-yl | SO₂Me |
| 11-77 | SMe | F | SO₂Me | CF₃ |
| 11-78 | SMe | Cl | CH₂OCH₂CF₃ | SO₂Me |
| 11-79 | SMe | Cl | CH₂O-tetrahydrofuran-3-yl | SO₂Me |
| 11-80 | SMe | Cl | 5-cyanomethyl-4,5-dihydro-1,2-oxazol-3-yl | SO₂Et |
| 11-81 | SMe | Me | 4,5-dihydro-1,2-oxazol-3 yl | SO₂Me |
| 11-82 | SMe | Me | SO₂Me | Cl |
| 11-83 | SMe | Me | SO₂Me | SO₂Me |
| 11-84 | SMe | Me | SO₂Me | CF₃ |
| 11-85 | SMe | Me | NMe₂ | SO₂Me |
| 11-86 | SMe | Cl | O(CH₂)₂OMe | Cl |
| 11-87 | SMe | Me | NH(CH₂)₂OMe | SO₂Me |
| 11-88 | SMe | Me | O(CH₂)₂NHSO₂Me | SO₂Me |
| 11-89 | Cl | CF₃ | SMe | SO₂CH₃ |
| 11-90 | Cl | CF₃ | OCH₂(CO)NMe₂ | SO₂Me |
| 11-91 | Cl | Cl | pyrazol-1-yl | SO₂Me |
| 11-92 | Cl | F | SO₂Me | CF₃ |
| 11-93 | Cl | Cl | CH₂OCH₂CF₃ | SO₂Me |
| 11-94 | Cl | Cl | CH₂O-tetrahydrofuran-3-yl | SO₂Me |
| 11-95 | Cl | Cl | 5-cyanomethyl-dihydro-1,2-oxazol-3-yl | SO₂Et |
| 11-96 | Cl | Me | 4,5-dihydro-1,2-oxazol-3-yl | SO₂Me |
| 11-97 | Cl | Me | SO₂Me | Cl |
| 11-98 | Cl | Me | SO₂Me | SO₂Me |
| 11-99 | Cl | Me | SO₂Me | CF₃ |
| 11-100 | Cl | Me | NMe₂ | SO₂Me |
| 11-101 | Cl | Cl | O(CH₂)₂OMe | Cl |
| 11-102 | Cl | Me | NH(CH₂)₂OMe | SO₂Me |
| 11-103 | Cl | Me | O(CH₂)₂NHSO₂Me | SO₂Me |
| 11-104 | Br | CF3 | SMe | SO₂CH₃ |
| 11-105 | Br | CF3 | OCH₂(CO)NMe₂ | SO₂Me |
| 11-106 | Br | Cl | pyrazol-1-yl | SO₂Me |
| 11-107 | Br | F | SO₂Me | CF₃ |
| 11-108 | Br | Cl | CH₂OCH₂CF₃ | SO₂Me |
| 11-109 | Br | Cl | CH₂O-tetrahydrofuran-3-yl | SO₂Me |
| 11-110 | Br | Cl | 5-cyanomethyl-dihydro-1,2-oxazol-3-yl | SO₂Et |
| 11-111 | Br | Me | 4,5-dihydro-1,2-oxazol-3-yl | SO₂Me |
| 11-112 | Br | Me | SO₂Me | Cl |
| 11-113 | Br | Me | SO₂Me | SO₂Me |
| 11-114 | Br | Me | SO₂Me | CF₃ |
| 11-115 | Br | Me | NMe₂ | SO₂Me |
| 11-116 | Br | Cl | O(CH₂)₂OMe | Cl |
| 11-117 | Br | Me | NH(CH₂)₂OMe | SO₂Me |
| 11-118 | Br | Me | O(CH₂)₂NHSO₂Me | SO₂Me |
| 11-119 | I | CF₃ | SMe | SO₂CH₃ |
| 11-120 | I | CF₃ | OCH₂(CO)NMe₂ | SO₂Me |
| 11-121 | I | Cl | pyrazol-1-yl | SO₂Me |
| 11-122 | I | F | SO₂Me | CF₃ |
| 11-123 | I | Cl | CH₂OCH₂CF₃ | SO₂Me |
| 11-124 | I | Cl | CH₂O-tetrahydrofuran-3-yl | SO₂Me |
| 11-125 | I | Cl | 5-cyanomethyl-4,5-dihydro-1,2-oxazol-3-yl | SO₂Et |
| 11-126 | I | Me | 4,5-dihydro-1,2-oxazol-3-yl | SO₂Me |
| 11-127 | I | Me | SO₂Me | Cl |
| 11-128 | I | Me | SO₂Me | SO₂Me |
| 11-129 | I | Me | SO₂Me | CF₃ |
| 11-130 | I | Me | NMe₂ | SO₂Me |
| 11-131 | I | Cl | O(CH₂)₂OMe | Cl |
| 11-132 | I | Me | NH(CH₂)₂OMe | SO₂Me |
| 11-133 | I | Me | O(CH₂)₂NHSO₂Me | SO₂Me |
| 11-134 | C(O)NH2 | CF₃ | SMe | SO₂CH₃ |
| 11-135 | C(O)NH2 | CF₃ | OCH₂(CO)NMe₂ | SO₂Me |
| 11-136 | C(O)NH2 | Cl | pyrazol-1-yl | SO₂Me |
| 11-137 | C(O)NH2 | F | SO₂Me | CF₃ |
| 11-138 | C(O)NH2 | Cl | CH₂OCH₂CF₃ | SO₂Me |
| 11-139 | C(O)NH2 | Cl | CH₂O-tetrahydrofuran-3-yl | SO₂Me |
| 11-140 | C(O)NH2 | Cl | 5-cyanomethyl-4,5-dihydro-1,2-oxazol-3-yl | SO₂Et |
| 11-141 | C(O)NH2 | Me | 4,5-dihydro-1,2-oxazol-3-yl | SO₂Me |
| 11-142 | CH₂OMe | Me | SO₂Me | Cl |
| 11-143 | CH₂OMe | Me | SO₂Me | SO₂Me |
| 11-144 | CH₂OMe | Me | SO₂Me | CF₃ |
| 11-145 | CH₂OMe | Me | NMe₂ | SO₂Me |
| 11-146 | CH₂OMe | Cl | O(CH₂)₂OMe | Cl |
| 11-147 | CH₂OMe | Me | NH(CH₂)₂OMe | SO₂Me |
| 11-148 | CH₂OMe | Me | O(CH₂)₂NHSO₂Me | SO₂Me |
| 11-149 | NH₂ | CF₃ | SMe | SO₂CH₃ |
| 11-150 | NH₂ | CF₃ | OCH₂ (CO)NMe₂ | SO₂Me |
| 11-151 | NH₂ | Cl | pyrazol-1-yl | SO₂Me |
| 11-152 | NH₂ | Me | 1,2,3-triazol-2-yl | SO₂Me |
| 11-153 | NH₂ | Cl | CH₂OCH₂CF₃ | SO₂Me |
| 11-154 | NH₂ | Cl | CH₂O-tetrahydrofuran-3-yl | SO₂Me |
| 11-155 | NH₂ | Cl | 5-cyanomethyl-4,5-dihydro-1,2-oxazol-3-yl | SO₂Et |
| 11-156 | NH₂ | Me | 4,5-dihydro-1,2-oxazol-3 yl | SO₂Me |
| 11-157 | NH₂ | Me | SO₂Me | Cl |
| 11-158 | NH₂ | Me | SO₂Me | SO₂Me |
| 11-159 | NH₂ | Me | SO₂Me | CF₃ |
| 11-160 | NH₂ | Me | NMe₂ | SO₂Me |
| 11-161 | NH₂ | Cl | O(CH₂)₂OMe | Cl |
| 11-162 | NH₂ | Me | NH(CH₂)₂OMe | SO₂Me |
| 11-163 | NH₂ | Me | O(CH₂)₂NHSO₂Me | SO₂Me |
| 11-164 | H | CF₃ | SMe | SO₂CH₃ |
| 11-165 | H | CF₃ | OCH₂(CO)NMe₂ | SO₂Me |
| 11-166 | H | Cl | pyrazol-1-yl | SO₂Me |
| 11-167 | H | F | SO₂Me | CF₃ |
| 11-168 | H | Cl | CH₂OCH₂CF₃ | SO₂Me |
| 11-169 | H | Cl | CH₂O-tetrahydrofuran-3-yl | SO₂Me |
| 11-170 | H | Cl | 5-cyanomethyl-4,5-dihydro-1,2-oxazol-3-yl | SO₂Et |
| 11-171 | H | Me | 4,5-dihydro-1,2-oxazol-3-yl | SO₂Me |
| 11-172 | H | Me | SO₂Me | Cl |
| 11-173 | H | Me | SO₂Me | SO₂Me |
| 11-174 | H | Me | SO₂Me | CF₃ |
| 11-175 | H | Me | NMe₂ | SO₂Me |
| 11-176 | H | Cl | O(CH₂)₂OMe | Cl |
| 11-177 | H | Me | NH(CH₂)₂OMe | SO₂Me |
| 11-178 | H | Me | O(CH₂)₂NHSO₂Me | SO₂Me |
| 11-179 | NO₂ | CF₃ | SMe | SO₂CH₃ |
| 11-180 | NO₂ | CF₃ | OCH₂(CO)NMe₂ | SO₂Me |
| 11-181 | NO₂ | Cl | pyrazol-1-yl | SO₂Me |
| 11-182 | NO₂ | F | SO₂Me | CF₃ |
| 11-183 | NO₂ | Cl | CH₂OCH₂CF₃ | SO₂Me |
| 11-184 | NO₂ | Cl | CH₂O-tetrahydrofuran-3-yl | SO₂Me |
| 11-185 | NO₂ | Cl | 5-cyanomethyl-4,5-dihydro-1,2-oxazol-3-yl | SO₂Et |
| 11-186 | NO₂ | Me | 4,5-dihydro-1,2-oxazol-3-yl | SO₂Me |
| 11-187 | NO₂ | Me | SO₂Me | Cl |
| 11-188 | NO₂ | Me | SO₂Me | SO₂Me |
| 11-189 | NO₂ | Me | SO₂Me | CF₃ |
| 11-190 | NO₂ | Me | NMe₂ | SO₂Me |
| 11-191 | NO₂ | Cl | O(CH₂)₂OMe | Cl |
| 11-192 | NO₂ | Me | NH(CH₂)₂OMe | SO₂Me |
| 11-193 | NO₂ | Me | O(CH₂)₂NHSO2Me | SO₂Me |
| 11-194 | c-Pr | CF₃ | SMe | SO₂CH₃ |
| 11-195 | c-Pr | CF₃ | OCH2(CO)NMe2 | SO₂Me |
| 11-196 | c-Pr | Cl | pyrazol-1-yl | SO₂Me |
| 11-197 | c-Pr | F | SO₂Me | CF₃ |
| 11-198 | c-Pr | Cl | CH₂OCH₂CF₃ | SO₂Me |
| 11-199 | c-Pr | Cl | CH₂O-tetrahydrofuran-3-yl | SO₂Me |
| 11-200 | c-Pr | Cl | 5-cyanomethyl-4,5-dihydro-1,2-oxazol-3-yl | SO₂Et |
| 11-201 | c-Pr | Me | 4,5-dihydro-1,2-oxazol-3-yl | SO₂Me |
| 11-202 | c-Pr | Me | SO₂Me | Cl |
| 11-203 | c-Pr | Me | SO₂Me | SO₂Me |
| 11-204 | c-Pr | Me | SO₂Me | CF₃ |
| 11-205 | c-Pr | Me | NMe₂ | SO₂Me |
| 11-206 | c-Pr | Cl | O(CH₂)₂OMe | Cl |
| 11-207 | c-Pr | Me | NH(CH₂)₂OMe | SO₂Me |
| 11-208 | c-Pr | Me | O(CH₂)₂NHSO₂Me | SO₂Me |
| 11-209 | piperidin-1-yl | Cl | SMe | SO₂Me |
| 11-210 | piperidin-1-yl | F | S(O)Me | CF₃ |
| 11-211 | piperidin-1-yl | Cl | (tetrahydrofuran-2-ylmethoxy)methyl | SO₂Me |
| 11-212 | piperidin-1-yl | Cl | Me | SO₂Et |
| 11-213 | piperidin-1-yl | Me | Me | SO₂Me |
| 11-214 | piperidin-1-yl | Cl | Me | SO₂Me |
| 11-215 | piperidin-1-yl | Me | Cl | SO₂Me SO₂Me |
| 11-216 | piperidin-1-yl | Me | S(O)Me | CF₃ |
| 11-217 | piperidin-1-yl | Cl | Cl | SO₂Me |
| 11-218 | NO₂ | Me | S(O)Me | CF₃ |
| 11-219 | NH₂ | Cl | (tetrahydrofuran-2-ylmethoxy)methyl | SO₂Me |
| 11-220 | NH₂ | Me | 1,2,3-triazol-1-yl | SO₂Me |
| 11-221 | CO₂Me | F | S(O)Me | CF₃ |
| 11-222 | CO₂Me | Cl | (tetrahydrofuran-2-ylmethoxy)methyl | SO₂Me |
| 11-223 | CO₂Me | Me | Cl | SO₂Me |
| 11-224 | CO₂Me | Me | S(O)Me | CF₃ |
| 11-225 | CO₂Me | Cl | 1H-pyrazol-1-yl | SO₂Me |
| 11-226 | CO₂Me | Me | F | SO₂Me |
| 11-227 | CO₂Me | Me | 1,2,4-Triazol-1-yl | SO₂Me |
| 11-228 | CO₂Me | Cl | Cl | SO₂Me |
| 11-229 | CO₂Me | Me | Me | SMe |
| 11-230 | CO₂Me | Cl | Me | Cl |
| 11-231 | CO₂Me | Cl | F | Me |
| 11-232 | CO₂Me | Cl | SMe | SO₂Me |
| 11-233 | CO₂Et | Me | SO₂Me | CF₃ |
| 11-234 | CO₂H | Me | SO₂Me | CF₃ |
| 11-235 | piperidin-1-yl-carbonyl | Cl | 5-cyanomethyl-4,5-dihydro-1,2-oxazol-3-yl | SO₂Et |
| 11-236 | piperidin-1-yl-carbonyl | Cl | CH₂OCH₂CF₃ | SO₂Me |
| 11-237 | piperidin-1-yl-carbonyl | Me | SO₂Me | CF₃ |
| 11-238 | piperidin-1-yl-carbonyl | Me | Cl | SO₂Me |
| 11-239 | SEt | Me | SO₂Me | CF₃ |
| 11-240 | SPh | Me | SO₂Me | CF₃ |
| 11-241 | SO₂Me | Me | SO₂Me | CF₃ |
| 11-242 | Br | Me | Me | SO₂Me |
| 11-243 | S(O)Me | Me | SO₂Me | CF₃ |
| 11-244 | S(O)Me | Me | Me | SO₂Me |
| 11-245 | c-Pr | Me | S(O)Me | CF₃ |
| 11-246 | c-Pr | Cl | (tetrahydrofuran-2-ylmethoxy)methyl | SO₂Me |
| 11-247 | c-Pr | Cl | Cl | SO₂Me |
| 11-248 | c-Pr | Me | Me | SO₂Me |
| 11-249 | Bz | Me | SMe | CF₃ |
| 11-250 | Bz | Me | S(O)Me | CF₃ |
| 11-251 | Bz | Me | SO₂Me | CF₃ |
| 11-252 | Bz | Me | SMe | SO₂CH₃ |
| 11-253 | Bz | Me | S(O)Me | SO₂CH₃ |
| 11-254 | Bz | Me | SO₂Me | SO₂CH₃ |
| 11-255 | Bz | F | SMe | CF₃ |
| 11-256 | Bz | F | S(O)Me | CF₃ |
| 11-257 | Bz | F | SO₂Me | CF₃ |

As already disclosed in PCT/EP2010/005739, the compounds of the formula (I) and/or their salts to be used according to the invention, hereinbelow also referred to together as "compounds according to the invention", have excellent herbicidal efficacy against a broad spectrum of economically important monocotyledonous and dicotyledonous annual harmful plants. The active compounds act efficiently even on perennial weeds which produce shoots from rhizomes, rootstocks and other perennial organs and which are difficult to control.

The present invention therefore relates to a method for controlling unwanted plants, in areas of transgenic crop plants being tolerant to HPPD inhibitor herbicides by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, comprising the application of one or more N-(1,2,5-oxadiazol-3-yl)benzamides whose phenyl ring is substituted in the 2-, 3- and 4-position as defined above to the plants (for example harmful plants such as monocotyledonous or dicotyledonous weeds or undesired crop plants), to the seed (for example grains, seeds or vegetative propagules such as tubers or shoot parts with buds) or to the area on which the plants grow (for example the area under cultivation). Specific examples may be mentioned of some representatives of the monocotyledonous and dicotyledonous weed flora which can be controlled by the compounds according to the invention, without the enumeration being restricted to certain species.

Monocotyledonous harmful plants of the genera: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Dicotyledonous weeds of the genera: Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Trangenic crop plants of economically important crops to which the N-(1,2,5-oxadiazol-3-yl)benzamides whose phenyl ring is substituted in the 2-, 3- and 4-position as defined above might be applied are, for example dicotyledonous crops of the genera Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, or monocotyledonous crops of the genera Allium, Ananas, Asparagus, Avena, Hordeum, Oryza, Panicum, Saccharum, Secale, Sorghum, Triticale, Triticum, Zea, in particular Zea and Triticum.

This is why the present invention preferably relates to the method for controlling unwanted plants, in areas of transgenic crop plants being tolerant to HPPD inhibitor herbicides by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, comprising the application of one or more N-(1,2,5-oxadiazol-3-yl)benzamides whose phenyl ring is substituted in the 2-, 3- and 4-position as defined above to the plants (for example harmful plants such as monocotyledonous or dicotyledonous weeds or undesired crop plants), to the seed (for example grains, seeds or vegetative propagules such as tubers or shoot parts with buds) or to the area on which the plants grow (for example the area under cultivation) in dicotyledonous crops of the genera Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, or monocotyledonous crops of the genera Allium, Ananas, Asparagus, Avena, Hordeum, Oryza, Panicum, Saccharum, Secale, Sorghum, Triticale, Triticum, Zea, in particular Zea and Triticum.

It is preferred to use the N-(1,2,5-oxadiazol-3-yl)benzamides whose phenyl ring is substituted in the 2-, 3- and 4-position by selected radicals as defined above or their salts in economically important transgenic crops of useful plants and ornamentals, for example of cereals such as wheat, barley, rye, oats, sorghum/millet, rice, cassava and maize or else crops of sugar beet, sugar cane, cotton, soybean, oilseed rape, potato, tomato, peas and other vegetables, which crops contain one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575

The invention also relates to the use, in a method for transforming plants, of a nucleic acid which encodes an HPPD as a marker gene or as a coding sequence which makes it possible to confer to the plant tolerance to herbicides which are HPPD inhibitors, and the use of N-(1,2,5-oxadiazol-3-yl)benzamides whose phenyl ring is substituted in the 2-, 3- and 4-position by selected radicals as defined above or their salts on plants containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

In the commercial production of crops, it is desirable to eliminate under reliable pesticidial management unwanted plants (i.e.,"weeds") from a field of crop plants. An ideal treatment would be one which could be applied to an entire field but which would eliminate only the unwanted plants while leaving the crop plants unaffected. One such treatment system would involve the use of crop plants which are tolerant to an herbicide so that when the herbicide is sprayed on a field of herbicide-tolerant crop plants, the crop plants would continue to thrive while non-herbicide-tolerant weeds are killed or severely damaged. Ideally, such treatment systems would take advantage of varying herbicide properties so that weed control could provide the best possible combination of flexibility and economy. For example, individual herbicides have different longevities in the field, and some herbicides persist and are effective for a relatively long time after they are applied to a field while other herbicides are quickly broken down into other and/or non-active compounds. An ideal treatment system would allow the use of different herbicides so that growers could tailor the choice of herbicides for a particular situation.

While a number of herbicide-tolerant crop plants are presently commercially available, one issue that has arisen for many commercial herbicides and herbicide/crop combinations is that individual herbicides typically have incomplete spectrum of activity against common weed species. For most individual herbicides which have been in use for some time, populations of herbicide resistant weed species and biotypes have become more prevalent (see, e.g., Tranel and Wright (2002) Weed Science 50: 700-712; Owen and Zelaya (2005) Pest Manag. Sci. 61: 301-311). Transgenic plants which are resistant to more than one herbicide have been described (see, e.g., WO2005/012515). However, improvements in every aspect of crop production, weed control options, extension of residual weed control, and improvement in crop yield are continuously in demand.

The above defined chimeric gene(s) encoding one or more HPPD protein(s) or mutants thereof being functional in transgenic plants in order to perform tolerance to HPPD inhibitor herbicides belonging to the class of N-(1,2,5-oxadiazol-3-yl)benzamides whose phenyl ring is substituted in the 2-, 3- and 4-position by selected radicals as defined above or their salts is/are advantageously combined in plants with other genes which encode proteins or RNAs that confer useful agronomic properties to such plants. Among the genes which encode proteins or RNAs that confer useful agronomic properties on the transformed plants, mention can be made of the DNA sequences encoding proteins which confer tolerance to one or more herbicides that, according to their chemical structure, differ from HPPD inhibitor herbicides, and others which confer tolerance to certain insects, those which confer tolerance to certain diseases and or biotic and abiotic stresses, DNAs that encodes RNAs that provide nematode or insect control, etc..

Such genes are in particular described in published PCT Patent Applications WO 91/02071 and WO95/06128.

Among the DNA sequences encoding proteins which confer tolerance to certain herbicides on the transformed plant cells and plants, mention can be made of a bar or PAT gene or the *Streptomyces coelicolor* gene described in WO2009/152359 which confers tolerance to glufosinate herbicides, a gene encoding a suitable EPSPS which confers tolerance to herbicides having EPSPS as a target, such as glyphosate and its salts (US 4,535,060, US 4,769,061, US 5,094,945, US 4,940,835, US 5,188,642, US 4,971,908, US 5,145,783, US 5,310,667, US 5,312,910, US 5,627,061, US 5,633,435), or a gene encoding glyphosate oxydoreductase (US 5,463,175).

Among the DNA sequences encoding a suitable EPSPS which confer tolerance to the herbicides which have EPSPS as a target, mention will more particularly be made of the gene which encodes a plant EPSPS, in particular maize EPSPS, particularly a maize EPSPS which comprises two mutations, particularly a mutation at amino acid position 102 and a mutation at amino acid position 106 (WO 2004/074443), and which is described in Patent Application US 6566587, hereinafter named double mutant maize EPSPS or 2mEPSPS, or the gene which encodes an EPSPS isolated from Agrobacterium and which is described by SEQ ID No. 2 and SEQ ID No. 3 of US Patent 5,633,435, also named CP4.

Among the DNA sequences encoding a suitable EPSPS which confer tolerance to the herbicides which have EPSPS as a target, mention will more particularly be made of the gene which encodes an EPSPS GRG23 from Arthrobacter globiformis, but also the mutants GRG23 ACE1, GRG23 ACE2, or GRG23 ACE3, particularly the mutants or variants of GRG23 as described in WO2008/100353, such as GRG23(ace3)R173K of SEQ ID No. 29 in WO2008/100353.

In the case of the DNA sequences encoding EPSPS, and more particularly encoding the above genes, the sequence encoding these enzymes is advantageously preceded by a sequence encoding a transit peptide, in particular the "optimized transit peptide" described in US Patent 5,510,471 or 5,633,448.

In WO 2007/024782, plants being tolerant to glyphosate and at least one ALS (acetolactate synthase) inhibitor are disclosed. More specifically plants containing genes encoding a GAT (Glyphosate-N-Acetyltransferase) polypeptide and a polypeptide conferring resistance to ALS inhibitors are disclosed.

In US 6855533, transgenic tobacco plants containing mutated Arabidopsis ALS/AHAS genes were disclosed.

In US 6,153,401, plants containing genes encoding 2,4-D-monooxygenases conferring tolerance to 2,4-D (2,4-dichlorophenoxyacetic acid) by metabolisation are disclosed.

In US 2008/0119361 and US 2008/0120739, plants containing genes encoding Dicamba monooxygenases conferring tolerance to dicamba (3,6-dichloro-2-methoxybenzoic acid) by metabolisation are disclosed.

In WO2011/028833 and WO2011/028832 plants containing genes encoding mutagenized or recombinant Acetyl-coenzyme-A carboylase (ACCase) conferring tolerance to at least one herbicide is selected from the group consisting of alloxydim, butroxydim, clethodim, cloproxydim, cycloxydim, sethoxydim, tepraloxydim, tralkoxydim, chlorazifop, clodinafop, clofop, diclofop, fenoxaprop, fenoxaprop-P, fenthiaprop, fluazifop, fluazifop-P, haloxyfop, haloxyfop-P, isoxapyrifop, propaquizafop, quizalofop, quizalofop-P, trifop, and pinoxaden or agronomically acceptable salts or esters of any of these herbicides are disclosed.

All the above mentioned herbicide tolerance traits can be combined with those performing HPPD tolerance in plants concerning N-(1,2,5-oxadiazol-3-yl)benzamides whose phenyl ring is substituted in the 2-, 3- and 4-position by selected radicals as defined above or their salts by containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

Among the DNA sequences encoding proteins concerning properties of tolerance to insects, mention will more particularly be made of the Bt proteins widely described in the literature and well known to those skilled in the art. Mention will also be made of proteins extracted from bacteria such as *Photorhabdus* (WO 97/17432 & WO 98/08932).

Among such DNA sequences encoding proteins of interest which confer novel properties of tolerance to insects, mention will more particularly be made of the Bt Cry or VIP proteins widely described in the literature and well known to those skilled in the art. These include the Cry1F protein or hybrids derived from a Cry1F protein (e.g., the hybrid Cry1A-Cry1F proteins described in US 6,326,169; US 6,281,016; US 6,218,188, or toxic fragments thereof), the Cry1A-type proteins or toxic fragments thereof, preferably the Cry1Ac protein or hybrids derived from the Cry1Ac protein (e.g., the hybrid Cry1Ab-Cry1Ac protein described in US 5,880,275) or the Cry1Ab or Bt2 protein or insecticidal fragments thereof as described in EP451878, the Cry2Ae, Cry2Af or Cry2Ag proteins as described in WO02/057664 or toxic fragments thereof, the Cry1A.105 protein described in WO 2007/140256 (SEQ ID No. 7) or a toxic fragment thereof, the VIP3Aa19 protein of NCBI accession ABG20428, the VIP3Aa20 protein of NCBI accession ABG20429 (SEQ ID No. 2 in WO 2007/142840), the VIP3A proteins produced in the COT202 or COT203 cotton events (WO 2005/054479 and WO 2005/054480, respectively), the Cry proteins as described in WO01/47952, the VIP3Aa protein or a toxic fragment thereof as described in Estruch et al. (1996), Proc Natl Acad Sci USA. 28;93(11):5389-94 and US 6,291,156, the insecticidal proteins from *Xenorhabdus* (as described in WO98/50427), *Serratia* (particularly from *S. entomophila*) or *Photorhabdus* species strains, such as Tc-proteins from Photorhabdus as described in WO98/08932 (e.g., Waterfield et al., 2001, Appl Environ Microbiol. 67(11):5017-24; Ffrench-Constant and Bowen, 2000, Cell Mol Life Sci.; 57(5):828-33). Also any variants or mutants of any one of these proteins differing in some (1-10, preferably 1-5) amino acids from any of the above sequences, particularly the sequence of their toxic fragment, or which are fused to a transit peptide, such as a plastid transit peptide, or another protein or peptide, is included herein.

The present invention also relates to the use of N-(1,2,5-oxadiazol-3-yl)benzamides whose phenyl ring is substituted in the 2-, 3- and 4-position by selected radicals as defined above or their salts in transgenic plants comprising a chimeric gene (or expression cassette) which comprises a coding sequence as well as heterologous regulatory elements, at the 5' and/or 3' position, at least at the 5' position, which are able to function in a host organism, in particular plant cells or plants, with the coding sequence containing at least one nucleic acid sequence which encodes an HPPD (I) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13, (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) represents HPPD encoded by a mutated nucleic acid sequence of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

In another particular embodiment, the present invention relates to the use of N-(1,2,5-oxadiazol-3-yl)benzamides whose phenyl ring is substituted in the 2-, 3- and 4-position by selected radicals as defined above or their salts in transgenic plant comprising a chimeric gene as previously described, wherein the chimeric gene contains in the 5' position of the nucleic acid sequence encoding hydroxyphenylpyruvate dioxygenase (HPPD) (I) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) encoded by a mutated nucleic acid sequence of HPPD encoding genes of the before defined organisms, preferably mutants as described in WO 2010/085705, US6,245,968, WO 2009/144079, , PCT/EP2010/070561, PCT/EP2010/070567, PCT/EP2010/070578, PCT/EP2010/070570, or PCT/EP2010/070575., a nucleic acid sequence which encodes a plant transit peptide, with this sequence being arranged between the promoter region and the nucleic acid sequence encoding hydroxyphenylpyruvate dioxygenase (HPPD) (I) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) encoded by a mutated nucleic acid sequence of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, so as to permit expression of a transit peptide/HPPD fusion protein.

In a further particular embodiment, the present invention relates to the use of N-(1,2,5-oxadiazol-3-yl)benzamides whose phenyl ring is substituted in the 2-, 3- and 4-position by selected radicals as defined above or their salts on plants, plant parts, or plant seeds containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, or to the use of N-(1,2,5-oxadiazol-3-yl)benzamides whose phenyl ring is substituted in the 2-, 3- and 4-position by selected radicals as defined above or their salts on soil where such plants, plant parts or seeds are to be grown or sown, either alone or in combination with one or more other known herbicides acting in a different matter to HPPD inhibitors.

In a further particular embodiment, the N-(1,2,5-oxadiazol-3-yl)benzamides whose phenyl ring is substituted in the 2-, 3- and 4-position by selected radicals as defined above or their salts herbicide can applied in combination either in mixture, simultaneously or successively with HPPD inhibitor herbicides selected from the group consisting of triketones (named triketone HPPD inhibitor), such as tembotrione, sulcotrione mesotrione, bicyclopyrone, tefuryltrione, particularly tembotrione, of the class diketone such as diketonitrile of the class of isoxazoles such as isoxaflutole or of the class of pyrazolinates (named pyrazolinate HPPD inhibitor), such as pyrasulfotole, pyrazolate, topramezone, benzofenap, even more specifically present invention relates to the application of tembotrione, mesotrione, diketonitrile, bicyclopyrone, tefuryltrione, benzofenap, pyrasulfotole, pyrazolate and sulcotrione to such HPPD inhibitor tolerant plants, plant parts or plant seeds containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No.12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 , or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575.

As a regulatory sequence which functions as a promoter in plant cells and plants, use may be made of any promoter sequence of a gene which is naturally expressed in plants, in particular a promoter which is expressed especially in the leaves of plants, such as for example "constitutive" promoters of bacterial, viral or plant origin, or "light-dependent" promoters, such as that of a plant ribulose-biscarboxylase/oxygenase (RuBisCO) small subunit gene, or any suitable known promoter-expressible which may be used. Among the promoters of plant origin, mention will be made of the histone promoters as described in EP 0 507 698 A1, the rice actin promoter (US 5,641,876), or a plant ubiquitin promoter (US 5,510,474). Among the promoters of a plant virus gene, mention will be made of that of the cauliflower mosaic virus (CaMV 19S or 35S, Sanders et al. (1987), Nucleic Acids Res. 15(4):1543-58.), the circovirus (AU 689 311) or the Cassava vein mosaic virus (CsVMV, US 7,053,205).

In a further particular embodiment, present invention relates to the use of N-(1,2,5-oxadiazol-3-yl)benzamides whose phenyl ring is substituted in the 2-, 3- and 4-position by selected radicals as defined above or their salts on plants, plant parts, or plant seeds comprising a promoter sequence specific for particular regions or tissues of plants can be used to express one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, such as promoters specific for seeds (Datla, R. et al., 1997, Biotechnology Ann. Rev. 3, 269-296), especially the napin promoter (EP 255 378 A1), the phaseolin promoter, the glutenin promoter, the helianthinin promoter (WO 92/17580), the albumin promoter (WO 98/45460), the oleosin promoter (WO 98/45461), the SAT1 promoter or the SAT3 promoter (PCT/US98/06978).

Use may also be made of an inducible promoter advantageously chosen from the phenylalanine ammonia lyase (PAL), HMG-CoA reductase (HMG), chitinase, glucanase, proteinase inhibitor (PI), PR1 family gene, nopaline synthase (nos) and vspB promoters (US 5 670 349, Table 3), the HMG2 promoter (US 5 670 349), the apple beta-galactosidase (ABG1) promoter and the apple aminocyclopropane carboxylate synthase (ACC synthase) promoter (WO 98/45445).

The genes encoding hydroxyphenylpyruvate dioxygenase (HPPD) (I) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) represented by a mutated DNA sequence of HPPD encoding genes of the before defined organisms, preferably represented by mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 may also be used in combination with the promoter, of other regulatory sequences, which are located between the promoter and the coding sequence, such as transcription activators ("enhancers"), for instance the translation activator of the tobacco mosaic virus (TMV) described in Application WO 87/07644, or of the tobacco etch virus (TEV) described by Carrington & Freed 1990, J. Virol. 64: 1590-1597, for example, or introns such as the adh1 intron of maize or intron 1 of rice actin in order to perform a sufficient tolerance to N-(1,2,5-oxadiazol-3-yl)benzamides whose phenyl ring is substituted in the 2-, 3- and 4-position by selected radicals as defined above or their salts.

In a further particular embodiment, the present invention relates to the use of N-(1,2,5-oxadiazol-3-yl)benzamides whose phenyl ring is substituted in the 2-, 3- and 4-position by selected radicals as defined above or their salts on plants, plant parts, or plant seeds containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 and also containing a CYP450 Maize monooxygenase (nsf1 gene) gene being under the control of an identical or different plant expressible promoter in order to confer tolerance to N-(1,2,5-oxadiazol-3-yl)benzamides whose phenyl ring is substituted in the 2-, 3- and 4-position by selected radicals as defined above or their salts.

As a regulatory terminator or polyadenylation sequence, use may be made of any corresponding sequence of bacterial origin, such as for example the nos terminator of *Agrobacterium tumefaciens*, of viral origin, such as for example the CaMV 35S terminator, or of plant origin, such as for example a histone terminator as described in published Patent Application EP 0 633 317 A1.

It is to be understood that in order to obtain an optimized expression by a host adapted codon usage of the respective chimeric gene(s), one could adopt non-planta genes to the codon usage of the respective plant organism in which such chimeric genes will be inserted. Accordingly, in all of the described chimeric genes expressing HPPD of non-planta origin, the respective HPPD encocing DNA sequence can be replaced by an amended DNA sequence encoding the identical amino acid sequence, i.e. SEQ ID No. 3 can be replaced by SEQ ID No. 5., SEQ ID No. 6 can be replaced by SEQ ID No. 18, SEQ ID No. 8 can be replaced by SEQ ID No. 19, SEQ ID No. 10 can be replaced by SEQ ID No. 20, SEQ ID No. 12 can be replaced by SEQ ID No. 21, SEQ ID No. 14 can be replaced by SEQ ID No. 22, SEQ ID No, 16 can be replace by SEQ ID No.23.

The term "gene", as used herein refers to a DNA coding region flanked by 5' and/or 3' regulatory sequences allowing a RNA to be transcribed which can be translated to a protein, typically comprising at least a promoter region. A "chimeric gene", when referring to an HPPD encoding DNA, refers to an HPPD encoding DNA sequence having 5' and/or 3' regulatory sequences different from the naturally occurring bacterial 5' and/or 3' regulatory sequences which drive the expression of the HPPD protein in its native host cell (also referred to as "heterologous promoter" or "heterologous regulatory sequences").

The terms "DNA/protein comprising the sequence X" and "DNA/protein with the sequence comprising sequence X", as used herein, refer to a DNA or protein including or containing at least the sequence X in their nucleotide or amino acid sequence, so that other nucleotide or amino acid sequences can be included at the 5' (or N-terminal) and/or 3' (or C-terminal) end, e.g., a N-terminal transit or signal peptide. The term "comprising", as used herein, is open-ended language in the meaning of "including", meaning that other elements then those specifically recited can also be present. The term "consisting of", as used herein, is closed-ended language, i.e., only those elements specifically recited are present. The term "DNA encoding a protein comprising sequence X", as used herein, refers to a DNA comprising a coding sequence which after transcription and translation results in a protein containing at least amino acid sequence X. A DNA encoding a protein need not be a naturally occurring DNA, and can be a semi-synthetic, fully synthetic or artificial DNA and can include introns and 5' and/or 3' flanking regions. The term "nucleotide sequence", as used herein, refers to the sequence of a DNA or RNA molecule, which can be in single- or double-stranded form.

HPPD proteins according to the invention may be equipped with a signal peptide according to procedures known in the art, see, e.g., published PCT patent application WO 96/10083, or they can be replaced by another peptide such as a chloroplast transit peptide (e.g., Van Den Broeck et al., 1985, Nature 313, 358, or a modified chloroplast transit peptide of US patent 5, 510,471) causing transport of the protein to the chloroplasts, by a secretory signal peptide or a peptide targeting the protein to other plastids, mitochondria, the ER, or another organelle, or it can be replaced by a methionine amino acid or by a methionine-alanine dipeptide. Signal sequences for targeting to intracellular organelles or for secretion outside the plant cell or to the cell wall are found in naturally targeted or secreted proteins, preferably those described by Klösgen et al. (1989, Mol. Gen. Genet. 217, 155-161), Klösgen and Weil (1991, Mol. Gen. Genet. 225, 297-304), Neuhaus & Rogers (1998, Plant Mol. Biol. 38, 127-144), Bih et al. (1999, J. Biol. Chem. 274, 22884-22894), Morris et al. (1999, Biochem. Biophys. Res. Commun. 255, 328-333), Hesse et al. (1989, EMBO J. 8 2453-2461), Tavladoraki et al. (1998, FEBS Lett. 426, 62-66), Terashima et al. (1999, Appl. Microbiol. Biotechnol. 52, 516-523), Park et al. (1997, J. Biol. Chem. 272, 6876-6881), Shcherban et al. (1995, Proc. Natl. Acad. Sci USA 92, 9245-9249), all of which are incorporated herein by reference, particularly the signal peptide sequences from targeted or secreted proteins of corn, cotton, soybean, or rice. A DNA sequence encoding such a plant signal peptide can be inserted in the chimeric gene encoding the HPPD protein for expression in plants.

The invention also encompasses variant HPPD enzymes which are amino acid sequences similar to the HPPD amino acid sequence of SEQ ID No. 2, SEQ ID No. ID No. 4, SEQ ID No. 7, SEQ ID No. 9, SEQ ID No. 11, SEQ ID No. 13, SEQ ID No. 15, and SEQ ID No. 17 wherein in each of the before one or more amino acids have been inserted, deleted or substituted. In the present context, variants of an amino acid sequence refer to those polypeptides, enzymes or proteins which have a similar catalytic activity as the amino acid sequences described herein, notwithstanding any amino acid substitutions, additions or deletions thereto. Preferably the variant amino acid sequence has a sequence identity of at least about 80%, or 85 or 90%, 95%, 97%, 98% or 99% with the amino acid sequence of SEQ ID No. 2, SEQ ID No. 4, SEQ ID No. 7, SEQ ID No. 9, SEQ ID No. 11, SEQ ID No. 13, SEQ ID No. 15, and SEQ ID No. 17, respectively. Also preferably, a polypeptide comprising the variant amino acid sequence has HPPD enzymatic activity. Methods to determine HPPD enzymatic activity are well known in the art and include assays as extensively described in WO 2009/144079 or in WO 2002/046387, or in PCT/EP2010/070561.

Substitutions encompass amino acid alterations in which an amino acid is replaced with a different naturally-occurring or a non-conventional amino acid residue. Such substitutions may be classified as "conservative', in which an amino acid residue contained in an HPPD protein of this invention is replaced with another naturally-occurring amino acid of similar character, for example Gly↔Ala, Val↔IIe↔Leu, Asp↔Glu, Lys↔Arg, Asn↔Gln or Phe↔Trp↔Tyr. Substitutions encompassed by the present invention may also be "non-conservative", in which an amino acid residue which is present in an HPPD protein of the invention is substituted with an amino acid with different properties, such as a naturally-occurring amino acid from a different group (e.g. substituting a charged or hydrophobic amino acid with alanine. Amino acid substitutions are typically of single residues, but may be of multiple residues, either clustered or dispersed. Amino acid deletions will usually be of the order of about 1-10 amino acid residues, while insertions may be of any length. Deletions and insertions may be made to the N-terminus, the C-terminus or be internal deletions or insertions. Generally, insertions within the amino acid sequence will be smaller than amino- or carboxy-terminal fusions and of the order of 1 to 4 amino acid residues. "Similar amino acids", as used herein, refers to amino acids that have similar amino acid side chains, i.e. amino acids that have polar, non-polar or practically neutral side chains. "Non-similar amino acids", as used herein, refers to amino acids that have different amino acid side chains, for example an amino acid with a polar side chain is non-similar to an amino acid with a non-polar side chain. Polar side chains usually tend to be present on the surface of a protein where they can interact with the aqueous environment found in cells ("hydrophilic" amino acids). On the other hand, "non-polar" amino acids tend to reside within the center of the protein where they can interact with similar non-polar neighbours ("hydrophobic" amino acids"). Examples of amino acids that have polar side chains are arginine, asparagine, aspartate, cysteine, glutamine, glutamate, histidine, lysine, serine, and threonine (all hydrophilic, except for cysteine which is hydrophobic). Examples of amino acids that have non-polar side chains are alanine, glycine, isoleucine, leucine, methionine, phenylalanine, proline, and tryptophan (all hydrophobic, except for glycine which is neutral).

Unless otherwise stated in the examples, all procedures for making and manipulating recombinant DNA are carried out by the standard procedures described in Sambrook et al., Molecular Cloning - A Laboratory Manual, Second Ed., Cold Spring Harbor Laboratory Press, NY (1989), and in Volumes 1 and 2 of Ausubel et al. (1994) Current Protocols in Molecular Biology, Current Protocols, USA. Standard materials and methods for plant molecular biology work are described in Plant Molecular Biology Labfax (1993) by R.R.D. Croy, jointly published by BIOS Scientific Publications Ltd (UK) and Blackwell Scientific Publications (UK). Procedures for PCR technology can be found in "PCR protocols: a guide to methods and applications", Edited by M.A. Innis, D.H. Gelfand, J.J. Sninsky and T.J. White (Academic Press, Inc., 1990).

The terms "tolerance", "tolerant" or "less sensitive" are interchangeable used and mean the relative levels of inherent tolerance of the HPPD screened according to a visible indicator phenotype of the strain or plant transformed with a nucleic acid comprising the gene coding for the respective HPPD protein in the presence of different concentrations of the various HPPD inhibitor herbicides. Dose responses and relative shifts in dose responses associated with these indicator phenotypes (formation of brown colour, growth inhibition, bleaching, herbicidal effect, etc) are conveniently expressed in terms, for example, of GR50 (concentration for 50% reduction of growth) or MIC (minimum inhibitory concentration) values where increases in values correspond to increases in inherent tolerance of the expressed HPPD, in the normal manner based upon plant damage, meristematic bleaching symptoms etc. at a range of different concentrations of herbicides. These data can be expressed in terms of, for example, GR50 values derived from dose/response curves having "dose" plotted on the x-axis and "percentage kill", "herbicidal effect", "numbers of emerging green plants" etc. plotted on the y-axis where increased GR50 values correspond to increased levels of inherent tolerance of the expressed HPPD. Herbicides can suitably be applied pre-emergence or post emergence.

Likewise, tolerance level is screened via transgenesis, regeneration, breeding and spray testing of a test plant such as tobacco, or a crop plant such as soybean or cotton and according to these results, such plants are at least 2-4x more tolerant to HPPD inhibitor herbicides, like N-(1,2,5-oxadiazol-3-yl)benzamides whose phenyl ring is substituted in the 2-, 3- and 4-position by selected radicals as defined above or their salts than plants that do not contain any exogenous gene encoding an HPPD protein,

"Host organism" or "host" is understood as being any unicellular or multicellular heterologous organism into which the nucleic acid or chimeric gene according to the invention can be introduced for the purpose of producing HPPD. These organisms are, in particular, bacteria, for example *E*. *coli,* yeast, in particular of the genera *Saccharomyces* or *Kluyveromyces*, Pichia, fungi, in particular *Aspergillus*, a baculovirus or, preferably, plant cells and plants.

"Plant cell" is understood, according to the invention, as being any cell which is derived from or found in a plant and which is able to form or is part of undifferentiated tissues, such as calli, differentiated tissues such as embryos, parts of plants, plants or seeds. This includes protoplasts and pollen, cultivated plants cells or protoplasts grown in vitro, and plant cells that can regenerate into a complete plant.

"Plant" is understood, according to the invention, as being any differentiated multicellular organism which is capable of photosynthesis, in particular a monocotyledonous or dicotyledonous organism, more especially cultivated plants which are or are not intended for animal or human nutrition, such as maize or corn, wheat, *Brassica spp*. plants such as *Brassica napus* or *Brassica juncea,* soya spp, rice, sugarcane, beetroot, tobacco, cotton, vegetable plants such as cucumber, leek, carrot, tomato, lettuce, peppers, melon, watermelon, etc. Transgenic plants, as used herein, refer to plants comprising one or more foreign or heterologous gene(s) stably inserted in their genome.

In order perform tolerance to N-(1,2,5-oxadiazol-3-yl)benzamides whose phenyl ring is substituted in the 2-, 3- and 4-position by selected radicals as defined above or their salts, any promoter sequence of a gene which is expressed naturally in plants, or any hybrid or combination of promoter elements of genes expressed naturally in plants, including *Agrobacterium* or plant virus promoters, or any promoter which is suitable for controlling the transcription of a herbicide tolerance gene in plants, can be used as the promoter sequence in the plants of the invention (named "plant-expressible promoter" herein). Examples of such suitable plant-expressible promoters are described above. In one embodiment of this invention, such plant-expressible promoters are operably-linked to a (I) DNA sequence encoding hydroxyphenylpyruvate dioxygenase (HPPD) that is derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No.12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) a mutated DNA sequence of HPPD of the before defined organisms, preferably a mutated DNA sequence as described in WO 2010/085705, US6,245,968, WO 2009/144079, PCT/EP2010/070561, PCT/EP2010/070567, PCT/EP2010/070578, PCT/EP2010/070570, or PCT/EP2010/070575 and also containing.

According to the invention, it is also possible to use, in combination with the promoter regulatory sequence, other regulatory sequences which are located between the promoter and the coding sequence, such as intron sequences, or transcription activators (enhancers) in order to perform tolerace to N-(1,2,5-oxadiazol-3-yl)benzamides whose phenyl ring is substituted in the 2-, 3- and 4-position by selected radicals as defined above or their salts. Examples of such suitable regulatory sequences are described above.

Any corresponding sequence of bacterial or viral origin, such as the nos terminator from *Agrobacterium tumefaciens*, or of plant origin, such as a histone terminator as described in application EP 0 633 317 A1, may be used as transcription termination (and polyadenylation) regulatory sequence.

In a further particular embodiment, the present invention relates to the use of N-(1,2,5-oxadiazol-3-yl)benzamides whose phenyl ring is substituted in the 2-, 3- and 4-position by selected radicals as defined above or their salts on plants, plant parts, or plant seeds containing a nucleic acid sequence which encodes a transit peptide is employed 5' (upstream) of the nucleic acid sequence encoding the exogenous chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 and also containing with this transit peptide sequence being arranged between the promoter region and the sequence encoding the exogenous HPPD so as to permit expression of a transit peptide-HPPD fusion protein. The transit peptide makes it possible to direct the HPPD into the plastids, more especially the chloroplasts, with the fusion protein being cleaved between the transit peptide and the HPPD protein when the latter enters the plastid. The transit peptide may be a single peptide, such as an EPSPS transit peptide (described in US patent 5,188,642) or a transit peptide of the plant ribulose bisphosphate carboxylase/ oxygenase small subunit (RuBisCO ssu), where appropriate, including a few amino acids of the N-terminal part of the mature RuBisCO ssu (EP 189 707 A1), or else may be a fusion of several transit peptides such as a transit peptide which comprises a first plant transit peptide which is fused to a part of the N-terminal sequence of a mature protein having a plastid location, with this part in turn being fused to a second plant transit peptide as described in patent EP 508 909 A1, and, more especially, the optimized transit peptide which comprises a transit peptide of the sunflower RuBisCO ssu fused to 22 amino acids of the N-terminal end of the maize RuBisCO ssu, in turn fused to the transit peptide of the maize RuBisCO ssu, as described, with its coding sequence, in patent EP 508 909 A1.

The present invention also relates to the transit peptide HPPD fusion protein and a nucleic acid or plant-expressible chimeric gene encoding such fusion protein, wherein the two elements of this fusion protein are as defined above.

In a further particular embodiment, the present invention relates to the use of N-(1,2,5-oxadiazol-3-yl)benzamides whose phenyl ring is substituted in the 2-, 3- and 4-position by selected radicals as defined above or their salts on plants, plant parts, or plant seeds obtained by cloning, transformation with a expression vector, which expression vector contains at least one chimeric gene encoding the hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 . In addition to the above chimeric gene, this vector can contain an origin of replication. This vector can be a plasmid or plasmid portion, a cosmid, or a bacteriophage or a virus which has been transformed by introducing the chimeric gene according to the invention. Transformation vectors are well known to the skilled person and widely described in the literature. The transformation vector which can be used, in particular, for transforming plant cells or plants may be a virus, which can be employed for transforming plant cells or plants and which additionally contains its own replication and expression elements. The vector for transforming plant cells or plants is preferably a plasmid, such as a disarmed *Agrobacterium* Ti plasmid.

In a further particular embodiment, the present invention relates to the use of N-(1,2,5-oxadiazol-3-yl)benzamides whose phenyl ring is substituted in the 2-, 3- and 4-position by selected radicals as defined above or their salts on plants, plant parts, or plant seeds containing a chimeric gene which comprises a sequence encoding the hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, and the use of the plants or seeds in a field to grow a crop and harvest a plant product, e.g., soya spp, rice, wheat, barley or corn grains or cotton bolls, where in one embodiment said use involves the application of an N-(1,2,5-oxadiazol-3-yl)benzamides whose phenyl ring is substituted in the 2-, 3- and 4-position by selected radicals as defined above or their salts to such plants to control weeds.

In another particular embodiment, the present invention relates to the use of N-(1,2,5-oxadiazol-3-yl)benzamides whose phenyl ring is substituted in the 2-, 3- and 4-position by selected radicals as defined above or their salts on plants, plant parts, or plant seeds characterized in that it contains one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575. and in addition further contains a chimeric gene comprising a plant-expressible promoter as described above, operably-linked to a nucleic acid sequence encoding a PDH (prephenate dehydrogenase) enzyme (US 2005/0257283) in order to confer tolerance to N-(1,2,5-oxadiazol-3-yl)benzamides whose phenyl ring is substituted in the 2-, 3- and 4-position by selected radicals as defined above or their salts. A plant comprising such two transgenes can be obtained by transforming a plant with one transgene, and then re-transforming this transgenic plant with the second transgene, or by transforming a plant with the two transgenes simultaneously (in the same or in 2 different transforming DNAs or vectors), or by crossing a plant comprising the first transgene with a plant comprising the second transgene, as is well known in the art.

One transformation method in order to obtain plants, plant parts or seeds being tolerant to N-(1,2,5-oxadiazol-3-yl)benzamides whose phenyl ring is substituted in the 2-, 3- and 4-position by selected radicals as defined above or their salts by containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7 (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No.12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 comprises bombarding cells, protoplasts or tissues with solid or liquid particles to which DNA is attached, or containing DNA. Another transformation method comprises using, as mean for transfer into the plant, a chimeric gene which is inserted into an *Agrobacterium tumefaciens* Ti plasmid or an *Agrobacterium rhizogenes* Ri plasmid. Other methods may be used, such as microinjection or electroporation or otherwise direct gene transfer using PEG. The skilled person can select any appropriate method for transforming the host organism of choice, in particular the plant cell or the plant. As examples, the technology for soybean transformation has been extensively described in the examples 1 to 3 disclosed in EP 1186666 A1, incorporated herein by reference. For rice, Agrobacterium-mediated transformation (Hiei et al., 1994 Plant J 6:271-282, and Hiei et al., 1997 Plant Mol Biol. 35:205-21, incorporated herein by reference), electroporation (US 5,641,664 and US 5,679,558, incorporated herein by reference), or bombardment (Christou et al., 1991, Biotechnology 9:957 incorporated herein by reference) could be performed. A suitable technology for transformation of monocotyledonous plants, and particularly rice, is described in WO 92/09696, incorporated herein by reference. For cotton, Agrobacterium-mediated transformation (Gould J.H. and Magallanes-Cedeno M., 1998 Plant Molecular Biology reporter, 16:1-10 and Zapata C., 1999, Theoretical Applied Genetics, 98(2): 1432-2242 incorporated herein by reference), polybrene and/or treatment-mediated transformation (Sawahel W.A., 2001, - Plant Molecular Biology reporter, 19:377a-377f, incorporated herein by reference) have been described.

Alternatively, N-(1,2,5-oxadiazol-3-yl)benzamides whose phenyl ring is substituted in the 2-, 3- and 4-position by selected radicals as defined above or their salts may be used on plants, plant parts, or plant seeds containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 which HPPD is expressed directly in the plastids, such as the chloroplasts, using transformation of the plastid, such as the chloroplast genome. A suitable method comprises the bombardment of plant cells or tissue by solid particles coated with the DNA or liquid particles comprising the DNA, and integration of the introduced gene by homologous recombination. Suitable vectors and selection systems are known to the person skilled in the art. An example of means and methods which can be used for such integration into the chloroplast genome of tobacco plants is given in WO 06/108830, the content of which is hereby incorporated by reference

The present invention also relates to a method for obtaining a plant tolerant to N-(1,2,5-oxadiazol-3-yl)benzamides whose phenyl ring is substituted in the 2-, 3- and 4-position by selected radicals as defined above or their salts, characterized in that the plant is transformed with one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, , PCT/EP2010/070561, PCT/EP2010/070567, PCT/EP2010/070578, PCT/EP2010/070570, or PCT/EP2010/070575.

Therefore, the present invention also relates to a method for obtaining a plant tolerant to N-(1,2,5-oxadiazol-3-yl)benzamides whose phenyl ring is substituted in the 2-, 3- and 4-position by selected radicals as defined above or their salts by containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, characterized in that the plant contains one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7 (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, which comprises a coding sequence as well as a heterologous regulatory element in the 5' and optionally in the 3' positions, which are able to function in a host organism, characterized in that the coding sequence comprises at least a nucleic acid sequence defining a gene encoding an HPPD of the invention as previously described in order to perform a sufficiently high level of tolerance to N-(1,2,5-oxadiazol-3-yl)benzamides whose phenyl ring is substituted in the 2-, 3- and 4-position by selected radicals as defined above or their salts.

In one embodiment of this invention, the HPPD inhibitor in the above method is a N-(1,2,5-oxadiazol-3-yl)benzamides whose phenyl ring is substituted in the 2-, 3- and 4-position by selected radicals as defined above or their salts either alone or in combination with one or more HPPD inhibitor herbicides selected from the group consisting of triketone or pyrazolinate herbicide, preferably tembotrione, mesotrione, bicyclopyrone, tefuryltrione pyrasulfotole, pyrazolate, diketonitrile, benzofenap, or sulcotrione, particularly tembotrione.

The invention also relates to a method for selectively removing weeds or preventing the germination of weeds in a field to be planted with plants or to be sown with seeds, or in a plant crop, by application of a N-(1,2,5-oxadiazol-3-yl)benzamides whose phenyl ring is substituted in the 2-, 3- and 4-position by selected radicals as defined above or their salts to such field or plant crop, which method is characterized in that this N-(1,2,5-oxadiazol-3-yl)benzamides whose phenyl ring is substituted in the 2-, 3- and 4-position by selected radicals as defined above or their salts is applied to plants which have been transformed in accordance with one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, either before sowing the crop (hereinafter named pre-planting application), before emergence of the crop (hereinafter named pre-emergence application), or after emergence of the crop (hereinafter named post-emergence application).

The invention also relates to a method for controlling in an area or a field which contains transformed seeds as previously described in the present invention, which method comprises applying, to the said area of the field, a dose of an N-(1,2,5-oxadiazol-3-yl)benzamides whose phenyl ring is substituted in the 2-, 3- and 4-position by selected radicals as defined above or their salts which is toxic for the said weeds, without significantly affecting the seeds or plants containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 .

The present invention also relates to a method for cultivating the plants which have been transformed with one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, which method comprises planting seeds comprising a chimeric gene of before, in an area of a field which is appropriate for cultivating the said plants, and in applying, if weeds are present, a dose, which is toxic for the weeds, of one or more N-(1,2,5-oxadiazol-3-yl)benzamides whose phenyl ring is substituted in the 2-, 3- and 4-position by selected radicals as defined above or their salts to the said area of the said field, without significantly affecting the said transformed seeds or the said transformed plants, and in then harvesting the cultivated plants or plant parts when they reach the desired stage of maturity and, where appropriate, in separating the seeds from the harvested plants.

In the above methods, the N-(1,2,5-oxadiazol-3-yl)benzamides whose phenyl ring is substituted in the 2-, 3- and 4-position by selected radicals as defined above or their salts can be applied in accordance with the invention, either before sowing the crop, before the crop emerges or after the crop emerges.

Within the meaning of the present invention, "herbicide" is understood as being a herbicidally active substance on its own or such a substance which is combined with an additive which alters its efficacy, such as, for example, an agent which increases its activity (a synergistic agent) or which limits its activity (a safener). It is of course to be understood that, for their application in practice, the above herbicides are combined, in a manner which is known per se, with the formulation adjuvants which are customarily employed in agricultural chemistry.

Thus, transgenic plants can be obtained which - in addition to the one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7 (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 - have modified properties as the result of overexpression, suppression or inhibition of homologous (= natural) genes or gene sequences or expression of heterologous (= foreign) genes or gene sequences.

On the plants, plant cells or seeds containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7 (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, it is preferred to employ one or more of the N-(1,2,5-oxadiazol-3-yl)benzamides whose phenyl ring is substituted in the 2-, 3- and 4-position by selected radicals as defined above or their salts in combination with one or more further HPPD inhibitor herbicides belonging to the class of triketones, such as tembotrione, sulcotrione and mesotrione, or of the class of pyrazolinates, such as pyrasulfotole and topramezone, particularly selected from tembotrione, sulcotrione, topramezone, bicyclopyrone, tefuryltrione and mesotrione, more particularly tembotrione in transgenic crops which are also resistant to growth regulators such as, for example, 2,4-D or dicamba, or against herbicides which inhibit essential plant enzymes, for example acetolactate synthases (ALS), EPSP synthases, glutamine synthases (GS), Acetyl-coenzyme A carboxylase (ACCase), or against herbicides from the group of the sulfonylureas, imidazolinones, glyphosate, glufosinate, ACCase inhibitors and analogous active substances.

The invention therefore also relates to the use of herbicides applied to HPPD tolerant plants containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No.12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 for controlling harmful plants (i.e. weeds) which also extends to transgenic crop plants comprising a second or more herbicide resistance(s) beside the resistance against one or more N-(1,2,5-oxadiazol-3-yl)benzamides whose phenyl ring is substituted in the 2-, 3- and 4-position by selected radicals as defined above or their salts.

N-(1,2,5-oxadiazol-3-yl)benzamides whose phenyl ring is substituted in the 2-, 3- and 4-position by selected radicals as defined above or their salts can be formulated in various ways, depending on the prevailing biological and/or physico-chemical parameters. Examples of possible formulations are: wettable powders (WP), water-soluble powders (SP), water-soluble concentrates, emulsifiable concentrates (EC), emulsions (EW), such as oil-in-water and water-in-oil emulsions, sprayable solutions, suspension concentrates (SC), oil- or water-based dispersions, oil-miscible solutions, capsule suspensions (CS), dusts (DP), seed-dressing products, granules for application by broadcasting and on the soil, granules (GR) in the form of microgranules, spray granules, coated granules and adsorption granules, water-dispersible granules (WG), water-soluble granules (SG), ULV formulations, microcapsules and waxes.

These individual types of formulation are known in principle and are described, for example, in: Winnacker-Kuchler, "Chemische Technologie" [Chemical technology], volume 7, C. Hanser Verlag Munich, 4th Ed. 1986; Wade van Valkenburg, "Pesticide Formulations", Marcel Dekker, N.Y., 1973; K. Martens, "Spray Drying" Handbook, 3rd Ed. 1979, G. Goodwin Ltd. London.

The formulation auxiliaries required, such as inert materials, surfactants, solvents and further additives, are also known and are described, for example, in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schbnfeldt, "Grenzfl6chenaktive Äthylenoxidaddukte" [Interface-active ethylene oxide adducts], Wiss. Verlagsgesell., Stuttgart 1976; Winnacker-Kuchler, "Chemische Technologie" [Chemical technology], volume 7, C. Hanser Verlag Munich, 4th Ed. 1986.

Based on these formulations, it is also possible to prepare combinations with other pesticidally active substances such as, for example, insecticides, acaricides, herbicides, fungicides, and with safeners, fertilizers and/or growth regulators, for example in the form of a ready mix or a tank mix.

Wettable powders are preparations which are uniformly dispersible in water and which, besides the active substance, also comprise ionic and/or nonionic surfactants (wetters, dispersers), for example polyoxyethylated alkylphenols, polyoxyethylated fatty alcohols, polyoxyethylated fatty amines, fatty alcohol polyglycol ether sulfates, alkanesulfonates, alkylbenzenesulfonates, sodium lignosulfonate, sodium 2,2'-dinaphthylmethane-6,6'-disulfonate, sodium dibutylnaphthalenesulfonate or else sodium oleoylmethyltaurinate, besides a diluent or inert substance. To prepare the wettable powders, the herbicidally active substances are ground finely, for example in customary apparatuses such as hammer mills, blower mills and air-jet mills, and mixed with the formulation auxiliaries, either simultaneously or subsequently.

Emulsifiable concentrates are prepared by dissolving the active substance in an organic solvent, for example butanol, cyclohexanone, dimethylformamide, xylene or else higher-boiling aromatics or hydrocarbons or mixtures of the organic solvents with addition of one or more ionic and/or nonionic surfactants (emulsifiers). Examples of emulsifiers which may be used are: calcium alkylarylsulfonates such as calcium dodecylbenzenesulfonate, or nonionic emulsifiers such as fatty acid polyglycol esters, alkylarylpolyglycol ethers, fatty alcohol polyglycol ethers, propylene oxide/ethylene oxide condensates, alkyl polyethers, sorbitan esters such as, for example, sorbitan fatty acid esters or polyoxyethylene sorbitan esters such as, for example, polyoxyethylene sorbitan fatty acid esters.

Dusts are obtained by grinding the active substance with finely divided solid materials such as, for example, talcum, natural clays such as kaolin, bentonite and pyrophyllite, or diatomaceous earth.

Suspension concentrates can be water- or oil-based. They can be prepared for example by wet-grinding by means of commercially available bead mills, if appropriate with addition of surfactants as already listed above for example in the case of the other formulation types.

Emulsions, for example oil-in-water emulsions (EW), can be prepared for example by means of stirrers, colloid mills and/or static mixers using aqueous organic solvents and, if appropriate, surfactants, as have already been mentioned for example above for the other formulation types.

Granules can be prepared either by spraying the active substance onto adsorptive, granulated inert material, or by applying active substance concentrates to the surface of carriers such as sand, kaolinites or granulated inert material with the aid of stickers, for example polyvinyl alcohol, sodium polyacrylate or else mineral oils. Suitable active substances can also be granulated in the manner which is customary for the production of fertilizer granules, if desired as a mixture with fertilizers.

Water-dispersible granules are generally prepared by customary methods such as spray drying, fluidized-bed granulation, disk granulation, mixing with high-speed stirrers, and extrusion without solid inert material.

To prepare disk granules, fluidized-bed granules, extruder granules and spray granules, see, for example, methods in "Spray-Drying Handbook" 3rd ed. 1979, G. Goodwin Ltd., London; J.E. Browning, "Agglomeration", Chemical and Engineering 1967, pages 147 et seq.; "Perry's Chemical Engineer's Handbook", 5th Ed., McGraw-Hill, New York 1973, p. 8-57.

For further details of the formulation of crop protection products see, for example, G.C. Klingman, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

As a rule, the agrochemical preparations comprise from 0.1 to 99% by weight, in particular from 0.1 to 95% by weight, of compounds according to the invention. In wettable powders, the active substance concentration is, for example, approximately 10 to 90% by weight, the remainder to 100% by weight being composed of customary formulation constituents. In the case of emulsifiable concentrates, the active substance concentration can amount to approximately 1 to 90, preferably 5 to 80% by weight. Formulations in the form of dusts comprise from 1 to 30% by weight of active substance, preferably in most cases from 5 to 20% by weight of active substance, and sprayable solutions comprise approximately from 0.05 to 80, preferably from 2 to 50% by weight of active substance. In the case of water-dispersible granules, the active substance content depends partly on whether the active compound is in liquid or solid form, and on the granulation auxiliaries, fillers and the like which are being used. In the case of the water-dispersible granules, for example, the active substance content is between 1 and 95% by weight, preferably between 10 and 80% by weight.

In addition, the active substance formulations mentioned comprise, if appropriate, the auxiliaries which are conventional in each case, such as stickers, wetters, dispersants, emulsifiers, penetrations, preservatives, antifreeze agents, solvents, fillers, carriers, colorants, antifoams, evaporation inhibitors, and pH and viscosity regulators.

Based on these formulations, it is also possible to prepare combinations of an HPPD inhibitor herbicide of the class of triketones, such as tembotrione, sulcotrione and mesotrione, or of the class of pyrazolinates, such as pyrasulfotole and topramezone, particularly selected from tembotrione, sulcotrione, topramezone, bicyclopyrone, tefuryltrione and mesotrione, more particularly tembotrione with other pesticidally active substances such as, for example, insecticides, acaricides, herbicides, fungicides, and with safeners, fertilizers and/or growth regulators, for example in the form of a ready mix or a tank mix to be applied to HPPD tolerant plants according to the invention.

### Formulation examples

a) A dust is obtained by mixing 10 parts by weight of a compound of the formula (I) and/or a salt thereof and 90 parts by weight of talc as inert substance and comminuting the mixture in a hammer mill.
b) A wettable powder which is readily dispersible in water is obtained by mixing 25 parts by weight of a compound of the formula (I) and/or a salt thereof, 64 parts by weight of kaolin-containing quartz as inert substance, 10 parts by weight of potassium lignosulfonate and 1 part by weight of sodium oleoylmethyltaurinate as wetting agent and dispersant, and grinding the mixture in a pinned-disk mill.
c) A readily water-dispersible dispersion concentrate is obtained by mixing 20 parts by weight of a compound of the formula (I) and/or a salt thereof with 6 parts by weight of alkylphenol polyglycol ether (®Triton X 207), 3 parts by weight of isotridecanol polyglycol ether (8 EO) and 71 parts by weight of paraffinic mineral oil (boiling range for example about 255 to above 277°C) and grinding the mixture in a ball mill to a fineness of below 5 microns.
d) An emulsifiable concentrate is obtained from 15 parts by weight of a compound of the formula (I) and/or a salt thereof, 75 parts by weight of cyclohexanone as solvent and 10 parts by weight of oxethylated nonylphenol as emulsifier.
e) Water-dispersible granules are obtained by mixing 75 parts by weight of a compound of the formula (I) and/or a salt thereof, 10 parts by weight of calcium lignosulfonate,
   5 parts by weight of sodium lauryl sulfate,
   3 parts by weight of polyvinyl alcohol and
   7 parts by weight of kaolin,
   grinding the mixture in a pinned-disk mill, and granulating the powder in a fluidized bed by spraying on water as granulating liquid.
f) Water-dispersible granules are also obtained by homogenizing and precomminuting, in a colloid mill,
   25 parts by weight of a compound of the formula (I) and/or a salt thereof,
   5 parts by weight of sodium 2,2'-dinaphthylmethane-6,6'-disulfonate,
   2 parts by weight of sodium oleoylmethyltaurinate,
   1 part by weight of polyvinyl alcohol,
   17 parts by weight of calcium carbonate and
   50 parts by weight of water,
   subsequently grinding the mixture in a bead mill and atomizing and drying the resulting suspension in a spray tower by means of a single-substance nozzle.

A further apect of present invention is the use of one or more N-(1,2,5-oxadiazol-3-yl)benzamides whose phenyl ring is substituted in the 2-, 3- and 4-position by selected radicals as defined above or their salts to HPPD tolerant plants containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 in combination with further HPPD inhibitor herbicide belonging to the class of triketones, such as tembotrione, sulcotrione and mesotrione, or belonging to the class of pyrazolinates, such as pyrasulfotole and topramezone, particularly selected from tembotrione, sulcotrione, topramezone, bicyclopyrone, tefuryltrione and mesotrione, more particularly tembotrione in mixed formulations or in the tank mix, and/or with further known active substances which are based on the inhibition of, for example, acetolactate synthase, acetyl-CoA carboxylase, cellulose synthase, enolpyruvylshikimate-3-phosphate synthase, glutamine synthetase, p-hydroxyphenylpyruvate dioxygenase, phytoene desaturase, photosystem I, photosystem II, protoporphyrinogen oxidase, as are described in, for example, Weed Research 26 (1986) 441-445 or "The Pesticide Manual", 14th edition, The British Crop Protection Council and the Royal Soc. of Chemistry, 2003 and the literature cited therein. Known herbicides or plant growth regulators which can be combined with the compounds according to the invention are, for example, the following active substances (the compounds are either designated by the common name according to the International Organization for Standardization (ISO) or by a chemical name, if appropriate together with the code number) and always comprise all use forms such as acids, salts, esters and isomers such as stereoisomers and optical isomers. In this context, one and in some cases also several use forms are mentioned by way of example:

acetochlor, acibenzolar, acibenzolar-S-methyl, acifluorfen, acifluorfen-sodium, aclonifen, alachlor, allidochlor, alloxydim, alloxydim-sodium, ametryne, amicarbazone, amidochlor, amidosulfuron, aminocyclopyrachlor, aminopyralid, amitrole, ammonium sulfamate, ancymidol, anilofos, asulam, atrazine, azafenidin, azimsulfuron, aziprotryne, BAH-043, BAS-140H, BAS-693H, BAS-714H, BAS-762H, BAS-776H, BAS-800H, beflubutamid, benazolin, benazolin-ethyl, bencarbazone, benfluralin, benfuresate, bensulide, bensulfuron-methyl, bentazone, benzfendizone, benzobicyclon, benzofenap, benzofluor, benzoylprop, bifenox, bilanafos, bilanafos-sodium, bispyribac, bispyribac-sodium, bromacil, bromobutide, bromofenoxim, bromoxynil, bromuron, buminafos, busoxinone, butachlor, butafenacil, butamifos, butenachlor, butralin, butroxydim, butylate, cafenstrole, carbetamide, carfentrazone, carfentrazone-ethyl, chlomethoxyfen, chloramben, chlorazifop, chlorazifop-butyl, chlorbromuron, chlorbufam, chlorfenac, chlorfenac-sodium, chlorfenprop, chlorflurenol, chlorflurenol-methyl, chloridazon, chlorimuron, chlorimuron-ethyl, chlormequat-chloride, chlornitrofen, chlorophthalim, chlorthal-dimethyl, chlorotoluron, chlorsulfuron, cinidon, cinidon-ethyl, cinmethylin, cinosulfuron, clethodim, clodinafop clodinafop-propargyl, clofencet, clomazone, clomeprop, cloprop, clopyralid, cloransulam, cloransulam-methyl, cumyluron, cyanamide, cyanazine, cyclanilide, cycloate, cyclosulfamuron, cycloxydim, cycluron, cyhalofop, cyhalofop-butyl, cyperquat, cyprazine, cyprazole, 2,4-D, 2,4-DB, daimuron/dymron, dalapon, daminozide, dazomet, n-decanol, desmedipham, desmetryn, detosyl-pyrazolate (DTP), di-allate, dicamba, dichlobenil, dichlorprop, dichlorprop-P, diclofop, diclofop-methyl, diclofop-P-methyl, diclosulam, diethatyl, diethatyl-ethyl, difenoxuron, difenzoquat, diflufenican, diflufenzopyr, diflufenzopyr-sodium, dimefuron, dikegulac-sodium, dimefuron, dimepiperate, dimethachlor, dimethametryn, dimethenamid, dimethenamid-P, dimethipin, dimetrasulfuron, dinitramine, dinoseb, dinoterb, diphenamid, dipropetryn, diquat, diquat-dibromide, dithiopyr, diuron, DNOC, eglinazine-ethyl, endothal, EPTC, esprocarb, ethalfluralin, ethametsulfuron-methyl, ethephon, ethidimuron, ethiozin, ethofumesate, ethoxyfen, ethoxyfen-ethyl, ethoxysulfuron, etobenzanid, F-5331, i.e. N-[2-chloro-4-fluoro-5-[4-(3-fluoro-propyl)-4,5-dihydro-5-oxo-1H-tetrazol-1-yl]-phenyl]ethanesulfonam ide, fenoprop, fenoxaprop, fenoxaprop-P, fenoxaprop-ethyl, fenoxaprop-P-ethyl, fentrazamide, fenuron, flamprop, flamprop-M-isopropyl, flamprop-M-methyl, flazasulfuron, florasulam, fluazifop, fluazifop-P, fluazifop-butyl, fluazifop-P-butyl, fluazolate, flucarbazone, flucarbazone-sodium, flucetosulfuron, fluchloralin, flufenacet (thiafluamide), flufenpyr, flufenpyr-ethyl, flumetralin, flumetsulam, flumiclorac, flumiclorac-pentyl, flumioxazin, flumipropyn, fluometuron, fluorodifen, fluoroglycofen, fluoroglycofen-ethyl, flupoxam, flupropacil, flupropanate, flupyrsulfuron, flupyrsulfuron-methyl-sodium, flurenol, flurenol-butyl, fluridone, flurochloridone, fluroxypyr, fluroxypyr-meptyl, flurprimidol, flurtamone, fluthiacet, fluthiacet-methyl, fluthiamide, fomesafen, foramsulfuron, forchlorfenuron, fosamine, furyloxyfen, gibberellic acid, glufosinate, L-glufosinate, L-glufosinate-ammonium, glufosinate-ammonium, glyphosate, glyphosate-isopropylammonium, H-9201, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HNPC-9908, HOK-201, HW-02, imazamethabenz, imazamethabenz-methyl, imazamox, imazapic, imazapyr, imazaquin, imazethapyr, imazosulfuron, inabenfide, indanofan, indoleacetic acid (IAA), 4-indol-3-ylbutyric acid (IBA), iodosulfuron, iodosulfuron-methyl-sodium, ioxynil, isocarbamid, isopropalin, isoproturon, isouron, isoxaben, isoxachlortole, isoxaflutole, isoxapyrifop, KUH-043, KUH-071, karbutilate, ketospiradox, lactofen, lenacil, linuron, maleic hydrazide, MCPA, MCPB, MCPB-methyl, -ethyl and -sodium, mecoprop, mecoprop-sodium, mecoprop-butotyl, mecoprop-P-butotyl, mecoprop-P-dimethylammonium, mecoprop-P-2-ethylhexyl, mecoprop-P-potassium, mefenacet, mefluidide, mepiquat-chloride, mesosulfuron, mesosulfuron-methyl, methabenzthiazuron, metam, metamifop, metamitron, metazachlor, methazole, methoxyphenone, methyldymron, 1-methylcyclopropene, methyl isothiocyanate, metobenzuron, metobenzuron, metobromuron, metolachlor, S-metolachlor, metosulam, metoxuron, metribuzin, metsulfuron, metsulfuron-methyl, molinate, monalide, monocarbamide, monocarbamide dihydrogen sulfate, monolinuron, monosulfuron, monuron, MT 128, MT-5950, i.e. N-[3-chloro-4-(1-methylethyl)-phenyl]-2-methylpentanamide, NGGC-011, naproanilide, napropamide, naptalam, NC-310, i.e. 4-(2,4-dichlorobenzoyl)-1-methyl-5-benzyloxypyrazole, neburon, nicosulfuron, nipyraclofen, nitralin, nitrofen, nitrophenolat-sodium (isomer mixture), nitrofluorfen, nonanoic acid, norflurazon, orbencarb, orthosulfamuron, oryzalin, oxadiargyl, oxadiazon, oxasulfuron, oxaziclomefone, oxyfluorfen, paclobutrazole, paraquat, paraquat dichloride, pelargonic acid (nonanoic acid), pendimethalin, pendralin, penoxsulam, pentanochlor, pentoxazone, perfluidone, pethoxamid, phenisopham, phenmedipham, phenmedipham-ethyl, picloram, picolinafen, pinoxaden, piperophos, pirifenop, pirifenop-butyl, pretilachlor, primisulfuron, primisulfuron-methyl, probenazole, profluazol, procyazine, prodiamine, prifluraline, profoxydim, prohexadione, prohexadione-calcium, prohydrojasmone, prometon, prometryn, propachlor, propanil, propaquizafop, propazine, propham, propisochlor, propoxycarbazone, propoxycarbazone-sodium, propyzamide, prosulfalin, prosulfocarb, prosulfuron, prynachlor, pyraclonil, pyraflufen, pyraflufen-ethyl, pyrazolynate (pyrazolate), pyrazosulfuron-ethyl, pyrazoxyfen, pyribambenz, pyribambenz-isopropyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, secbumeton, sethoxydim, siduron, simazine, simetryn, SN-106279, sulfallate (CDEC), sulfentrazone, sulfometuron, sulfometuron-methyl, sulfosate (glyphosate-trimesium), sulfosulfuron, SYN-523, SYP-249, SYP-298, SYP-300, tebutam, tebuthiuron, tecnazene, tepraloxydim, terbacil, terbucarb, terbuchlor, terbumeton, terbuthylazine, terbutryne, TH-547, thenylchlor, thiafluamide, thiazafluron, thiazopyr, thidiazimin, thidiazuron, thiencarbazone, thiencarbazone-methyl, thifensulfuron, thifensulfuron-methyl, thiobencarb, tiocarbazil, tralkoxydim, triallate, triasulfuron, triaziflam, triazofenamide, tribenuron, tribenuron-methyl, trichloroacetic acid (TCA), triclopyr, tridiphane, trietazine, trifloxysulfuron, trifloxysulfuron-sodium, trifluralin, triflusulfuron, triflusulfuron-methyl, trimeturon, trinexapac, trinexapac-ethyl, tritosulfuron, tsitodef, uniconazole, uniconazole-P, vernolate, ZJ-0166, ZJ-0270, ZJ-0543, ZJ-0862 and the following compounds

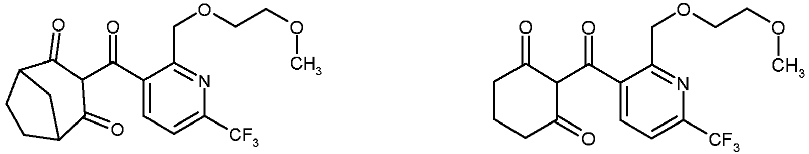

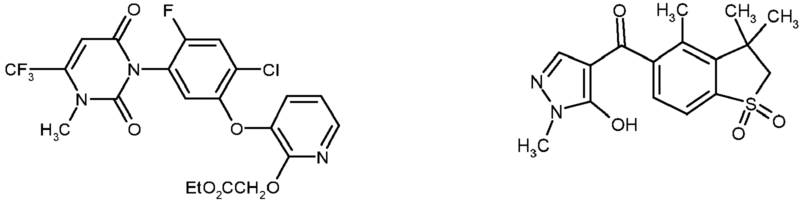

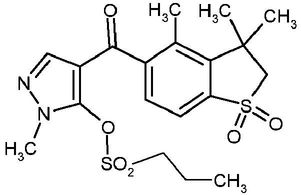

The application rate required of an N-(1,2,5-oxadiazol-3-yl)benzamides whose phenyl ring is substituted in the 2-, 3- and 4-position by selected radicals as defined above or their salts to be applied to areas where HPPD tolerant plants containing one or more chimeric gene(s) (I) comprising a DNA sequence encoding hydroxyphenylpyruvate dioxygenase (HPPD) derived from a member of a group of organisms consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17, or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 are growing varies as a function of the external conditions such as temperature, humidity, the nature of the herbicide used and the like. It can vary within wide limits, for example between 0.001 and 1.0 kg/ha and more of active substance, but it is preferably between 0.005 and 750 g/ha.

In case of combined applications of N-(1,2,5-oxadiazol-3-yl)benzamides whose phenyl ring is substituted in the 2-, 3- and 4-position by selected radicals as defined above or their salts herbicides that differ from HPPD N-(1,2,5-oxadiazol-3-yl)benzamides whose phenyl ring is substituted in the 2-, 3- and 4-position by selected radicals as defined above or their salts to the HPPD tolerant plants containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11 or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575, these mixtures may cause crop injury, based on the presence herbicides different to N-(1,2,5-oxadiazol-3-yl)benzamides whose phenyl ring is substituted in the 2-, 3- and 4-position by selected radicals as defined above or their salts. In order to reduce/eliminate such crop injuries, appropriate safeners may be added. These safeners, which are employed in antidotically active amounts, reduce the phytotoxic side effects of herbicides/pesticides used, for example in economically important crops, such as cereals (wheat, barley, rye, corn, rice, millet), alfalfa, sugar beet, sugarcane, oilseed rape, cotton and soya spp., preferably corn, cotton, sugarbeet, or soya spp.

The safeners are preferably selected from the group consisting of:
A) compounds of the formula (S-1) 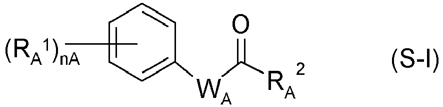 where the symbols and indices have the following meanings:
   - n_{A}: is a natural number from 0 to 5, preferably from 0 to 3;
   - R_{A}¹: is halogen, (C₁-C₄)-alkyl, (C₁-C₄)-alkoxy, nitro or (C₁-C₄)-haloalkyl;
   - W_{A}: is an unsubstituted or substituted divalent heterocyclic radical from the group consisting of partially unsaturated or aromatic five-membered heterocycles having 1 to 3 hetero ring atoms of the type N or 0, where at least one nitrogen atom and at most one oxygen atom is present in the ring, preferably a radical from the group consisting of (W_{A}¹) to (W_{A}⁴)₇ 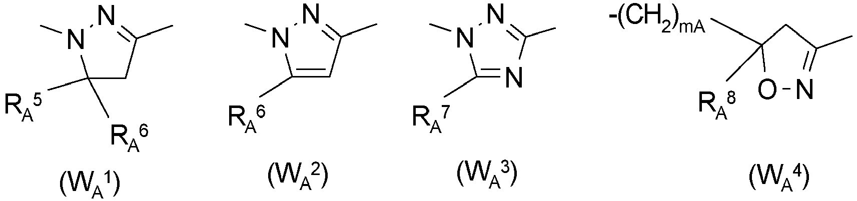
   - ma: is 0 or 1;
   - R_{A}²: is OR_{A}³, SR_{A}³ or NR_{A}³R_{A}⁴ or a saturated
   or unsaturated 3- to 7-membered heterocycle having at least one nitrogen atom and up to 3 heteroatoms, preferably from the group consisting of 0 and S, which is attached via the nitrogen atom to the carbonyl group in (S-I) and which is unsubstituted or substituted by radicals from the group consisting of (C₁-C₄)-alkyl, (C₁-C₄)-alkoxy and optionally substituted phenyl, preferably a radical of the formula OR_{A}³, NHR_{A}⁴ or N(CH₃)₂, in particular of the formula OR_{A}³;
   - R_{A}³: is hydrogen or an unsubstituted or substituted aliphatic hydrocarbon radical having preferably a total of 1 to 18 carbon atoms;
   - R_{A}⁴: is hydrogen, (C₁-C₆)-alkyl, (C₁-C₆)-alkoxy or substituted or unsubstituted phenyl;
   - R_{A}⁵: is H, (C₁-C₈)-alkyl, (C₁-C₈)-haloalkyl), (C₁-C₄)-alkoxy-(C-i-C₈)-alkyl, cyano or COOR_{A}⁹ where R_{A}⁹ is hydrogen, (C₁-C₈)-alkyl, (C₁-C₈)-haloalkyl, (C₁-C₄)-alkoxy-(C₁-C₄)-alkyl, (C₁-C₆)-hydroxyalkyl, (C₃-C₁₂)-cycloalkyl or tri-(C₁-C₄)-alkylsilyl;
   - R_{A}⁶, R_{A}⁷, R_{A}⁸: are identical or different and are hydrogen, (C₁-C₈)-alkyl, (C₁-C₈)-haloalkyl, (C₃-C₁₂)-cycloalkyl or substituted or unsubstituted phenyl;
   preferably:
   a) compounds of the type of the dichlorophenylpyrazoline-3-carboxylic acid, preferably compounds such as ethyl 1-(2,4-dichlorophenyl)-5-(ethoxycarbonyl)-5-methyl-2-pyrazoline-3-carboxylate (S1-1) ("mefenpyr-diethyl", see Pestic. Man.), and related compounds, as described in WO 91/07874;
   b) derivatives of dichlorophenylpyrazolecarboxylic acid, preferably compounds such as ethyl 1-(2,4-dichlorophenyl)-5-methylpyrazole-3-carboxylate (S1-2), ethyl 1-(2,4-dichlorophenyl)-5-isopropylpyrazole-3-carboxylate (S1-3), ethyl 1-(2,4-dichlorophenyl)-5-(1,1-dimethylethyl)pyrazole-3-carboxylate (S1-4), ethyl 1-(2,4-dichlorophenyl)-5-phenylpyrazole-3-carboxylate (S1-5) and related compounds, as described in EP-A-333 131 and EP-A-269 806;
   c) compounds of the type of the triazolecarboxylic acids, preferably compounds such as fenchlorazole(-ethyl ester), i.e. ethyl 1-(2,4-dichlorophenyl)-5-trichloro-methyl-(1H)-1,2,4-triazole-3-carboxylate (S1-6), and related compounds, as described in EP-A-174 562 and EP-A-346 620;
   d) compounds of the type of the 5-benzyl- or 5-phenyl-2-isoxazoline-3-carboxylic acid or the 5,5-diphenyl-2-isoxazoline-3-carboxylic acid, preferably compounds such as ethyl 5-(2,4-dichlorobenzyl)-2-isoxazoline-3-carboxylate (S1-7) or ethyl 5-phenyl-2-isoxazoline-3-carboxylate (S1-8) and related compounds, as described in WO 91/08202, or ethyl 5,5-diphenyl-2-isoxazolinecarboxylate (S1-9) ("isoxadifen-ethyl") or n-propyl 5,5-diphenyl-2-isoxazolinecarboxylate (S1-10) or ethyl 5-(4-fluorophenyl)-5-phenyl-2-isoxazoline-3-carboxylate (S1-11), as described in the patent application WO-A-95/07897.
B) Quinoline derivatives of the formula (S-II) 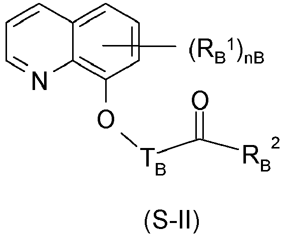 where the symbols and indices have the following meanings:
   - R_{B}¹: is halogen, (C₁-C₄)-alkyl, (C₁-C₄)-alkoxy, nitro or (C₁-C₄)-haloalkyl;
   - n_{B}: is a natural number from 0 to 5, preferably from 0 to 3;
   - R_{B}²: OR_{B}³, SR_{B}³ or NR_{B}³R_{B}⁴ or a saturated
   or unsaturated 3- to 7-membered heterocycle having at least one nitrogen atom and up to 3 heteroatoms, preferably from the group consisting of 0 and S, which is attached via the nitrogen atom to the carbonyl group in (S-II) and is unsubstituted or substituted by radicals from the group consisting of (C₁-C₄)-alkyl, (C₁-C₄)-alkoxy or optionally substituted phenyl, preferably a radical of the formula OR_{B}³, NHR_{B}⁴ or N(CH₃)₂, in particular of the formula OR_{B}³;
   - R_{B}³: is hydrogen or an unsubstituted or substituted aliphatic hydrocarbon radical having preferably a total of 1 to 18 carbon atoms;
   - R_{B}⁴: is hydrogen, (C₁-C₆)-alkyl, (C₁-C₆)-alkoxy or substituted or unsubstituted phenyl;
   - T_{B}: is a (C₁- or C₂)-alkanediyl chain which is unsubstituted or substituted by one or two (C₁-C₄)-alkyl radicals or by [(C₁-C₃)-alkoxy]carbonyl;
   preferably:
   a) compounds of the type of the 8-quinolinoxyacetic acid (S2), preferably
      1-methylhexyl (5-chloro-8-quinolinoxy)acetate (common name "cloquintocet-mexyl" (S2-1) (see Pestic. Man.),
      1,3-dimethylbut-1-yl (5-chloro-8-quinolinoxy)acetate (S2-2),
      4-allyloxybutyl (5-chloro-8-quinolinoxy)acetate (S2-3),
      1-allyloxyprop-2-yl (5-chloro-8-quinolinoxy)acetate- (S2-4),
      ethyl (5-chloro-8-quinolinoxy)acetate (S2-5),
      methyl (5-chloro-8-quinolinoxy)acetate (S2-6),
      allyl (5-chloro-8-quinolinoxy)acetate (S2-7),
      2-(2-propylideneiminoxy)-1-ethyl (5-chloro-8-quinolinoxy)acetate (S2-8), 2-oxoprop-1-yl (5-chloro-8-quinolinoxy)acetate (S2-9) and related compounds, as described in EP-A-86 750, EP-A-94 349 and EP-A-191 736 or EP-A-0 492 366, and also their hydrates and salts, as described in WO-A-2002/034048.
   b) Compounds of the type of the (5-chloro-8-quinolinoxy)malonic acid, preferably compounds such as diethyl (5-chloro-8-quinolinoxy)malonate, diallyl (5-chloro-8-quinolinoxy)malonate, methyl ethyl (5-chloro-8-quinolinoxy)malonate and related compounds, as described in EP-A-0 582 198.
C) Compounds of the formula (S-III) 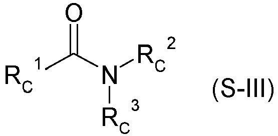 where the symbols and indices have the following meanings:
   Rc¹ is (C₁-C₄)-alkyl, (C₁-C₄)-haloalkyl, (C₂-C₄)-alkenyl, (C₂-C₄)-haloalkenyl, (C₃-C₇)-cycloalkyl, preferably dichloromethyl;
   R_{C}², R_{C}³ are identical or different and are hydrogen, (C₁-C₄)-alkyl, (C₂-C₄)-alkenyl, (C₂-C₄)-alkynyl, (C₁-C₄)-haloalkyl, (C₂-C₄)-haloalkenyl, (C₁-C₄)-alkylcarbamoyl-(C₁-C₄)-alkyl, (C₂-C₄)-alkenylcarbamoyl-(C₁-C₄)-alkyl, (C₁-C₄)-alkoxy-(C₁-C₄)-alkyl, dioxolanyl-(C₁-C₄)-alkyl, thiazolyl, furyl, furylalkyl, thienyl, piperidyl, substituted or unsubstituted phenyl, or R_{C}² and R_{C}³ together form a substituted or unsubstituted heterocyclic ring,
   preferably an oxazolidine, thiazolidine, piperidine, morpholine, hexahydropyrimidine or benzoxazine ring;
   preferably:
   Active compounds of the type of the dichloroacetamides which are frequently used as pre-emergence safener (soil-acting safeners), such as, for example,
   "dichlormid" (see Pestic.Man.) (= N,N-diallyl-2,2-dichloroacetamide),
   "R-29148" (= 3-dichloroacetyl-2,2,5-trimethyl-1,3-oxazolidine from Stauffer),
   "R-28725" (= 3-dichloroacetyl-2,2,-dimethyl-1,3-oxazolidine from Stauffer),
   "benoxacor" (see Pestic. Man.) (= 4-dichloroacetyl-3,4-dihydro-3-methyl-2H-1,4-benzoxazine),
   "PPG-1292" (= N-allyl-N-[(1,3-dioxolan-2-yl)methyl]dichloroacetamide from PPG Industries),
   "DKA-24" (= N-allyl-N-[(allylaminocarbonyl)methyl]dichloroacetamide from Sagro-Chem),
   "AD-67" or "MON 4660" (= 3-dichloroacetyl-1-oxa-3-aza-spiro[4,5]decane from Nitrokemia or Monsanto),
   "TI-35" (= 1-dichloroacetylazepane from TRI-Chemical RT)
   "diclonon" (dicyclonone) or "BAS145138" or "LAB145138" (= 3-dichloroacetyl-2,5,5-trimethyl-1,3-diazabicyclo[4.3.0]nonane from BASF) and
   "furilazole" or "MON 13900" (see Pestic. Man.) (= (RS)-3-dichloroacetyl-5-(2-furyl)-2,2-dimethyloxazolidine).
D) N-Acylsulfonamides of the formula (S-IV) and their salts 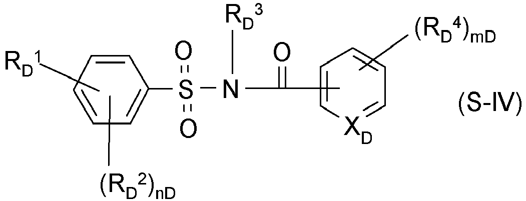 in which
   - X_{D}: is CH or N;
   - R_{D}¹: is CO-NR_{D}⁵R_{D}⁶ or NHCO-R_{D}⁷;
   - R_{D}²: is halogen, (C₁-C₄)-haloalkyl, (C₁-C₄)-haloalkoxy, nitro, (C₁-C₄)-alkyl, (C₁-C₄)-alkoxy, (C₁-C₄)-alkylsulfonyl, (C₁-C₄)-alkoxycarbonyl or (C₁-C₄)-alkylcarbonyl;
   - R_{D}³: is hydrogen, (C₁-C₄)-alkyl, (C₂-C₄)-alkenyl or (C₂-C₄)-alkynyl;
   - R_{D}⁴: is halogen, nitro, (C₁-C₄)-alkyl, (C₁-C₄)-haloalkyl, (C₁-C₄)-haloalkoxy, (C₃-C₆)-cycloalkyl, phenyl, (C₁-C₄)-alkoxy, cyano, (C₁-C₄)-alkylthio, (C₁-C₄)-alkylsulfinyl, (C₁-C₄)-alkylsulfonyl, (C₁-C₄)-alkoxycarbonyl or (C₁-C₄)-alkylcarbonyl;
   - R_{D}⁵: is hydrogen, (C₁-C₆)-alkyl, (C₃-C₆)-cycloalkyl, (C₂-C₆)-alkenyl, (C₂-C₆)-alkynyl, (C₅-C₆)-cycloalkenyl, phenyl or 3- to 6-membered heterocyclyl containing v_{D} heteroatoms from the group consisting of nitrogen, oxygen and sulfur, where the seven last-mentioned radicals are substituted by v_{D} substituents from the group consisting of halogen, (C₁-C₆)-alkoxy, (C₁-C₆)-haloalkoxy, (C₁-C₂)-alkylsulfinyl, (C₁-C₂)-alkylsulfonyl, (C₃-C₆)-cycloalkyl, (C₁-C₄)-alkoxycarbonyl, (C₁-C₄)-alkylcarbonyl and phenyl and, in the case of cyclic radicals, also (C₁-C₄)-alkyl and (C₁-C₄)-haloalkyl;
   - R_{D}⁶: is hydrogen, (C₁-C₆)-alkyl, (C₂-C₆)-alkenyl or (C₂-C₆)-alkynyl, where the three last-mentioned radicals are substituted by v_{D} radicals from the group consisting of halogen, hydroxy, (C₁-C₄)-alkyl, (C₁-C₄)-alkoxy and (C₁-C₄)-alkylthio, or
   - R_{D}⁵ and R_{D}⁶: together with the nitrogen atom carrying them form a pyrrolidinyl or piperidinyl radical;
   - R_{D}⁷: is hydrogen, (C₁-C₄)-alkylamino, di-(C₁-C₄)-alkylamino, (C₁-C₆)-alkyl, (C₃-C₆)-cycloalkyl, where the 2 last-mentioned radicals are substituted by v_{D} substituents from the group consisting of halogen, (C₁-C₄)-alkoxy, halogen-(C₁-C₆)-alkoxy and (C₁-C₄)-alkylthio and, in the case of cyclic radicals, also (C₁-C₄)-alkyl and (C₁-C₄)-haloalkyl;
   - n_{D}: is 0, 1 or 2;
   - m_{D}: is 1 or 2;
   - v_{D}: is 0, 1, 2 or 3;
   from among these, preference is given to compounds of the type of the N-acylsulfonamides, for example of the formula (S-V) below, which are known, for example, from WO 97/45016 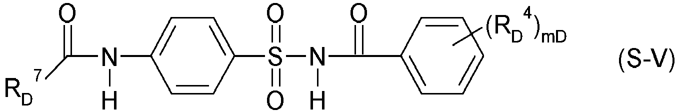 in which
   - R_{D}⁷: is (C₁-C₆)-alkyl, (C₃-C₆)-cycloalkyl, where the 2 last-mentioned radicals are substituted by V_{D} substituents from the group consisting of halogen, (C₁-C₄)-alkoxy, halogen-(C₁-C₆)-alkoxy and (C₁-C₄)-alkylthio and, in the case of cyclic radicals, also (C₁-C₄)-alkyl and (C₁-C₄)-haloalkyl;
   - R_{D}⁴: is halogen, (C₁-C₄)-alkyl, (C₁-C₄)-alkoxy, CF₃;
   - m_{D}: is 1 or 2;
   - V_{D}: is 0, 1, 2 or 3;
   and also
   acylsulfamoylbenzamides, for example of the formula (S-VI) below, which are known, for example, from WO 99/16744, 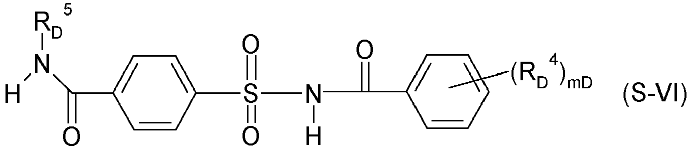 for example those in which
   R_{D}⁵ = cyclopropyl and (R_{D}⁴) = 2-OMe ("cyprosulfamide", S3-1),
   R_{D}⁵ = cyclopropyl and (R_{D}⁴) = 5-Cl-2-OMe (S3-2),
   R_{D}⁵ = ethyl and (R_{D}⁴) = 2-OMe (S3-3),
   R_{D}⁵ = isopropyl and (R_{D}⁴) = 5-Cl-2-OMe (S3-4) and
   R_{d}⁵ = isopropyl and (R_{D}⁴) = 2-OMe (S3-5);
   and also
   compounds of the type of the N-acylsulfamoylphenylureas of the formula (S-VII), which are known, for example, from EP-A-365484 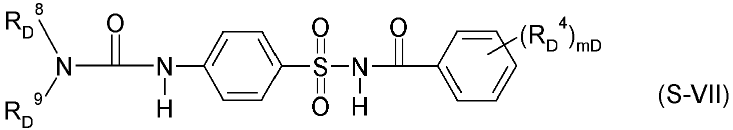 in which
   - R_{D}⁸ and R_{D}⁹: independently of one another are hydrogen, (C₁-C₈)-alkyl, (C₃-C₈)-cycloalkyl, (C₃-C₆)-alkenyl, (C₃-C₆)-alkynyl,
   - R_{D}⁴: is halogen, (C₁-C₄)-alkyl, (C₁-C₄)-alkoxy, CF₃
   - m_{D}: is 1 or 2;
   from among these in particular
   1-[4-(N-2-methoxybenzoylsulfamoyl)phenyl]-3-methylurea,
   1-[4-(N-2-methoxybenzoylsulfamoyl)phenyl]-3,3-dimethylurea,
   1-[4-(N-4,5-dimethylbenzoylsulfamoyl)phenyl]-3-methylurea,
   1-[4-(N-naphthoylsulfamoyl)phenyl]-3,3-dimethylurea,
G) active compounds from the class of the hydroxyaromatics and aromatic-aliphatic carboxylic acid derivatives, for example ethyl 3,4,5-triacetoxybenzoate, 3,5-dimethoxy-4-hydroxybenzoic acid, 3,5-dihydroxybenzoic acid, 4-hydroxysalicylic acid, 4-fluorosalicyclic acid, 1,2-dihydro-2-oxo-6-trifluoromethylpyridine-3-carboxamide, 2-hydroxycinnamic acid, 2,4-dichlorocinnamic acid, as described in WO 2004084631, WO 2005015994, WO 2006007981, WO 2005016001;
H) active compounds from the class of the 1,2-dihydroquinoxalin-2-ones, for example 1-methyl-3-(2-thienyl)-1,2-dihydroquinoxalin-2-one, 1-methyl-3-(2-thienyl)-1,2-dihydroquinoxaline-2-thione, 1-(2-aminoethyl)-3-(2-thienyl)-1,2-dihydroquinoxalin-2-one hydrochloride, 1-(2-methylsulfonylaminoethyl)-3-(2-thienyl)-1,2-dihydroquinoxalin-2-one, as described in WO 2005112630,
I) active compounds which, in addition to a herbicidal action against harmful plants, also have safener action on crop plants such as rice, such as, for example, "dimepiperate" or "MY-93" (see Pestic. Man.) (=S-1-methyl-1-phenylethyl piperidine-1-thiocarboxylate), which is known as safener for rice against damage by the herbicide molinate,
   "daimuron" or "SK 23" (see Pestic. Man.) (= 1-(1-methyl-1-phenylethyl)-3-p-tolyl-urea), which is known as safener for rice against damage by the herbicide imazosulfuron,
   "cumyluron" = "JC-940" (= 3-(2-chlorophenylmethyl)-1-(1-methyl-1-phenyl-ethyl)urea, see JP-A-60087254), which is known as safener for rice against damage by a number of herbicides,
   "methoxyphenone" or "NK 049" (= 3,3'-dimethyl-4-methoxybenzophenone), which is known as safener for rice against damage by a number of herbicides,
   "CSB" (= 1-bromo-4-(chloromethylsulfonyl)benzene) (CAS Reg. No. 54091-06-4 from Kumiai), which is known as safener against damage by a number of herbicides in rice,
K) compounds of the formula (S-IX),
   as described in WO-A-1998/38856 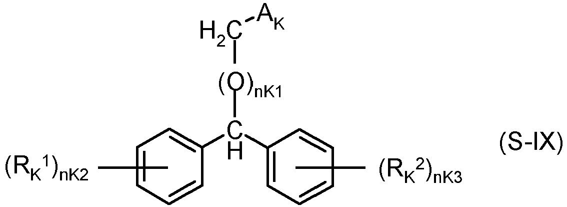 in which the symbols and indices have the following meanings:
   - R_{K}¹, R_{K}²: independently of one another are halogen, (C₁-C₄)-alkyl, (C₁-C₄)-alkoxy, (C₁-C₄)-haloalkyl, (C₁-C₄)-alkylamino, di-(C₁-C₄)-alkylamino, nitro;
   - A_{K}: is COOR_{K}³ or COOR_{K}⁴
   - R_{K}³, R_{K}⁴: independently of one another are hydrogen, (C₁-C₄)-alkyl, (C₂-C₆)-alkenyl, (C₂-C₄)-alkynyl, cyanoalkyl, (C₁-C₄)-haloalkyl, phenyl, nitrophenyl, benzyl, halobenzyl, pyridinylalkyl or alkylammonium,
   - n_{K}¹: is 0 or 1,
   - n_{K}², n_{K}³: independently of one another are 0, 1 or 2
   preferably: methyl (diphenylmethoxy)acetate (CAS Reg. No.: 41858-19-9),
L) compounds of the formula (S-X),
   as described in WO A-98/27049 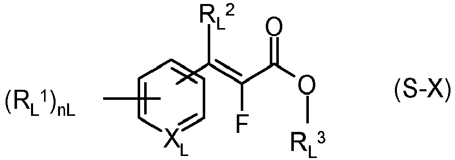 in which the symbols and indices have the following meanings:
   - X_{L}: is CH or N,
   - n_{L}: is, in the case that X=N, an integer from 0 to 4 and,
   in the case that X=CH, an integer from 0 to 5,
   - R_{L}¹: is halogen, (C₁-C₄)-alkyl, (C₁-C₄)-haloalkyl, (C₁-C₄)-alkoxy, (C₁-C₄)-haloalkoxy, nitro, (C₁-C₄)-alkylthio, (C₁-C₄)-alkylsulfonyl, (C₁-C₄)-alkoxycarbonyl, optionally substituted phenyl, optionally substituted phenoxy,
   - R_{L}²: is hydrogen or (C₁-C₄)-alkyl,
   - R_{L}³: is hydrogen, (C₁-C₈)-alkyl, (C₂-C₄)-alkenyl, (C₂-C₄)-alkynyl or aryl, where each of the carbon-containing radicals mentioned above is unsubstituted or substituted by one or more, preferably by up to three, identical or different radicals from the group consisting of halogen and alkoxy; or salts thereof,
M) active compounds from the class of the 3-(5-tetrazolylcarbonyl)-2-quinolones, for example 1,2-dihydro-4-hydroxy-1-ethyl-3-(5-tetrazolylcarbonyl)-2-quinolone (CAS Reg. No.: 219479-18-2), 1,2-dihydro-4-hydroxy-1-methyl-3-(5-tetrazolylcarbonyl)-2-quinolone (CAS Reg. No.: 95855-00-8), as described in WO-A-1999000020,
N) compounds of the formula (S-XI) or (S-XII),
   as described in WO-A-2007023719 and WO-A-2007023764 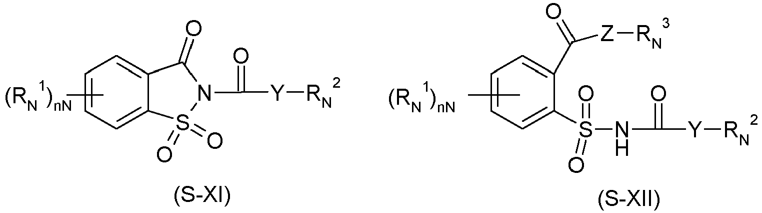 in which
   - R_{N}¹: is halogen, (C₁-C₄)-alkyl, methoxy, nitro, cyano, CF₃, OCF₃
   - Y, Z: independently of one another are 0 or S,
   - n_{N}: is an integer from 0 to 4,
   - R_{N}²: is (C₁-C₁₆)-alkyl, (C₂-C₆)-alkenyl, (C₃-C₆)-cycloalkyl, aryl, benzyl, halobenzyl,
   - R_{N}³: is hydrogen, (C₁-C₆)alkyl,
O) one or more compounds from the group consisting of:
   1,8-naphthalic anhydride,
   O,O-diethyl S-2-ethylthioethyl phosphorodithioate (disulfoton),
   4-chlorophenyl methylcarbamate (mephenate),
   O,O-diethyl O-phenyl phosphorothioate (dietholate),
   4-carboxy-3,4-dihydro-2H-1-benzopyran-4-acetic acid (CL-304415, CAS Reg. No.: 31541-57-8),
   2-propenyl 1-oxa-4-azaspiro[4.5]decane-4-carbodithioate (MG-838, CAS Reg. No.: 133993-74-5),
   methyl [(3-oxo-1H-2-benzothiopyran-4(3H)-ylidene)methoxy]acetate (from WO-A-98/13361; CAS Reg. No.: 205121-04-6),
   cyanomethoxyimino(phenyl)acetonitrile (cyometrinil),
   1,3-dioxolan-2-ylmethoxyimino(phenyl)acetonitrile (oxabetrinil),
   4'-chloro-2,2,2-trifluoroacetophenone O-1,3-dioxolan-2-ylmethyloxime (fluxofenim),
   4,6-dichloro-2-phenylpyrimidine (fenclorim),
   benzyl 2-chloro-4-trifluoromethyl-1,3-thiazole-5-carboxylate (flurazole),
   2-dichloromethyl-2-methyl-1,3-dioxolane (MG-191),
including the stereoisomers, and the salts customary in agriculture.

A mixture N-(1,2,5-oxadiazol-3-yl)benzamides whose phenyl ring is substituted in the 2-, 3- and 4-position by selected radicals as defined above or their salts to be applied in connection with other known active compounds, such as fungicides, insecticides, acaricides, nematicides, bird repellents, plant nutrients and soil structure improvers to transgenic plants containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 is likewise possible.

Some of the safeners are already known as herbicides and accordingly, in addition to the herbicidal action against harmful plants, also act by protecting the crop plants. The weight ratios of herbicide (mixture) to safener generally depend on the herbicide application rate and the effectiveness of the safener in question and may vary within wide limits, for example in the range from 200:1 to 1:200, preferably from 100:1 to 1:100, in particular from 20:1 to 1:20. The safeners may be formulated analogously to the compounds of the formula (I) or their mixtures with other herbicides/pesticides and be provided and used as a finished formulation or as a tank mix with the herbicides.

The required application rate of the N-(1,2,5-Oxadiazol-3-yl)benzamides as defined above to areas where such transgenic plants containing one or more chimeric gene(s) (I) comprising a DNA sequence encoding hydroxyphenylpyruvate dioxygenase (HPPD) derived from a member of a group of organisms, consisting of (a) Avena, preferably Avena sativa, more preferably comprising a DNA sequence identical to SEQ ID No. 1 encoding HPPD defined by SEQ ID No. 2, (b) Pseudomonas, preferably Pseudomonas fluorescens, more preferably comprising a DNA sequence identical to SEQ ID No. 3 encoding HPPD defined by SEQ ID No. 4, (c) Synechococcoideae, preferably Synechococcus sp., more preferably comprising a DNA sequence identical to SEQ ID No. 6, encoding HPPD defined by SEQ ID No. 7, (d) Blepharismidae, preferably Blepharisma japonicum, more preferably comprising a DNA sequence identical to SEQ ID No. 8 encoding HPPD defined by SEQ ID No. 9, (e) Rhodococcus, preferably Rhodococcus sp. (strain RHA1), isolate ro03041 more preferably comprising a DNA sequence identical to SEQ ID No. 10 encoding HPPD defined by SEQ ID No. 11, or Rhodococcus sp. (strain RHA1), isolate ro02040, more preferably comprising a DNA sequence identical to SEQ ID No. 12 encoding HPPD defined by SEQ ID No. 13 , (f) Picrophilaceae, preferably Picrophilus torridus, more preferably comprising a DNA sequence identical to SEQ ID No. 14 encoding HPPD defined by SEQ ID No. 15, (g) Kordia, preferably Kordia algicida, more preferably comprising a DNA sequence identical to SEQ ID No. 16 encoding HPPD defined by SEQ ID No. 17 or (II) comprising one or more mutated DNA sequences of HPPD encoding genes of the before defined organisms, preferably mutants as described in WO 2010/085705, US6,245,968, WO 2009/144079, PCT/EP2010/070561, PCT/EP2010/070567, PCT/EP2010/070578, PCT/EP2010/070570, or PCT/EP2010/070575 varies depending, inter alia, on external conditions such as temperature, humidity and the type of herbicide used. It can vary within wide limits, for example between 0.001 and 10 000 g/ha or more of active substance; however, it is preferably between 0.5 and 5000 g/ha, particularly preferably between 0.5 and 1000 g/ha and very particularly preferably between 0.5 and 500 g/ha.

### SEQUENCES LISTING

| | |
|---|---|
| SEQ ID No. 1: | Nucleic acid sequence encoding *Avena sativa HPPD optimized for the expression in E. coli cells* |
| SEQ ID No. 2: | Protein encoded by SEQ ID No. 1 |
| SEQ ID No. 3: | Nucleic acid sequence encoding *Pseudomonas fluorescens* HPPD mutated at position 336; mutation Gly => Trp |
| SEQ ID No. 4: | Protein encoded by SEQ ID No. 3 |
| SEQ ID No. 5: | Nucleic acid sequence encoding *Pseudomonas fluorescens* HPPD mutated at at position 336; mutation Gly => Trp; optimized for the expression in soybean and cotton |
| SEQ ID No. 6: | Nucleic acid sequence encoding *Synechococcus sp. HPPD* |
| SEQ ID No. 7: | Protein encoded by SEQ ID No. 6 |
| SEQ ID No. 8: | Nucleic acid sequence encoding Blepharisma japonicum *HPPD* |
| SEQ ID No. 9: | Protein encoded by SEQ ID No. 8 |
| SEQ ID No. 10: | Nucleic acid sequence encoding Rhodococcus sp. (strain RHA1), isolate ro03041 HPPD |
| SEQ ID No. 11: | Protein encoded by SEQ ID No. 10 |
| SEQ ID No. 12: | Nucleic acid sequence encoding Rhodococcus sp. (strain RHA1), isolate ro02040 HPPD |
| SEQ ID No. 13: | Protein encoded by SEQ ID No. 12 |
| SEQ ID No. 14: | Nucleic acid sequence encoding Picrophilus torridus *HPPD* |
| SEQ ID No. 15: | Protein encoded by SEQ ID No. 14 |
| SEQ ID No. 16: | Nucleic acid sequence encoding Kordia algicida *HPPD* |
| SEQ ID No. 17: | Protein encoded by SEQ ID No. 16 |
| SEQ ID No. 18: | Nucleic acid sequence encoding Synechococcus sp. HPPD optimized for the expression in soybean and cotton |
| SEQ ID No. 19: | Nucleic acid sequence encoding Blepharisma japonicum HPPD optimized for the expression in soybean and cotton |
| SEQ ID No. 20: | Nucleic acid sequence encoding Rhodococcus sp. (strain RHA1), isolate ro0341 HPPD optimized for the expression in soybean and cotton |
| SEQ ID No. 21: | Nucleic acid sequence encoding Rhodococcus sp. (strain RHA1), isolate ro0240 HPPD optimized for the expression in soybean and cotton |
| SEQ ID No. 22: | Nucleic acid sequence encoding Picropphilus torridus HPPD optimized for the expression in soybean and cotton |
| SEQ ID No. 23: | Nucleic acid sequence encoding Kordia algicida HPPD optimized for the expression in soybean and cotton |

The examples which follow illustrate the invention

### I. Cloning of specific genes coding for HPPDs from various organisms

### A. Cloning of Avena HPPD (according WO02/46387)

### A1- Cloning for expression in E. coli cells

cDNA coding for Avena sativa HPPD (AvHPPD; SEQ ID No. 1) was ordered at GeneArt (Regensburg, Germany) using the codon usage optimized for the expression of the gene in Escherichia coli cells. Upstream to the start codon ATG, was added the sequence corresponding to the recognition site of the restriction enzyme BamHI, and downstream to the stop codon was added the sequence stretch corresponding to the recognition site of the enzyme HindIII. The synthesized fragment was cloned using the restriction enzymes BamHI and HindIII in the previously opened vector pET32a (Novagen, Darmstadt, Germany), in order to obtain a fusion with the HisTag present in the vector at the N-Terminal extremity from the AvHPPD protein (SEQ ID No. 2). The resulting vector was named pET32a-AvHPPDe.

The protein was produced in E.coli and isolated following the standard protocol (as described for example in WO2009/144097).

### A2- Cloning of the AvHPPD gene in the pBin19 binary vector for expression in tobacco plants

The cDNA corresponding to the gene coding for AvHPPD protein was cut out from the plasmid pET32a-AvHPPDe using the restriction enzymes Ncol and Notl. The overhang sequence resulting from the Notl restriction was filled up, and the consequent fragment was then cloned in the vector pRT100-OTPc (see for example Töpfer (1987), Nucleic Acids Res. 15: 5890, and PCT/EP2010/070561) previously restricted with the enzymes Ncol and Smal. In this vector, the sequence coding for the AvHPPD was located downstream to the sequence corresponding to an optimized transit peptide responsible for the translocation of the protein to the chloroplast, itself downstream of the sequence corresponding to the CaMV 35S promoter (see for example WO2009/144097). The nucleotide sequence corresponding to the expression cassette CaMV35S-OTPc-AvHPPDe-35S was restricted using the enzyme Sbfl and further cloned into the previously opened vector pBin19 with the same enzyme. The resulting plasmid was named pBin19-CaMV35S-OTPc-AvHPPDe-35S, and was used to transform Agrobacterium tumefaciens strain ATHV (see for example PCT/EP2010/070561).

### B Cloning of PfHPPD-G336W

### B1- Cloning of PfHPPD-G336W for the expression in E. coli cells

The gene coding for the mutant HPPD G336W (SEQ ID No. 3) (US 6,245,968) from Pseudomonas fluorescens in the plasmid pKK233-2 (Clontech) (US 6245968) was used as template for a PCR to add to the sequence at it 5' extremity the sequence corresponding to the recognition site of the enzyme Ncol and at its 3' extremity the sequence corresponding to the recognition site of the enzyme Xbal. (see WO 2009/144079). The cloning was made in order to obtain a His tag fusion protein at the N-terminal extremity of the Pseudomonas HPPD G336W (SEQ ID No. 4), named "pSE420(RI)NX-PfG336W".

### B2- Cloning of PfHPPD-G336W for the expression in tobacco plants pFC0117

A binary vector for tobacco or soybean transformation is, for example, constructed with the CaMV35 promoter driving the expression of the gene PfHPPD-G336W (SEQ ID No 5), with a codon usage optimized for the expression in dicotyledoneous plants and at its 5'extremity was added a sequence coding for an OTP, and further upstream a sequence TEV (Tobacco etch virus) to improve the stability of the mRNA in plants followed by the CaMV35S terminator. Additionally, the transformation vector also contains a PAT gene cassette in which the gene is driven by a CaVM35S promoter and followed by a CaMV35S terminator for glufosinate based selection during the transformation process and a 2mEPSPS gene cassette in which the gene is driven by an histone promoter from Arabidopsis to confer tolerance to the herbicide glyphosate to the transformed plants. The binary vector was called pFC0117.

### C - Cloning of HPPD obtained from Blepharisma and Kordia for expression in E.coli or in tobacco plants

These clonings were done as described in PCT/EP2010/070567 (Blepharisma japonicum, FMP37, Example 1, named "pSE420(RI)NX-FMP37" ) and PCT/EP2010/070575 (Kordia algicida, FMP27, Example 1, named "pSE420(RI)NX-FMP27").

### D - Production of HPPD protein in E coli, purification via His-Tag

The *Arabidopsis thaliana* AtHPPD coding sequence (1335 bp; Genebank AF047834; WO 96/38567) was initially cloned into the expression vector pQE-30 (QIAGEN, Hilden, Germany) in between the restriction sites of BamHI and HindIII. The obtained vector was called "pQE30-AtHPPD" (see WO 2009/144079).

The plasmid possesses the trp-lac (trc) promoter and the *lac*I^{q} gene that provides the *lac* repressor in every *E*. *coli* host strain. The *lac* repressor binds to the *lac* operator (*lac*O) and restricts expression of the target gene; this inhibition can be alleviated by induction with Isopropyl β-D-1-thiogalactopyranoside (IPTG).

All above defined E. coli expression vectors were used to transform *Escherichia coli* BL21 cells (Merck, Darmstadt, Germany).

For the AtHPPD (*Arabidopsis thaliana* HPPD) that was used as reference see WO 2009/144079.

Expression of HPPD was carried out in *E*. *coli* K-12 BL21 containing pQE30-*AtHPPD,* pET32a-AvHPPDe or pSE420(RI)NX-FMP27 or pSE420(RI)NX-FMP37. Cells were allowed to grow until OD reached 0.5, then expression was initiated from the trp-lac (trc) promoter by induction with 1 mM IPTG which binds to the *lac* repressor and causes its dissociation from the *lac* operon. Expression was carried out over 15 h at 28 °C.

To prepare the pre-starter culture, 2 mL of TB medium (100 µg*mL⁻¹ carbenicillin) were inoculated with 50 µL of an *E*. *coli* K-12 BL21 glycerol stock. The pre-starter culture was incubated at 37 °C with shaking at 140 rpm for 15 h. 200µl of the pre-starter culture was used to initiate the starter culture (5mL TB supplement with 100 µg*L⁻¹), which was incubated 3 h at 37°C.

To prepare the main culture, 400 mL of TB medium (100 µg*mL⁻¹ carbenicillin) were inoculated with 4 mL of the starter culture. This starter culture was incubated at 37 °C with shaking at 140 rpm until OD₆₀₀ 0.5 was reached. Then recombinant protein expression was induced with 400 µl of 1 M IPTG solution. The cells were allowed to grow for an additional hour under these conditions, then the temperature was lowered to 28°C and the culture was shaken at 140 rpm for 15 h. Cells were harvested by centrifugation at 6000 x g for 15 min at 4 °C. Then cell pellets were stored at -80 °C.

Isolation and purification of HiS₆-AtHPPD, His6-AvHPPD, PfHPPD-G336W, His₆-FMP27 and His₆-FMP37 in native form Lysis of cells

Cells were lysed using Lysozyme, an enzyme that cleaves the 1,4-β-linkages between N-acetylmuramic acid and N-acetyl-D-glucosamine residues in peptidoglycan which forms the bacterial cell wall. Cell membranes were then disrupted by the internal pressure of the bacterial cell. In addition, the lysis buffer contained Benzonase^{®} Nuclease, an endonuclease that hydrolyzes all forms of DNA and RNA without damaging proteins and thereby largely reduces viscosity of the cell lysate. Lysis under native conditions was carried out on ice.

For purification of His₆-tagged proteins the QIA*express*^{®} Ni-NTA Fast Start Kit was used following the user manual instruction.

### Purification of His₆-tagged proteins by immobilized metal ion affinity chromatography (IMAC)

The cleared cell lysate (10 mL) obtained after centrifugation of the lysis reaction was loaded onto a Ni-NTA Fast Start Column from the QIA*express*^{®} Ni-NTA Fast Start Kit (Qiagen, Hilden, Germany) and purification was carried out according to the instruction manual. The His₆-tagged protein was eluted with 2.5 mL of elution buffer.

### Desalting of HPPD solutions by gel filtration

HPPD solutions eluted from a Ni-NTA Fast Start Column with 2.5 mL of elution buffer were applied to a Sephadex G-25 PD-10 column (GE Healthcare, Freiburg, Germany) following the user manual instruction. After the whole sample had entered the gel bed, elution was performed with 3.5 mL of storage buffer.

The HPPD solutions eluted from the desalting column were frozen at -80 °C in 1 mL aliquots.

Determination of HPPD protein concentration using the Bradford protein assay Protein concentration was determined using the standard Bradford assay (Bradford, (1976), Anal Biochem 72: 248-254).

### Determination of purity of HPPD solutions using SDS-PAGE

The integrity of the eluted protein was checked by SDS-PAGE protein gel electrophoresis using the gel NuPAGE^{®} Novex 4-12 % Bis-Tris Gels (Invitrogen, Karlsruhe, Germany), approximately 10 µg of protein were loaded. 10 µL of Laemmli Sample Buffer was added to 1-10 µL of protein solution and the mixture was incubated at 90 °C for 10 min. After short centrifugation step, the whole mixture was loaded into a slot of an SDS gel previously fixed in a XCell *SureLock*™ Novex Mini-Cell gel chamber filled with NuPAGE^{®} MOPS SDS Running Buffer (diluted from the 20 x-solution with ddH₂O). A voltage of 150 was then applied to the gel chamber for 1 h. For staining of protein bands, the gel was immersed in Coomassie Brilliant Blue R-250 Staining Solution. For destaining of the polyacrylamide gel, it was immersed in Coomassie Brilliant Blue R-250 Destaining Solution until protein bands appear blue on a white gel.

### Evaluation of tolerance to HPPD inhibitors of HPPD enzymes

The HPPD activity was checked by the standard spectrophotmetric assay (method extensively described in WO 2009/144079)

### E - Evaluation of tolerance to several HPPD inhibitor herbicides

Determination of HPPD activity in presence of several HPPD inhibitors

Level of tolerance of HPPD proteins obtained from different organisms was determined according to the procedure as described in PCT/EP2010/070575.

On the below Table E1, it can be clearly seen, that the HPPDs obtained from Kordia algicida (FMP27), Blepharisma japonicum (FMP37) showed superior level of tolerance to N-(1,2,5-oxadiazol-3-yl)benzamides than the Arabidopsis thaliana HPPD (AtHPPD) under identical experimental conditions.

Table E1: Determination of percentage of inhibition in presence of 5.0x10⁻⁶M of Compound "1-56" compared to the activity measured in absence of Compound No. "1-56" with HPPD originated from *Arabidopsis thaliana (AtHPPD),* FMP27 (derived from Kordia algicida) and FMP37 (derived from Blepharisma japonicum).

### E1 Compound "1-56"

| Protein | Inihibition % |
|---|---|
| AtHPPD | 90 |
| FMP27 | 85 |
| FMP37 | 79 |

These data show that the HPPD derived from Kordia algicida and Blepharisma japonicum is less sensitive to N-(1,2,5-oxadiazol-3-yl)benzamides compared to the inhibition observed with the HPPD derived from *Arabidopsis thaliana,* as shown for Compound "1-56".

### F - Evaluation of tolerance to HPPD inhibitors of tobacco plants expressing tolerant HPPD enzymes

Genes coding for the selected HPPD were obtained from a member of the group of organisms consisting of Avena sativa, Pseudomonas fluorescens mutant G336W, Blepharisma japonicum and Kordia algicida and cloned into the binary vector pBin19 allowing the integration of DNA into the tobacco genome, under the control of the CaMV35S promoter. For the cloning procedures, see A2 above for Avena sativa, see B2 above for Pseudomonas fluorescens, mutant G336W, see PCT/EP2010/070567, Example 5; for Blepharisma japonicum (FMP37) and see PCT/EP2010/070575, Example 5 for Kordia algicida (FMP27).

Between the sequence corresponding to the promoter and the sequence coding for the HPPD was inserted a DNA sequence coding for a transit peptide to the chloroplast, in order to add at the N-terminal extremity of the protein a target signal to allow the localization of the HPPD protein into the plant chloroplast.

Seeds harvested from T0 transformants will be put on standard soil for germination. Three weeks later plantlets will be transferred to single pots and grown under standard cultivation conditions (PCT/EP2010/070575). Two weeks later plants we be sprayed with several N-(1,2,5-oxadiazol-3-yl)benzamides whose phenyl ring is substituted in the 2-, 3- and 4-position by selected radicals as defined above.

One week later, the symptoms due to the application of the herbicides will be evaluated.

## Claims

1. The use of N-(1,2,5-oxadiazol-3-yl)benzamides of the formula (I) or their salts 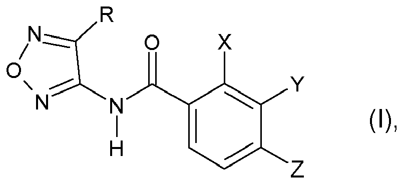 for controlling unwanted plants in areas of transgenic crop plants being tolerant to HPPD inhibitor herbicides by containing one or more chimeric gene(s) comprising (I) a DNA sequence encoding hydroxyphenylpyruvate dioxygenase (HPPD) derived from a member of a group of organisms consisting of (a) Avena, (b) Pseudomonas, (c) Synechococcoideae, (d) Blepharismidae, (e) Rhodococcus, (f) Picrophilaceae, (g) Kordia, or (II) comprising one or more mutated DNA sequences of HPPD encoding genes of the before defined organisms
in which
R is hydrogen, (C₁-C₆)-alkyl, (C₃-C₇)-cycloalkyl, halo-(C₁-C₆)-alkyl, (C₁-C₆)-alkoxy, halo-(C₁-C₆)-alkoxy, (C₂-C₆)-alkenyl, (C₂-C₆)-alkenyloxy, (C₂-C₆)-haloalkenyl, (C₂-C₆)-alkynyl, (C₂-C₆)-alkynyloxy, (C₂-C₆)-haloalkynyl, cyano, nitro, methylsulfenyl, methylsulfinyl, methylsulfonyl, acetylamino, benzoylamino, methoxycarbonyl, ethoxy-carbonyl, methoxycarbonylmethyl, ethoxycarbonylmethyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl or heteroaryl, heterocyclyl or phenyl, each of which is substituted by s radicals selected from the group consisting of methyl, ethyl, methoxy, trifluoromethyl and halogen,
X and Z independently of one another are in each case nitro, halogen, cyano, formyl, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkylS(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², NR₁R₂, P(O)(OR⁵)₂, or heteroaryl, heterocyclyl or phenyl, each of which is substituted by s radicals selected from the group consisting of methyl, ethyl, methoxy, nitro, trifluoromethyl and halogen,
Y is nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹,CO₂R¹, OR¹, OCOR¹, OSO₂R², S(O)ₙR², SO₂OR¹, SO₂N(R¹)₂, NR¹SO₂R², NR¹COR¹, (C₁-C₆)-alkyl-heteroaryl, O-(C₁-C₆)-alkyl-heterocyclyl, O-(C₁-C₆)-alkyl-heteroaryl, (C₁-C₆)-alkyl-heterocyclyl, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-CN, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², NR¹R², P(O)(OR⁵)₂, tetrahydrofuranyloxymethyl, tetrahydrofuranylmethoxymethyl, O(CH2)-3,5-dimethyl-1,2-oxazol-4-yl, O(CH₂)₂-O(3,5-dimethoxypyrimidin-2-yl, O(CH₂)-5-pyrrolidin-2-one, O(CH₂)-5-2,4-dimethyl-2,4-dihydro-3H-1,2,4-triazol-3-one, or heteroaryl or heterocyclyl, each of which is substituted by s radicals selected from the group consisting of methyl, ethyl, methoxy, halogen and cyanomethyl,
R¹ is hydrogen, (C₁-C₆)-alkyl, (C₁-C₆)-haloalkyl, (C₂-C₆)-alkenyl, (C₂-C₆)-haloalkenyl, (C₂-C₆)-alkynyl, (C₂-C₆)-haloalkynyl, (C₃-C₆)-cycloalkyl, (C₃-C₆)-halocycloalkyl, (C₁-C₆)-alkyl-O-(C₁-C₆)-alkyl, (C₃-C₆)-cycloalkyl-(C₁-C₆)-alkyl, phenyl or phenyl-(C₁-C₆)-alkyl, where the 12 last-mentioned radicals are substituted by s radicals selected from the group consisting of cyano, halogen, nitro, rhodano, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
R² is (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
R³ is hydrogen, (C₁-C₆)-alkyl, (C₂-C₆)-alkenyl or (C₂-C₆)-alkynyl,
R⁴ is (C₁-C₆)-alkyl, (C₂-C₆)-alkenyl or (C₂-C₆)-alkynyl,
R⁵ is methyl or ethyl,
n is 0, 1 or 2,
s is 0, 1, 2 or 3.

2. The use according to claim 1, where, in formula (I)
R is hydrogen, (C₁-C₆)-alkyl, (C₃-C₇)-cycloalkyl, halo-(C₁-C₆)-alkyl, (C₁-C₆)-alkoxy, halo-(C₁-C₆)-alkoxy, cyano, nitro, methylsulfenyl, methylsulfinyl, methylsulfonyl, acetylamino, benzoylamino, methoxycarbonyl, ethoxycarbonyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl, a heterocycle selected from the group consisting of pyridin-2-yl, pyridin-3-yl, pyridin-4-yl, piperidin-2-yl, piperidin-3-yl, piperidin-4-yl, benzisoxazol-2-yl, 1,2,4-oxadiazol-3-yl, 1,2,4-triazol-3-yl, 1-ethylbenzimidazol-2-yl, 4-methylthiazol-2-yl, thiophen-2-yl, furan-2-yl, furan-3-yl, tetrahydrofuran-2-yl, tetrahydrofuran-3-yl, isoxazol-2-yl, isoxazol-3-yl, oxazol-2-yl, oxazol-3-yl, pyrrol-2-yl, pyrrol-3-yl, imidazol-2-yl, imidazol-5-yl, imidazol-4-yl, pyrazol-3-yl, pyrazol-5-yl, pyrazol-4-yl, isoxazol-3-yl, isoxazol-4-yl, isoxazol-5-yl, oxazol-2-yl, oxazol-4-yl, oxazol-5-yl, isothiazol-3-yl, isothiazol-4-yl, isothiazol-5-yl, thiazol-2-yl, thiazol-4-yl, thiazol-5-yl, 1,2,3-triazol-4-yl, 1,2,3-triazol-5-yl, 1,2,5-triazol-3-yl, 1,3,4-triazol-2-yl, 1,2,4-triazol-3-yl, 1,2,4-triazol-5-yl, 1,2,4-oxadiazol-3-yl, 1,2,4-oxadiazol-5-yl, 1,3,4-oxadiazol-2-yl, 1,2,3-oxadiazol-4-yl, 1,2,3-oxadiazol-5-yl, 1,2,5-oxadiazol-3-yl, 1,2,4-thiadiazol-3-yl, 1,2,4-thiadiazol-5-yl, 1,3,4-thiadiazol-2-yl, 1,2,3-thiadiazol-4-yl, 1,2,3-thiadiazol-5-yl, 1,2,5-thiadiazol-3-yl, 2H-1,2,3,4-tetrazol-5-yl, 1H-1,2,3,4-tetrazol-1-yl, 1,2,3,4-oxatriazol-5-yl, 1,2,3,5-oxatriazol-4-yl, 1,2,3,4-thiatriazol-5-yl, 1,2,3,5-thiatriazol-4-yl, pyrazin-2-yl, pyrazin-3-yl, pyrimidin-2-yl, pyrimidin-4-yl, pyrimidin-5-yl, pyridazin-3-yl and pyridazin-4-yl,
which heterocycle is substituted by s radicals selected from the group consisting of methyl, methoxy, trifluoromethyl and halogen, or phenyl which is substituted by s radicals selected from the group consisting of methyl, methoxy, trifluoromethyl and halogen,
X and Z independently of each other are in each case nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², benzoxazol-2-yl, 1-ethylbenzimidazol-2-yl, piperidin-1-yl or 1,2,4-triazol-1-yl,
Y is nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², tetrahydrofuranyloxymethyl, tetrahydrofuranylmethoxymethyl, O(CH₂)-3,5-dimethyl-1,2-oxazol-4-yl, O(CH₂)₂-O(3,5-dimethoxypyrimidin-2-yl, O(CH₂)-5-pyrrolidin-2-one or O(CH₂)-5-2,4-dimethyl-2,4-dihydro-3H-1,2,4-triazol-3-one,
R¹ is hydrogen, (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
R² is (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
R³ is hydrogen, (C₁-C₆)-alkyl, (C₂-C₆)-alkenyl or (C₂-C₆)-alkynyl,
R⁴ is (C₁-C₆)-alkyl, (C₂-C₆)-alkenyl or (C₂-C₆)-alkynyl,
n is 0, 1 or 2,
s is 0, 1, 2 or 3.

3. The use according to claim 1, where, in formula (I)
R is hydrogen, (C₁-C₆)-alkyl, (C₃-C₇)-cycloalkyl, halo-(C₁-C₆)-alkyl, (C₁-C₆)-alkoxy, halo-(C₁-C₆)-alkoxy, cyano, nitro, methylsulfenyl, methylsulfinyl, methylsulfonyl, acetylamino, benzoylamino, methoxycarbonyl, ethoxycarbonyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl, a heterocycle selected from the group consisting of pyridin-2-yl, pyridin-3-yl, pyridin-4-yl, piperidin-2-yl, piperidin-3-yl, piperidin-4-yl, benzisoxazol-2-yl, 1,2,4-oxadiazol-3-yl, 1,2,4-triazol-3-yl, 1-ethylbenzimidazol-2-yl, 4-methylthiazol-2-yl, thiophen-2-yl, furan-2-yl, furan-3-yl, tetrahydrofuran-2-yl, tetrahydrofuran-3-yl, isoxazol-2-yl, isoxazol-3-yl, oxazol-2-yl, oxazol-3-yl, pyrrol-2-yl, pyrrol-3-yl, imidazol-2-yl, imidazol-5-yl, imidazol-4-yl, pyrazol-3-yl, pyrazol-5-yl, pyrazol-4-yl, isoxazol-3-yl, isoxazol-4-yl, isoxazol-5-yl, oxazol-2-yl, oxazol-4-yl, oxazol-5-yl, isothiazol-3-yl, isothiazol-4-yl, isothiazol-5-yl, thiazol-2-yl, thiazol-4-yl, thiazol-5-yl, 1,2,3-triazol-4-yl, 1,2,3-triazol-5-yl, 1,2,5-triazol-3-yl, 1,3,4-triazol-2-yl, 1,2,4-triazol-3-yl, 1,2,4-triazol-5-yl, 1,2,4-oxadiazol-3-yl, 1,2,4-oxadiazol-5-yl, 1,3,4-oxadiazol-2-yl, 1,2,3-oxadiazol-4-yl, 1,2,3-oxadiazol-5-yl, 1,2,5-oxadiazol-3-yl, 1,2,4-thiadiazol-3-yl, 1,2,4-thiadiazol-5-yl, 1,3,4-thiadiazol-2-yl, 1,2,3-thiadiazol-4-yl, 1,2,3-thiadiazol-5-yl, 1,2,5-thiadiazol-3-yl, 2H-1,2,3,4-tetrazol-5-yl, 1H-1,2,3,4-tetrazol-1-yl, 1,2,3,4-oxatriazol-5-yl, 1,2,3,5-oxatriazol-4-yl, 1,2,3,4-thiatriazol-5-yl, 1,2,3,5-thiatriazol-4-yl, pyrazin-2-yl, pyrazin-3-yl, pyrimidin-2-yl, pyrimidin-4-yl, pyrimidin-5-yl, pyridazin-3-yl and pyridazin-4-yl,
which heterocycle is substituted by s radicals selected from the group consisting of methyl, methoxy, trifluoromethyl and halogen, or phenyl which is substituted by s radicals selected from the group consisting of methyl, methoxy, trifluoromethyl and halogen,
X and Z independently of each other are in each case nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (Cᵢ-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂OR¹, (C-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², benzoxazol-2-yl, 1-ethylbenzimidazol-2-yl, piperidin-1-yl or 1,2,4-triazol-1-yl,
Y is nitro, halogen, cyano, rhodano, (C₁-C₆)-alkyl, (C₁-C₆)-haloalkyl, (C₂-C₆)-alkenyl, (C₂-C₆)-haloalkenyl, (C₂-C₆)-alkynyl, (C₃-C₆)-haloalkynyl, (C₃-C₆)-cycloalkyl, (C₃-C₆)-halocycloalkyl, (C₃-C₆)-cycloalkyl-(C₁-C₆)-alkyl, (C₃-C₆)-halocycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-alkyl-S(O)ₙR², (C₁-C₆)-alkyl-OR¹, (C₁-C₆)-alkyl-OCOR¹, (C₁-C₆)-alkyl-OSO₂R², (C₁-C₆)-alkyl-COOR¹, (C₁-C₆)-alkyl-SO₂0R¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R², tetrahydrofuranyloxymethyl, tetrahydrofuranylmethoxymethyl, O(CH₂)-3,5-dimethyl-1,2-oxazol-4-yl, O(CH₂)₂-O(3,5-dimethoxypyrimidin-2-yl, O(CH₂)-5-pyrrolidin-2-one or O(CH₂)-5-2,4-dimethyl-2,4-dihydro-3H-1,2,4-triazol-3-one,
R¹ is hydrogen, (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
R² is (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of cyano, halogen, nitro, thiocyanato, OR³, S(O)ₙR⁴, N(R³)₂, NR³OR³, COR³, OCOR³, SCOR³, NR³COR³, CO₂R³, COSR³, CON(R³)₂ and (C₁-C₄)-alkoxy-(C₂-C₆)-alkoxycarbonyl,
R³ is hydrogen, (C₁-C₆)-alkyl, (C₂-C₆)-alkenyl or (C₂-C₆)-alkynyl,
R⁴ is (C₁-C₆)-alkyl, (C₂-C₆)-alkenyl or (C₂-C₆)-alkynyl,
n is 0, 1 or 2,
s is 0, 1, 2 or 3

4. The use as claimed in claim 1, where, in formula (I)
R is hydrogen, (C₁-C₆)-alkyl, (C₃-C₇)-cycloalkyl, halo-(C₁-C₆)-alkyl, (C₁-C₆)-alkoxy, halogen-(C₁-C₆)-alkoxy, cyano, nitro, methylsulfenyl, methylsulfinyl, methylsulfonyl, acetylamino, benzoylamino, methoxycarbonyl, ethoxycarbonyl, benzoyl, methylcarbonyl, piperidinylcarbonyl, trifluoromethylcarbonyl, halogen, amino, aminocarbonyl, methylaminocarbonyl, dimethylaminocarbonyl, methoxymethyl,
X and Z independently of one another are in each case nitro, halogen, cyano, (C₁-C₆)-alkyl, (C₁-C₆)-haloalkyl, (C₃-C₆)-cycloalkyl, OR¹, S(O)nR², (C₁-C₆)-alkyl-S(O)ₙR², (C₁-C₆)-alkyl-OR¹, (C₁-C₆)-alkyl-CON(R¹)₂, (C₁-C₆)-alkyl-SO₂N(R¹)₂, (C₁-C₆)-alkyl-NR¹COR¹, (C₁-C₆)-alkyl-NR¹SO₂R² or 1,2,4-triazol-1-yl,
Y is S(O)ₙR², 4,5-dihydro-1,2-oxazol-3-yl, 5-cyanomethyl-4,5-dihydro-1,2-oxazol-3-yl or 5-methoxymethyl-4,5-dihydro-1,2-oxazol-3-yl,
R¹ is hydrogen, (C₁-C₆)-alkyl, (C₂-C₆)-alkenyl, (C₂-C₆)-alkynyl, (C₃-C₆)-cycloalkyl, (C₃-C₆)-cycloalkyl-(C₁-C₆)-alkyl, phenyl or phenyl-(C₁-C₆)-alkyl, where the seven last-mentioned radicals are substituted by s radicals selected from the group consisting of halogen and OR³,
R² is (C₁-C₆)-alkyl, (C₃-C₆)-cycloalkyl or (C₃-C₆)-cycloalkyl-(C₁-C₆)-alkyl, where the three last-mentioned radicals are substituted by s radicals selected from the group consisting of halogen and OR³,
R³ is hydrogen or (C₁-C₆)-alkyl,
n ist 0, 1 or 2,
s is 0, 1, 2 or 3.

5. A method for controlling unwanted plants comprising the application of one or more N-(1,2,5-oxadiazol-3-yl)benzamides according to claim 1 in areas of transgenic crop plants being tolerant to HPPD inhibitor herbicides by containing one or more chimeric gene(s) comprising (I) a DNA sequence encoding hydroxyphenylpyruvate dioxygenase (HPPD) derived from a member of a group of organisms consisting of (a) Avena, (b) Pseudomonas, (c) Synechococcoideae, (d) Blepharismidae, (e) Rhodococcus, (f) Picrophilaceae, (g) Kordia, or comprising (II) one or more mutated DNA sequences of HPPD encoding genes of the before defined organisms, and in which the application is performed to (a) the unwanted plants, (b) to the seeds of unwanted plants, and/or (c) to the area on which the plants grow.

6. A method according to claim 5, in which the transgenic crop plant belongs to the group of dicotyledonous crops consisting of Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, and Vicia, or to the group of monocotyledonous crops consisting of Allium, Ananas, Asparagus, Avena, Hordeum, Oryza, Panicum, Saccharum, Secale, Sorghum, Triticale, Triticum, Zea.

7. A method according to claim 5 or 6 in which one or more N-(1,2,5-oxadiazol-3-yl)benzamide(s) is/are applied in combination with one or more HPPD inhibitor herbicides selected from the group consisting of triketone or pyrazolinate herbicide in mixed formulations or in the tank mix, and/or with further known active substances which are based on the inhibition of acetolactate synthase, acetyl-CoA carboxylase, cellulose synthase, enolpyruvylshikimate-3-phosphate synthase, glutamine synthetase, p-hydroxyphenylpyruvate dioxygenase, phytoene desaturase, photosystem I, photosystem II, protoporphyrinogen oxidase, or act as growth regulators.

8. A method according to claim 7, in which one or more N-(1,2,5-oxadiazol-3-yl)benzamide(s) is/are applied in combination with one or more HPPD inhibitor herbicides selected from the group consisiting of tembotrione, mesotrione, bicyclopyrone, tefuryltrione pyrasulfotole, pyrazolate, diketonitrile, benzofenap, or sulcotrione,

## Patentansprüche

1. Verwendung von N-(1,2,5-Oxadiazol-3-yl)benzamiden der Formel (I) oder ihren Salzen 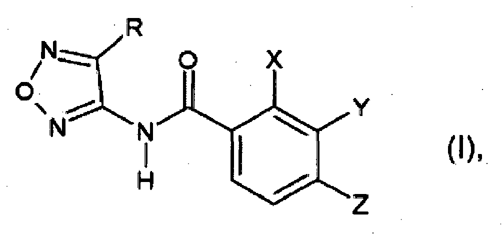 für die Bekämpfung von unerwünschten Pflanzen in Bereichen mit transgenen Kulturpflanzen, die dadurch, dass sie ein oder mehrere chimäre(s) Gen(e) mit (I) einer DNA-Sequenz, die für eine Hydroxyphenylpyruvatdioxygenase (HPPD) codiert, die von einem Mitglied einer Gruppe von Organismen bestehend aus (a) Avena, (b) Pseudomonas, (c) Synechococcoideae, (d) Blepharismidae, (e) Rhodococcus, (f) Picrophilaceae, (g) Kordia stammt, oder mit (II) einer oder mehreren mutierten DNA-Sequenzen von HPPD-codierenden Genen der oben definierten Organismen enthalten, gegenüber HPPD-Inhibitorherbiziden tolerant sind,
worin
R Wasserstoff, (C₁-C₆)-Alkyl, (C₃-C₇) -Cycloalkyl, Halogen- (C₁-C₆)-alkyl, (C₁-C₆)-Alkoxy, Halogen-(C₁-C₆)-alkoxy, (C₂-C₆)-Alkenyl, (C₂-C₆)-Alkenyloxy, (C₂-C₆)-Halogenalkenyl, (C₂-C₆)-Alkinyl, (C₂-C₆) -Alkinyloxy, (C₂-C₆) -Halogenalkinyl, Cyano, Nitro, Methylsulfenyl, Methylsulfinyl, Methylsulfonyl, Acetylamino, Benzoylamino, Methoxycarbonyl, Ethoxycarbonyl, Methoxycarbonylmethyl, Ethoxycarbonylmethyl, Benzoyl, Methylcarbonyl, Piperidinylcarbonyl, Trifluormethylcarbonyl, Halogen, Amino, Aminocarbonyl, Methylaminocarbonyl, Dimethylaminocarbonyl, Methoxymethyl oder Heteroaryl, Heterocyclyl oder Phenyl, die jeweils durch s Reste, ausgewählt aus der Gruppe bestehend aus Methyl, Ethyl, Methoxy, Trifluormethyl und Halogen, substituiert ist, bedeutet,
X und Z unabhängig voneinander jeweils Nitro, Halogen, Cyano, Formyl, Rhodano, (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₃-C₆)-Halogenalkinyl, (C₃-C₆)-Cycloalkyl, (C₃-C₆)-Halogencycloalkyl, (C₃-C₆)-Cycloalkyl-(C₁-C₆)-alkyl, (C₃-C₆-Halogencycloalkyl-(C₁-C₆-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-COOR¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², NR¹R², P(O)(OR⁵)₂ oder Heteroaryl, Heterocyclyl oder Phenyl, die jeweils durch s Reste, ausgewählt aus der Gruppe bestehend aus Methyl, Ethyl, Methoxy, Nitro, Trifluormethyl und Halogen, substituiert ist, bedeuten,
Y Nitro, Halogen, Cyano, Rhodano, (C₁-C₆)-Alkyl, (C₁-C₆) -Halogenalkyl, (C₂-C₆) -Alkenyl, (C₂-C₆)-Halogenalkenyl, (C₂-C₆-Alkinyl, (C₃-C₆)-Halogenalkinyl, (C₃-C₆) -Cycloalkyl, (C₃-C₆)-Halogencycloalkyl, (C₃-C₆)-Cycloalkyl-(C₁-C₆)-alkyl, (C₃-C₆-Halogencycloalkyl-(C₁-C₆-alkyl, COR¹, CO₂R¹, OR¹, OCOR¹, OSO₂R², S(O)ₙR², SO₂OR¹, SO₂N(R¹)₂, NR¹SO₂R², NR¹COR¹, (C₁-C₆)-Alkylheteroaryl, O-(C₁-C₆)-Alkylheterocyclyl, O-(C₁-C₆)-Alkylheteroaryl, (C₁-C₆)-Alkylhetero-cyclyl, (C₁-C₆)-Alkyl-S (O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-COOR¹, (C₁-C₆)-Alkyl-CN, (C₁-C₆)-Alkyl-SO₂OR¹, (C₁-C₆)-Alkyl-CON(R¹)₂, (C₁-C₆)-Alkyl-SO₂N(R¹)₂, (C₁-C₆) -Alkyl-NR¹COR¹, (C₁-C₆)-Alkyl-NR¹SO₂R², NR¹R², P(O)(OR⁵)₂, Tetrahydrofuranyloxymethyl, Tetrahydrofuranylmethoxymethyl, O(CH₂)-3,5-Dimethyl-1,2-oxazol-4-yl, O(CH₂)2-0-3,5-Dimethoxypyrimidin-2-yl, O(CH₂)-5-Pyrrolidin-2-on, O(CH₂)-5,2,4-Dimethyl-2,4-dihydro-3H-1,2,4-triazol-3-on, oder Heteroaryl oder Heterocyclyl, die jeweils durch s Reste, ausgewählt aus der Gruppe bestehend aus Methyl, Ethyl, Methoxy, Halogen und Cyanomethyl, substituiert ist, bedeutet,
R¹ Wasserstoff, (C₁-C₆)-Alkyl, (C₁-C₆-Halogenalkyl, (C₂-C₆)-Alkenyl, (C₂-C₆)-Halogenalkenyl, (C₂-C₆)-alkinyl, (C₂-C₆)-Halogenalkinyl, (C₃-C₆)-Cycloalkyl, (C₃-C₆-Halogencycloalkyl, (C₁-C₆)-Alkyl-O- (C₁-C₆)-alkyl, (C₃-C₆) -Cycloalkyl-(C₁-C₆-alkyl, Phenyl oder Phenyl-(C₁-C₆-alkyl, wobei die 12 letztgenannten Reste durch s Reste, ausgewählt aus der Gruppe bestehend aus Cyano, Halogen, Nitro, Rhodano, OR³, S(O)ₙR⁹, N(R³)₂, NR³OR³, COR³, OCOR³, SCOR³, NR³COR³, CO₂R³, COSR³, CON(R³)₂ und (C₁-C₄)-Alkoxy-(C₂-C₆)-alkoxycarbonyl, substituiert sind, bedeutet,
R² (C₁-C₆)-Alkyl, (C₂-C₆)-Alkenyl, (C₂-C₆)-Alkinyl, (C₃-C₆) -Cycloalkyl, (C₃-C₆) -Cycloalkyl- (C₁-C₆)-alkyl, Phenyl oder Phenyl-(C₁-C₆)-alkyl, wobei die sieben letztgenannten Reste durch s Reste aus der Gruppe bestehend aus Cyano, Halogen, Nitro. Thiocyanato, OR³, S(O)ₙR⁴, N(R³)₂, NR³OR³, COR³, OCOR³, SCOR³, NR³COR³, CO₂R³, COSR³, CON(R³)₂ und (C₁-C₄) -Alkoxy- (C₂-C₆) -alkoxycarbonyl substituiert sind, bedeutet,
R³ Wasserstoff, (C₁-C₆)-Alkyl, (C₂-C₆)-Alkenyl oder (C₂-C₆)-Alkinyl bedeutet,
R⁴ (C₁-C₆)-Alkyl, (C₂-C₆)-Alkenyl oder (C₂-C₆)-Alkinyl bedeutet,
R⁵ Methyl oder Ethyl bedeutet,
n 0, 1 oder 2 bedeutet,
s 0, 1, 2 oder 3 bedeutet.

2. Verwendung nach Anspruch 1, wobei in Formel (I)
R Wasserstoff, (C₁-C₆)-Alkyl, (C₃-C₇-Cycloalkyl, Halogen-(C₁-C₆)-alkyl, (C₁-C₆)-Alkoxy, Halogen-(C₁-C₆)-alkoxy, Cyano, Nitro, Methylsulfenyl, Methylsulfinyl, Methylsulfonyl, Acetylamino, Benzoylamino, Methoxycarbonyl, Ethoxycarbonyl, Benzoyl, Methylcarbonyl, Piperidinylcarbonyl, Trifluormethylcarbonyl, Halogen, Amino, Aminocarbonyl, Methylaminocarbonyl, Dimethylaminocarbonyl, Methoxymethyl, einen Heterocyclus, ausgewählt aus der Gruppe bestehend aus Pyridin-2-yl, Pyridin-3-yl, Pyridin-4-yl, Piperidin-2-yl, Piperidin-3-yl, Piperidin-4-yl, Benzisoxazol-2-yl, 1,2,4-Oxadiazol-3-yl, 1,2,4-Triazol-3-yl, 1-Ethylbenzimidazol-2-yl, 4-Methylthiazol-2-yl, Thiophen-2-yl, Furan-2-yl, Furan-3-yl, Tetrahydrofuran-2-yl, Tetrahydrofuran-3-yl, Isoxazol-2-yl, Isoxazol-3-yl, Oxazol-2-yl, Oxazol-3-yl, Pyrrol-2-yl, Pyrrol-3-yl, Imidazol-2-yl, Imidazol-5-yl, Imidazol-4-yl, Pyrazol-3-yl, Pyrazol-5-yl, Pyrazol-4-yl, Isoxazol-3-yl, Isoxazol-4-yl, Isoxazol-5-yl, Oxazol-2-yl, Oxazol-4-yl, Oxazol-5-yl, Isothiazol-3-yl, Isothiazol-4-yl, Isothiazol-5-yl, Thiazol-2-yl, Thiazol-4-yl, Thiazol-5-yl, 1,2,3-Triazol-4-yl, 1,2,3-Triazol-5-yl, 1,2,5-Triazol-3-yl, 1,3,4-Triazol-2-yl, 1,2,4-Triazol-3-yl, 1,2,4-Triazol-5-yl, 1,2,4-Oxadiazol-3-yl, 1,2,4-Oxadiazol-5-yl, 1,3,4-Oxadiazol-2-yl, 1,2,3-Oxadiazol-4-yl, 1,2,3-Oxadiazol-5-yl, 1,2,5-Oxadiazol-3-yl, 1,2,4-Thiadiazol-3-yl, 1,2,4-Thiadiazol-5-yl, 1,3,4-Thiadiazol-2-yl, 1,2,3-Thiadiazol-4-yl, 1,2,3-Thiadiazol-5-yl, 1,2,5-Thiadiazol-3-yl, 2H-1,2,3,4-Tetrazol-5-yl, 1H-1,2,3,4-Tetrazol-1-yl, 1,2,3,4-Oxatriazol-5-yl, 1,2,3,5-Oxatriazol-4-yl, 1,2,3,4-Thiatriazol-5-yl, 1,2,3,5-Thiatriazol-4-yl, Pyrazin-2-yl, Pyrazin-3-yl, Pyrimidin-2-yl, Pyrimidin-4-yl, Pyrimidin-5-yl, Pyridazin-3-yl und Pyridazin-4-yl,
wobei der Heterocyclus durch s Reste, ausgewählt aus der Gruppe bestehend aus Methyl, Methoxy, Trifluormethyl und Halogen, substituiert ist, oder Phenyl, das durch s Reste, ausgewählt aus der Gruppe bestehend aus Methyl, Methoxy, Trifluormethyl und Halogen, substituiert ist, bedeutet,
X und Z unabhängig voneinander jeweils Nitro, Halogen, Cyano, Rhodano, (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₃-C₆)-Halogenalkinyl, (C₃-C₆)-Cycloalkyl, (C₃-C₆)-Halogencycloalkyl, (C₃-C₆)-Cycloalkyl-(C₁-C₆)-alkyl, (C₃-C₆)-Halogencycloalkyl-(C₁-C₆)-alkyl, COR¹, OR¹, OCOR¹, OSO₂R₂, S(O)ₙR₂, SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-COOR¹, (C₁-C₆)-Alkyl-SO₂OR¹, (C₁-C₆) -Alkyl-CON (R¹)₂, (C₁-C₆)-Alkyl-SO₂N(R¹)₂, (C₁-C₆)-Alkyl-NR¹COR¹, (C₁-C₆)-Alkyl-NR¹SO₂R², Benzoxazol-2-yl, 1-Ethylbenzimidazol-2-yl Piperidin-1-yl oder 1,2,4-Triazol-1-yl bedeuten,
Y Nitro, Halogen, Cyano, Rhodano, (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₃-C₆)-Halogenalkinyl, (C₃-C₆) -Cycloalkyl, (C₃-C₆)-Halogencycloalkyl, (C₃-C₆)-Cycloalkyl-(C₁-C₆)-alkyl, (C₃-C₆) -Halogencycloalkyl- (C₁-C₆) -alkyl, COR¹, OR¹, OCOR¹, OSO₂R², S(O)ₙR², SO₂OR¹, SO₂N(R¹)₂, NR¹SO₂R², NR¹COR¹, (C₁-C₆)-AlkylS(O)ₙR², (C₁-C₆)-Alkyl-OR¹, (C₁-C₆) -Alkyl-OCOR¹, (C₁-C₆)-Alkyl-OSO₂R², (C₁-C₆)-Alkyl-COOR¹, (C₁-C₆)-Alkyl-SO₂OR¹, (C₁-C₆) -Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², Tetrahydrofuranyloxymethyl, Tetrahydrofuranylmethoxymethyl, O(CH₂)-3,5-Dimethyl-1,2-oxazol-4-yl, O(CH₂)₂-O-3,5-Dimethoxypyrimidin-2-yl, O(CH₂)-5-Pyrrolidin-2-on oder O(CH₂)-5,2,4-Dimethyl-2,4-dihydro-3H-1,2,4-triazol-3-on bedeutet,
R¹ Wasserstoff, (C₁-C₆)-Alkyl, (C₂-C₆-Alkenyl, (C₂-C₆)-Alkinyl, (C₃-C₆) -Cycloalkyl, (C₃-C₆)-Cycloalkyl-(C₁-C₆)-alkyl, Phenyl oder Phenyl-(C₁-C₆)-alkyl, wobei die sieben letztgenannten Reste durch s Reste, ausgewählt aus der Gruppe bestehend aus Cyano, Halogen, Nitro, Thiocyanato, OR³, S(O)ₙR⁴, N(R³)₂, NR³OR³, COR³, OCOR³, SCOR³, NR³COR³, CO₂R³, COSR³, CON(R³)₂ und (C₁-C₄) -Alkoxy- (C₂-C₆) -alkoxycarbonyl, substituiert sind, bedeutet,
R² (C₁-C₆)-Alkyl, (C₂-C₆)-Alkenyl, (C₂-C₆)-Alkinyl, (C₃-C₆)-Cycloalkyl, (C₃-C₆)-Cycloalkyl- (C₁-C₆)-alkyl, Phenyl oder Phenyl-(C₁-C₆)-alkyl, wobei die sieben letztgenannten Reste durch s Reste, ausgewählt aus der Gruppe bestehend aus Cyano, Halogen, Nitro, Thiocyanato, OR³, S(O)ₙR⁴, N(R³)₂, NR³OR³, COR³, OCOR³, SCOR³, NR³COR³, CO₂R³, COSR³, CON(R³)₂ und (C₁-C₄)-Alkoxy- (C₂-C₆)-alkoxycarbonyl, substituiert sind, bedeutet,
R³ Wasserstoff, (C₁-C₆)-Alkyl, (C₂-C₆)-Alkenyl oder (C₂-C₆)-Alkinyl bedeutet,
R⁴ (C₁-C₆)-Alkyl, (C₂-C₆)-Alkenyl oder (C₂-C₆)-Alkinyl bedeutet,
n 0, 1 oder 2 bedeutet,
s 0, 1, 2 oder 3 bedeutet.

3. Verwendung nach Anspruch 1, wobei in Formel (I)
R Wasserstoff, (C₁-C₆)-Alkyl, (C₃-C₇)-Cycloalkyl, Halogen-(C₁-C₆)-alkyl, (C₁-C₆)-Alkoxy, Halogen-(C₁-C₆)-alkoxy, Cyano, Nitro, Methylsulfenyl, Methylsulfinyl, Methylsulfonyl, Acetylamino, Benzoylamino, Methoxycarbonyl, Ethoxycarbonyl, Benzoyl, Methylcarbonyl, Piperidinylcarbonyl, Trifluormethylcarbonyl, Halogen, Amino, Aminocarbonyl, Methylaminocarbonyl, Dimethylaminocarbonyl, Methoxymethyl, einen Heterocyclus, ausgewählt aus der Gruppe bestehend aus Pyridin-2-yl, Pyridin-3-yl, Pyridin-4-yl, Piperidin-2-yl, Piperidin-3-yl, Piperidin-4-yl, Benzisoxazol-2-yl, 1,2,4-Oxadiazol-3-yl, 1,2,4-Triazol-3-yl, 1-Ethylbenzimidazol-2-yl, 4-Methylthiazol-2-yl, Thiophen-2-yl, Furan-2-yl, Furan-3-yl, Tetrahydrofuran-2-yl, Tetrahydrofuran-3-yl, Isoxazol-2-yl, Isoxazol-3-yl, Oxazol-2-yl, Oxazol-3-yl, Pyrrol-2-yl, Pyrrol-3-yl, Imidazol-2-yl, Imidazol-5-yl, Imidazol-4-yl, Pyrazol-3-yl, Pyrazol-5-yl, Pyrazol-4-yl, Isoxazol-3-yl, Isoxazol-4-yl, Isoxazol-5-yl, Oxazol-2-yl, Oxazol-4-yl, Oxazol-5-yl, Isothiazol-3-yl, Isothiazol-4-yl, Isothiazol-5-yl, Thiazol-2-yl, Thiazol-4-yl, Thiazol-5-yl, 1,2,3-Triazol-4-yl, 1,2,3-Triazol-5-yl, 1,2,5-Triazol-3-yl, 1,3,4-Triazol-2-yl, 1,2,4-Triazol-3-yl, 1,2,4-Triazol-5-yl, 1,2,4-Oxadiazol-3-yl, 1,2,4-Oxadiazol-5-yl, 1,3,4-Oxadiazol-2-yl, 1,2,3-Oxadiazol-4-yl, 1,2,3-Oxadiazol-5-yl, 1,2,5-Oxadiazol-3-yl, 1,2,4-Thiadiazol-3-yl, 1,2,4-Thiadiazol-5-yl, 1,3,4-Thiadiazol-2-yl, 1,2,3-Thiadiazol-4-yl, 1,2,3-Thiadiazol-5-yl, 1,2,5-Thiadiazol-3-yl, 2H-1,2,3,4-Tetrazol-5-yl, 1H-1,2,3,4-Tetrazol-1-yl, 1,2,3,4-Oxatriazol-5-yl, 1,2,3,5-Oxatriazol-4-yl, 1,2,3,4-Thiatriazol-5-yl, 1,2,3,5-Thiatriazol-4-yl, Pyrazin-2-yl, Pyrazin-3-yl, Pyrimidin-2-yl, Pyrimidin-4-yl, Pyrimidin-5-yl, Pyridazin-3-yl und Pyridazin-4-yl,
wobei der Heterocyclus durch s Reste, ausgewählt aus der Gruppe bestehend aus Methyl, Methoxy, Trifluormethyl und Halogen, substituiert ist, oder Phenyl, das durch s Reste, ausgewählt aus der Gruppe bestehend aus Methyl, Methoxy, Trifluormethyl und Halogen, substituiert ist, bedeutet,
X und Z unabhängig voneinander jeweils Nitro, Halogen, Cyano, Rhodano, (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₃-C₆)-Halogenalkinyl, (C₃-C₆) -Cycloalkyl, (C₃-C₆)-Halogencycloalkyl, (C₃-C₆)-Cycloalkyl-(C₁-C₆)-alkyl, (C₃-C₆)-Halogencycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-COOR¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², Benzoxazol-2-yl, 1-Ethylbenz-imidazol-2-yl Piperidin-1-yl oder 1,2,4-Triazol-1-yl bedeuten,
Y Nitro, Halogen, Cyano, Rhodano, (C₁-C₆)-Alkyl, (C₁-C₆) -Halogenalkyl, (C₂-C₆)-Alkenyl, (C₂-C₆)-Halogenalkenyl, (C₂-C₆-Alkinyl, (C₃-C₆)-Halogenalkinyl, (C₃-C₆-Cycloalkyl, (C₃-C₆)-Halogencycloalkyl, (C₃-C₆)-Cycloalkyl-(C₁-C₆)-alkyl, (C₃-C₆)-Halogencycloalkyl- (C₁-C₆) -alkyl, COR¹, OR¹, OCOR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-COOR¹, (C₁-C₆)-Alkyl-SO₂OR¹, (C₁-C₆) -Alkyl-CON (R¹)₂, (C₁-C₆)-Alkyl-SO₂N(R¹)*₂, (C₁-C₆)-Alkyl-NR¹COR¹, (C₁-C₆)-Alkyl-NR¹SO₂R², Tetrahydrofuranyloxymethyl, Tetrahydrofuranylmethoxymethyl, O(CH₂)-3,5-Dimethyl-1,2-oxazol-4-yl, O(CH₂)₂-O-3,5-Dimethoxypyrimidin-2-yl, O(CH₂)-5-Pyrrolidin-2-on oder O(CH₂)-5,2,4-Dimethyl-2,4-dihydro-3H-1,2,4-triazol-3-on bedeutet,
R¹ Wasserstoff, (C₁-C₆)-Alkyl, (C₂-C₆-Alkenyl, (C₂-C₆) -Alkinyl, (C₃-C₆)-Cycloalkyl, (C₃-C₆)-Cycloalkyl-(C₁-C₆)-alkyl, Phenyl oder Phenyl-(C₁-C₆)-alkyl, wobei die sieben letztgenannten Reste durch s Reste, ausgewählt aus der Gruppe bestehend aus Cyano, Halogen, Nitro, Thiocyanato, OR³, S(O)ₙR⁴, N(R³)₂, NR³OR³, COR³, OCOR³, SCOR³, NR³COR³, CO₂R³, COSR³, CON(R³)₂ und (C₁-C₄)-Alkoxy- (C₂-C₆)-alkoxycarbonyl, substituiert sind, bedeutet,
R² (C₁-C₆)-Alkyl, (C₂-C₆)-Alkenyl, (C₂-C₆)-Alkinyl, (C₃-C₆)-Cycloalkyl, (C₃-C₆)-Cycloalkyl- (C₁-C₆)-alkyl, Phenyl oder Phenyl-(C₁-C₆)-alkyl, wobei die sieben letztgenannten Reste durch s Reste, ausgewählt aus der Gruppe bestehend aus Cyano, Halogen, Nitro, Thiocyanato, OR³, S(O)ₙR⁴, N(R³)₂, NR³OR³, COR³, OCOR³, SCOR³, NR³COR³, CO₂R³, COSR³, CON(R³)₂ und (C₁-C₄)-Alkoxy- (C₂-C₆)-alkoxycarbonyl, substituiert sind, bedeutet,
R³ Wasserstoff, (C₁-C₆)-Alkyl, (C₂-C₆)-Alkenyl oder (C₂-C₆)-Alkinyl bedeutet,
R⁴ (C₁-C₆)-Alkyl, (C₂-C₆)-Alkenyl oder (C₂-C₆)-Alkinyl bedeutet,
n 0, 1 oder 2 bedeutet,
s 0, 1, 2 oder 3 bedeutet.

4. Verwendung nach Anspruch 1, wobei in Formel (I)
R Wasserstoff, (C₁-C₆)-Alkyl, (C₃-C₇)-Cycloalkyl, Halogen-(C₁-C₆)-alkyl, (C₁-C₆)-Alkoxy, Halogen-(C₁-C₆)-alkoxy, Cyano, Nitro, Methylsulfenyl, Methylsulfinyl, Methylsulfonyl, Acetylamino, Benzoylamino, Methoxycarbonyl, Ethoxycarbonyl, Benzoyl, Methylcarbonyl, Piperidinylcarbonyl, Trifluormethylcarbonyl, Halogen, Amino, Aminocarbonyl, Methylaminocarbonyl, Dimethylaminocarbonyl, Methoxymethyl bedeutet,
X und Z unabhängig voneinander jeweils Nitro, Halogen, Cyano, (C₁-C₆)-Alkyl, (C₁-C₆)-Halogenalkyl, (C₃-C₆)-Cycloalkyl, OR¹, S(O)ₙR², (C₁-C₆)-Alkyl-S(O)ₙR², (C₁-C₆)-Alkyl-OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R² oder 1,2,4-Triazol-1-yl bedeuten,
Y S(O)ₙR², 4,5-Dihydro-1,2-oxazol-3-yl, 5-Cyanomethyl-4,5-dihydro-1,2-oxazol-3-yl oder 5-Methoxymethyl-4,5-dihydro-1,2-oxazol-3-yl bedeutet,
R¹ Wasserstoff, (C₁-C₆)-Alkyl, (C₂-C₆)-Alkenyl, (C₂-C₆)-Alkinyl, (C₃-C₆)-Cycloalkyl, (C₃-C₆)-Cycloalkyl-(C₁-C₆)-alkyl, Phenyl oder Phenyl-(C₁-C₆)-alkyl, wobei die sieben letztgenannten Reste durch s Reste, ausgewählt aus der Gruppe bestehend aus Halogen und OR³, substituiert sind, bedeutet,
R² (C₁-C₆)-Alkyl, (C₃-C₆)-Cycloalkyl oder (C₃-C₆)-Cycloalkyl-(C₁-C₆)-alkyl, wobei die drei letztgenannten Reste durch s Reste, ausgewählt aus der Gruppe bestehend aus Halogen und OR³, substituiert sind, bedeutet,
R³ Wasserstoff oder (C₁-C₆)-Alkyl bedeutet,
n 0, 1 oder 2 bedeutet,
s 0, 1, 2 oder 3 bedeutet.

5. Verfahren zum Bekämpfen von unerwünschten Pflanzen, bei dem man ein oder mehrere N-(1,2,5-Oxadiazol-3-yl)benzamide nach Anspruch 1 in Bereichen mit transgenen Kulturpflanzen, die dadurch, dass sie ein oder mehrere chimäre(s) Gen(e) mit (I) einer DNA-Sequenz, die für eine Hydroxyphenylpyruvatdioxygenase (HPPD) codiert, die von einem Mitglied einer Gruppe von Organismen bestehend aus (a) Avena, (b) Pseudomonas, (c) Synechococcoideae, (d) Blepharismidae, (e) Rhodococcus, (f) Picrophilaceae, (g) Kordia stammt, oder mit (II) einer oder mehreren mutierten DNA-Sequenzen von HPPD-codierenden Genen der oben definierten Organismen enthalten, gegenüber HPPD-Inhibitorherbiziden tolerant sind, ausbringt und wobei die Ausbringung auf (a) die unerwünschten Pflanzen, (b) auf die Samen von unerwünschten Pflanzen und/oder (c) auf den Bereich, wo die Pflanzen wachsen, erfolgt.

6. Verfahren nach Anspruch 5, wobei die transgene Kulturpflanze zu der Gruppe von dikotylen Kulturen bestehend aus Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum und Vicia oder zu der Gruppe von monokotylen Kulturen bestehend aus Allium, Ananas, Asparagus, Avena, Hordeum, Oryza, Panicum, Saccharum, Secale, Sorghum, Triticale, Triticum, Zea gehört.

7. Verfahren nach Anspruch 5 oder 6, wobei ein oder mehrere N-(1,2,5-Oxadiazol-3-yl)benzamid(e) in Kombination mit einem oder mehreren HPPD-Inhibitorherbiziden aus der Gruppe bestehend aus Triketon- oder Pyrazolinatherbizid in Mischformulierungen oder in Tankmischung und/oder mit weiteren bekannten Wirkstoffen, die auf der Hemmung der Acetolactatsynthase, Acetyl-CoA-Carboxylase, Cellulosesynthase, Enolpyruvylshikimat-3-Phosphatsynthase, Glutaminsynthetase, p-Hydroxyphenylpyruvatdioxygenase, Phytoendesaturase, des Fotosystems I, des Fotosystems II, der Protoporphyrinogenoxidase beruhen oder als Wachstumsregulatoren wirken, ausgebracht wird/werden.

8. Verfahren nach Anspruch 7, wobei ein oder mehrere N-(1,2,5-Oxadiazol-3-yl)benzamid(e) in Kombination mit einem oder mehreren HPPD-Inhibitorherbiziden, ausgewählt aus der Gruppe bestehend aus Tembotrion, Mesotrion, Bicyclopyron, Tefuryltrion, Pyrasulfotol, Pyrazolat, Diketonitril, Benzofenap oder Sulcotrion, ausgebracht wird/werden.

## Revendications

1. Utilisation de *N*-(1,2,5-oxadiazol-3-yl)bénzamides représentés par la formule (I) ou de leurs sels 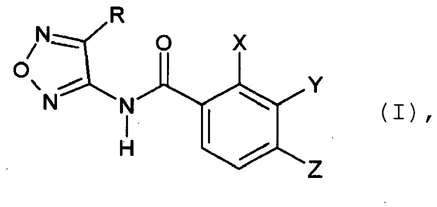 pour lutter contre des plantes indésirables dans des zones de plantes cultivées transgéniques qui sont tolérantes aux herbicides inhibiteurs d'HPPD du fait qu'elles contiennent un ou plusieurs gènes chimères comprenant (I) une séquence d'ADN codant pour l'hydroxyphénylpyruvate dioxygénase (HPPD) issue d'un élément d'un groupe d'organismes constitué par les genres (a) *Avena,* (b) *Pseudomonas,* (c) *Synechococcoideae,* (d) *Blepharismidae,* (e) *Rhodococcus,* (f) *Picrophilaceae,* (g) *Kordia* ou (II) une ou plusieurs séquences d'ADN mutées de gènes codant pour l'HPPD des organismes sus-définis
dans laquelle
R est l'atome d'hydrogène ou un radical alkyle en C₁-C₆, cycloalkyle en C₃-C₇, halogéno-(alkyle en C₁-C₆), alcoxy en C₁-C₆, halogéno- (alcoxy en C₁-C₆), alcényle en C₂-C₆, alcényloxy en C₂-C₆, halogénoalcényle en C₂-C₆, alcynyle en C₂-C₆, alcynyloxy en C₂-C₆, halogénoalcynyle en C₂-C₆, cyano, nitro, méthylsulfényle, méthylsulfinyle, méthylsulfonyle, acétylamino, benzoylamino, méthoxycarbonyle, éthoxycarbonyle, méthoxycarbonylméthyle, éthoxycarbonylméthyle, benzoyle, méthylcarbonyle, pipéridinylcarbonyle, trifluorométhylcarbonyle, halogéno, amino, aminocarbonyle, méthylaminocarbonyle, diméthylaminocarbonyle, méthoxyméthyle ou hétéroaryle, hétérocyclyle ou phényle, chacun desquels est substitué par s radicaux choisis dans le groupe constitué par les radicaux méthyle, éthyle, méthoxy, trifluorométhyle et halogéno,
X et Z sont chacun indépendamment de l'autre dans chaque cas un radical nitro, halogéno, cyano, formyle, rhodano, alkyle en C₁-C₆, halogénoalkyle en C₁-C₆, alcényle en C₂-C₆, halogénoalcényle en C₂-C₆, alcynyle en C₂-C₆, halogénoalcynyle en C₃-C₆, cycloalkyle en C₃-C₆, halogénocycloalkyle en C₃-C₆, (cycloalkyl en C₃-C₆) - (alkyle en C₁-C₆), (halogénocycloalkyl en C₃-C₆)-(alkyle en C₁-C₆), COR¹, OR¹, OCOR¹, OSO₂R², S(O)ₙR², SO₂OR¹, SO₂N(R¹)₂, NR¹SO₂R², NR¹COR¹, (alkyl en C₁-C₆)-S(O)ₙR², (alkyl en C₁-C₆)-OR¹, (alkyl en C₁-C₆)-OCOR¹, (alkyl en C₁-C₆)-OSO₂R², (alkyl en C₁-C₆)-COOR¹, (alkyl en C₁-C₆)-SO₂OR¹, (alkyl en C₁-C₆)-CON(R¹)₂, (alkyl en C₁-C₆)-SO₂N(R¹)₂, (alkyl en C₁-C₆)-NR¹COR¹, (alkyl en C₁-C₆)-NR¹SO₂R², NR¹R², P(O)(OR⁵)₂ ou hétéroaryle, hétérocyclyle ou phényle, chacun desquels est substitué par s radicaux choisis dans le groupe constitué par les radicaux méthyle, éthyle, méthoxy, nitro, trifluorométhyle et halogéno,
Y est un radical nitro, halogéno, cyano, rhodano, alkyle en C₁-C₆, halogénoalkyle en C₁-C₆, alcényle en C₂-C₆, halogénoalcényle en C₂-C₆, alcynyle en C₂-C₆, halogénoalcynyle en C₃-C₆, cycloalkyle en C₃-C₆, halogénocycloalkyle en C₃-C₆, (cycloalkyl en C₃-C₆)-(alkyle en C₁-C₆), (halogénocycloalkyl en C₃-C₆)-(alkyle en C₁-C₆), COR¹, CO₂R¹, OR¹, OCOR¹, OSO₂R², S(O)ₙR², SO₂OR¹, SO₂N(R¹¹)₂, NR¹SO₂R², NR¹COR¹, (alkyl en C₁-C₆)-hétéroaryle, O-(alkyle en C₁-C₆)-hétérocyclyle, O-(alkyl en C₁-C₆)-hétéroaryle, (alkyl en C₁-C₆)-hétérocyclyle, (alkyl en C₁-C₆)-S(O)ₙR², (alkyl en C₁-C₆)-OR¹, (alkyl en C₁-C₆)-OCOR¹, (alkyl en C₁-C₆)-OSO₂R², (alkyl en C₁-C₆)-COOR¹, (alkyl en C₁-C₆)-CN, (alkyl en C₁-C₆) -SO₂OR¹, (alkyl en C₁-C₆)-CON (R¹)₂, (alkyl en C₁-C₆)-SO₂N(R¹)₂, (alkyl en C₁-C₆)-NR¹COR¹, (alkyl en C₁-C₆)-NR¹SO₂R², NR¹R², P(O)(OR⁵)₂, tétrahydrofuranyloxyméthyle, tétrahydrofuranylméthoxyméthyle, O(CH₂)-3,5-diméthyl-1,2-oxazol-4-yle, O(CH₂)₂-O-3,5-diméthoxypyrimidin-2-yle, O(CH₂)-5-pyrrolidin-2-one, O(CH₂)-5-2,4-diméthyl-2,4-dihydro-3H-1,2,4-triazol-3-one ou hétéroaryle ou hétérocyclyle, chacun desquels est substitué par s radicaux choisis dans le groupe constitué par les radicaux méthyle, éthyle, méthoxy, halogéno et cyanométhyle,
R¹ est l'atome d'hydrogène ou un radical alkyle en C₁-C₆, halogénoalkyle en C₁-C₆, alcényle en C₂-C₆, halogénoalcényle en C₂-C₆, alcynyle en C₂-C₆, halogénoalcynyle en C₂-C₆, cycloalkyle en C₃-C₆, halogénocycloalkyle en C₃-C₆, (alkyl en C₁-C₆)-O-(alkyle en C₁-C₆), (cycloalkyl en C₃-C₆)-(alkyle en C₁-C₆), phényle ou phényl-(alkyle en C₁-C₆), les 12 derniers radicaux mentionnés étant substitués par s radicaux choisis dans le groupe constitué par les radicaux cyano, halogéno, nitro, rhodano, OR³, S(O)nR₄, N(R³)₂, NR³OR³, COR³, OCOR³, SCOR³, NR³COR³, CO₂R³, COSR³, CON(R³)₂ et (alcoxy en C₁-C₄)-(alcoxycarbonyle en C₂-C₆),
R² est un radical alkyle en C₁-C₆, alcényle en C₂-C₆, alcynyle en C₂-C₆, cycloalkyle en C₃-C₆, (cycloalkyl en C₃-C₆)-(alkyle en C₁-C₆), phényle ou phényl-(alkyle en C₁-C₆), les sept derniers radicaux mentionnés étant substitués par s radicaux provenant du groupe constitué par les radicaux cyano, halogéno, nitro, thiocyanato, OR³, S(O)ₙR⁴, N(R³)₂, NR³OR³, COR³, OCOR³, SCOR³, NR³COR³, CO₂R³, COSR³, CON(R³)₂ et (alcoxy en C₁-C₄)-(alcoxycarbonyle en C₂-C₆),
R³ est l'atome d'hydrogène ou un radical alkyle en C₁-C₆, alcényle en C₂-C₆ ou alcynyle en C₂-C₆,
R⁴ est un radical alkyle en C₁-C₆, alcényle en C₂-C₆ ou alcynyle en C₂-C₆,
R⁵ est un radical méthyle ou éthyle,
n vaut 0, 1 ou 2,
s vaut 0, 1, 2 ou 3.

2. Utilisation selon la revendication 1, où, dans la formule (I)
R est l'atome d'hydrogène, un radical alkyle en C₁-C₆, cycloalkyle en C₃-C₇, halogéno- (alkyle en C1-C₆), alcoxy en C₁-C₆, halogéno-(alcoxy en C₁-C₆), cyano, nitro, méthylsulfényle, méthylsulfinyle, méthylsulfonyle, acétylamino, benzoylamino, méthoxycarbonyle, éthoxycarbonyle, benzoyle, méthylcarbonyle, pipéridinylcarbonyle, trifluorométhylcarbonyle, halogéno, amino, aminocarbonyle, méthylaminocarbonyle, diméthylaminocarbonyle, méthoxyméthyle, un hétérocycle choisi dans le groupe constitué par les radicaux pyridin-2-yle, pyridin-3-yle, pyridin-4-yle, pipéridin-2-yle, pipéridin-3-yle, pipéridin-4-yle, benzisoxazol-2-yle, 1,2,4-oxadiazol-3-yle, 1,2,4-triazol-3-yle, 1-éthylbenzimidazol-2-yle, 4-méthylthiazol-2-yle, thiophén-2-yle, furan-2-yle, furan-3-yle, tétrahydrofuran-2-yle, tétrahydrofuran-3-yle, isoxazol-2-yle, isoxazol-3-yle, oxazol-2-yle, oxazol-3-yle, pyrrol-2-yle, pyrrol-3-yle, imidazol-2-yle, imidazol-5-yle, imidazol-4-yle, pyrazol-3-yle, pyrazol-5-yle, pyrazol-4-yle, isoxazol-3-yle, isoxazol-4-yle, isoxazol-5-yle, oxazol-2-yle, oxazol-4-yle, oxazol-5-yle, isothiazol-3-yle, isothiazol-4-yle, isothiazol-5-yle, thiazol-2-yle, thiazol-4-yle, thiazol-5-yle, 1,2,3-triazol-4-yle, 1,2,3-triazol-5-yle, 1,2,5-triazol-3-yle, 1,3,4-triazol-2-yle, 1,2,4-triazol-3-yle, 1,2,4-triazol-5-yle, 1,2,4-oxadiazol-3-yle, 1,2,4-oxadiazol-5-yle, 1,3,4-oxadiazol-2-yle, 1,2,3-oxadiazol-4-yle, 1,2,3-oxadiazol-5-yle, 1,2,5-oxadiazol-3-yle, 1,2,4-thiadiazol-3-yle, 1,2,4-thiadiazol-5-yle, 1,3,4-thiadiazol-2-yle, 1,2,3-thiadiazol-4-yle, 1,2,3-thiadiazol-5-yle, 1,2,5-thiadiazol-3-yle, 2H-1,2,3,4-tétrazol-5-yle, 1H-1,2,3,4-tétrazol-1-yle, 1,2,3,4-oxatriazol-5-yle, 1,2,3,5-oxatriazol-4-yle, 1,2,3,4-thiatriazol-5-yle, 1,2,3,5-thiatriazol-4-yle, pyrazin-2-yle, pyrazin-3-yle, pyrimidin-2-yle, pyrimidin-4-yle, pyrimidin-5-yle, pyridazin-3-yle et pyridazin-4-yle, lequel hétérocycle est substitué par s radicaux choisis dans le groupe constitué par les radicaux méthyle, méthoxy, trifluorométhyle et halogéno, ou un radical phényle qui est substitué par s radicaux choisis dans le groupe constitué par les radicaux méthyle, méthoxy, trifluorométhyle et halogéno,
X et Z sont chacun indépendamment de l'autre dans chaque cas un radical nitro, halogéno, cyano, rhodano, alkyle en C₁-C₆, halogénoalkyle en C₁-C₆, alcényle en C₂-C₆, halogénoalcényle en C₂-C₆, alcynyle en C₂-C₆, halogénoalcynyle en C₃-C₆, cycloalkyle en C₃-C₆, halogénocycloalkyle en C₃-C₆, (cycloalkyl en C₃-C₆)-(alkyle en C₁-C₆), (halogénocycloalkyl en C₃-C₆)-(alkyle en C₁-C₆). COR¹, OR¹, OCOR¹, OSO₂R², S(O)ₙR², SO₂OR¹, SO₂N(R¹)₂, NR¹SO₂R², NR¹COR¹, (alkyl en C₁-C₆)-S(O)ₙR², (alkyl en C₁-C₆)-OR¹, (alkyl en C₁-C₆)-OCOR¹, (alkyl en C₁-C₆)-OSO₂R², (alkyl en C₁-C₆)-COOR¹, (alkyl en C₁-C₆)-SO₂OR¹, (alkyl en C₁-C₆)-CON(R¹)₂, (alkyl en C₁-C₆)-SO₂N(R¹)₂, (alkyl en C₁-C₆)-NR¹COR¹, (alkyl en C₁-C₆)-NR¹SO₂R², benzoxazol-2-yle, 1-éthylbenzimidazol-2-yle, pipéridin-1-yle ou 1,2,4-triazol-1-yle,
Y est un radical nitro, halogéno, cyano, rhodano, alkyle en C₁-C₆, halogénoalkyle en C₁-C₆, alcényle en C₂-C₆, halogénoalcényle en C₂-C₆, alcynyle en C₂-C₆, halogénoalcynyle en C₃-C₆, cycloalkyle en C₃-C₆, halogénocycloalkyle en C₃-C₆, (cycloalkyl en C₃-C₆)-(alkyle en C₁-C₆), (halogénocycloalkyl en C₃-C₆)-(alkyle en C₁-C₆), COR¹, OR¹, OCOR¹, OSO₂R², S(O)ₙR², SO₂OR¹, SO₂N(R¹)₂, NR¹SO₂R², NR¹COR¹, (alkyl en C₁-C₆)-S(O)ₙR², (alkyl en C₁-C₆)-OR¹, (alkyl en C₁-C₆)-OCOR¹, (alkyl en C₁-C₆)-OSO₂R², (alkyl en C₁-C₆)-COOR¹, (alkyl en C₁-C₆)-SO₂OR¹, (alkyl en C₁-C₆)-CON(R¹)₂, (alkyl en C₁-C₆)-SO₂N(R¹)₂, (alkyl en C₁-C₆)-NR¹COR¹, (alkyl en C₁-C₆)-NR¹SO₂R², tétrahydrofuranyloxyméthyle, tétrahydrofuranylméthoxyméthyle, O(CH₂)-3,5-diméthyl-1,2-oxazol-4-yle, O(CH₂)₂-O-3,5-diméthoxypyrimidin-2-yle, O(CH₂)-5-pyrrolidin-2-one ou O(CH₂)-5-2,4-diméthyl-2,4-dihydro-3H-1,2,4-triazol-3-one,
R¹ est l'atome d'hydrogène ou un radical alkyle en C₁-C₆, alcényle en C₂-C₆, alcynyle en C₂-C₆, cycloalkyle en C₃-C₆, (cycloalkyl en C₃-C₆) - (alkyle en C₁-C₆), phényle ou phényl-(alkyle en C₁-C₆), les sept derniers radicaux mentionnés étant substitués par s radicaux choisis dans le groupe constitué par les radicaux cyano, halogéno, nitro, thiocyanato, OR³, S(O)ₙR⁴, N(R³)₂, NR³OR³, COR³, OCOR³, SCOR³, NR³COR³, CO₂R³, COSR³, CON(R³)₂ et (alcoxy en C₁-C₄)-(alcoxycarbonyle en C₂-C₆),
R² est un radical alkyle en C₁-C₆, alcényle en C₂-C₆, alcynyle en C₂-C₆, cycloalkyle en C₃-C₆, (cycloalkyl en C₃-C₆)-(alkyle en C₁-C₆), phényle ou phényl-(alkyle en C₁-C₆), les sept derniers radicaux mentionnés étant substitués par s radicaux choisis dans le groupe constitué par les radicaux cyano, halogéno, nitro, thiocyanato, OR³, S(O)ₙR⁴, N(R³)₂, NR³OR³, COR³, OCOR³, SCOR³, NR³COR³, CO₂R³, COSR³, CON(R³)₂ et (alcoxy en C₁-C₄)-(alcoxycarbonyle en C₂-C₆),
R³ est l'atome d'hydrogène ou un radical alkyle en C₁-C₆, alcényle en C₂-C₆ ou alcynyle en C₂-C₆,
R⁴ est un radical alkyle en C₁-C₆, alcényle en C₂-C₆ ou alcynyle en C₂-C₆,
n vaut 0, 1 ou 2,
s vaut 0, 1, 2 ou 3.

3. Utilisation selon la revendication 1, où, dans la formule (I)
R est l'atome d'hydrogène, un radical alkyle en C₁-C₆, cycloalkyle en C₃-C₇, halogéno- (alkyle en C₁-C₆), alcoxy en C₁-C₆, halogéno- (alcoxy en C₁-C₆), cyano, nitro, méthylsulfényle, méthylsulfinyle, méthylsulfonyle, acétylamino, benzoylamino, méthoxycarbonyle, éthoxycarbonyle, benzoyle, méthylcarbonyle, pipéridinylcarbonyle, trifluorométhylcarbonyle, halogéno, amino, aminocarbonyle, méthylaminocarbonyle, diméthylaminocarbonyle, méthoxyméthyle, un hétérocycle choisi dans le groupe constitué par les radicaux pyridin-2-yle, pyridin-3-yle, pyridin-4-yle, pipéridin-2-yle, pipéridin-3-yle, pipéridin-4-yle, benzisoxazol-2-yle, 1,2,4-oxadiazol-3-yle, 1,2,4-triazol-3-yle, 1-éthylbenzimidazol-2-yle, 4-méthylthiazol-2-yle, thiophén-2-yle, furan-2-yle, furan-3-yle, tétrahydrofuran-2-yle, tétrahydrofuran-3-yle, isoxazol-2-yle, isoxazol-3-yle, oxazol-2-yle, oxazol-3-yle, pyrrol-2-yle, pyrrol-3-yle, imidazol-2-yle, imidazol-5-yle, imidazol-4-yle, pyrazol-3-yle, pyrazol-5-yle, pyrazol-4-yle, isoxazol-3-yle, isoxazol-4-yle, isoxazol-5-yle, oxazol-2-yle, oxazol-4-yle, oxazol-5-yle, isothiazol-3-yle, isothiazol-4-yle, isothiazol-5-yle, thiazol-2-yle, thiazol-4-yle, thiazol-5-yle, 1,2,3-triazol-4-yle, 1,2,3-triazol-5-yle, 1,2,5-triazol-3-yle, 1,3,4-triazol-2-yle, 1,2,4-triazol-3-yle, 1,2,4-triazol-5-yle, 1,2,4-oxadiazol-3-yle, 1,2,4-oxadiazol-5-yle, 1,3,4-oxadiazol-2-yle, 1,2,3-oxadiazol-4-yle, 1,2,3-oxadiazol-5-yle, 1,2,5-oxadiazol-3-yle, 1,2,4-thiadiazol-3-yle, 1,2,4-thiadiazol-5-yle, 1,3,4-thiadiazol-2-yle, 1,2,3-thiadiazol-4-yle, 1,2,3-thiadiazol-5-yle, 1,2,5-thiadiazol-3-yle, 2H-1,2,3,4-tétrazol-5-yle, 1H-1,2,3,4-tétrazol-1-yle, 1,2,3,4-oxatriazol-5-yle, 1,2,3,5-oxatriazol-4-yle, 1,2,3,4-thiatriazol-5-yle, 1,2,3,5-thiatriazol-4-yle, pyrazin-2-yle, pyrazin-3-yle, pyrimidin-2-yle, pyrimidin-4-yle, pyrimidin-5-yle, pyridazin-3-yle et pyridazin-4-yle, lequel hétérocycle est substitué par s radicaux choisis dans le groupe constitué par les radicaux méthyle, méthoxy, trifluorométhyle et halogéno, ou un radical phényle qui est substitué par s radicaux choisis dans le groupe constitué par les radicaux méthyle, méthoxy, trifluorométhyle et halogéno,
X et Z sont chacun indépendamment de l'autre dans chaque cas un radical nitro, halogéno, cyano, rhodano, alkyle en C₁-C₆. halogénoalkyle en C₁-C₆, alcényle en C₂-C₆, halogénoalcényle en C₂-C₆, alcynyle en C₂-C₆, halogénoalcynyle en C₃-C₆, cycloalkyle en C₃-C₆, halogénocycloalkyle en C₃-C₆, (cycloalkyl en C₃-C₆)-(alkyle en C₁-C₆), (halogénocycloalkyl en C₃-C₆)-(alkyle en C₁-C₆), COR¹, OR¹, OCOR¹, OSO₂R², S(O)ₙR², SO₂OR¹, SO₂N(R¹)₂, NR¹SO₂R², NR¹COR¹, (alkyl en C₁-C₆)-S(O)ₙR², (alkyl en C₁-C₆)-OR¹, (alkyl en C₁-C₆)-OCOR¹, (alkyl en C₁-C₆)-OSO₂R², (alkyl en C₁-C₆)-COOR¹, (alkyl en C₁-C₆)-SO₂OR¹, (alkyl en C₁-C₆)-CON(R¹)₂, (alkyl en C₁-C₆)-SO₂N(R¹)₂, (alkyl en C₁-C₆)-NR¹COR¹, (alkyl en C₁-C₆)-NR¹SO₂R², benzoxazol-2-yle, 1-éthylbenzimidazol-2-yle, pipéridin-1-yle ou 1,2,4-triazol-1-yle,
Y est un radical nitro, halogéno, cyano, rhodano, alkyle en C₁-C₆, halogénoalkyle en C₁-C₆, alcényle en C₂-C₆, halogénoalcényle en C₂-C₆, alcynyle en C₂-C₆, halogénoalcynyle en C₃-C₆, cycloalkyle en C₃-C₆, halogénocycloalkyle en C₃-C₆, (cycloalkyl en C₃-C₆)-(alkyle en C₁-C₆), (halogénocycloalkyl en C₃-C₆)-(alkyle en C₁-C₆), COR¹, OR¹, OCOR¹, OSO₂R², S(O)ₙR², SO₂OR¹, SO₂N(R¹)₂, NR¹SO₂R², NR¹COR¹, (alkyl en C₁-C₆)-S(O)ₙR², (alkyl en C₁-C₆)-OR¹, (alkyl en C₁-C₆)-OCOR¹, (alkyl en C₁-C₆)-OSO₂R², (alkyl en C₁-C₆)-COOR¹, (alkyl en C₁-C₆)-SO₂OR¹, (alkyl en C₁-C₆)-CON(R¹)₂, (alkyl en C₁-C₆)-SO₂N(R¹)₂, (alkyl en C₁-C₆) -NR¹COR¹, (alkyl en C₁-C₆) -NR¹SO₂R², tétrahydrofuranyloxyméthyle, tétrahydrofuranylméthoxyméthyle, O(CH₂)-3,5-diméthyl-1,2-oxazol-4-yle, O(CH₂)₂-O-3,5-diméthoxypyrimidin-2-yle, O(CH₂)-5-pyrrolidin-2-one ou O(CH₂)-5-2,4-diméthyl-2,4-dihydro-3H-1,2,4-triazol-3-one,
R¹ est l'atome d'hydrogène ou un radical alkyle en C₁-C₆, alcényle en C₂-C₆, alcynyle en C₂-C₆, cycloalkyle en C₃-C₆, (cycloalkyl en C₃-C₆)-(alkyle en C₁-C₆), phényle ou phényl-(alkyle en C₁-C₆), les sept derniers radicaux mentionnés étant substitués par s radicaux choisis dans le groupe constitué par les radicaux cyano, halogéno, nitro, thiocyanato, OR³, S(O)ₙR⁴, N(R³)₂, NR³OR³, COR³, OCOR³, SCOR³, NR³COR³, CO₂R³, COSR³, CON(R³)₂ et (alcoxy en C₁-C₄)-(alcoxycarbonyle en C₂-C₆),
R² est un radical alkyle en C₁-C₆, alcényle en C₂-C₆, alcynyle en C₂-C₆, cycloalkyle en C₃-C₆, (cycloalkyl en C₃-C₆)-(alkyle en C₁-C₆), phényle ou phényl-(alkyle en C₁-C₆), les sept derniers radicaux mentionnés étant substitués par s radicaux choisis dans le groupe constitué par les radicaux cyano, halogéno, nitro, thiocyanato, OR³, S(O)ₙR⁴, N(R³)₂, NR³OR³, COR³, OCOR³, SCOR³, NR³COR³, CO₂R³, COSR³, CON(R³)₂ et (alcoxy en C₁-C₄)-(alcoxycarbonyle en C₂-C₆),
R³ est l'atome d'hydrogène ou un radical alkyle en C₁-C₆, alcényle en C₂-C₆ ou alcynyle en C₂-C₆,
R⁴ est un radical alkyle en C₁-C₆, alcényle en C₂-C₆ ou alcynyle en C₂-C₆,
n vaut 0, 1 ou 2,
s vaut 0, 1, 2 ou 3.

4. Utilisation selon la revendication 1, où, dans la formule (I)
R est l'atome d'hydrogène ou un radical alkyle en C₁-C₆, cycloalkyle en C₃-C₇, halogéno- (alkyle en C₁-C₆), alcoxy en C₁-C₆, halogéno- (alcoxy en C₁-C₆), cyano, nitro, méthylsulfényle, méthylsulfinyle, méthylsulfonyle, acétylamino, benzoylamino, méthoxycarbonyle, éthoxycarbonyle, benzoyle, méthylcarbonyle, pipéridinylcarbonyle, trifluorométhylcarbonyle, halogéno, amino, aminocarbonyle, méthylaminocarbonyle, diméthylaminocarbonyle, méthoxyméthyle,
X et Z sont chacun indépendamment de l'autre dans chaque cas un radical nitro, halogéno, cyano, alkyle en C₁-C₆, halogénoalkyle en C₁-C₆, cycloalkyle en C₃-C₆, OR¹, S(O)ₙR², (alkyl en C₁-C₆)-S(0)ₙR², (alkyl en C₁-C₆)-OR¹, (alkyl en C₁-C₆)-CON(R¹)₂, (alkyl en C₁-C₆)-SO₂N(R¹)₂, (alkyl en C₁-C₆)-NR¹COR¹, (alkyl en C₁-C₆)-NR¹SO₂R² ou 1, 2, 4-triazol-1-yle,
Y est un radical S(O)ₙR², 4,5-dihydro-1,2-oxazol-3-yle, 5-cyanométhyl-4,5-dihydro-1,2-oxazol-3-yle ou 5-méthoxyméthyl-4,5-dihydro-1,2-oxazol-3-yle,
R¹ est l'atome d'hydrogène ou un radical alkyle en C₁-C₆, alcényle en C₂-C₆, alcynyle en C₂-C₆, cycloalkyle en C₃-C₆, (cycloalkyl en C₃-C₆)-(alkyle en C₁-C₆), phényle ou phényl-(alkyle en C₁-C₆), les sept derniers radicaux mentionnés étant substitués par s radicaux choisis dans le groupe constitué par les radicaux halogéno et OR³,
R² est un radical alkyle en C₁-C₆, cycloalkyle en C₃-C₆ ou (cycloalkyl en C₃-C₆)-(alkyle en C₁-C₆), les trois derniers radicaux mentionnés étant substitués par s radicaux choisis dans le groupe constitué par les radicaux halogéno et OR³,
R³ est l'atome d'hydrogène ou un radical alkyle en C₁-C₆,
n vaut 0, 1 ou 2,
s vaut 0, 1, 2 ou 3.

5. Procédé permettant de lutter contre des plantes indésirables comprenant l'application d'un ou plusieurs N-(1,2,5-oxadiazol-3-yl)benzamides selon la revendication 1 dans des zones de plantes cultivées transgéniques qui sont tolérantes aux herbicides inhibiteurs d'HPPD du fait qu'elles contiennent un ou plusieurs gènes chimères comprenant (I) une séquence d'ADN codant pour l'hydroxyphénylpyruvate dioxygénase (HPPD) issue d'un élément d'un groupe d'organismes constitué par les genres (a) *Avena,* (b) *Pseudomonas,* (c) *Synechococcoideae,* (d) *Blepharismidae,* (e) *Rhodococcus,* (f) *Picrophilaceae,* (g) *Kordia* ou (II) une ou plusieurs séquences d'ADN mutées de gènes codant pour l'HPPD des organismes sus-définis et dans lequel l'application est effectuée (a) sur les plantes indésirables, (b) sur les graines de plantes indésirables et/ou (c) sur la zone sur laquelle les plantes poussent.

6. Procédé selon la revendication 5, dans lequel la plante cultivée transgénique appartient au groupe des cultures dicotylédones constitué par les genres *Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum* et *Vicia* ou au groupe des cultures monocotylédones constitué par les genres *Allium, Ananas, Asparagus, Avena, Hordeum, Oryza, Panicum, Saccharum, Secale, Sorghum, Triticale, Triticum, Zea.*

7. Procédé selon la revendication 5 ou 6 dans lequel un ou plusieurs N-(1,2,5-oxadiazol-3-yl)benzamides sont appliqués en association avec un ou plusieurs herbicides inhibiteurs d'HPPD choisis dans le groupe constitué par un herbicide tricétone ou pyrazolinate dans des formulations mélangées ou en mélange en cuve et/ou avec d'autres substances actives connues qui sont basées sur l'inhibition de l'acétolactate synthase, de l'acétyl-CoA carboxylase, de la cellulose synthase, de l'énolpyruvylshikimate-3-phosphate synthase, de la glutamine synthétase, de la p-hydroxyphénylpyruvate dioxygénase, de la phytoène désaturase, du photosystème I, du photosystème II, de la protoporphyrinogène oxydase ou qui servent de régulateurs de croissance.

8. Procédé selon la revendication 7, dans lequel un ou plusieurs N-(1,2,5-oxadiazol-3-yl)benzamides sont appliqués en association avec un ou plusieurs herbicides inhibiteurs d'HPPD choisis dans le groupe constitué par la tembotrione, la mésotrione, la bicyclopyrone, la téfuryltrione, le pyrasulfotole, le pyrazolate, le dicétonitrile, le benzofenap ou la sulcotrione.
